(19) **Europäisches Patentamt / European Patent Office / Office européen des brevets**

(11) **EP 4 116 085 A1**

(12) # EUROPEAN PATENT APPLICATION
published in accordance with Art. 153(4) EPC

(43) Date of publication:
**11.01.2023 Bulletin 2023/02**

(21) Application number: **21764411.1**

(22) Date of filing: **04.03.2021**

(51) International Patent Classification (IPC):
**B32B 9/00** (2006.01)  **B60R 13/02** (2006.01)
**B60R 13/04** (2006.01)  **C09J 11/04** (2006.01)
**C09D 201/00** (2006.01)  **C09D 201/10** (2006.01)
**C09J 201/00** (2006.01)  **B60J 1/00** (2006.01)
**C09D 7/61** (2018.01)  **B32B 7/023** (2019.01)

(52) Cooperative Patent Classification (CPC):
**B32B 7/023; B32B 9/00; B60J 1/00; B60R 13/02;
B60R 13/04; C09D 7/61; C09D 201/00;
C09D 201/10; C09J 11/04; C09J 201/00**

(86) International application number:
**PCT/JP2021/008553**

(87) International publication number:
**WO 2021/177425 (10.09.2021 Gazette 2021/36)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **04.03.2020 JP 2020037112
04.03.2020 JP 2020037226**

(71) Applicant: **Asahi Kasei Kabushiki Kaisha
Tokyo 1000006 (JP)**

(72) Inventors:
• **SHIRAISHI, Kentaro**
  **Tokyo 100-0006 (JP)**
• **ISEDA, Kazuya**
  **Tokyo 100-0006 (JP)**
• **TAKANOHASHI, Hiroaki**
  **Tokyo 100-0006 (JP)**
• **SASAKI, Keigo**
  **Tokyo 100-0006 (JP)**
• **HATTORI, Kyohei**
  **Tokyo 100-0006 (JP)**

(74) Representative: **Strehl Schübel-Hopf & Partner
Maximilianstrasse 54
80538 München (DE)**

(54) **LAMINATE, HARD-COAT COATING FILM, AND COATING MATERIAL COMPOSITION**

(57)   A laminate containing:
an adhesion layer-applied substrate containing a substrate and an adhesion layer disposed on the substrate, the adhesion layer containing an adhesive emulsion particle (F), an inorganic oxide (G) and a light-shielding agent (S1); and

a hard coating layer (C) disposed on the adhesion layer-applied substrate and containing a matrix component (B) containing an inorganic oxide (D), wherein
a haze value H1 of the adhesion layer-applied substrate is larger than a haze value H2 of the laminate.

EP 4 116 085 A1

**Description**

Technical Field

The present invention relates to a laminate, a hard coating film, and a coating material composition.

Background Art

(First background art)

Aqueous dispersions obtained by polymerization are used as water-based coating materials because films thereof formed by drying at ordinary temperature or under heating tend to exhibit barrier properties, contamination resistance, chemical resistance, flame retardance, heat resistance, weather resistance, scratch resistance, and abrasion resistance. Such water-based coating materials, when used in applications where transparency is demanded, are problematic in terms of optical properties such as transparency and clouding and the occurrence of discoloration, whitening and/or crazing, due to exposure to outdoors and/or ultraviolet light for a long period. Furthermore, when such coating materials are used in top coatings, such top coatings are demanded to have abrasion resistance. Solvent-based coating materials may also be used from the viewpoint of abrasion resistance. Such solvent-based coating materials relatively easily not only allow such coating materials and the resulting coating films to maintain properties, but also contain organic light-shielding agents. However, use of water-based coating materials is desired out of consideration to sanitary conditions in workplaces and global environmental burdens.

As a technique for improving optical properties of water-based coating materials, Patent Literature 1 has described a method involving allowing an ultraviolet absorber to be contained during polymerization, for the purpose of imparting weather resistance. Patent Literature 2 has also described a method involving allowing an ultraviolet absorber to be dissolved and contained in a film formation aid component. As a technique for allowing resin materials to have hard coatability, a method involving adding an inorganic oxide to a resin material has been described (see, for example, Patent Literature 3 and Patent Literature 4).

(Second background art)

Resin materials, although are excellent in moldability and lightweight properties, are often inferior in hardness, barrier properties, contamination resistance, chemical resistance, flame retardance, heat resistance, weather resistance, and the like, as compared with inorganic materials such as metals and glass. Resin materials are, in particular, remarkably low in hardness as compared with inorganic glass, the surfaces thereof are easily scratched and thus often used with being covered with hard coatings, such hard coating films have a difficulty in keeping contamination resistance to soot and dust, performances at high temperature and high humidity, and outer appearance when exposed to ultraviolet light for a long period, and resin materials covered with hard coatings are not used in applications where high abrasion resistance, durability and weather resistance are required.

There have been proposed for the purpose of imparting abrasion resistance to resin materials, a method involving using an active energy ray-curing resin composition (see, for example, Patent Literature 5), a method involving adding an inorganic oxide to a resin material (see, for example, Patent Literature 3 and Patent Literature 6), and a method involving adding a polymer particle to a resin material (see, for example, Patent Literature 7). There has also been proposed for the purpose of imparting weather resistance to resin materials, combination use of an acrylic polymer and cerium oxide (see, for example, Patent Literature 8).

Citation List

Patent Literature

Patent Literature 1: Japanese Patent Laid-Open No. 11-12505
Patent Literature 2: Japanese Patent Laid-Open No. 7-173404
Patent Literature 3: Japanese Patent Laid-Open No. 2006-63244
Patent Literature 4: Japanese Patent Laid-Open No. 8-238683
Patent Literature 5: Japanese Patent Laid-Open No. 2014-109712
Patent Literature 6: Japanese Patent Laid-Open No. 8-238683
Patent Literature 7: Japanese Patent Laid-Open No. 2017-114949

Patent Literature 8: Japanese Patent Laid-Open No. 5-339400

## Summary of Invention

## Technical Problem

(First problem)

While the methods of Patent Literature 1 and Patent Literature 2 are common methods for imparting weather resistance to water-based coating materials, the methods have a difficulty in imparting high weather resistance thereto because the amount of an ultraviolet absorber that can be contained in a coating film is small. In addition, a coating film, if disposed on a substrate, is insufficient in adhesiveness.

While the methods of Patent Literature 3 and Patent Literature 4 are common methods for imparting abrasion resistance to resin materials, solvent-based coating materials are used and are not easily applied to water-based coating materials.

As described above, coating film-applied substrates obtained from water-based coating materials in conventional arts have still room for improvement from the viewpoints of high abrasion resistance and optical properties.

The present invention has been made in view of the above problems, and a first object thereof is to provide a laminate which has high abrasion resistance, adhesiveness and optical properties.

(Second problem)

While the methods of Patent Literature 5 and Patent Literature 3 are common methods for imparting abrasion resistance to resin materials, the methods have a difficulty in imparting high abrasion resistance thereto.

While the method of Patent Literature 6 is a common method using a soft silicone polymer and a hard inorganic oxide fine particle in a hard coating film, the silicone polymer corresponding to a matrix component does not have any sufficient hardness and thus abrasion resistance is not sufficient.

While Patent Literature 7 describes a method using a polymer particle, a silicone polymer and an inorganic oxide fine particle in a hard coating film and describes physical properties of such a coating film, it does not describe any physical properties of each component, does not provide sufficient abrasion resistance, and does not describe any contamination resistance.

While weather resistance is improved at a certain level according to Patent Literature 8, it cannot be said to be at a sufficient level from the viewpoint of the balance between physical properties including abrasion resistance and durability.

As described above, hard coating films in conventional arts have still room for improvement from the viewpoints of high abrasion resistance, durability and weather resistance.

The present invention has been made in view of the above problems, and a second object thereof is to provide a hard coating film, a hard coating film-applied substrate, a coating material composition, and a window material, each of which has high abrasion resistance, durability and weather resistance.

## Solution to Problems

The present inventors have made intensive studies, and as a result, have found that the above problems can be solved by a laminate including predetermined adhesion layer-applied substrate and hard coating layer, thereby leading to completion of the present invention.

That is, the present invention encompasses the following aspects.

[1] A laminate comprising:

an adhesion layer-applied substrate comprising a substrate and an adhesion layer disposed on the substrate, the adhesion layer comprising an adhesive emulsion particle (F), an inorganic oxide (G) and a light-shielding agent (S1); and
a hard coating layer (C) disposed on the adhesion layer-applied substrate and comprising a matrix component (B) comprising an inorganic oxide (D), wherein
a haze value H1 of the adhesion layer-applied substrate is larger than a haze value H2 of the laminate.

[2] The laminate according to [1], wherein the H2 is 5% or less.
[3] A laminate comprising:

an adhesion layer-applied substrate comprising a substrate and an adhesion layer disposed on the substrate, the adhesion layer comprising an adhesive emulsion particle (F), an inorganic oxide (G) and a light-shielding agent (S1); and

a hard coating layer (C) disposed on the adhesion layer-applied substrate and comprising a matrix component (B) comprising an inorganic oxide (D), wherein

a surface roughness Ra1 of the adhesion layer-applied substrate is higher than a surface roughness Ra2 of the laminate.

[4] The laminate according to [3], wherein the Ra1 is 10 to 500 nm.

[5] The laminate according to [3] or [4], wherein the Ra2 is less than 100 nm.

[6] The laminate according to any of [1] to [5], wherein the light-shielding agent (S1) comprises an ultraviolet absorber.

[7] The laminate according to any of [1] to [6], wherein the adhesion layer further comprises a hindered amine-based light stabilizer.

[8] The laminate according to any of [1] to [7], wherein

the hard coating layer (C) further comprises a polymer nanoparticle (A) dispersed in the matrix component (B),

a Martens hardness $HM_A$ of the polymer nanoparticle (A) and a Martens hardness $HM_B$ of the matrix component (B) satisfy a relationship of $HM_B/HM_A > 1$, and

a Martens hardness HM of the hard coating layer is 100 N/mm$^2$ or more.

[9] The laminate according to [8], wherein an average particle size of the polymer nanoparticle (A) is 10 nm or more and 400 nm or less.

[10] The laminate according to [8] or [9], wherein a volume fraction of the polymer nanoparticle (A) in the hard coating layer (C) is 2% or more and 80% or less.

[11] The laminate according to any one of [8] to [10], wherein

the polymer nanoparticle (A) comprises a hydrolyzable silicon compound (a), and

a content of the hydrolyzable silicon compound (a) in the polymer nanoparticle (A) is 50% by mass or more.

[12] The laminate according to [11], wherein the hydrolyzable silicon compound (a) comprises one or more selected from a compound having an atomic group represented by the following formula (a-1) and a hydrolyzed product and a condensate thereof, and a compound represented by the following formula (a-2) and a hydrolyzed product and a condensate thereof:

$$-R^1_{n1}SiX^1_{3-n1} \qquad (a\text{-}1)$$

wherein $R^1$ represents a hydrogen atom, an alkyl group, an alkenyl group or an alkynyl group having 1 to 10 carbon atoms, or an aryl group, $R^1$ optionally has a substituent having halogen, a hydroxy group, a mercapto group, an amino group, a (meth)acryloyl group or an epoxy group, $X^1$ represents a hydrolyzable group, and n1 represents an integer of 0 to 2;

$$SiX^2_4 \qquad (a\text{-}2)$$

wherein $X^2$ represents a hydrolyzable group.

[13] The laminate according to any of [1] to [12], wherein the inorganic oxide (D) comprises at least one inorganic component selected from the group consisting of Ce, Nb, Al, Zn, Ti, Zr, Sb, Mg, Sn, Bi, Co and Cu.

[14] The laminate according to any of [1] to [13], wherein the hard coating layer (C) further comprises a light-shielding agent (S2).

[15] The laminate according to any of [1] to [14], wherein the inorganic oxide (G) is a silica having a spherical shape and/or a linked structure.

[16] The laminate according to any of [1] to [15], wherein the adhesion layer comprises a composite of the inorganic oxide (G) and the adhesive emulsion particle (F).

[17] The laminate according to any of [1] to [16], wherein an average particle size of at least one selected from the group consisting of the inorganic oxide (G), the adhesive emulsion particle (F), and a composite of the inorganic oxide (G) and the adhesive emulsion particle (F) is 2 nm or more and 400 nm or less.

[18] The laminate according to any of [1] to [17], wherein a mass ratio of the inorganic oxide (G) and the adhesive emulsion particle (F) is 1:0.1 to 1:10.

[19] The laminate according to any of [1] to [18], wherein the adhesion layer further comprises an isocyanate compound and/or a urethane compound.

[20] The laminate according to any of [1] to [19], wherein when the hard coating layer is subjected to a Taber abrasion test under conditions of an abrasive wheel CS-10F and a load of 500 g according to ASTM D1044, a difference between a haze at a rotation number of 500 and a haze before the Taber abrasion test is 10 or less.

[21] The laminate according to any of [1] to [20], wherein when the hard coating layer is subjected to a Taber abrasion test under conditions of an abrasive wheel CS-10F and a load of 500 g according to ASTM D1044, a difference between a haze at a rotation number of 1000 and a haze before the Taber abrasion test is 10 or less.

[22] The laminate according to any of [1] to [21], wherein an elastic recovery rate $\eta_{IT}$ of the hard coating layer, as measured by an indentation test according to ISO14577-1, is 0.50 or more.

[23] The laminate according to any of [1] to [22], wherein a thickness of the hard coating layer is 1 $\mu$m or more and 100 $\mu$m or less.

[24] The laminate according to any one of [1] to [23], wherein the matrix component (B) comprises a hydrolyzable silicon compound (b).

[25] The laminate according to [24], wherein the hydrolyzable silicon compound (b) comprises one or more selected from a compound having an atomic group represented by the following formula (b-1) and a hydrolyzed product and a condensate thereof, and a compound represented by the following formula (b-2) and a hydrolyzed product and a condensate thereof:

$$-R^2_{n2}SiX^3_{3-n2} \qquad \text{(b-1)}$$

wherein $R^2$ represents a hydrogen atom, an alkyl group, an alkenyl group or an alkynyl group having 1 to 10 carbon atoms, or an aryl group, $R^2$ optionally has a substituent having halogen, a hydroxy group, a mercapto group, an amino group, a (meth)acryloyl group or an epoxy group, $X^3$ represents a hydrolyzable group, and n2 represents an integer of 0 to 2;

$$SiX^4_4 \qquad \text{(b-2)}$$

wherein $X^4$ represents a hydrolyzable group.

[26] The laminate according to any of [1] to [25], wherein an average particle size of the inorganic oxide (D) is 2 nm or more and 150 nm or less.

[27] The laminate according to any of [1] to [26], wherein the inorganic oxide (D) is a silica particle.

[28] The laminate according to any of [1] to [27], for use in an automobile member.

[29] A coating material composition comprising:

a mixture of an adhesive emulsion particle (F) and an inorganic oxide (G), and/or a composite of the inorganic oxide (G) and the adhesive emulsion particle (F); and
a light-shielding agent (S1), wherein
an average particle size of the mixture and/or composite is 2 nm or more and 2000 nm or less, and
a mass ratio of the inorganic oxide (G) and the adhesive emulsion particle (F) is 1:0.1 to 1:10.

[30] The coating material composition according to [29], wherein the light-shielding agent (S1) comprises an ultraviolet absorber.

[31] The coating material composition according to [29] or [30], further comprising a hindered amine-based light stabilizer.

[32] The coating material composition according to any of [29] to [31], wherein the inorganic oxide (G) is a silica having a spherical shape and/or a linked structure.

[33] The coating material composition according to any of [29] to [32], wherein an aspect ratio (longer diameter/shorter diameter) of the inorganic oxide (G) is 3 to 25.

[34] The coating material composition according to any of [29] to [33], further comprising an isocyanate compound and/or a urethane compound.

[35] The coating material composition according to [34], wherein the isocyanate compound is a water-dispersible isocyanate compound.

[36] The coating material composition according to [35], wherein the water-dispersible isocyanate compound is a block isocyanate.

[37] A coating material composition comprising a polymer nanoparticle (A) and a matrix raw material component (B'), wherein

an elastic recovery rate $\eta_{ITA}$ of the polymer nanoparticle (A), as measured by an indentation test according to ISO14577-1, is 0.30 or more and 0.90 or less,
a Martens hardness $HM_A$ of the polymer nanoparticle (A) and a Martens hardness $HM_{B'}$ of the matrix raw material component (B') satisfy a relationship of $HM_{B'}/HM_A > 1$,
the matrix raw material component (B') comprises an inorganic oxide (D), and
the inorganic oxide (D) comprises at least one inorganic component selected from the group consisting of Ce, Nb, Al, Zn, Ti, Zr, Sb, Mg, Sn, Bi, Co and Cu.

[38] The coating material composition according to [37], further comprising a light-shielding agent (S2).
[39] The coating material composition according to any of [29] to [38], wherein the polymer nanoparticle (A) and/or the adhesive emulsion particle (F) have/has a functional group (e) having a secondary amide group and/or a tertiary amide group.
[40] The coating material composition according to any of [29] to [39], wherein the polymer nanoparticle (A) and/or the adhesive emulsion particle (F) have/has a functional group having a hydroxyl group.
[41] A hard coating film comprising a polymer nanoparticle (A) and a matrix component (B), wherein

a Martens hardness $HM_A$ of the polymer nanoparticle (A) and a Martens hardness $HM_B$ of the matrix component (B) satisfy a relationship of $HM_B/HM_A > 1$,
a Martens hardness HM of the hard coating layer is 100 N/mm$^2$ or more,
the matrix component (B) comprises an inorganic oxide (D), and
the inorganic oxide (D) comprises at least one inorganic component selected from the group consisting of Ce, Nb, Al, Zn, Ti, Zr, Sb, Mg, Sn, Bi, Co and Cu.

Advantageous Effects of Invention

(First effect)

The present invention can provide a laminate which has high abrasion resistance, adhesiveness and optical properties.

(Second effect)

The present invention can provide a hard coating film, a hard coating film-applied substrate, a coating material composition, and a window material, each of which has high abrasion resistance, durability and weather resistance.

Description of Embodiments

Hereinafter, an embodiment (hereinafter, simply referred to as "the present embodiment".) for carrying out the present invention will be described in detail. The present invention is not here limited to the following present embodiment, and can be variously modified and carried out within the gist thereof.

<<First embodiment>>

Herein, a first aspect (herein, also referred to as "first embodiment".) according to the present embodiment is described in detail.

<Laminate>

A laminate of the present embodiment (hereinafter, "the present embodiment" means the first embodiment in the section <<First embodiment>>, unless particularly noted.) is a laminate including: an adhesion layer-applied substrate having a substrate and an adhesion layer disposed on the substrate, the adhesion layer including an adhesive emulsion particle (F), an inorganic oxide (G) and a light-shielding agent; and a hard coating layer disposed on the adhesion layer-applied substrate and including a matrix component (B) containing an inorganic oxide (D), in which the haze value H1 of the adhesion layer-applied substrate is larger than the haze value H2 of the laminate. The laminate of the present embodiment is configured as described above, and thus has high abrasion resistance, adhesiveness and optical properties.

The ratio (H1/H2) of H1 to H2 in the present embodiment is preferably 2 or more, more preferably 5 or more, further preferably 10 or more, particularly preferably 20 or more from the viewpoint of adhesiveness.

Even if it is difficult to confirm the magnitude relationship between H1 and H2 described above in the present embodiment, the magnitude relationship can be estimated by evaluation of surface roughness. That is, the laminate of the present embodiment can be specified to be a laminate including: an adhesion layer-applied substrate having a substrate and an adhesion layer disposed on the substrate, the adhesion layer including an adhesive emulsion particle (F), an inorganic oxide (G) and a light-shielding agent (S1); and a hard coating layer (C) disposed on the adhesion layer-applied substrate and including a matrix component (B) containing an inorganic oxide (D), in which the surface roughness Ra1 of the adhesion layer-applied substrate is higher than the surface roughness Ra2 of the laminate.

The ratio (Ra1/Ra2) of Ra1 to Ra2 in the present embodiment is preferably 1.5 or more, more preferably 2 or more, further preferably 3 or more, particularly preferably 5 or more from the viewpoint of adhesiveness.

The laminate of the present embodiment is configured as described above, and thus has high abrasion resistance, adhesiveness and optical properties. The laminate of the present embodiment exhibits abrasion resistance, adhesiveness and optical properties at high levels, thus is useful as, but not limited to the following, a hard coating for, for example, a building material, an automobile member, electronic equipment, and an electronic product, and is particularly preferably used in an automobile member.

[Adhesion layer-applied substrate]

An adhesion layer-applied substrate in the present embodiment has a substrate and an adhesion layer disposed on the substrate, the adhesion layer including an adhesive emulsion particle (F), an inorganic oxide (G) and a light-shielding agent. The adhesion layer in the present embodiment is disposed on at least one surface and/or both surfaces of the substrate.

[Substrate]

The substrate in the present embodiment is not particularly limited, and examples thereof include a resin, a metal, and glass. Examples of the shape of the substrate include, but not limited to the following, a plate-like shape, a shape including irregularities, a shape having a curved surface, a hollow shape, a porous shape, and any combination thereof. The type of the substrate is not limited, and examples thereof include a sheet, a film, and a fiber. In particular, a resin is preferable from the viewpoints of impartment of hard coatability, and moldability. Examples of the resin for use in the substrate include, but not limited to the following, a thermoplastic resin and a thermosetting resin. Examples of the thermoplastic resin for use in the substrate include, but not limited to the following, polyethylene, polypropylene, polystyrene, an ABS resin, a vinyl chloride resin, a methyl methacrylate resin, nylon, a fluororesin, polycarbonate, and a polyester resin. Examples of the thermosetting resin for use in the substrate include, but not limited to the following, a phenol resin, a urea resin, a melamine resin, an unsaturated polyester resin, an epoxy resin, a silicon resin, silicone rubber, SB rubber, natural rubber, and a thermosetting elastomer.

[Adhesion layer]

The adhesion layer in the present embodiment includes an adhesive emulsion particle (F), an inorganic oxide (G), and a light-shielding agent.

[Adhesive emulsion particle (F)]

The adhesive emulsion particle (F) in the present embodiment serves to impart flexibility and enhance adhesiveness to the substrate. The adhesive emulsion particle (F) is not particularly limited, and is a particle formed from one or more of polyurethane-based, polyester-based, poly (meth)acrylate-based, polyvinyl acetate-based, polybutadiene-based, polyvinyl chloride-based, chlorinated polypropylene-based, polyethylene-based, polystyrene-based, and polystyrene-(meth)acrylate-based copolymers, a rosin-based derivative, an alcohol adduct of a styrene-maleic anhydride copolymer, a polycarbonyl compound such as a cellulose-based resin, and a silicone compound. In the present embodiment, the adhesive emulsion particle (F) is preferably a poly (meth)acrylate-based particle

The method for preparing the adhesive emulsion particle (F) in the present embodiment is not particularly limited, and such a particle preferably has a structure obtained by polymerization of a vinyl monomer in the presence of water and an emulsifier. The adhesive emulsion particle (F) thus obtained, when included in the adhesion layer, tends to better maintain adhesiveness to the substrate.

The vinyl monomer is not particularly limited, and examples thereof can include not only a (meth)acrylic acid ester, an aromatic vinyl compound, and a vinyl cyanide compound, but also functional group-containing monomers such as a carboxyl group-containing vinyl monomer, a hydroxyl group-containing vinyl monomer, an epoxy group-containing vinyl monomer, a carbonyl group-containing vinyl monomer, and a vinyl monomer having secondary and/or tertiary amide group(s).

The (meth)acrylic acid ester is not particularly limited, and examples thereof include a (meth)acrylic acid alkyl ester having an alkyl moiety having 1 to 50 carbon atoms, and a (poly)oxyethylene di(meth)acrylate having 1 to 100 ethylene oxide groups.

The (meth)acrylic acid alkyl ester is not particularly limited, and examples thereof include methyl (meth)acrylate, ethyl (meth)acrylate, n-butyl (meth)acrylate, 2-ethylhexyl (meth)acrylate, methylcyclohexyl (meth)acrylate, cyclohexyl (meth)acrylate, lauryl (meth)acrylate, and dodecyl (meth)acrylate.

The (poly)oxyethylene di(meth)acrylate is not particularly limited, and examples thereof include ethylene glycol di(meth)acrylate, diethylene glycol di(meth)acrylate, diethylene glycol methoxy(meth)acrylate, and tetraethylene glycol di(meth)acrylate.

The aromatic vinyl compound is not particularly limited, and examples thereof include styrene and 4-vinyltoluene.

The vinyl cyanide compound is not particularly limited, and examples thereof include acrylonitrile and methacrylonitrile.

The carboxyl group-containing vinyl monomer is not particularly limited, and examples thereof include (meth)acrylic acid, crotonic acid, itaconic acid, maleic acid, fumaric acid, maleic anhydride, or a half ester of a dibasic acid such as itaconic acid, maleic acid, or fumaric acid. In the case of use of a carboxyl group-containing vinyl monomer, a carboxyl group can be introduced into the adhesive emulsion particle (F) in the present embodiment, and electrostatic repulsion force between such particles tends to enhance stability of an emulsion, for example, enhance a resistive force to dispersion destruction action from the outside, for example, aggregation in stirring. The carboxyl group introduced can also be partially or fully neutralized with ammonia, an amine compound such as triethylamine or dimethylethanolamine, or a base such as NaOH or KOH from the viewpoint of a further enhancement in electrostatic repulsion force.

The hydroxyl group-containing vinyl monomer is not particularly limited, and examples thereof include (meth)acrylic acid hydroxyalkyl esters such as 2-hydroxyethyl (meth)acrylate, 2-hydroxypropyl (meth)acrylate, 3-hydroxypropyl (meth)acrylate, 2-hydroxybutyl (meth)acrylate, 3-hydroxybutyl (meth)acrylate and 4-hydroxybutyl (meth)acrylate; hydroxyalkyl esters of fumaric acid, such as di-2-hydroxyethyl fumarate and mono-2-hydroxyethyl monobutyl fumarate; allyl alcohol and (poly)oxyethylene mono(meth)acrylate having 1 to 100 ethylene oxide groups; (poly)oxypropylene mono(meth)acrylate having 1 to 100 propylene oxide groups; and "Placcel FM, FA monomer" (trade name of a caprolactone-added monomer manufactured by Daicel Corporation) and other $\alpha,\beta$-ethylenically unsaturated carboxylic acid hydroxyalkyl esters.

The (poly)oxyethylene (meth)acrylate is not particularly limited, and examples thereof include ethylene glycol (meth)acrylate, ethylene glycol methoxy(meth)acrylate, diethylene glycol (meth)acrylate, diethylene glycol methoxy(meth)acrylate, tetraethylene glycol (meth)acrylate, and tetraethylene glycol methoxy(meth)acrylate.

The (poly)oxypropylene (meth)acrylate is not particularly limited, and examples thereof include propylene glycol (meth)acrylate, propylene glycol methoxy(meth)acrylate, dipropylene glycol (meth)acrylate, dipropylene glycol methoxy(meth)acrylate, tetrapropylene glycol (meth)acrylate, and tetrapropylene glycol methoxy(meth)acrylate.

The epoxy group-containing vinyl monomer is not particularly limited, and examples thereof include a glycidyl group-containing vinyl monomer. The glycidyl group-containing vinyl monomer is not particularly limited, and examples thereof include glycidyl (meth)acrylate, allyl glycidyl ether, and allyl dimethyl glycidyl ether.

The carbonyl group-containing vinyl monomer is not particularly limited, and examples thereof include diacetone acrylamide.

Specific examples of any vinyl monomer other than the above are not particularly limited, and examples include not only olefins such as ethylene, propylene and isobutylene, dienes such as butadiene, haloolefins such as vinyl chloride, vinylidene chloride, vinyl fluoride, tetrafluoroethylene and chlorotrifluoroethylene, carboxylic acid vinyl esters such as vinyl acetate, vinyl propionate, vinyl n-butyrate, vinyl benzoate, vinyl p-t-butylbenzoate, vinyl pivalate, vinyl 2-ethylhexanoate, vinyl versatate and vinyl laurate, carboxylic acid isopropenyl esters such as isopropenyl acetate and isopropenyl propionate, vinyl ethers such as ethyl vinyl ether, isobutyl vinyl ether and cyclohexyl vinyl ether, allyl esters such as allyl acetate and allyl benzoate, and allyl ethers such as allyl ethyl ether and allyl phenyl ether, but also 4-(meth)acryloyloxy-2,2,6,6-tetramethylpiperidine, 4-(meth)acryloyloxy-1,2,2,6,6-pentamethylpiperidine, perfluoromethyl (meth)acrylate, perfluoropropyl (meth)acrylate, perfluoropropyl methyl (meth)acrylate, vinylpyrrolidone, trimethylolpropane tri(meth)acrylate and allyl (meth)acrylate, and any combination thereof.

The vinyl monomer having secondary and/or tertiary amide group(s) is not particularly limited, and examples thereof can include N-alkyl or N-alkylene-substituted (meth)acrylamide. Specific examples can include N-methylacrylamide, N-methylmethacrylamide, N-ethylacrylamide, N,N-dimethylacrylamide, N,N-dimethylmethacrylamide, N,N-diethylacrylamide, N-ethylmethacrylamide, N-methyl-N-ethylacrylamide, N-methyl-N-ethylmethacrylamide, N-isopropylacrylamide, N-n-propylacrylamide, N-isopropylmethacrylamide, N-n-propylmethacrylamide, N-methyl-N-n-propylacrylamide, N-methyl-N-isopropylacrylamide, N-acryloylpyrrolidine, N-methacryloylpyrrolidine, N-acryloylpiperidine, N-methacryloylpiperidine, N-acryloylhexahydroazepine, N-acryloylmorpholine, N-methacryloylmorpholine, N-vinylpyrrolidone, N-vinylcaprolactam, N,N'-methylenebisacrylamide, N,N'-methylenebismethacrylamide, N-vinylacetamide, diacetone acrylamide, diacetone methacrylamide, N-methylolacrylamide and N-methylolmethacrylamide.

The silicone compound is not particularly limited, and examples thereof include respective hydrolyzed condensates of trimethoxysilane, triethoxysilane, methyltrimethoxysilane, methyltriethoxysilane, cyclohexyltrimethoxysilane, cyclohexyltriethoxysilane, phenyltrimethoxysilane, phenyltriethoxysilane, dimethoxysilane, diethoxysilane, methyldimethoxysilane, methyldiethoxysilane, dimethyldimethoxysilane, dimethyldiethoxysilane, dimethoxydiphenylsilane, diethoxydiphenylsilane, 3-acryloxypropyltrimethoxysilane, 3-acryloxypropyltriethoxysilane, 3-methacryloxypropyltrimethoxysilane, 3-methacryloxypropyltriethoxysilane, 3-methacryloxypropylmethyldimethoxysilane, 3-methacryloxypropylmethyldimethoxysilane, vinyltrimethoxysilane, vinyltriethoxysilane, p-styryltrimethoxysilane, p-styryltriethoxysilane, tetramethoxysilane, and tetraethoxysilane.

The adhesive emulsion particle (F) optionally includes an emulsifier. The emulsifier is not particularly limited, and examples thereof include acidic emulsifiers such as alkylbenzene sulfonic acid, alkylsulfonic acid, alkylsulfosuccinic acid, polyoxyethylene alkyl sulfuric acid, polyoxyethylene alkyl aryl sulfuric acid and polyoxyethylene distyryl phenyl ether sulfonic acid; anionic surfactants such as alkali metal (Li, Na, K, and the like) salts of such acidic emulsifiers, ammonium salts of such acidic emulsifier, and fatty acid soap; quaternary ammonium salt, pyridinium salt, and imidazolinium salt type cationic surfactants such as alkyltrimethylammonium bromide, alkylpyridinium bromide and imidazolinium laurate; and nonionic surfactants and reactive emulsifiers having a radical polymerizable double bond, such as polyoxyethylene alkyl aryl ether, polyoxyethylene sorbitan fatty acid ester, a polyoxyethylene oxypropylene block copolymer and polyoxyethylene distyryl phenyl ether.

Examples of the reactive emulsifier having a radical polymerizable double bond include, but not limited to the following, Eleminol JS-2 (trade name, manufactured by Sanyo Chemical Industries, Ltd.), Latemul S-120, S-180A or S-180 (trade name, manufactured by Kao Corporation), Aqualon HS-10, KH-1025, RN-10, RN-20, RN30 or RN50 (trade name, manufactured by DKS Co., Ltd.), Adekariasoap SE1025, SR-1025, NE-20, NE-30 or NE-40 (trade name, manufactured by Adeka Corporation), an ammonium salt of p-styrene sulfonic acid, a sodium salt of p-styrene sulfonic acid, a potassium salt of p-styrene sulfonic acid, alkyl sulfonic acid (meth)acrylate such as 2-sulfoethyl acrylate, methylpropanesulfonic acid (meth)acrylamide, an ammonium salt of allyl sulfonic acid, a sodium salt of allyl sulfonic acid, or a potassium salt of allyl sulfonic acid.

[Average particle size of adhesive emulsion particle (F)]

The average particle size of the adhesive emulsion particle (F) in the present embodiment is determined from the size of such any particle observed according to a cross-sectional SEM or dynamic light scattering method. The average particle size of the adhesive emulsion particle (F) is not particularly limited, and is preferably 300 nm or less. The average particle size of the adhesive emulsion particle (F) is adjusted in the range, and thus an adhesion layer still higher in adhesiveness can be likely formed due to an enhancement in contact area with the substrate. The average particle size is more preferably 200 nm or less from the viewpoint of an enhancement in transparency of the resulting adhesion layer, and is preferably 10 nm or more, more preferably 50 nm or more from the viewpoint of an improvement in storage stability of a raw material composition of the adhesion layer. The average particle size of the adhesive emulsion particle (F) can be measured by a method described in Examples below.

[Inorganic oxide (G)]

The adhesion layer in the present embodiment includes an inorganic oxide (G) from the viewpoint of an enhancement in adhesiveness due to interaction with the hard coating layer. The adhesion layer in the present embodiment includes an adhesive emulsion particle (F) and an inorganic oxide (G) and thus is considered to be increased in degree of surface roughness and therefore enhanced in adhesiveness. The degree of surface roughness of the adhesion layer can be evaluated by, for example, comparing the respective minimum film-forming temperatures of the adhesive emulsion particle (F) and the inorganic oxide (G), as measured with a heat gradient tester according to JIS K6828-2. In other words, a sufficient degree of surface roughness of the adhesion layer can be indirectly confirmed from the minimum film-forming temperature T1 of the adhesive emulsion particle (F) being lower than the minimum film-forming temperature T2 of the inorganic oxide (G). A specific measurement method of the minimum film-forming temperatures T1 and T2 is based on a method described in Examples below.

Specific examples of the inorganic oxide (G) in the present embodiment include, but not limited to the following, respective oxides of silicon, aluminum, titanium, zirconium, zinc, cerium, tin, indium, gallium, germanium, antimony, molybdenum, niobium, magnesium, bismuth, cobalt, and copper. Such an inorganic oxide may be in the form of a single substance or a mixture. In particular, the inorganic oxide (G) is preferably a silica particle. In this regard, the inorganic oxide (G) preferably includes at least one selected from the group consisting of cerium oxide, zinc oxide, aluminum oxide, zirconium oxide, niobium oxide, bismuth oxide, cobalt oxide, copper oxide, tin oxide and titanium oxide from the viewpoint of an enhancement in optical properties.

The primary average particle size of the inorganic oxide (G) in the present embodiment is preferably 2 nm or more from the viewpoint of an improvement in storage stability of a raw material composition of the adhesion layer, and is preferably 150 nm or less, more preferably 100 nm or less, further preferably 50 nm or less from the viewpoint of an improvement in transparency of the entire laminate. Thus, the primary average particle size is preferably 2 nm or more and 100 nm or less, more preferably 2 nm or more and 50 nm or less, further preferably 4 nm or more and 50 nm or less. The primary average particle size can be measured by a method described in Examples below.

The inorganic oxide (G) is not particularly limited, and is preferably any silica particle typified by dry silica or colloidal silica from the viewpoint of interaction with a hydrolyzable silicon compound (b) described below and from the viewpoint of adhesiveness to the hard coating layer. Colloidal silica is preferable because it can also be used even in the form of an aqueous dispersion liquid.

[Colloidal silica suitably used as inorganic oxide (G)]

The acidic colloidal silica suitably used in the present embodiment, for which water is used as a dispersing solvent, is not particularly limited, and any one prepared according to a sol-gel method can also be used and a commercially available product can also be utilized. Such preparation according to a sol-gel method can be made with reference to Werner Stober et al; J. Colloid and Interface Sci., 26, 62-69 (1968), Rickey D. Badley et al; Lang muir 6, 792-801 (1990), Journal of the Japan Society of Colour Material, 61 [9] 488-493 (1988), and the like.

Examples of such a commercially available product utilized include Snowtex-O, Snowtex-OS, Snowtex-OXS, Snowtex-O-40, Snowtex-OL, Snowtex-OYL, Snowtex-OUP, Snowtex-PS-SO, Snowtex-PS-MO, Snowtex-AK-XS, Snowtex-AK, Snowtex-AK-L, Snowtex-AK-YL and Snowtex-AK-PS-S (trade names, manufactured by Nissan Chemical Corporation), Adelite AT-20Q (trade name, manufactured by Adeka Corporation), and Klebosol 20H12 and Klebosol 30CAL25 (trade names, manufactured by Clariant Japan K.K.).

The basic colloidal silica is silica stabilized by addition of an alkali metal ion, an ammonium ion or an amine and is not particularly limited, and examples thereof include Snowtex-20, Snowtex-30, Snowtex-XS, Snowtex-50, Snowtex-30L, Snowtex-XL, Snowtex-YL, Snowtex ZL, Snowtex-UP, Snowtex-ST-PS-S, Snowtex ST-PS-M, Snowtex-C, Snowtex-CXS, Snowtex-CM, Snowtex-N, Snowtex-NXS, Snowtex-NS and Snowtex-N-40 (trade names, manufactured by Nissan Chemical Corporation), Adelite AT-20, Adelite AT-30, Adelite AT-20N, Adelite AT-30N, Adelite AT-20A, Adelite AT-30A, Adelite AT-40 and Adelite AT-50 (trade names, manufactured by Adeka Corporation), Klebosol 30R9, Klebosol 30R50 and Klebosol 50R50 (trade names, manufactured by Clariant Japan K.K.), and Ludox HS-40, Ludox HS-30, Ludox LS, Ludox AS-30, Ludox SM-AS, Ludox AM, Ludox HAS and Ludox SM (trade names, manufactured by DuPont).

The colloidal silica for which a water-soluble solvent is used as a dispersing medium is not particularly limited, and examples thereof include MA-ST-M (methanol dispersion type having a particle size of 20 to 25 nm), IPA-ST (isopropyl alcohol dispersion type having a particle size of 10 to 15 nm), EG-ST (ethylene glycol dispersion type having a particle size of 10 to 15 nm), EGST-ZL (ethylene glycol dispersion type having a particle size of 70 to 100 nm), NPC-ST (ethylene glycol monopropyl ether dispersion type having a particle size of 10 to 15 nm) and TOL-ST (toluene dispersion type having a particle size of 10 to 15 nm), manufactured by Nissan Chemical Corporation.

The dry silica particle is not particularly limited, and examples thereof include AEROSIL manufactured by Nippon Aerosil Co., Ltd., and Reolosil manufactured by Tokuyama Corporation.

The silica particle may include an inorganic base (for example, sodium hydroxide, potassium hydroxide, lithium hydroxide, and/or ammonia) and/or an organic base (for example, tetramethylammonium and/or triethylamine) as stabilizer(s).

[Shape of inorganic oxide (G)]

Examples of the shape of the inorganic oxide (G) in the present embodiment include, but not limited to the following, one of or a mixture of two or more of spherical, horned, polyhedron, elliptical, flattened, linear, beaded, and chained shapes. The inorganic oxide (G) in the present embodiment preferably has a spherical shape and/or a linked structure such as a beaded or chained shape from the viewpoints of hardness and transparency of the laminate. The inorganic oxide (G) more preferably has a linked structure such as a beaded or chained shape from the viewpoint of adhesiveness of the laminate. The beaded shape is a structure where a spherical primary particle is linked in a beaded manner, and the chained shape is a structure where a spherical primary particle is linked in a chained shape. In the present embodiment, the inorganic oxide (G) is extremely preferably silica having a spherical shape and/or a linked structure.

The aspect ratio (longer diameter/shorter diameter) of the inorganic oxide (G) having a beaded or chained shape is preferably 3 to 25. The aspect ratio (longer diameter/shorter diameter) is preferably 3 or more from the viewpoint of adhesiveness. The aspect ratio (longer diameter/shorter diameter) is preferably 25 or less from the viewpoint of transparency. The aspect ratio can be measured by a method described in Examples below.

[Composite of adhesive emulsion particle (F) and inorganic oxide (G)]

The inorganic oxide (G) may be a composite with the adhesive emulsion particle (F), formed in advance. The composite of the adhesive emulsion particle (F) and the inorganic oxide (G) is obtained by, for example, polymerization of a vinyl monomer constituting the above adhesive emulsion particle (F), in the presence of the inorganic oxide (G). The vinyl monomer preferably includes a vinyl monomer having the above secondary and/or tertiary amide group(s) from the viewpoint of interaction with the inorganic oxide (G). The composite can be preferably formed from a hydrogen bond of a hydroxyl group of the inorganic oxide (G) and the secondary and/or tertiary amide group(s).

The average particle size of at least one selected from the group consisting of the inorganic oxide (G), the adhesive emulsion particle (F), and the composite of the inorganic oxide (G) and the adhesive emulsion particle (F) in the present embodiment is preferably 2 nm or more and 400 nm or less from the viewpoints of transparency and adhesiveness. The average particle size can be measured by a method described in Examples below. The adhesion layer in the present embodiment can be obtained by coating the substrate with a coating material composition (J) described below, and subjecting the resultant to, for example, a heat treatment, ultraviolet irradiation, and/or infrared irradiation to thereby form a coating film, and accordingly, when the average particle sizes of the inorganic oxide (G), the adhesive emulsion particle (F), and the composite of the inorganic oxide (G) and the adhesive emulsion particle (F) in such a coating material composition (J) are known, each of the average particle sizes in the adhesion layer can be determined under the assumption that such average particle sizes known are well matched with the average particle sizes of the inorganic oxide (G), the adhesive emulsion particle (F), and the composite of the inorganic oxide (G) and the adhesive emulsion particle (F) in the corresponding adhesion layer.

The mass ratio of the adhesive emulsion particle (F) and the inorganic oxide (G) is preferably 1:0.1 to 1:10, more preferably 1:0.3 to 1:5, further preferably 1:0.5 to 1:2 from the viewpoint of adhesiveness. The adhesion layer in the present embodiment can be obtained by coating the substrate with a coating material composition (J) described below, and subjecting the resultant to, for example, a heat treatment, ultraviolet irradiation, and/or infrared irradiation to thereby form a coating film, and accordingly, when the mass ratio of the adhesive emulsion particle (F) and the inorganic oxide (G) in such a coating material composition (J) is known, the mass ratio in the adhesion layer can be determined under the assumption that such a mass ratio known is well matched with the mass ratio of the adhesive emulsion particle (F) and the inorganic oxide (G) in the corresponding adhesion layer.

The thickness of the adhesion layer is preferably 0.1 $\mu$m or more, more preferably 0.3 $\mu$m or more from the viewpoint of adhesiveness, and is preferably 100.0 $\mu$m or less, more preferably 50.0 $\mu$m or less from the viewpoint of transparency.

[Light-shielding agent]

The adhesion layer in the present embodiment further includes a light-shielding agent, in addition to the adhesive emulsion particle (F) and the inorganic oxide (G), from the viewpoint that optical properties are ensured. The light-shielding agent is not particularly limited, and preferably includes an ultraviolet absorber from the viewpoint of an enhancement in optical properties. Specific examples of the ultraviolet absorber include, but not limited to the following, benzophenone-based ultraviolet absorbers such as 2,4-dihydroxybenzophenone, 2-hydroxy-4-methoxybenzophenone, 2-hydroxy-4-methoxybenzophenone-5-sulfonic acid, 2-hydroxy-4-n-octoxybenzophenone, 2-hydroxy-4-n-dodecyloxybenzophenone, 2-hydroxy-4-benzyloxybenzophenone, bis(5-benzoyl-4-hydroxy-2-methoxyphenyl)methane, 2,2'-dihydroxy-4-methoxybenzophenone, 2,2'-dihydroxy-4,4'dimethoxybenzophenone (trade name "UVINUL3049" manufactured by BASF SE), 2,2',4,4'-tetrahydroxybenzophenone (trade name "UVINUL3050" manufactured by BASF SE), 4-dodecyloxy-2-hydroxybenzophenone, 5-benzoyl-2,4-dihydroxybenzophenone, 2-hydroxy-4-methoxy-2'-carboxybenzophenone, 2-hydroxy-4-stearyloxybenzophenone and 4,6-dibenzoyl resorcinol; benzotriazole-based ultraviolet absorbers such as 2-(2'-hydroxy-5'-methylphenyl)benzotriazole, 2-(2'-hydroxy-5'-tert-butylphenyl)benzotriazole, 2-(2'-hydroxy-3',5'-di-tert-butylphenyl)benzotriazole, 2-(2-hydroxy-5-tert-octylphenyl)benzotriazole, 2-(2-hydroxy-3,5-di-tert-octylphenyl)benzotriazole, 2-[2'-hydroxy-3',5'-bis($\alpha$,$\alpha$'-dimethylbenzyl)phenyl]benzotriazole), a condensate (trade name "TINUVIN1130" manufactured by BASF SE) of methyl-3-[3-tert-butyl-5-(2H-benzotriazol-2-yl)-4-hydroxyphenyl]propionate and polyethylene glycol (molecular weight: 300), isooctyl-3-[3-(2H-benzotriazol-2-yl)-5-tert-butyl-4-hydroxyphenyl]propionate (trade name "TINUVIN384" manufactured by BASF SE), 2-(3-dodecyl-5-methyl-2-hydroxyphenyl)benzotriazole (trade name "TINUVIN571" manufactured by BASF SE), 2-(2'-hydroxy-3'-tert-butyl-5'-methylphenyl)-5-chlorobenzotriazole, 2-(2'-hydroxy-3',5'-di-tert-amylphenyl)benzotriazole, 2-(2'-hydroxy-4'-octoxyphenyl)benzotriazole, 2-[2'-hydroxy-3'-(3",4",5",6"-tetrahydrophthalimidemethyl)-5'-methylphenyl]benzotriazole, 2,2-methylenebis[4-(1,1,3,3-tetramethylbutyl)-6-(2H-benzotriazol-2-yl)phenol], 2-(2H-benzotriazol-2-yl)-4,6-bis(1-methyl-1-phenylethyl)phenol (trade name "TINUVIN900" manufactured by BASF SE), and TINUVIN384-2, TINUVIN326, TINUVIN327, TINUVIN109, TINUVIN970, TINUVIN328, TINUVIN171, TINUVIN970, TINUVIN PS, TINUVIN P, TINUVIN99-2 and TINVIN928 (trade names, manufactured by BASF SE); triazine-based ultraviolet absorbers such as 2-[4-[(2-hydroxy-3-dodecyloxypropyl)oxy]-2-hydroxyphenyl]-4,6-bis(2,4-dimethylphenyl)-1,3,5-triazine, 2-[4-[(2-hydroxy-3-tridecyloxypropyl)oxy]-2-hydroxyphenyl]-4,6-bis(2,4-dimethylphenyl)-1,3,5-triazine, 2,4-bis(2-hydroxy-4-butyloxyphenyl)-6-(2,4-bisbutyloxyphenyl)-1,3,5-triazine (trade name "TINUVIN460" manufactured by BASF SE), 2-(2-hydroxy-4-[1-octyloxycarbonylethoxy]phenyl)-4,6-bis(4-phenylphenyl)-1,3,5-triazine (trade name "TINUVIN479" manufactured by BASF SE), and TINUVIN400, TINUVIN405, TINUVIN477 and TINUVIN1600 (trade names, manufactured by BASF SE); malonic acid ester-based ultraviolet absorbers such as HOSTAVIN PR25, HOSTAVIN B-CAP and HOSTAVIN VSU (trade names, manufactured by Clariant Japan K.K.); anilide-based ultraviolet absorbers such as HOSTAVIN 3206 LIQ, HOSTAVIN VSU P and HOSTAVIN 3212 LIQ (trade names, manufactured by Clariant Japan K.K.); salicylate-based ultraviolet absorbers such as amyl salicylate, menthyl salicylate, homomenthyl salicylate, octyl salicylate, phenyl salicylate, benzyl salicylate and p-isopropanolphenyl salicylate; cyanoacrylate-based ultraviolet absorbers such as ethyl-2-cyano-3,3-diphenyl acrylate (trade name "UVINUL3035" manufactured by BASF SE), (2-ethylhexyl)-2-cyano-3,3-diphenyl acrylate (trade name "UVINUL3039" manufactured by BASF SE) and 1,3-bis((2'-cyano-3',3'-diphenylacryloyl)oxy)-2,2-bis-(((2'-cyano-3',3'-diphenylacryloyl)oxy)methyl)propane (trade name "UVINUL3030" manufactured by BASF SE); radical polymerizable ultraviolet absorbers each having a radical polymerizable double bond in its molecule, such as 2-hydroxy-4-acryloxybenzophenone, 2-hydroxy-4-methacryloxybenzophenone, 2-hydroxy-5-acryloxybenzophenone, 2-hydroxy-5-methacryloxybenzophenone, 2-hydroxy-4-(acryloxy-ethoxy)benzophenone, 2-hydroxy-4-(methacryloxy-ethoxy)benzophenone, 2-hydroxy-4-(methacryloxy-diethoxy)benzophenone, 2-hydroxy-4-(acryloxy-triethoxy)benzophenone, 2-(2'-hydroxy-5'-methacryloxyethylphenyl)-2H-benzotriazole (trade name "RUVA-93" manufactured by Otsuka Chemical Co., Ltd.), 2-(2'-hydroxy-5'-methacryloxyethyl-3-tert-butylphenyl)-2H-benzotriazole, 2-(2'-hydroxy-5'-methacryloxypropyl-3-tert-butylphenyl)-5-chloro-2H-benzotriazole and 3-methacryloyl-2-hydroxypropyl-3-[3'-(2''-benzotriazolyl)-4-hydroxy-5-tert-butyl]phenylpropionate (trade name "CGL-104" manufactured by Ciba-Geigy Japan Ltd.); polymers each having ultraviolet absorptivity, such as UV-G101, UV-G301, UV-G137, UV-G12 and UV-G13 (trade names, manufactured by Nippon Shokubai Co., Ltd.); and ultraviolet absorbers each having reactivity with a silanol group, an isocyanate group, an epoxy group, a semicarbazide group or a hydrazide group, and these may be used singly or in combinations of two or more thereof. In particular, the ultraviolet absorber preferably includes at least one selected from the group consisting of a benzotriazole-based ultraviolet absorber, a benzophenone-based ultraviolet absorber, a triazine-based ultraviolet absorber, a malonic acid ester-based ultraviolet absorber, an anilide-based ultraviolet absorber, a salicylate-based ultraviolet absorber and a cyanoacrylate-based ultraviolet absorber, more preferably includes at least one selected from the group consisting of a benzotriazole-based ultraviolet absorber, a benzophenone-based ultraviolet absorber, a triazine-based ultraviolet absorber and a cyanoacrylate-based ultraviolet absorber.

[Component optionally included in adhesion layer]

The adhesion layer in the present embodiment is not particularly limited as long as it includes the adhesive emulsion particle (F), the inorganic oxide (G) and the light-shielding agent, and optionally includes any other component. Such any other component is not particularly limited, examples thereof include a thermoplastic resin, a thermosetting resin, and a rubber-elastomer, and in particular, an acrylic resin, an acrylic urethane-based resin, a urethane-based resin, and a silicone-based resin are preferable. The adhesion layer optionally includes, if necessary, any appropriate additive. Examples of the additive include, but not limited to the following, a crosslinking agent, a tackifier, a plasticizer, a pigment, a dye, a filler, an anti-aging agent, a conductive material, a light stabilizer, a peel strength adjusting agent, a softener, a surfactant, a flame retardant, an antioxidant, and a catalyst, and a light stabilizer and/or an antioxidant are/is preferably included from the viewpoint of optical properties. The light stabilizer is not particularly limited from the same viewpoint, and examples thereof include a hindered amine-based compound, a benzotriazole-based compound, a triazine-based compound, a benzophenone-based compound, and a benzoate-based compound. The antioxidant is not particularly limited, and examples thereof include a phenol-based compound, an amine-based compound, a phosphorus-based compound, and a sulfur-based compound.

Examples of the crosslinking agent include, but not limited to the following, an isocyanate-based crosslinking agent, an epoxy-based crosslinking agent, a carbodiimide-based crosslinking agent, an oxazoline-based crosslinking agent, an aziridine-based crosslinking agent, an amine-based crosslinking agent, a peroxide-based crosslinking agent, a melamine-based crosslinking agent, a urea-based crosslinking agent, a metal alkoxide-based crosslinking agent, a metal chelate-based crosslinking agent, and a metal salt-based crosslinking agent.

Examples of the light stabilizer include, but not limited to the following, hindered amine-based light stabilizers such as bis(2,2,6,6-tetramethyl-4-piperidyl)succinate, bis(2,2,6,6-tetramethylpiperidyl)sebacate, bis(1,2,2,6,6-pentamethyl-4-piperidyl)2-(3,5-di-tert-butyl-4-hydroxybenzyl)-2-butylmalonate, 1-[2-[3-(3,5-di-tert-butyl-4-hydroxyphenyl)propinyloxy]ethyl]-4-[3-(3,5-di-tert-butyl-4-hydroxyphenyl)propinyloxy]-2,2,6,6-tetramethylpiperidine, a mixture (trade name "TINUVIN292" manufactured by BASF SE) of bis(1,2,2,6,6-pentamethyl-4-piperidyl)sebacate and methyl-1,2,2,6,6-pentamethyl-4-piperidyl-sebacate, bis(1-octoxy-2,2,6,6-tetramethyl-4-piperidyl)sebacate, and TINUVIN123, TINUVIN144, TINUVIN152, TINUVIN249, TINUVIN292 and TINUVIN5100 (trade names, manufactured by BASF SE); radical polymerizable hindered amine-based light stabilizers such as 1,2,2,6,6-pentamethyl-4-piperidyl methacrylate, 1,2,2,6,6-pentamethyl-4-piperidyl acrylate, 2,2,6,6-tetramethyl-4-piperidyl methacrylate, 2,2,6,6-tetramethyl-4-piperidyl acrylate, 1,2,2,6,6-pentamethyl-4-iminopiperidyl methacrylate, 2,2,6,6,-tetramethyl-4-iminopiperidyl methacrylate, 4-cyano-2,2,6,6-tetramethyl-4-piperidyl methacrylate and 4-cyano-1,2,2,6,6-pentamethyl-4-piperidyl methacrylate; and polymers each having photostability, such as U-Double E-133, U-Double E-135, U-Double S-2000, U-Double S-2834, U-Double S-2840, U-Double S-2818 and U-Double S-2860 (trade names, manufactured by Nippon Shokubai Co., Ltd.).

The above components may be each used singly or in combinations of two or more thereof.

The content of the ultraviolet absorber is preferably 1 part by mass or more, more preferably 5 parts by mass or more, further preferably 12 parts by mass or more, still further preferably 20 parts by mass or more based on 100 parts by mass of the solid content of the adhesive emulsion particle (F) from the viewpoint of optical properties. The content is preferably 300 parts by mass or less, more preferably 150 parts by mass or less, further preferably 50 parts by mass or less based on 100 parts by mass of the solid content of the adhesive emulsion particle (F) from the viewpoint of solubility.

The content of the light stabilizer is preferably 0.01 parts by mass or more, more preferably 0.05 parts by mass or more, further preferably 0.1 parts by mass or more, still further preferably 0.5 parts by mass or more based on 100 parts by mass of the solid content of the adhesive emulsion particle (F) from the viewpoint of optical properties. The content is preferably 100 parts by mass or less, more preferably 50 parts by mass or less, further preferably 10 parts by mass or less based on 100 parts by mass of the solid content of the adhesive emulsion particle (F) from the viewpoint of stability of a coating material.

The content of the antioxidant is preferably 0.01 parts by mass or more, more preferably 0.05 parts by mass or more, further preferably 0.1 parts by mass or more, still further preferably 0.5 parts by mass or more based on 100 parts by mass of the solid content of the adhesive emulsion particle (F) from the viewpoint of optical properties. The content is preferably 100 parts by mass or less, more preferably 50 parts by mass or less, further preferably 10 parts by mass or less based on 100 parts by mass of the solid content of the adhesive emulsion particle (F) from the viewpoint of stability of a coating material.

[Isocyanate compound]

The adhesion layer in the present embodiment preferably further includes an isocyanate compound and/or a urethane compound as isocyanate-based crosslinking agent(s) from the viewpoint of an enhancement in adhesiveness of the adhesion layer and the substrate. When an isocyanate compound and/or a urethane compound are/is further included, the adhesive emulsion particle (F) preferably used is polymerized from a monomer including the above hydroxyl group-containing vinyl monomer. In this case, a hydroxyl group of the adhesive emulsion particle (F) and the isocyanate compound tend to form a urethane bond during formation of a coating film to result in enhancements in adhesiveness of such a coating film and strength of such a coating film.

The isocyanate compound refers to a compound having at least one or more isocyanate groups in one molecule. The isocyanate compound may be a compound having two or more isocyanate groups in one molecule.

Examples of the isocyanate compound include, but not limited to the following, aliphatic diisocyanates such as 1,4-tetramethylene diisocyanate, ethyl(2,6-diisocyanate)hexanoate, 1,6-hexamethylene diisocyanate, 1,12-dodecamethylene diisocyanate and 2,2,4- or 2,4,4-trimethylhexamethylene diisocyanate; aliphatic triisocyanates such as 1,3,6-hexamethylene triisocyanate, 1,8-diisocyanato-4-isocyanatomethyloctane and 2-isocyanatoethyl(2,6-diisocyanato)hexanoate; alicyclic diisocyanates such as 1,3- or 1,4-bis(isocyanatomethylcyclohexane), 1,3- or 1,4-diisocyanate cyclohexane, 3,5,5-trimethyl(3-isocyanatomethyl)cyclohexylisocyanate, dicyclohexylmethane-4,4'-diisocyanate and 2,5- or 2,6-diisocyanatomethylnorbornane; alicyclic triisocyanates such as 2,5- or 2,6-diisocyanatomethyl-2-isocyanate propylnorbornane; aralkylene diisocyanates such as m-xylylene diisocyanate and $\alpha,\alpha,\alpha'\alpha'$-tetramethyl-m-xylylene diisocyanate; aromatic diisocyanates such as m- or p-phenylene diisocyanate, tolylene-2,4- or 2,6-diisocyanate, diphenylmethane-4,4'-diisocyanate, naphthalene-1,5-diisocyanate, diphenyl-4,4'-diisocyanate, 4,4'-diisocyanato-3,3'-dimethyldiphenyl, 3-methyl-diphenylmethane-4,4'-diisocyanate and diphenyl ether-4,4'-diisocyanate; and aromatic triisocyanates such as triphenylmethane triisocyanate and tris(isocyanatophenyl)thiophosphate, as well as diisocyanates or polyisocyanates each having a uretdione structure obtained by cyclization and dimerization of isocyanate groups of any of the above diisocyanates or triisocyanates; polyisocyanates each having an isocyanurate structure obtained by cyclization and trimerization of isocyanate groups of any of the above diisocyanates or triisocyanates; polyisocyanates each having a buret structure obtained by reacting any of the above diisocyanates or triisocyanates with water; polyisocyanates each having an oxadiazine trione structure obtained by reacting any of the above diisocyanates or triisocyanates with carbon dioxide; polyisocyanates each having an allophanate structure obtained by reacting any of the above diisocyanates or triisocyanates with any of various alcohols; and polyisocyanates each obtained by reacting any of the above diisocyanates or triisocyanates with an active hydrogen-containing compound like a polyhydroxy compound, a polycarboxy compound, or a polyamine compound. Examples of an isocyanate compound having an alkoxysilane moiety and/or a siloxane moiety in its molecule include 3-isocyanatepropyltriethoxysilane and/or hydrolyzed condensate(s) of 3-isocyanatepropyltriethoxysilane and/or the like. These can be used singly or as a mixture of two or more thereof. The isocyanate compound may be a block polyisocyanate obtained by reacting an isocyanate group with a blocking agent.

The blocking agent is not particularly limited, and examples thereof include an oxime-based compound, an alcohol-based compound, an acid amide-based compound, an acid imide-based compound, a phenol-based compound, an amine-based compound, an active methylene-based compound, an imidazole-based compound, and a pyrazole-based compound. The oxime-based compound is not particularly limited, and examples thereof include formamide oxime, acetamide oxime, acetoxime, methyl ethyl ketoxime, and cyclohexanone oxime. The alcohol-based compound is not particularly limited, and examples thereof include methanol, ethanol, 2-propanol, n-butanol, sec-butanol, 2-ethyl-1-hexanol, 2-methoxyethanol, 2-ethoxyethanol, and 2-butoxyethanol. The acid amide-based compound is not particularly limited, and examples thereof include acetanilide, acetic amide, $\varepsilon$-caprolactam, $\delta$-valerolactam, and $\gamma$-butyrolactam. The acid imide-based compound is not particularly limited, and examples thereof include succinic imide and maleic imide. The phenol-based compound is not particularly limited, and examples thereof include phenol, cresol ethylphenol, butylphenol, nonylphenol, dinonylphenol, styrenated phenol, and hydroxybenzoic acid ester. The amine-based compound is not particularly limited, and examples thereof include diphenylamine, aniline, carbazole, di-n-propylamine, diisopropylamine, and isopropylethylamine. The active methylene-based compound is not particularly limited, and examples thereof include dimethyl malonate, diethyl malonate, methyl acetoacetate, ethyl acetoacetate, and acetylacetone. The imidazole-based compound is not particularly limited, and examples thereof include imidazole and 2-methylimidazole. The pyrazole-based compound is not particularly limited, and examples thereof include pyrazole, 3-methylpyrazole, and 3,5-dimethylpyrazole.

Among the above polyisocyanate compounds, aliphatic or alicyclic diisocyanates or triisocyanates, aralkylene diisocyanates, or polyisocyanates derived therefrom are particularly preferable from the viewpoints of weather resistance and pot life. Such a polyisocyanate is preferably one having a structure of buret, isocyanurate, urethane, uretdione, allophanate, or the like in its molecule. Such a polyisocyanate having a buret structure is often excellent in adhesiveness. Such a polyisocyanate having an isocyanurate structure is often excellent in weather resistance. Such a polyisocyanate having a urethane structure using an alcohol compound having a long side chain is often excellent in elasticity and extensibility. Such a polyisocyanate having a uretdione structure or an allophanate structure often has a low viscosity.

The isocyanate compound is preferably a water-dispersible isocyanate compound obtained by reacting the polyisocyanate compound having two or more isocyanate groups in one molecule, and a hydroxyl group-containing hydrophilic compound having a nonionic and/or ionic hydrophilic group at an equivalent ratio of isocyanate group/hydroxyl group, ranging from 1.05 to 1000, from the viewpoint of water dispersibility. The equivalent ratio is more preferably in the range of 2 to 200, further preferably 4 to 100. An equivalent ratio of 1.05 or more is preferable because of resulting in a content rate of an isocyanate group in a hydrophilic polyisocyanate at a predetermined level or more and thus an increase in number of crosslinking points in a crosslinkable water-based covering composition, leading to an increase in curing rate or an enhancement in strength of a covering article such as a coating film. An equivalent ratio of 1000 or less is preferable because of resulting in exhibition of hydrophilicity. Such a water-dispersible isocyanate compound is not particularly limited, a commercially available product can also be adopted, and, for example, WT30-100 manufactured by Asahi Kasei Corporation or WM44-L70G manufactured by Asahi Kasei Corporation is preferably used as one having the above characteristics.

The water-dispersible isocyanate compound can be used without particular limitation as long as it is obtained by introducing a hydrophilic group according to a conventionally known procedure. Examples can include a reaction product of a compound (m) represented by general formula $R^1O(R^2O)_n$-H (wherein $R^1$ represents an alkyl group having 1 to 30 carbon atoms or a group containing two or more aromatic rings, $R^2$ represents an alkylene group having 1 to 5 carbon atoms, and n represents an integer of 2 to 250) and a polyisocyanate compound, a reaction product of a vinyl polymer having a hydrophilic group and a hydroxyl group, and a polyisocyanate compound, and a reaction product of an emulsifier obtained by reacting alkoxy polyalkylene glycol and dialkanolamine, and a polyisocyanate compound. In particular, a reaction product of the compound (m) and a polyisocyanate compound, and a reaction product of a vinyl polymer having a hydrophilic group and a hydroxyl group, and a polyisocyanate compound are particularly preferable because of being excellent in water dispersibility.

Examples of the compound (m) include alkoxy polyalkylene glycols such as polymethylene glycol monomethyl ether, polyethylene glycol monomethyl ether, polyethylene glycol monoethyl ether, polyethylene glycol monopropyl ether, polyethylene glycol monolauryl ether, polyoxyethylene-oxypropylene (random and/or block) glycol monomethyl ether and polyoxyethylene-oxytetramethylene (random and/or block) glycol polybutylene glycol monomethyl ether, and nonionic surfactants each having a group containing two or more aromatic rings, such as a (mono to penta) styrenated phenyl group, a mono- (or di-, tri) styryl-methyl-phenyl group, a tribenzylphenyl group, or a β-naphthyl group. In particular, polyethylene glycolmonomethyl ether, and a nonionic surfactant having a (mono- to penta-) styrenated phenyl group are preferable from the viewpoint of self-emulsification ability and pot life.

Such a compound (m), which preferably has a molecular weight in the range of 100 to 10000, more preferably 300 to 5000, can be suitably used.

With respect to the vinyl polymer having a hydrophilic group and a hydroxyl group, examples of the hydrophilic group include known various anionic groups, cationic groups, and nonionic groups, and nonionic groups are preferable. If the hydrophilic group is a nonionic group, the pot life of a coating composition is remarkably elongated and the particle size of a polyisocyanate oil droplet is decreased, resulting in a tendency to further enhance water resistance of a coating film.

Examples of the vinyl polymer having a hydrophilic group and a hydroxyl group include an acrylic polymer, a fluoroolefin-based polymer, a vinyl ester-based polymer, an aromatic vinyl polymer, and a polyolefin-based polymer. In particular, an acrylic polymer is preferable from the viewpoint of weather resistance of a coating film formed.

Examples of the polymerization method for obtaining an acrylic polymer suitable as the vinyl polymer having a hydrophilic group and a hydroxyl group include, but not particularly limited, suspension polymerization, emulsion polymerization or solution polymerization. An acrylic polymer is preferable which is obtained by solution polymerization of an ethylenically unsaturated monomer (i) having a hydrophilic group and an ethylenically unsaturated monomer (ii) having a hydroxyl group, and any other ethylenically unsaturated monomer (iii) copolymerizable therewith can also be, if necessary, used.

Examples of the ethylenically unsaturated monomer (i) having a hydrophilic group include alkoxy polyalkylene glycol (meth)acrylates such as methoxypolyethylene glycol (meth)acrylate, ethoxypolyethylene glycol (meth)acrylate and butoxypolyethylene glycol (meth)acrylate, and polyalkylene glycol di(meth)acrylates such as polyethylene glycol di(meth)acrylate, as well as (meth)acrylamide-based monomers and anionic vinyl monomers. An ethylenically unsaturated monomer having both a hydrophilic group and a hydroxyl group in its molecule, as in polyalkylene glycol (meth)acrylates, can also be used. These may be used singly or as a mixture of two or more thereof.

Examples of such any other ethylenically unsaturated monomer (iii) copolymerizable therewith include (meth)acrylic acid esters, aromatic vinyl compounds, vinyl cyanides, carbonyl group-containing vinyl monomers, olefins, dienes, haloolefins, vinyl ethers, and allyl esters. These may be used singly or as a mixture of two or more thereof.

The vinyl polymer having a hydrophilic group and a hydroxyl group, which can be suitably used, preferably has a weight average molecular weight (in terms of polystyrene, GPC method) in the range of 2000 to 100000, more preferably 3000 to 50000.

The content of the isocyanate compound (M) in the coating material composition (J), relative to the adhesive emulsion particle (F) obtained by polymerization of the monomer including the hydroxyl group-containing vinyl monomer, is preferably 0.02 or more as the ratio (X = Molar number of isocyanate group/Molar number of hydroxyl group) of the molar number of an isocyanate group included in the isocyanate compound (C) to the molar number of a hydroxyl group included in the adhesive emulsion particle (F). X is more preferably 0.1 or more from the viewpoint of adhesiveness of the coating film formed and the substrate, and is further preferably 0.15 or more from the viewpoint of scratch resistance of the coating film. X is preferably 10 or less from the viewpoint of stability (resistance to gelation or an increase in viscosity) of the coating material composition, and is more preferably 5 or less from the viewpoints of a low water contact angle and a high transparency (low HAZE) of the coating film formed. The ratio (X) may be 0.02 or more and 10 or less, 0.02 or more and 5 or less, 0.1 or more and 10 or less, 0.1 or more and 5 or less, 0.15 or more and 10 or less, or 0.15 or more and 5 or less.

In one embodiment, the mass ratio (Mass of isocyanate compound/Total mass of adhesive emulsion particle (F) and inorganic oxide (G)) of the isocyanate compound to the adhesive emulsion particle (F) and the inorganic oxide (G) is preferably 0.001 or more, more preferably 0.01 or more, further preferably 0.05 or more from the viewpoint of adhesiveness. The mass ratio preferably 1.0 or less, more preferably 0.7 or less, further preferably 0.5 or less from the viewpoint of transparency.

The viscosity of the isocyanate compound (M) is preferably 1 to 50000 mPa·s (20°C), more preferably 1 to 20000 mPa·s (20°C), further preferably 10 to 10000 mPa·s (20°C). The viscosity of the isocyanate compound (C) may be 10 to 50000 mPa·s (20°C), 10 to 20000 mPa·s (20°C), or 10 to 10000 mPa·s (20°C). The viscosity of the polyisocyanate compound (M) is preferably 50000 mPa·s or less because the compound is easily dispersed in water. The viscosity can be here measured with a common E-type viscometer. In one embodiment, the viscosity is measured at a rotation number of 2.5 rpm and at 25°C with an E-type viscometer (RE-80U manufactured by Toki Sangyo Co., Ltd.). Such an isocyanate compound is not particularly limited, a commercially available product can also be adopted, and, for example, WT30-100 manufactured by Asahi Kasei Corporation or WM44-L70G manufactured by Asahi Kasei Corporation is preferably used as one having the above characteristics.

The above various isocyanate compounds may be each partially or fully in the form of a urethane compound due to, for example, a reaction with a polyol.

<Method for producing adhesion layer>

The method for producing the adhesion layer in the present embodiment is not particularly limited, and the adhesion layer can be obtained by, for example, coating the substrate with the coating material composition (J) in which the adhesive emulsion particle (F) and the inorganic oxide (G), and the light-shielding agent and any other appropriate component are dispersed and dissolved in a solvent, and subjecting the resultant to, for example, a heat treatment, ultraviolet irradiation, and/or infrared irradiation to thereby form a coating film. The adhesive emulsion particle (F) and the inorganic oxide (G), here used, may be a composite thereof formed in advance. Examples of the coating method include, but not limited to the following, a spraying method, a flow coating method, a brush coating method, a dip coating method, a spin coating method, a screen printing method, a casting method, a gravure printing method, and a flexographic printing method. The coating material composition (J) subjected to coating can be preferably formed into a coating film by, for example, a heat treatment at room temperature to 250°C, more preferably 40°C to 150°C, and/or ultraviolet or infrared irradiation. This coating can be applied for not only coating a substrate already formed, but also coating a flat plate in advance before forming and processing, like a pre-coating metal including a rust-resistant steel plate.

[Coating material composition (J)]

The coating material composition (J) of the present embodiment is preferably a coating material composition including: a mixture of an adhesive emulsion particle (F) and an inorganic oxide (G), and/or a composite of the inorganic oxide (G) and the adhesive emulsion particle (F); and a light-shielding agent (S1), in which the average particle size of the mixture and/or composite is 2 nm or more and 2000 nm or less, and the mass ratio of the inorganic oxide (G) and the adhesive emulsion particle (F) is 1:0.1 to 1:10.
The average particle size can be measured by a method described in Examples below.
When the coating material composition (J) includes a mixture of the adhesive emulsion particle (F) and the inorganic oxide (G), the average particle size of the mixture can be said to be 2 nm or more and 2000 nm or less if both the average particle size of the adhesive emulsion particle (F) and the primary average particle size of the inorganic oxide (G) are 2 nm or more and 2000 nm or less.
The coating material composition (J) can include a solvent, and any one usable in a coating material composition (I) described below can be appropriately adopted as the solvent.
The detail of each component included in the coating material composition (J), not mentioned below, is as described above with respect to each component included in the adhesion layer.

[Composite of adhesive emulsion particle (F) and inorganic oxide (G)]

The adhesive emulsion particle (F) and the inorganic oxide (G) included in the coating material composition (J) may be mixed, or may be a composite of the adhesive emulsion particle (F) and the inorganic oxide (G), formed in advance. The composite of the adhesive emulsion particle (F) and the inorganic oxide (G) is obtained by, for example, polymerization of a vinyl monomer of the above adhesive emulsion particle (F), in the presence of the inorganic oxide (G).
The vinyl monomer preferably includes a vinyl monomer having the above secondary and/or tertiary amide group(s) from the viewpoint of interaction with the inorganic oxide (G). The composite is preferably formed from a hydrogen bond of a hydroxyl group of the inorganic oxide (G) and the secondary and/or tertiary amide group (s) .
The average particle size(s) of the mixture of the adhesive emulsion particle (F) and the inorganic oxide (G) and/or the composite of the adhesive emulsion particle (F) and the inorganic oxide (G) in the present embodiment are/is more preferably 20 nm or more from the viewpoint of an improvement in storage stability of a raw material composition of the adhesion layer, and is preferably 2000 nm or less, more preferably 1000 nm or less, further preferably 500 nm or less from the viewpoint of transparency.
The average particle size can be measured by a method described in Examples below, and can be adjusted in the above range by, for example, the mass ratio of the adhesive emulsion particle (F) and the inorganic oxide (G), and/or the solid content concentration.
The mass ratio of the adhesive emulsion particle (F) and the inorganic oxide (G) in the coating material composition (J) is preferably 1:0.1 to 1:10, more preferably 1:0.3 to 1:5, further preferably 1:0.5 to 1:2.
The inorganic oxide (G) in the coating material composition (J) is preferably silica having a spherical shape and/or a linked structure, and one described above as the silica having a spherical shape and/or a linked structure included in the adhesion layer can be appropriately adopted. The spherical silica is not particularly limited, a commercially available product can also be adopted, and, for example, Snowtex C or Snowtex OS manufactured by Nissan Chemical Corporation is preferably used. The silica having a linked structure is not particularly limited, and a commercially available product can also be adopted, and, for example, Snowtex PSSO manufactured by Nissan Chemical Corporation is preferably used.

The aspect ratio (longer diameter/shorter diameter) of the inorganic oxide (G) in the coating material composition (J) is preferably 3 to 25. The aspect ratio can be measured based on a method described in Examples below. The inorganic oxide (G) having the above aspect ratio is not particularly limited, a commercially available product can also be adopted, and, for example, Snowtex PSSO manufactured by Nissan Chemical Corporation is preferably used.

The coating material composition (J) includes a light-shielding agent (S1), and one described above as the light-shielding agent (S1) included in the adhesion layer can be appropriately adopted. In the present embodiment, the light-shielding agent (S1) preferably includes an ultraviolet absorber, and one described above as the ultraviolet absorber included in the adhesion layer can be appropriately adopted.

The coating material composition (J) preferably further includes a hindered amine-based light stabilizer, and one described above as the hindered amine-based light stabilizer included in the adhesion layer can be appropriately adopted.

The adhesive emulsion particle (F) in the coating material composition (J) preferably has a functional group (e) having a secondary amide group and/or a tertiary amide group. The functional group (e) having a secondary amide group and/or a tertiary amide group is not particularly limited, and, for example, one exemplified as a functional group (e) having a secondary amide group and/or a tertiary amide group in a coating material composition (I) described below can be appropriately adopted.

The adhesive emulsion particle (F) in the coating material composition (J) preferably has a functional group having a hydroxyl group. The functional group having a hydroxyl group is not particularly limited, and, for example, one exemplified as a functional group having a hydroxyl group in a coating material composition (I) described below can be appropriately adopted.

[Isocyanate compound]

The coating material composition (J) preferably contains an isocyanate compound and/or a urethane compound from the viewpoint of an enhancement in adhesiveness of the adhesion layer and the substrate, the isocyanate compound is more preferably a water-dispersible isocyanate compound, and the water-dispersible isocyanate compound is further preferably a block isocyanate. The isocyanate compound and/or the urethane compound are/is not particularly limited, and, for example, any described above as the isocyanate compound and/or the urethane compound in the adhesion layer can be appropriately adopted. Those described above as the water-dispersible isocyanate compound and the block isocyanate in the adhesion layer can be appropriately adopted here as the water-dispersible isocyanate compound and the block isocyanate.

[Properties of coating material composition (J)]

The solid content concentration of the coating material composition (J) is preferably 0.01 to 60% by mass, more preferably 1 to 40% by mass from the viewpoint of coatability. The viscosity at 20°C of the coating material composition (J) is preferably 0.1 to 100000 mPa·s, preferably 1 to 10000 mPa·s from the viewpoint of coatability.

[Hard coating layer]

The hard coating layer (hereinafter, also referred to as "layer (C)".) in the present embodiment not only is disposed on the adhesion layer-applied substrate, but also includes a matrix component (B) containing an inorganic oxide (D), and contributes to durability of the laminate. Any layer having a Martens hardness HM of 100 N/mm$^2$ or more is herein particularly referred to as "hard coating layer".

The hard coating layer in the present embodiment is preferably, from the viewpoint of abrasion resistance, a hard coating layer further including a polymer nanoparticle (A) dispersed in the matrix component (B), in which, preferably, the Martens hardness $HM_A$ of the polymer nanoparticle (A) and the Martens hardness $HM_B$ of the matrix component (B) satisfy a relationship of $HM_B/HM_A > 1$, and the Martens hardness HM of the hard coating layer is 100 N/mm$^2$ or more.

Even if it is difficult to confirm the magnitude relationship between the Martens hardness $HM_A$ and the Martens hardness $HM_B$, the magnitude relationship with respect to such Martens hardness can be estimated by comparison between the respective cohesion forces of the polymer nanoparticle (A) and the matrix component (B) described below. A lower cohesion force means a higher elasticity, and thus a lower cohesion force means that a coating film is more unlikely to be deformed and is higher in hardness. Specifically, the above preferable layer (C) can also be specified as follows. That is, the above preferable layer (C) includes the polymer nanoparticle (A) and the matrix component (B), the cohesion force $F_A$ of the polymer nanoparticle (A) and the cohesion force $F_B$ of the matrix component (B), as measured in a cohesion force mode of a scanning probe microscope (SPM), satisfy a relationship of $F_A/F_B > 1$, and the Martens hardness HM of the hard coating layer is 100 N/mm$^2$ or more.

The polymer nanoparticle (A) in the layer (C) in the present embodiment is preferably dispersed in the matrix component (B). The "dispersing" in the present embodiment means that the polymer nanoparticle (A) is dispersed in the matrix component (B) uniformly or with any structure being formed, under the assumption that the polymer nanoparticle (A) corresponds to a dispersing phase and the matrix component (B) corresponds to a continuous phase. The dispersing can be confirmed by cross-sectional SEM observation of the hard coating layer. The hard coating layer in the present embodiment tends to have high abrasion resistance due to dispersing of the polymer nanoparticle (A) in the matrix component (B).

[Martens hardness]

The Martens hardness in the present embodiment is the hardness according to ISO14577-1, and is a value calculated from an indentation depth of 2 mN under measurement conditions (Vickers quadrangular pyramid diamond indenter, loading condition: 2 mN/20 sec, unloading condition: 2 mN/20 sec). The Martens hardness in the present embodiment can be measured by using, for example, a micro-hardness meter Fischer scope (HM2000S manufactured by Fischer Instruments K.K.), a nano indentation tester (ENT-NEXUS manufactured by Elionix Inc.), a nano indenter (iNano, G200 manufactured by Toyo Corporation), or a nano indentation system (TI980 manufactured by Bruker AXS GmbH), and a lower indentation depth means higher Martens hardness and a higher indentation depth means lower Martens hardness.

[Cohesion force]

The cohesion force in the present embodiment can be measured with a scanning probe microscope (SPM), and a lower cohesion force means a higher elasticity and thus a lower cohesion force means that a coating film is more unlikely to be deformed and is higher in hardness. The method for measuring the cohesion force can be made by using, but not limited to the following, for example, SPM-970 or SPM-9700HT manufactured by Shimadzu Corporation, Dimension ICON manufactured by Bruker AXS GmbH, or AFM5000II manufactured by Hitachi High-Tech Science Corporation.

[Other hardness]

The Martens hardness and the magnitude relationship between the cohesion forces in the present embodiment can also be estimated by confirming a magnitude relationship between measurement values with other hardness as an index. Such other hardness is not particularly limited as long as it is an index exhibiting the difficulty of deformation of a material in application of any force to the material, and examples thereof can also include Vickers hardness and indentation hardness each measured with an indentation hardness meter typified by a micro-hardness meter or a nano indentation instrument, and an index expressed as a logarithmic decay rate measured with pendulum-type viscoelasticity tester typified by a rigid pendulum-type physical property tester. Other examples can also include indices expressed as a phase, a frictional force, viscoelasticity, an adsorptive force, hardness, and elastic modulus, as measured with a scanning probe microscope (SPM). If it is confirmed by such indices that the hardness of the matrix component (B) is higher than the hardness of the polymer nanoparticle (A), it is presumed that the matrix component (B) is harder than the polymer nanoparticle (A) also in terms of the Martens hardness and the cohesion force.

[Martens hardness $HM_A$ of polymer nanoparticle (A) and Martens hardness $HM_B$ of matrix component (B)]

The Martens hardness $HM_A$ of the polymer nanoparticle (A) and the Martens hardness $HM_B$ of the matrix component (B) in the present embodiment preferably satisfy a relationship of the following expression (1).

$$HM_B/HM_A > 1 \qquad \text{expression (1)}$$

The expression (1) indicates that the soft polymer nanoparticle (A) is present in the hard matrix component (B), and such hardness can be expressed with a three-dimensional slope and thus the layer (C) tends to be able to exhibit abrasion resistance which has not been exhibited by any conventional coating film. The reason for this is estimated, but not intended to be limited to the following, as follows: the soft nanoparticle absorbs any impact and the hard matrix component suppresses any deformation. The range of $HM_A$ is preferably 50 N/mm$^2$ or more, more preferably 100 N/mm$^2$ or more from the viewpoint of impact absorption, and is preferably 2000 N/mm$^2$ or less, more preferably 800 N/mm$^2$ or less, further preferably 350 N/mm$^2$ or less from the viewpoint of film formability. The range of $HM_B$ is preferably 100 N/mm$^2$ or more, more preferably 150 N/mm$^2$ or more from the viewpoint of impact absorption, and is preferably 4000 N/mm$^2$ or less, more preferably 2000 N/mm$^2$ or less from the viewpoint of film formability.

The layer (C) can be obtained as a cured product formed by curing a coating material composition (I) described below, with hydrolytic condensation or the like. The polymer nanoparticle (A) is usually not changed in composition in the course of such curing. Accordingly, the value of the Martens hardness $HM_A$ in the layer (C) can be determined under the assumption that the value of the Martens hardness $HM_A$ of the polymer nanoparticle (A) in the coating material composition (I), as measured by a method described in Examples below, is well matched with the Martens hardness $HM_A$ of the polymer nanoparticle (A) in the layer (C).

The matrix component (B) corresponds to a cured product formed by curing a matrix raw material component (B') described below, with hydrolytic condensation or the like. Accordingly, the value of the Martens hardness $HM_B$ can be determined under the assumption that the value of the Martens hardness $HM_{B'}$ of the matrix raw material component (B'), as measured by a method described in Examples below, is well matched with the Martens hardness $HM_B$ of the corresponding matrix component (B).

The respective values of the $HM_A$ and $HM_B$ can be adjusted by, for example, the structures of and the compositional ratio between the respective structural components of the polymer nanoparticle (A) and a matrix raw material component (B') described below so as to satisfy the above magnitude relationship, but the adjustment is not limited thereto.

[Cohesion force $F_A$ of polymer nanoparticle (A) and cohesion force $F_B$ of matrix component (B)]

The cohesion force $F_A$ of the polymer nanoparticle (A) and the cohesion force $F_B$ of the matrix component (B) in the present embodiment preferably satisfy a relationship of the following expression (2).

$$F_A/F_B > 1 \quad \text{expression (2)}$$

The expression (2), as in the expression (1), also indicates that the soft polymer nanoparticle (A) is present in the hard matrix component (B), and such hardness can be expressed with a three-dimensional slope and thus the layer (C) tends to be able to exhibit abrasion resistance which has not been exhibited by any conventional coating film. The reason for this is estimated, but not intended to be limited to the following, as follows: the soft nanoparticle absorbs any impact and the hard matrix component suppresses any deformation.

The cohesion force $F_A$ of the polymer nanoparticle (A) and the cohesion force $F_B$ of the matrix component (B) correlate to the hardness of each of the components and can be adjusted by, for example, the structures of and the compositional ratio between the respective structural components of the polymer nanoparticle (A) and a matrix raw material component (B') described below so as to satisfy the above magnitude relationship, but the adjustment is not limited thereto.

[Martens hardness HM of layer (C)]

The Martens hardness HM of the layer (C) is 100 N/mm² or more from the viewpoint of abrasion resistance, and higher Martens hardness has the advantage of less causing deformation against impact and less causing scratching associated with breakage. The Martens hardness HM of the layer (C) is preferably 100 N/mm² or more, more preferably 150 N/mm² or more, further preferably 200 N/mm² or more, and is preferably 4000 N/mm² or less, more preferably 2000 N/mm² or less, further preferably 1500 N/mm² or less from the viewpoint of flex resistance. Examples of the method for adjusting the Martens hardness HM of the layer (C) in the range include, but not limited to the following, a method involving coating a substrate with a coating material composition which satisfies a predetermined relationship represented by expression (3) described below and in which a composition including the polymer nanoparticle (A) and a matrix raw material component (B') described below, mixed, are dispersed and dissolved in a solvent, and subjecting the resultant to heat treatment, ultraviolet irradiation, infrared irradiation, and/or the like to thereby form a coating film. In particular, an increase in content of the matrix component (B) based on the total amount of the polymer nanoparticle (A) and the matrix component (B) tends to result in an increase in Martens hardness HM of the layer (C), and a decrease in content of the matrix component (B) tends to result in a decrease in Martens hardness HM of the layer (C).

[Amount of change in haze in Taber abrasion test]

The Taber abrasion test in the present embodiment is a measurement method according to the method described in ASTM D1044, and such measurement is performed under conditions of an abrasive wheel CS-10F and a load of 500 g. Any material smaller in amount of change in haze is higher in abrasion resistance, and any material where the amount of change in haze after 500 rotations, relative to the haze before the test, namely, the difference between a haze at a rotation number of 500 and a haze before the Taber abrasion test is 10 or less is adapted to the standards of ECE R43 rear quarter glass and any material where such a difference is 4 or less is adapted to the standards of ANSI/SAE Z.26.1 and can be suitably used in an automobile window material. Any material where the amount of change in haze after 1000 rotations, namely, the difference between a haze at a rotation number of 1000 and a haze before the Taber abrasion test is 10 or less is adapted to the standards of automobile windows and can be suitably used in an automobile window material and any material where such a difference is 2 or less is adapted to the standards of ANSI/SAE Z.26.1, ECE R43 and JIS R3211/R3212 and can be suitably used in all automobile window materials. The amount of change in haze after 1000 rotations is preferably 10 or less, more preferably 6 or less, further preferably 2 or less. Examples of the method for adjusting the amount of change in haze in the range include, but not limited to the following, a method involving coating a substrate with a coating material composition which satisfies a predetermined relationship represented by expression (3) described below and in which a composition including the polymer nanoparticle (A) and a matrix raw material component (B') described below, mixed, are dispersed and dissolved in a solvent, and subjecting the resultant to heat treatment, ultraviolet irradiation, infrared irradiation, and/or the like to thereby form a coating film.

[Elastic recovery rate $\eta_{IT}$ of layer (C)]

The elastic recovery rate $\eta_{IT}$ of the layer (C) is the ratio of the elastic return deformation workload $W_{elast}$ of a depression to the total mechanical workload $W_{total}$ of a depression, and is the parameter described as the "ratio $\eta_{IT}$ of $W_{elast}/W_{total}$" in ISO14577-1. As the elastic recovery rate $\eta_{IT}$ is higher, the coating film can be more returned to the original state when deformed, and is higher in ability to repair itself against deformation. The elastic recovery rate $\eta_{IT}$ is preferably 0.50 or more under measurement conditions (Vickers quadrangular pyramid diamond indenter, loading condition: 2 mN/20 sec, unloading condition: 2 mN/20 sec) and is more preferably higher as long as it is in the range, from the viewpoint that the ability to repair itself is effectively expressed. More specifically, the elastic recovery rate $\eta_{IT}$ is more preferably 0.55 or more, further preferably 0.60 or more, still further preferably 0.65 or more. The elastic recovery rate of the coating film in the present embodiment can be measured by, but not particularly limited to the following, for example, subjecting the surface of the hard coating layer to an indentation test with a micro-hardness meter Fischer scope (HM2000S manufactured by Fischer Instruments K.K.), a nano indentation tester (ENT-NEXUS manufactured by Elionix Inc.), a nano indenter (iNano, G200 manufactured by Toyo Corporation), or a nano indentation system (TI980 manufactured by Bruker AXS GmbH). Examples of the method for adjusting the elastic recovery rate $\eta_{IT}$ in the range include, but not limited to the following, a method involving coating a substrate with a coating material composition which satisfies a predetermined relationship represented by expression (3) described below and in which a composition including the polymer nanoparticle (A) and a matrix raw material component (B') described below, mixed, are dispersed and dissolved in a solvent, and subjecting the resultant to heat treatment, ultraviolet irradiation, infrared irradiation, and/or the like to thereby form a coating film.

[Film thickness of layer (C)]

The thickness is preferably appropriately adjusted in the present embodiment from the viewpoint that abrasion resistance of the hard coating layer is further exhibited and from the viewpoint that conformability to deformation of a substrate is sufficiently ensured. Specifically, the thickness of the layer (C) is preferably 1.0 $\mu$m or more, more preferably 3.0 $\mu$m or more from the viewpoint of abrasion resistance. The thickness of the layer (C) is preferably 100.0 $\mu$m or less, more preferably 50.0 $\mu$m or less, further preferably 20.0 $\mu$m or less from the viewpoint substrate conformability.

[Polymer nanoparticle (A)]

The polymer nanoparticle (A) in the present embodiment can be used to result in tendencies to impart impact absorption to the hard coating layer and decrease the amount of change in haze in the Taber abrasion test of the hard coating layer. The polymer nanoparticle (A) is not particularly limited in terms of the shape thereof as long as the particle size thereof is in nanometer scale (less than 1 $\mu$m). The Martens hardness $HM_A$ of the polymer nanoparticle (A) can be controlled in the above range by the structure and the compositional ratio of the structural component of the polymer nanoparticle (A), but the control is not limited thereto.

[Average particle size of polymer nanoparticle (A)]

The average particle size of the polymer nanoparticle (A) in the present embodiment is not particularly limited as long as it is in nanometer scale (less than 1 $\mu$m), and is determined from the particle size determined by observation according to cross-sectional SEM or a dynamic light scattering method. The average particle size of the polymer nanoparticle (A) is preferably 10 nm or more, more preferably 15 nm or more, more preferably 20 nm or more from the viewpoint of optical properties, and is preferably 400 nm or less, more preferably 200 nm or less, further preferably 100 nm or less from the viewpoint of transparency. The method for measuring the average particle size of the polymer nanoparticle (A) can be made by, but not limited to the following, for example, using an aqueous polymer nanoparticle (A) dispersion and measuring the cumulant particle size with a dynamic light scattering type particle size distribution measuring apparatus manufactured by Otsuka Electronics Co., Ltd. (item number: ELSZ-1000).

[Volume fraction of polymer nanoparticle (A) in layer (C)]

The volume fraction of the polymer nanoparticle (A) in the layer (C) in the present embodiment is preferably 2% or more, more preferably 3% or more, further preferably 5% or more from the viewpoint of film formability, and is preferably 80% or less, more preferably 70% or less, further preferably 45% or less from the viewpoint of transparency. The volume fraction of the polymer nanoparticle (A) in the layer (C) can be calculated from, for example, the proportion of the polymer nanoparticle (A) in the entire coating film in a cross-sectional SEM image of the layer (C), and/or the component ratio of the polymer nanoparticle (A) to the components constituting the layer (C).

[Structural component of polymer nanoparticle (A)]

[Hydrolyzable silicon compound (a)]

The polymer nanoparticle (A) in the present embodiment preferably includes a hydrolyzable silicon compound (a). The hydrolyzable silicon compound (a) is not particularly limited as long as it is a silicon compound having hydrolyzability, or a hydrolyzed product or a condensate thereof.

The hydrolyzable silicon compound (a) is preferably any of a compound having an atomic group represented by the following formula (a-1) and a hydrolyzed product and a condensate thereof from the viewpoint of enhancements in abrasion resistance and weather resistance.

$$-R^1_{n1}SiX^1_{3-n1} \qquad (a\text{-}1)$$

In the formula (a-1), $R^1$ represents a hydrogen atom, an alkyl group, an alkenyl group or an alkynyl group having 1 to 10 carbon atoms, or an aryl group, $R^1$ optionally has a substituent having halogen, a hydroxy group, a mercapto group, an amino group, a (meth)acryloyl group or an epoxy group, $X^1$ represents a hydrolyzable group, and n1 represents an integer of 0 to 2. The hydrolyzable group is not particularly limited as long as it is a group which generates a hydroxyl group by hydrolysis, and examples of such a group include halogen, an alkoxy group, an acyloxy group, an amino group, a phenoxy group, and an oxime group.

Specific examples of the compound having an atomic group represented by formula (a-1) include, but not limited to the following, trimethoxysilane, triethoxysilane, methyltrimethoxysilane, methyltriethoxysilane, ethyltrimethoxysilane, ethyltriethoxysilane, propyltrimethoxysilane, propyltriethoxysilane, isobutyltriethoxysilane, hexyltrimethoxysilane, hexyltriethoxysilane, octyltrimethoxysilane, octyltriethoxysilane, decyltrimethoxysilane, decyltriethoxysilane, cyclohexyltrimethoxysilane, cyclohexyltriethoxysilane, phenyltrimethoxysilane, phenyltriethoxysilane, dimethoxysilane, diethoxysilane, methyldimethoxysilane, methyldiethoxysilane, dimethyldimethoxysilane, dimethyldiethoxysilane, dimethoxydiphenylsilane, diethoxydiphenylsilane, bis(trimethoxysilyl)methane, bis(triethoxysilyl)methane, bis(triphenoxysilyl)ethane, 1,1-bis(triethoxysilyl)ethane, 1,2-bis(triethoxysilyl)ethane, 1,1-bis(triethoxysilyl)propane, 1,2-bis(triethoxysilyl)propane, 1,3-bis(triethoxysilyl)propane, 1,4-bis(triethoxysilyl)butane, 1,5-bis(triethoxysilyl)pentane, 1,1-bis(trimethoxysilyl)ethane, 1,2-bis(trimethoxysilyl)ethane, 1,1-bis(trimethoxysilyl)propane, 1,2-bis(trimethoxysilyl)propane, 1,3-bis(trimethoxysilyl)propane, 1,4-bis(trimethoxysilyl)butane, 1,5-bis(trimethoxysilyl)pentane, 1,3-bis(triphenoxysilyl)propane, 1,4-bis(trimethoxysilyl)benzene, 1,4-bis(triethoxysilyl)benzene, 1,6-bis(trimethoxysilyl)hexane, 1,6-bis(triethoxysilyl)hexane, 1,7-bis(trimethoxysilyl)heptane, 1,7-bis(triethoxysilyl)heptane, 1,8-bis(trimethoxysilyl)octane, 1,8-bis(triethoxysilyl)octane, 3-chloropropyltrimethoxysilane, 3-chloropropyltriethoxysilane, trifluoropropyltrimethoxysilane, trifluoropropyltriethoxysilane, 3-hydroxypropyltrimethoxysilane, 3-hydroxypropyltriethoxysilane, 3-mercaptopropyltrimethoxysilane, 3-mercaptopropyltriethoxysilane, 3-mercaptopropylmethyldimethoxysilane, 3-mercaptopropylmethyldiethoxysilane, 3-glycidoxypropyltrimethoxysilane, 3-glycidoxypropyltriethoxysilane, 3-glycidoxypropylmethyldimethoxysilane, 3-glycidoxypropylmethyldiethoxysilane, 2-(3,4-epoxycyclohexyl)ethyltrimethoxysilane, 2-(3,4-epoxycyclohexyl)ethyltriethoxysilane, 3-acryloxypropyltrimethoxysilane, 3-acryloxypropyltriethoxysilane, 3-methacryloxypropyltrimethoxysilane, 3-methacryloxypropyltriethoxysilane, 3-methacryloxypropylmethyldimethoxysilane, 3-methacryloxypropylmethyldimethoxysilane, vinyltrimethoxysilane, vinyltriethoxysilane, p-styryltrimethoxysilane, p-styryltriethoxysilane, N-2-(aminoethyl)-3-aminopropylmethyldimethoxysilane, N-2-(aminoethyl)-3-aminopropylmethyldiethoxysilane, N-2-(aminoethyl)-3-aminopropyltrimethoxysilane, N-2-(aminoethyl)-3-aminopropyltriethoxysilane, 3-aminopropyltrimethoxysilane, 3-aminopropyltriethoxysilane, N-phenyl-3-aminopropyltrimethoxysilane, N-phenyl-3-aminopropyltriethoxysilane, 3-trimethoxysilyl-N-(1,3-dimethyl-butylidene)propylamine, 3-triethoxysilyl-N-(1,3-dimethyl-butylidene)propylamine, triacetoxysilane, tris(trichloroacetoxy)silane, tris(trifluoroacetoxy)silane, tris-(trimethoxysilylpropyl)isocyanurate, tris-(triethoxysilylpropyl)isocyanurate, methyltriacetoxysilane, methyltris(trichloroacetoxy)silane, trichlorosilane, tribromosilane, methyltrifluorosilane, tris(methylethylketoxime)silane, phenyltris(methylethylketoxime)silane, bis(methylethylketoxime)silane, methylbis(methylethylketoxime)silane, hexamethyldisilane, hexamethylcyclotrisilazane, bis(dimethylamino)dimethylsilane, bis(diethylamino)dimethylsilane, bis(dimethylamino)methylsilane, bis(diethylamino)methylsilane, 2-[(triethoxysilyl)propyl]dibenzylresorcinol, 2-[(trimethoxysilyl)propyl]dibenzylresorcinol, 2,2,6,6-tetramethyl-4-[3-(triethoxysilyl)propoxy]piperidine, 2,2,6,6-tetramethyl-4-[3-(trimethoxysilyl)propoxy]piperidine, 2-hydroxy-4-[3-(triethoxysilyl)propoxy]benzophenone and 2-hydroxy-4-[3-(trimethoxysilyl)propoxy]benzophenone.

The hydrolyzable silicon compound (a) preferably includes a compound represented by the following formula (a-2), a hydrolyzed product and a condensate thereof, from the viewpoints of being capable of imparting high hardness to the hard coating layer and of more enhancing abrasion resistance.

$$SiX^2_4 \qquad (a-2)$$

In the formula (a-2), $X^2$ represents a hydrolyzable group. The hydrolyzable group is not particularly limited as long as it is a group which generates a hydroxyl group by hydrolysis, and examples thereof include halogen, an alkoxy group, an acyloxy group, an amino group, a phenoxy group and an oxime group.

Specific examples of the compound represented by the formula (a-2) include, but not limited to the following, partially hydrolyzed condensates (for example, trade names "M Silicate 51", "Silicate 35", "Silicate 45", "Silicate 40" and "FR-3" manufactured by Tama Chemicals Co., Ltd.; trade names "MS51", "MS56", "MS57" and "MS56S" manufactured by Mitsubishi Chemical Corporation; and trade names "Methyl Silicate 51", "Methyl Silicate 53A", "Ethyl Silicate 40", "Ethyl Silicate 48", "EMS-485", "N-103X", "PX", "PS-169", "PS-162R", "PC-291", "PC-301", "PC-302R", "PC-309" and "EMSi48" manufactured by Colcoat Co., Ltd.) of tetramethoxysilane, tetraethoxysilane, tetra(n-propoxy)silane, tetra(i-propoxy)silane, tetra(n-butoxy)silane, tetra(i-butoxy)silane, tetra-sec-butoxysilane, tetra-tert-butoxysilane, tetraacetoxysilane, tetra(trichloroacetoxy)silane, tetra(trifluoroacetoxy)silane, tetrachlorosilane, tetrabromosilane, tetrafluorosilane, tetra(methylethylketoxime)silane, tetramethoxysilane or tetraethoxysilane.

As described above, the hydrolyzable silicon compound (a) in the present embodiment preferably includes at least one or more selected from the compound having an atomic group represented by the formula (a-1) and the hydrolyzed product and the condensate thereof, and the compound represented by the formula (a-2) and the hydrolyzed product and the condensate thereof.

[Content of hydrolyzable silicon compound (a) in polymer nanoparticle (A)]

The content of the hydrolyzable silicon compound (a) in the present embodiment represents the weight proportion of the solid content of the hydrolyzable silicon compound (a) included in the polymer nanoparticle (A), and the content is more preferably higher and the content is preferably 50% by mass or more, more preferably 60% by mass or more, because a higher content allows for more enhancements in abrasion resistance, weather resistance and heat resistance. The content of the hydrolyzable silicon compound (a) in the polymer nanoparticle (A) can be measured according to, but not limited to the following, for example, IR analysis, NMR analysis, and/or elemental analysis of the polymer nanoparticle (A).

[Matrix component (B)]

The matrix component (B) in the present embodiment can be used to thereby impart impact absorption to the hard coating layer and decrease the amount of change in haze of the hard coating layer in the Taber abrasion test. The hardness $HM_B$ of the matrix component (B) can be controlled in the above range by the structure and the compositional ratio of the structural component of a matrix raw material component (B') described below, but the control is not limited thereto.

[Structural component of matrix component (B)]

[Hydrolyzable silicon compound (b)]

The matrix component (B) in the present embodiment is not particularly limited as long as it is any component in which the polymer nanoparticle (A) can be dispersed. The matrix component (B) in the present embodiment preferably includes a hydrolyzable silicon compound (b) from the viewpoint of high toughness. The "matrix component (B) including a hydrolyzable silicon compound (b)" herein means that the matrix component (B) includes a polymer having a structural unit derived from the hydrolyzable silicon compound (b). The hydrolyzable silicon compound (b) is not particularly limited as long as it is any of a silicon compound having hydrolyzability, and a hydrolyzed product and a condensate thereof.

The matrix component (B) may include various components except for the polymer nanoparticle (A), other than the above polymer. Examples of such a component which can be included other than the above polymer include water-soluble resins such as polyvinyl alcohol, polyethylene glycol, polyvinylpyrrolidone and polyacrylic acid; acrylic resins such as PMMA, PAN and polyacrylamide; polymers such as polystyrene, polyurethane, polyamide, polyimide, polyvinylidene chloride, polyester, polycarbonate, polyether, polyethylene, polysulfone, polypropylene, polybutadiene, PTFE, PVDF and EVA; and copolymers thereof.

The hydrolyzable silicon compound (b) preferably includes one or more selected from the group consisting of a compound having an atomic group represented by the following formula (b-1) and a hydrolyzed product and a condensate thereof, and a compound represented by the following formula (b-2) and a hydrolyzed product and a condensate thereof, from the viewpoints of further enhancements in abrasion resistance and weather resistance.

$$-R^2_{n2}SiX^3_{3-n2} \qquad (b-1)$$

In the formula (b-1), $R^2$ represents a hydrogen atom, an alkyl group, an alkenyl group or an alkynyl group having 1 to 10 carbon atoms, or an aryl group, $R^2$ optionally has a substituent having halogen, a hydroxy group, a mercapto group, an amino group, a (meth)acryloyl group or an epoxy group, $X^3$ represents a hydrolyzable group, and n2 represents an integer of 0 to 2. The hydrolyzable group is not particularly limited as long as it is a group which generates a hydroxyl group by hydrolysis, and examples of such a group include a halogen atom, an alkoxy group, an acyloxy group, an amino group, a phenoxy group and an oxime group.

$$SiX^4_4 \qquad (b-2)$$

In the formula (b-2), $X^4$ represents a hydrolyzable group. The hydrolyzable group is not particularly limited as long as it is a group which generates a hydroxyl group by hydrolysis, and examples of such a group include halogen, an alkoxy group, an acyloxy group, an amino group, a phenoxy group and an oxime group.

Specific examples of the compound having an atomic group represented by such general formula (b-1) include, but not limited to the following, trimethoxysilane, triethoxysilane, methyltrimethoxysilane, methyltriethoxysilane, ethyltrimethoxysilane, ethyltriethoxysilane, propyltrimethoxysilane, propyltriethoxysilane, isobutyltriethoxysilane, hexyltrimethoxysilane, hexyltriethoxysilane, octyltrimethoxysilane, octyltriethoxysilane, decyltrimethoxysilane, decyltriethoxysilane, cyclohexyltrimethoxysilane, cyclohexyltriethoxysilane, phenyltrimethoxysilane, phenyltriethoxysilane, dimethoxysilane, diethoxysilane, methyldimethoxysilane, methyldiethoxysilane, dimethyldimethoxysilane, dimethyldiethoxysilane, dimethoxydiphenylsilane, diethoxydiphenylsilane, bis(trimethoxysilyl)methane, bis(triethoxysilyl)methane, bis(triphenoxysilyl)ethane, 1,1-bis(triethoxysilyl)ethane, 1,2-bis(triethoxysilyl)ethane, 1,1-bis(triethoxysilyl)propane, 1,2-bis(triethoxysilyl)propane, 1,3-bis(triethoxysilyl)propane, 1,4-bis(triethoxysilyl)butane, 1,5-bis(triethoxysilyl)pentane, 1,1-bis(trimethoxysilyl)ethane, 1,2-bis(trimethoxysilyl)ethane, 1,1-bis(trimethoxysilyl)propane, 1,2-bis(trimethoxysilyl)propane, 1,3-bis(trimethoxysilyl)propane, 1,4-bis(trimethoxysilyl)butane, 1,5-bis(trimethoxysilyl)pentane, 1,3-bis(triphenoxysilyl)propane, 1,4-bis(trimethoxysilyl)benzene, 1,4-bis(triethoxysilyl)benzene, 1,6-bis(trimethoxysilyl)hexane, 1,6-bis(triethoxysilyl)hexane, 1,7-bis(trimethoxysilyl)heptane, 1,7-bis(triethoxysilyl)heptane, 1,8-bis(trimethoxysilyl)octane, 1,8-bis(triethoxysilyl)octane, 3-chloropropyltrimethoxysilane, 3-chloropropyltriethoxysilane, trifluoropropyltrimethoxysilane, trifluoropropyltriethoxysilane, 3-hydroxypropyltrimethoxysilane, 3-hydroxypropyltriethoxysilane, 3-mercaptopropyltrimethoxysilane, 3-mercaptopropyltriethoxysilane, 3-mercaptopropylmethyldimethoxysilane, 3-mercaptopropylmethyldiethoxysilane, 3-glycidoxypropyltrimethoxysilane, 3-glycidoxypropyltriethoxysilane, 3-glycidoxypropylmethyldimethoxysilane, 3-glycidoxypropylmethyldiethoxysilane, 2-(3,4-epoxycyclohexyl)ethyltrimethoxysilane, 2-(3,4-epoxycyclohexyl)ethyltriethoxysilane, 3-acryloxypropyltrimethoxysilane, 3-acryloxypropyltriethoxysilane, 3-methacryloxypropyltrimethoxysilane, 3-methacryloxypropyltriethoxysilane, 3-methacryloxypropylmethyldimethoxysilane, 3-methacryloxypropylmethyldimethoxysilane, vinyltrimethoxysilane, vinyltriethoxysilane, p-styryltrimethoxysilane, p-styryltriethoxysilane, N-2-(aminoethyl)-3-aminopropylmethyldimethoxysilane, N-2-(aminoethyl)-3-aminopropylmethyldiethoxysilane, N-2-(aminoethyl)-3-aminopropyltrimethoxysilane, N-2-(aminoethyl)-3-aminopropyltriethoxysilane, 3-aminopropyltrimethoxysilane, 3-aminopropyltriethoxysilane, N-phenyl-3-aminopropyltrimethoxysilane, N-phenyl-3-aminopropyltriethoxysilane, 3-trimethoxysilyl-N-(1,3-dimethyl-butylidene)propylamine, 3-triethoxysilyl-N-(1,3-dimethyl-butylidene)propylamine, triacetoxysilane, tris(trichloroacetoxy)silane, tris(trifluoroacetoxy)silane, tris-(trimethoxysilylpropyl)isocyanurate, tris-(triethoxysilylpropyl)isocyanurate, methyltriacetoxysilane, methyltris(trichloroacetoxy)silane, trichlorosilane, tribromosilane, methyltrifluorosilane, tris(methylethylketoxime)silane, phenyltris(methylethylketoxime)silane, bis(methylethylketoxime)silane, methylbis(methylethylketoxime)silane, hexamethyldisilane, hexamethylcyclotrisilazane, bis(dimethylamino)dimethylsilane, bis(diethylamino)dimethylsilane, bis(dimethylamino)methylsilane, bis(diethylamino)methylsilane, 2-[(triethoxysilyl)propyl]dibenzylresorcinol, 2-[(trimethoxysilyl)propyl]dibenzylresorcinol, 2,2,6,6-tetramethyl-4-[3-(triethoxysilyl)propoxy]piperidine, 2,2,6,6-tetramethyl-4-[3-(trimethoxysilyl)propoxy]piperidine, 2-hydroxy-4-[3-(triethoxysilyl)propoxy]benzophenone and 2-hydroxy-4-[3-(trimethoxysilyl)propoxy]benzophenone.

Specific examples of the compound represented by the formula (b-2) include, but not limited to the following, partially hydrolyzed condensates (for example, trade names "M Silicate 51", "Silicate 35", "Silicate 45", "Silicate 40" and "FR-3" manufactured by Tama Chemicals Co., Ltd.; trade names "MS51", "MS56", "MS57" and "MS56S" manufactured by Mitsubishi Chemical Corporation; and trade names "Methyl Silicate 51", "Methyl Silicate 53A", "Ethyl Silicate 40", "Ethyl Silicate 48", "EMS-485", "N-103X", "PX", "PS-169", "PS-162R", "PC-291", "PC-301", "PC-302R", "PC-309" and "EMSi48" manufactured by Colcoat Co., Ltd.) of tetramethoxysilane, tetraethoxysilane, tetra(n-propoxy)silane, tetra(i-propoxy)silane, tetra(n-butoxy)silane, tetra(i-butoxy)silane, tetra-sec-butoxysilane, tetra-tert-butoxysilane, tetraacetoxysilane, tetra(trichloroacetoxy)silane, tetra(trifluoroacetoxy)silane, tetrachlorosilane, tetrabromosilane, tetrafluorosilane, tetra(methylethylketoxime)silane, tetramethoxysilane or tetraethoxysilane.

As described above, the hydrolyzable silicon compound (b) in the present embodiment preferably includes at least one or more selected from the compound having an atomic group represented by the formula (b-1) and the hydrolyzed product and the condensate thereof, and the compound represented by the formula (b-2) and the hydrolyzed product and the condensate thereof.

The "hydrolyzable silicon compound (a) included in the polymer nanoparticle (A)" in the present embodiment may be the same as or different from the "hydrolyzable silicon compound (b) included in the matrix component (B)". Even if both compounds are the same, such compounds are distinguished from each other by defining the compound included in the polymer nanoparticle (A) as the hydrolyzable silicon compound (a) and defining the compound included in the matrix component (B) as the hydrolyzable silicon compound (b).

[Inorganic oxide (D)]

The matrix component (B) in the present embodiment includes an inorganic oxide (D). The inorganic oxide (D) is included to result in an enhancement in hardness of the matrix component (B) and an enhancement in abrasion resistance. The coating film also tends to be enhanced in contamination resistance due to hydrophilicity of a hydroxyl group on a particle surface of the inorganic oxide (D).

Specific examples of the inorganic oxide (D) in the present embodiment include, but not limited to the following, respective oxides of silicon, aluminum, titanium, zirconium, zinc, cerium, tin, indium, gallium, germanium, antimony, molybdenum, niobium, magnesium, bismuth, cobalt, and copper. Such an oxide is not limited in terms of the shape thereof, and may be used singly or as a mixture. The inorganic oxide (D) preferably further includes a particle of silica typified by dry silica or colloidal silica from the viewpoint of interaction with the above hydrolyzable silicon compound (b), and preferably further includes colloidal silica in the form of a silica particle from the viewpoint of dispersibility. When the inorganic oxide (D) includes colloidal silica, it is preferably in the form of an aqueous dispersion liquid, and can be used even if is either acidic or basic.

The inorganic oxide (D) in the present embodiment preferably contains at least one inorganic component selected from the group consisting of Ce, Nb, Al, Zn, Ti, Zr, Sb, Mg, Sn, Bi, Co and Cu (hereinafter, also simply referred to as "inorganic component".). The inorganic oxide (D) contains the inorganic component to result in a tendency to enhance weather resistance without any loss of abrasion resistance and durability. When a commercially available product is utilized, examples thereof include, but not limited to the following, ultrafine particle material products of cerium oxide, zinc oxide, aluminum oxide, bismuth oxide, cobalt oxide, copper oxide, tin oxide, and titanium oxide, manufactured by CIK-Nano Tek.; and titanium oxide "Tainoc" (trade name), cerium oxide "Needral" (trade name), tin oxide "Ceramace" (trade name), niobium oxide sol and zirconium oxide sol, manufactured by Taki Chemical Co., Ltd. The inorganic oxide (D) preferably contains at least one inorganic component selected from the group consisting of Ce, Nb, Zn, Ti and Zr, more preferably contains Ce, from the viewpoint of enhancement performance of weather resistance.

The inorganic oxide (D) in the present embodiment preferably contains an inorganic oxide (D') of at least one selected from the group consisting of Ce, Nb, Zn, Ti and Zr from the viewpoint of the balance among abrasion resistance, durability and weather resistance, and the content of the inorganic oxide (D') in the hard coating film is not particularly limited, and is preferably 1% by mass or more, more preferably 2% by mass or more from the viewpoint of the balance among abrasion resistance, durability and weather resistance. The content is preferably 50% by mass or less, more preferably 30% by mass or less from the viewpoint of transparency. The content can be here specified as the total amount of Ce, Nb, Zn, Ti and Zr under the assumption that the amount of the hard coating film is 100% by mass.

[Average particle size of inorganic oxide (D)]

The average particle size of the inorganic oxide (D) in the present embodiment is preferably 2 nm or more from the viewpoint of an improvement in storage stability of a composition of the hard coating layer, and is preferably 150 nm or less, more preferably 100 nm or less, further preferably 50 nm or less from the viewpoint of an improvement in transparency of the entire laminate. Thus, the average particle size is preferably 2 nm or more and 100 nm or less, more preferably 2 nm or more and 50 nm or less. The method for measuring the average particle size of the inorganic oxide (D) can be made by, but not limited to the following, for example, observing colloidal silica dispersed in water at a magnification of 50,000 to 100,000x with a transmission micrograph, taking an image so that 100 to 200 inorganic oxides as particles are taken, and measuring a longer diameter and a shorter diameter of each of such inorganic oxide particles to thereby determine the average value.

[Colloidal silica which can be included in inorganic oxide (D)]

The acidic colloidal silica suitably used in the present embodiment, for which water is used as a dispersing solvent, is not particularly limited, and any one prepared according to a sol-gel method can also be used and a commercially available product can also be utilized. Such preparation according to a sol-gel method can be made with reference to Werner Stober et al; J. Colloid and Interface Sci., 26, 62-69 (1968), Rickey D. Badley et al; Lang muir 6, 792-801 (1990), Journal of the Japan Society of Colour Material, 61 [9] 488-493 (1988), and the like. Examples of such a commercially available product utilized include Snowtex-O, Snowtex-OS, Snowtex-OXS, Snowtex-O-40, Snowtex-OL, Snowtex-OYL, Snowtex-OUP, Snowtex-PS-SO, Snowtex-PS-MO, Snowtex-AK-XS, Snowtex-AK, Snowtex-AK-L, Snowtex-AK-YL and Snowtex-AK-PS-S (trade names, manufactured by Nissan Chemical Corporation), Adelite AT-20Q (trade name, manufactured by Adeka Corporation), and Klebosol 20H12 and Klebosol 30CAL25 (trade names, manufactured by Clariant Japan K.K.).

The basic colloidal silica is silica stabilized by addition of an alkali metal ion, an ammonium ion or an amine and is not particularly limited, and examples thereof include Snowtex-20, Snowtex-30, Snowtex-XS, Snowtex-50, Snowtex-30L, Snowtex-XL, Snowtex-YL, Snowtex ZL, Snowtex-UP, Snowtex-ST-PS-S, Snowtex ST-PS-M, Snowtex-C, Snowtex-CXS, Snowtex-CM, Snowtex-N, Snowtex-NXS, Snowtex-NS and Snowtex-N-40 (trade names, manufactured by Nissan Chemical Corporation), Adelite AT-20, Adelite AT-30, Adelite AT-20N, Adelite AT-30N, Adelite AT-20A, Adelite AT-30A, Adelite AT-40 and Adelite AT-50 (trade names, manufactured by Adeka Corporation), Klebosol 30R9, Klebosol 30R50 and Klebosol 50R50 (trade names, manufactured by Clariant Japan K.K.), and Ludox HS-40, Ludox HS-30, Ludox LS, Ludox AS-30, Ludox SM-AS, Ludox AM, Ludox HAS and Ludox SM (trade names, manufactured by DuPont).

The colloidal silica for which a water-soluble solvent is used as a dispersing medium is not particularly limited, and examples thereof include MA-ST-M (methanol dispersion type having a particle size of 20 to 25 nm), IPA-ST (isopropyl alcohol dispersion type having a particle size of 10 to 15 nm), EG-ST (ethylene glycol dispersion type having a particle size of 10 to 15 nm), EGST-ZL (ethylene glycol dispersion type having a particle size of 70 to 100 nm), NPC-ST (ethylene glycol monopropyl ether dispersion type having a particle size of 10 to 15 nm) and TOL-ST (toluene dispersion type having a particle size of 10 to 15 nm), manufactured by Nissan Chemical Corporation.

The dry silica particle is not particularly limited, and examples thereof include AEROSIL manufactured by Nippon Aerosil Co., Ltd., and Reolosil manufactured by Tokuyama Corporation.

Such a silica particle may include an inorganic base (for example, sodium hydroxide, potassium hydroxide, lithium hydroxide, and/or ammonia) and/or an organic base (for example, tetramethylammonium and/or triethylamine) as stabilizer(s).

[Shape of inorganic oxide (D)]

Examples of the shape of the inorganic oxide (D) in the present embodiment include, but not limited to the following, spherical, horned, polyhedron, elliptical, flattened, linear, beaded, and chained shapes, and a spherical shape is particularly preferable from the viewpoints of hardness and transparency of the hard coating layer.

[Functional group (e)]

The polymer nanoparticle (A) in the present embodiment preferably has a functional group (e) which interacts with the matrix component (B), from the viewpoint that dispersibility of the polymer nanoparticle (A) in the matrix component (B) can be enhanced to result in an enhancement in abrasion resistance. Whether or not the polymer nanoparticle (A) has such a functional group (e) can be confirmed by, for example, compositional analysis with IR, GC-MS, pyrolysis GC-MS, LC-MS, GPC, MALDI-MS, TOF-SIMS, TG-DTA and/or NMR, or analysis with a combination thereof.

Specific examples of the functional group (e) in the present embodiment include, but not limited to the following, functional groups such as a hydroxyl group, a carboxyl group, an amino group, an amide group and a functional group having an ether bond, a functional group having a hydrogen bond is preferable from the viewpoint of interaction, and an amide group is more preferable and a secondary amide group and/or a tertiary amide group are/is further preferable from the viewpoint of high hydrogen bondability.

Examples of the compound having the functional group (e) and a reaction product thereof include 2-hydroxyethyl (meth)acrylate, 2-hydroxypropyl (meth)acrylate, 4-hydroxybutyl (meth)acrylate, 2-hydroxyethyl vinyl ether or 4-hydroxybutyl vinyl ether, 2-hydroxyethyl allyl ether, (meth)acrylic acid, 2-carboxyethyl (meth)acrylate, 2-dimethylaminoethyl (meth)acrylate, 2-diethylaminoethyl (meth)acrylate, 2-di-n-propylaminoethyl (meth)acrylate, 3-dimethylaminopropyl (meth)acrylate, 4-dimethylaminobutyl (meth)acrylate, N-[2-(meth)acryloyloxy]ethylmorpholine, vinylpyridine, N-vinylcarbazole, N-vinylquinoline, N-methylacrylamide, N-methylmethacrylamide, N-ethylacrylamide, N,N-dimethylacrylamide, N,N-dimethylmethacrylamide, N,N-diethylacrylamide, N-ethylmethacrylamide, N-methyl-N-ethylacrylamide, N-methyl-N-ethylmethacrylamide, N-isopropylacrylamide, N-n-propylacrylamide, N-isopropylmethacrylamide, N-n-propylmethacrylamide, N-methyl-N-n-propylacrylamide, N-methyl-N-isopropylacrylamide, N-acryloylpyrrolidine, N-methacryloylpyrrolidine, N-acryloylpiperidine, N-methacryloylpiperidine, N-acryloylhexahydroazepine, N-acryloylmorpholine, N-methacryloylmorpholine, N-vinylpyrrolidone, N-vinylcaprolactam, N,N'-methylenebisacrylamide, N,N'-methylenebismethacrylamide, N-vinylacetamide, diacetone acrylamide, diacetone methacrylamide, N-methylolacrylamide, N-methylolmethacrylamide, Blemmers PE-90, PE-200, PE-350, PME-100, PME-200, PME-400 and AE-350 (trade names, manufactured by NOF Corporation), and MA-30, MA-50, MA-100, MA-150, RA-1120, RA-2614, RMA-564, RMA-568, RMA-1114 and MPG130-MA (trade names, manufactured by Nippon Nyukazai Co., Ltd.). Herein, the "(meth)acrylate" simply represents acrylate or methacrylate, and the "(meth)acrylic acid" simply represents acrylic acid or methacrylic acid.

[Core/shell structure of polymer nanoparticle (A)]

The polymer nanoparticle (A) in the present embodiment preferably has a core/shell structure including a core layer and one or more shell layers covering the core layer. The polymer nanoparticle (A) preferably has the functional group (e) from the viewpoint of interaction with the matrix component (B) on the outermost layer of the core/shell structure.

[Other compound optionally included in polymer nanoparticle (A)]

The polymer nanoparticle (A) in the present embodiment optionally includes any polymer shown below from the viewpoint of an enhancement in stability of the particle due to electrostatic repulsion force of the particles. Examples include a polyurethane-based, polyester-based, poly(meth)acrylate-based, poly(meth)acrylic acid, polyvinyl acetate-based, polybutadiene-based, polyvinyl chloride-based, chlorinated polypropylene-based, polyethylene-based or polystyrene-based polymer, or a poly(meth)acrylate-silicone-based, polystyrene-(meth)acrylate-based or styrene-maleic anhydride-based copolymer.

Examples of a compound particularly excellent in electrostatic repulsion, among the above polymers each optionally included in the polymer nanoparticle (A), include a (meth)acrylic acid or (meth)acrylate polymer or copolymer. Specific examples include, but not limited to the following, methyl acrylate, (meth)acrylic acid, methyl methacrylate, butyl methacrylate, cyclohexyl methacrylate, 2-ethylhexyl acrylate, n-butyl acrylate, 2-hydroxyethyl (meth)acrylate, 2-hydroxypropyl (meth)acrylate, 3-hydroxybutyl (meth)acrylate, 4-hydroxybutyl (meth)acrylate, 3-hydroxybutyl (meth)acrylate or 4-hydroxybutyl (meth)acrylate polymer or copolymer. Such (meth)acrylic acids may be each partially or fully neutralized with ammonia, an amine such as triethylamine or dimethylethanolamine, or a base such as NaOH or KOH, for a further enhancement in electrostatic repulsion force.

The polymer nanoparticle (A) optionally includes an emulsifier. The emulsifier is not particularly limited, and examples thereof include acidic emulsifiers such as alkylbenzene sulfonic acid, alkylsulfonic acid, alkylsulfosuccinic acid, polyoxyethylene alkyl sulfuric acid, polyoxyethylene alkyl aryl sulfuric acid and polyoxyethylene distyryl phenyl ether sulfonic acid; anionic surfactants such as alkali metal (Li, Na, K, and the like) salts of such acidic emulsifiers, ammonium salts of such acidic emulsifier, and fatty acid soap of such anionic surfactant; quaternary ammonium salt, pyridinium salt, and imidazolinium salt type cationic surfactants such as alkyltrimethylammonium bromide, alkylpyridinium bromide and imidazolinium laurate; and nonionic surfactants and reactive emulsifiers having a radical polymerizable double bond, such as polyoxyethylene alkyl aryl ether, polyoxyethylene sorbitan fatty acid ester, a polyoxyethylene oxypropylene block copolymer and polyoxyethylene distyryl phenyl ether.

Examples of the reactive emulsifier having a radical polymerizable double bond include, but not limited to the following, Eleminol JS-2 (trade name, manufactured by Sanyo Chemical Industries, Ltd.), Latemul S-120, S-180A or S-180 (trade name, manufactured by Kao Corporation), Aqualon HS-10, KH-1025, RN-10, RN-20, RN30 or RN50 (trade name, manufactured by DKS Co., Ltd.), Adekariasoap SE1025, SR-1025, NE-20, NE-30 or NE-40 (trade name, manufactured by Adeka Corporation), an ammonium salt of p-styrene sulfonic acid, a sodium salt of p-styrene sulfonic acid, a potassium salt of p-styrene sulfonic acid, alkyl sulfonic acid (meth)acrylate such as 2-sulfoethyl acrylate, methylpropanesulfonic acid (meth)acrylamide, an ammonium salt of allyl sulfonic acid, a sodium salt of allyl sulfonic acid, or a potassium salt of allyl sulfonic acid.

[Other component optionally included in layer (C)]

The layer (C) of the present embodiment optionally includes a solvent, an emulsifier, a plasticizer, a pigment, a dye, a filler, an anti-aging agent, a conductive material, an ultraviolet absorber, a light stabilizer, a peel strength adjusting agent, a softener, a surfactant, a flame retardant, an antioxidant, and/or a catalyst, as the matrix component (B), depending on the application. The layer preferably includes a light-shielding agent (S2) and a light stabilizer because high weather resistance is required particularly in an outdoor application. The layer preferably includes an ultraviolet absorber as the light-shielding agent (S2).

Specific examples of the ultraviolet absorber and the light stabilizer include, but not limited to the following, benzophenone-based ultraviolet absorbers such as 2,4-dihydroxybenzophenone, 2-hydroxy-4-methoxybenzophenone, 2-hydroxy-4-methoxybenzophenone-5-sulfonic acid, 2-hydroxy-4-n-octoxybenzophenone, 2-hydroxy-4-n-dodecyloxybenzophenone, 2-hydroxy-4-benzyloxybenzophenone, bis(5-benzoyl-4-hydroxy-2-methoxyphenyl)methane, 2,2'-dihydroxy-4-methoxybenzophenone, 2,2'-dihydroxy-4,4'dimethoxybenzophenone (trade name "UVINUL3049" manufactured by BASF SE), 2,2',4,4'-tetrahydroxybenzophenone (trade name "UVINUL3050" manufactured by BASF SE), 4-dodecyloxy-2-hydroxybenzophenone, 5-benzoyl-2,4-dihydroxybenzophenone, 2-hydroxy-4-methoxy-2'-carboxybenzophenone, 2-hydroxy-4-stearyloxybenzophenone and 4,6-dibenzoyl resorcinol; benzotriazole-based ultraviolet absorbers such as 2-(2'-hydroxy-5'-methylphenyl)benzotriazole, 2-(2'-hydroxy-5'-tert-butylphenyl)benzotriazole, 2-(2'-hydroxy-3',5'-di-tert-butylphenyl)benzotriazole, 2-(2-hydroxy-5-tert-octylphenyl)benzotriazole, 2-(2-hydroxy-3,5-di-tert-octylphenyl)benzotriazole, 2-[2'-hydroxy-3',5'-bis($\alpha,\alpha'$-dimethylbenzyl)phenyl]benzotriazole), a condensate (trade name "TINUVIN1130" manufactured by BASF SE) of methyl-3-[3-tert-butyl-5-(2H-benzotriazol-2-yl)-4-hydroxyphenyl]propionate and polyethylene glycol (molecular weight: 300), isooctyl-3-[3-(2H-benzotriazol-2-yl)-5-tert-butyl-4-hydroxyphenyl]propionate (trade name "TINUVIN384" manufactured by BASF SE), 2-(3-dodecyl-5-methyl-2-hydroxyphenyl)benzotriazole (trade name "TINUVIN571" manufactured by BASF SE), 2-(2'-hydroxy-3'-tert-butyl-5'-methylphenyl)-5-chlorobenzotriazole, 2-(2'-hydroxy-3',5'-di-tert-amylphenyl)benzotriazole, 2-(2'-hydroxy-4'-octoxyphenyl)benzotriazole, 2-[2'-hydroxy-3'-(3",4",5",6"-tetrahydrophthalimidemethyl)-5'-methylphenyl]benzotriazole, 2,2-methylenebis[4-(1,1,3,3-tetramethylbutyl)-6-(2H-benzotriazol-2-yl)phenol], 2-(2H-benzotriazol-2-yl)-4,6-bis(1-methyl-1-phenylethyl)phenol (trade name "TINUVIN900" manufactured by BASF SE), and TINUVIN384-2, TINUVIN326, TINUVIN327, TINUVIN109, TINUVIN970, TINUVIN328, TINUVIN171, TINUVIN970, TINUVIN PS, TINUVIN P, TINUVIN99-2 and TINVIN928 (trade names, manufactured by BASF SE); triazine-based ultraviolet absorbers such as 2-[4-[(2-hydroxy-3-dodecyloxypropyl)oxy]-2-hydroxyphenyl]-4,6-bis(2,4-dimethylphenyl)-1,3,5-triazine, 2-[4-[(2-hydroxy-3-tridecyloxypropyl)oxy]-2-hydroxyphenyl]-4,6-bis(2,4-dimethylphenyl)-1,3,5-triazine, 2,4-bis(2-hydroxy-4-butyloxyphenyl)-6-(2,4-bisbutyloxyphenyl)-1,3,5-triazine (trade name "TINUVIN460" manufactured by BASF SE), 2-(2-hydroxy-4-[1-octyloxycarbonylethoxy]phenyl)-4,6-bis(4-phenylphenyl)-1,3,5-triazine (trade name "TINUVIN479" manufactured by BASF SE), and TINUVIN400, TINUVIN405, TINUVIN477 and TINUVIN1600 (trade names, manufactured by BASF SE); malonic acid ester-based ultraviolet absorbers such as HOSTAVIN PR25, HOSTAVIN B-CAP and HOSTAVIN VSU (trade names, manufactured by Clariant Japan K.K.); anilide-based ultraviolet absorbers such as HOSTAVIN 3206 LIQ, HOSTAVIN VSU P and HOSTAVIN 3212 LIQ (trade names, manufactured by Clariant Japan K.K.); salicylate-based ultraviolet absorbers such as amyl salicylate, menthyl salicylate, homomenthyl salicylate, octyl salicylate, phenyl salicylate, benzyl salicylate and p-isopropanolphenyl salicylate; cyanoacrylate-based ultraviolet absorbers such as ethyl-2-cyano-3,3-diphenyl acrylate (trade name "UVINUL3035" manufactured by BASF SE), (2-ethylhexyl)-2-cyano-3,3-diphenyl acrylate (trade name "UVINUL3039" manufactured by BASF SE and 1,3-bis((2'-cyano-3',3'-diphenylacryloyl)oxy)-2,2-bis-(((2'-cyano-3',3'-diphenylacryloyl)oxy)methyl)propane (trade name "UVINUL3030 manufactured by BASF SE); radical polymerizable ultraviolet absorbers each having a radical polymerizable double bond in its molecule, such as 2-hydroxy-4-acryloxybenzophenone, 2-hydroxy-4-methacryloxybenzophenone, 2-hydroxy-5-acryloxybenzophenone, 2-hydroxy-5-methacryloxybenzophenone, 2-hydroxy-4-(acryloxy-ethoxy)benzophenone, 2-hydroxy-4-(methacryloxy-ethoxy)benzophenone, 2-hydroxy-4-(methacryloxy-diethoxy)benzophenone, 2-hydroxy-4-(acryloxy-triethoxy)benzophenone, 2-(2'-hydroxy-5'-methacryloxyethylphenyl)-2H-benzotriazole (trade name "RUVA-93" manufactured by Otsuka Chemical Co., Ltd.), 2-(2'-hydroxy-5'-methacryloxyethyl-3-tert-butylphenyl)-2H-benzotriazole, 2-(2'-hydroxy-5'-methacryloxypropyl-3-tert-butylphenyl)-5-chloro-2H-benzotriazole and 3-methacryloyl-2-hydroxypropyl-3-[3'-(2''-benzotriazolyl)-4-hydroxy-5-tert-butyl]phenylpropionate (trade name "CGL-104" manufactured by Ciba-Geigy Japan Ltd.); polymers each having ultraviolet absorptivity, such as UV-G101, UV-G301, UV-G137, UV-G12 and UV-G13 (trade names, manufactured by Nippon Shokubai Co., Ltd.); hindered amine-based light stabilizers such as bis(2,2,6,6-tetramethyl-4-piperidyl)succinate, bis(2,2,6,6-tetramethylpiperidyl)sebacate, bis(1,2,2,6,6-pentamethyl-4-piperidyl)2-(3,5-di-tert-butyl-4-hydroxybenzyl)-2-butylmalonate, 1-[2-[3-(3,5-di-tert-butyl-4-hydroxyphenyl)propinyloxy]ethyl]-4-[3-(3,5-di-tert-butyl-4-hydroxyphenyl)propinyloxy]-2,2,6,6-tetramethylpiperidine, a mixture (trade name "TINUVIN292" manufactured by BASF SE) of bis(1,2,2,6,6-pentamethyl-4-piperidyl)sebacate and methyl-1,2,2,6,6-pentamethyl-4-piperidyl-sebacate, bis(1-octoxy-2,2,6,6-tetramethyl-4-piperidyl)sebacate, and TINUVIN123, TINUVIN144, TINUVIN152, TINUVIN249, TINUVIN292 and TINUVIN5100 (trade names, manufactured by BASF SE); radical polymerizable hindered amine-based light stabilizers such as 1,2,2,6,6-pentamethyl-4-piperidyl methacrylate, 1,2,2,6,6-pentamethyl-4-piperidyl acrylate, 2,2,6,6-tetramethyl-4-piperidyl methacrylate, 2,2,6,6-tetramethyl-4-piperidyl acrylate, 1,2,2,6,6-pentamethyl-4-iminopiperidyl methacrylate, 2,2,6,6,-tetramethyl-4-iminopiperidyl methacrylate, 4-cyano-2,2,6,6-tetramethyl-4-piperidyl methacrylate and 4-cyano-1,2,2,6,6-pentamethyl-4-piperidyl methacrylate; polymers each having photostability, such as U-Double E-133, U-Double E-135, U-Double S-2000, U-Double S-2834, U-Double S-2840, U-Double S-2818 and U-Double S-2860 (trade names, manufactured by Nippon Shokubai Co., Ltd.); and ultraviolet absorbers each having reactivity with a silanol group, an isocyanate group, an epoxy group, a semicarbazide group or a hydrazide group; and inorganic ultraviolet absorbers such as cerium oxide, zinc oxide, aluminum oxide, zirconium oxide, niobium oxide, bismuth oxide, cobalt oxide, copper oxide, tin oxide and titanium oxide, and these may be used singly or in combinations of two or more thereof.

[Transparency of hard coating layer]

The transparency of the hard coating layer in the present embodiment can be evaluated in terms of the total light transmittance retention rate obtained by the following expression, from the viewpoint of the change in outer appearance. In the present embodiment, the total light transmittance retention rate of the hard coating layer is preferably 90% or more, more preferably 95% or more from the viewpoint of securement of lighting, extremely preferably 98% or more from the viewpoint of securement of the visibility through the material. The total light transmittance retention rate of the hard coating layer can be adjusted in the above range by, for example, adopting any preferable respective aspects described above with respect to the polymer nanoparticle (A) and the matrix component (B).

$$\text{Total light transmittance retention rate (\%) of hard coating layer} = (\text{Total light transmittance (\%) of laminate} / \text{Total light transmittance (\%) of substrate}) \times 100$$

<Coating material composition (I)>

The layer (C) of the present embodiment is preferably obtained by using, for example, the following coating material composition (I). The coating material composition (I) is preferably a coating material composition including a polymer nanoparticle (A) and a matrix raw material component (B'), in which, preferably, the elastic recovery rate $\eta_{ITA}$ of the polymer nanoparticle (A), as measured by an indentation test according to ISO14577-1, is 0.30 or more and 0.90 or less, the Martens hardness $HM_A$ of the polymer nanoparticle (A) and the Martens hardness $HM_{B'}$ of the matrix raw material component (B') satisfy a relationship of $HM_{B'}/HM_A > 1$, and the matrix raw material component (B') includes an inorganic oxide (D).

The inorganic oxide (D) in the coating material composition (I) preferably contains at least one inorganic component selected from the group consisting of Ce, Nb, Al, Zn, Ti, Zr, Sb, Mg, Sn, Bi, Co and Cu.

The detail of each component included in the coating material composition (I), not mentioned below, is as described above with respect to each component included in the layer (C).

[Hardness $HM_A$ of polymer nanoparticle (A) and hardness $HM_B$ of matrix raw material component (B')]

The Martens hardness $HM_A$ of the polymer nanoparticle (A) and the Martens hardness $HM_{B'}$ of the matrix raw material component (B') in the coating material composition (I) preferably satisfy a relationship of the following expression (3).

$$HM_{B'}/HM_A > 1 \qquad \text{expression (3)}$$

The relationship is satisfied in the coating material composition (I) as described above, and therefore the relationship of the expression (3) is satisfied also by the Martens hardness $HM_A$ of the polymer nanoparticle (A) and the Martens hardness $HM_{B'}$ of the matrix raw material component (B') in the layer (C) obtained with the coating material composition (I). Such each Martens hardness with respect to the coating material composition (I) can be measured by, for example, separating the polymer nanoparticle (A) and the matrix raw material component (B') by an operation such as centrifugation and/or ultrafiltration, and subjecting each component separated, to measurement based on a method described in Examples below.

The respective values of the $HM_A$ and $HM_B$ can be adjusted by, for example, the structures of and the compositional ratio between the respective structural components of the polymer nanoparticle (A) and the matrix raw material component (B') so as to satisfy the above magnitude relationship, but the adjustment is not limited thereto.

[Elastic recovery rate $\eta_{ITA}$ of polymer nanoparticle (A)]

The elastic recovery rate $\eta_{ITA}$ of the polymer nanoparticle (A) in the present embodiment is obtained by measuring the parameter described as the ratio $\eta_{IT}$ of $W_{elast}/W_{total}$ in ISO14577-1 with respect to a coating film formed of the polymer nanoparticle (A), and is represented as the ratio of the elastic return deformation workload $W_{elast}$ of a depression to the total mechanical workload $W_{total}$ of a depression. As the elastic recovery rate $\eta_{ITA}$ is higher, the coating film can be more returned to the original state when is subject to impact, and is higher in ability to repair itself against impact. The elastic recovery rate $\eta_{ITA}$ of the polymer nanoparticle (A) is preferably 0.30 or more under measurement conditions (Vickers quadrangular pyramid diamond indenter, loading condition: 2 mN/20 sec, unloading condition: 2 mN/20 sec) from the viewpoint that the ability to repair itself is effectively expressed, and the $\eta_{ITA}$ is preferably 0.90 or less from the viewpoint of being able to conform to deformation of the substrate and/or the matrix raw material component (B') in formation of the coating film. The elastic recovery rate $\eta_{ITA}$ of the polymer nanoparticle (A) is more preferably 0.50 or more, further preferably 0.60 or more. The elastic recovery rate of the polymer nanoparticle (A) can be measured by, but not limited to the following, for example, separating the polymer nanoparticle (A) and the matrix raw material component (B') by an operation such as centrifugation and/or ultrafiltration, dispersing the polymer nanoparticle (A) separated, in a solvent, to provide a composition, performing coating with the composition and drying to form a coating film, and subjecting the coating film to measurement with, for example, a micro-hardness meter Fischer scope (HM2000S manufactured by Fischer Instruments K.K.), a nano indentation tester (ENT-NEXUS manufactured by Elionix Inc.), a nano indenter (iNano, G200 manufactured by Toyo Corporation), and/or a nano indentation system (TI980 manufactured by Bruker AXS GmbH). Examples of the method for adjusting the elastic recovery rate $\eta_{ITA}$ in the range include, but not limited to the following, adjustment of the structure and the compositional ratio of the structural component of the polymer nanoparticle (A).

The layer (C) can be obtained as a cured product formed by curing a coating material composition (I) with hydrolytic condensation or the like. The polymer nanoparticle (A) is usually not changed in composition in the course of such curing. Accordingly, the value of the elastic recovery rate $\eta_{ITA}$ in the layer (C) can be determined under the assumption that the value of the elastic recovery rate $\eta_{ITA}$ of the polymer nanoparticle (A) in the coating material composition (I), as measured by a method described in Examples below, is well matched to the elastic recovery rate $\eta_{ITA}$ of the polymer nanoparticle (A) in the layer (C).

[Solvent (H)]

The coating material composition (I) in the present embodiment preferably contains a solvent (H). A usable solvent (H) is not particularly limited, and a common solvent can be used. Examples of the solvent include, but not limited to the following, water; alcohols such as ethylene glycol, butyl cellosolve, isopropanol, n-butanol, 2-butanol, ethanol, methanol, modified ethanol, 2-methoxy-1-propanol, 1-methoxy-2-propanol, diacetone alcohol glycerin, monoalkyl monoglyceryl ether, propylene glycol monomethyl ether, diethylene glycol monobutyl ether, propylene glycol monoethyl ether, propylene glycol monobutyl ether, dipropylene glycol monoethyl ether, dipropylene glycol monobutyl ether, diethylene glycol monophenyl ether and tetraethylene glycol monophenyl ether; aromatic hydrocarbons such as toluene and xylene; aliphatic hydrocarbons such as hexane, cyclohexane and heptane; esters such as ethyl acetate and n-butyl acetate; ketones such as acetone, methyl ethyl ketone, methyl isobutyl ketone and cyclohexanone; ethers such as tetrahydrofuran and dioxane; amides such as dimethylacetamide and dimethylformamide; halogen compounds such as chloroform, methylene chloride and carbon tetrachloride; dimethylsulfoxide, and nitrobenzene; and these may be used singly or in combinations of two or more thereof. In particular, such a solvent particularly preferably includes water and/or any alcohol from the viewpoint of a decrease in environmental load in removal of the solvent.

Hereinafter, the structural component, the size, the compositional ratio, and the like of the polymer nanoparticle (A) included in the coating material composition (I) will be described, and the detail about any matter not mentioned below is as described above with respect to the polymer nanoparticle (A) included in the layer (C).

The matrix raw material component (B') included in the coating material composition (I) is cured with hydrolytic condensation or the like in the course of obtaining the layer (C). That is, the matrix raw material component (B') included in the coating material composition (I) is in a relationship so as to correspond to the matrix component (B) in the resulting layer (C). Hereinafter, the structural component, the size, the compositional ratio, and the like of the matrix raw material component (B') will be described, and the detail about any matter not mentioned below is as described above with respect to the matrix component (B) included in the layer (C).

The polymer nanoparticle (A) and the matrix raw material component (B') in the coating material composition (I) preferably include the above hydrolyzable silicon compound (a) and the above hydrolyzable silicon compound (b), respectively. The hydrolyzable silicon compound (a) in the coating material composition (I) also preferably includes at least one or more selected from the compound having an atomic group represented by the formula (a-1) and the hydrolyzed product and the condensate thereof, and the compound represented by the formula (a-2) and the hydrolyzed product and the condensate thereof. The hydrolyzable silicon compound (b) in the coating material composition (I) also preferably includes at least one or more selected from the compound having an atomic group represented by the formula (b-1), and the hydrolyzed product and the condensate thereof, and the compound represented by the formula (b-2), and the hydrolyzed product and the condensate thereof.

The details of the hydrolyzable silicon compounds (a) and (b) in the coating material composition (I) are as described above with respect to the polymer nanoparticle (A) and the matrix component (B) included in the layer (C), respectively.

[Content of hydrolyzable silicon compound (a) in polymer nanoparticle (A)]

The content of the hydrolyzable silicon compound (a) in the coating material composition (I) represents the weight proportion of the solid content of the hydrolyzable silicon compound (a) included in the polymer nanoparticle (A), and the content is preferably higher because, as the content is higher, abrasion resistance, weather resistance and heat resistance are enhanced. The content is preferably 50% by mass or more, more preferably 60% by mass or more. The content of the hydrolyzable silicon compound (a) in the polymer nanoparticle (A) can be measured by, but not limited to the following, for example, IR analysis, NMR analysis, and/or elemental analysis of the polymer nanoparticle (A).

[Functional group (e)]

The polymer nanoparticle (A) in the coating material composition (I) preferably has a functional group (e) which interacts with the matrix raw material component (B'). When the polymer nanoparticle (A) has such a functional group (e), the matrix raw material component (B') easily adsorbs to the surface of the polymer nanoparticle (A) and tends to be in the form of protective colloid and thus stabilized, resulting in a tendency to enhance storage stability of the coating material composition (I). Furthermore, when the polymer nanoparticle (A) has such a functional group (e), an increase in interaction between the polymer nanoparticle (A) and the matrix raw material component (B') tends to lead to an increase in thickening of the solid content concentration of the coating material composition (I) and suppression of sagging in coating of a complicated shape, resulting in a tendency to uniform the film thickness of the layer (C). Whether or not the polymer nanoparticle (A) has such a functional group (e) can be confirmed by, for example, compositional analysis with IR, GC-MS, pyrolysis GC-MS, LC-MS, GPC, MALDI-MS, TOF-SIMS, TG-DTA, and/or NMR, or analysis with any combination thereof.

Specific examples of the functional group (e) in the present embodiment include, but not limited to the following, functional groups such as a hydroxyl group, a carboxyl group, an amino group, an amide group and a functional group having an ether bond, a functional group having a hydrogen bond is preferable from the viewpoint of interaction, and an amide group is more preferable and a secondary amide group and/or a tertiary amide group are/is further preferable from the viewpoint of high hydrogen bondability.

Examples of the compound having the functional group (e) and a reaction product thereof include 2-hydroxyethyl (meth)acrylate, 2-hydroxypropyl (meth)acrylate, 4-hydroxybutyl (meth)acrylate, 2-hydroxyethyl vinyl ether or 4-hydroxybutyl vinyl ether, 2-hydroxyethyl allyl ether, (meth)acrylic acid, 2-carboxyethyl (meth)acrylate, 2-dimethylaminoethyl (meth)acrylate, 2-diethylaminoethyl (meth)acrylate, 2-di-n-propylaminoethyl (meth)acrylate, 3-dimethylaminopropyl (meth)acrylate, 4-dimethylaminobutyl (meth)acrylate, N-[2-(meth)acryloyloxy]ethylmorpholine, vinylpyridine, N-vinylcarbazole, N-vinylquinoline, N-methylacrylamide, N-methylmethacrylamide, N-ethylacrylamide, N,N-dimethylacrylamide, N,N-dimethylmethacrylamide, N,N-diethylacrylamide, N-ethylmethacrylamide, N-methyl-N-ethylacrylamide, N-methyl-N-ethylmethacrylamide, N-isopropylacrylamide, N-n-propylacrylamide, N-isopropylmethacrylamide, N-n-propylmethacrylamide, N-methyl-N-n-propylacrylamide, N-methyl-N-isopropylacrylamide, N-acryloylpyrrolidine, N-methacryloylpyrrolidine, N-acryloylpiperidine, N-methacryloylpiperidine, N-acryloylhexahydroazepine, N-acryloylmorpholine, N-methacryloylmorpholine, N-vinylpyrrolidone, N-vinylcaprolactam, N,N'-methylenebisacrylamide, N,N'-methylenebismethacrylamide, N-vinylacetamide, diacetone acrylamide, diacetone methacrylamide, N-methylolacrylamide, N-methylolmethacrylamide, Blemmers PE-90, PE-200, PE-350, PME-100, PME-200, PME-400 and AE-350 (trade names, manufactured by NOF Corporation), and MA-30, MA-50, MA-100, MA-150, RA-1120, RA-2614, RMA-564, RMA-568, RMA-1114 and MPG130-MA (trade names, manufactured by Nippon Nyukazai Co., Ltd.). Herein, the "(meth)acrylate" simply represents acrylate or methacrylate, and the "(meth)acrylic acid" simply represents acrylic acid or methacrylic acid.

[Elastic recovery rate $\eta_{ITB'}$ of matrix raw material component (B') and elastic recovery rate $\eta_{ITB}$ of matrix component (B)]

The elastic recovery rate $\eta_{ITB'}$ of the matrix raw material component (B') in the coating material composition (I) is the parameter described as the "ratio $\eta_{IT}$ of $W_{elast}/W_{total}$" in ISO14577-1, is measured with respect to a coating film formed of the matrix raw material component (B'), and is represented as the ratio of the elastic return deformation workload $W_{elast}$ of a depression to the total mechanical workload $W_{total}$ of a depression. As the elastic recovery rate

$\eta_{ITB'}$ is higher, the coating film can be more returned to the original state when is subject to impact, and is higher in ability to repair itself against impact. The elastic recovery rate $\eta_{ITB'}$ of the matrix raw material component (B') is preferably 0.60 or more, more preferably 0.65 or more under measurement conditions (Vickers quadrangular pyramid diamond indenter, loading condition: 2 mN/20 sec, unloading condition: 2 mN/20 sec) from the viewpoint that the ability to repair itself is effectively expressed. The $\eta_{ITB'}$ is preferably 0.95 or less from the viewpoint of being able to conform to deformation of the substrate and/or the component (A) in formation of the coating film. The elastic recovery rate of the matrix raw material component (B') can be measured by, but not limited to the following, for example, separating the polymer nanoparticle (A) and the matrix raw material component (B') by an operation such as centrifugation, dissolving the matrix raw material component (B') separated, in a solvent, to provide a composition, performing coating with the composition and drying to form a coating film, and subjecting the coating film to measurement with, for example, a micro-hardness meter Fischer scope (HM2000S manufactured by Fischer Instruments K.K.), a nano indentation tester (ENT-NEXUS manufactured by Elionix Inc.), a nano indenter (iNano, G200 manufactured by Toyo Corporation), and/or a nano indentation system (TI980 manufactured by Bruker AXS GmbH).

As described above, a cured product obtained by curing the matrix raw material component (B') with hydrolytic condensation or the like corresponds to the matrix component (B). Accordingly, the value of the elastic recovery rate $\eta_{ITB'}$ of the matrix raw material component (B') can be determined under the assumption that the value of the elastic recovery rate $\eta_{ITB'}$ of the matrix raw material component (B'), as measured by a method described in Examples below, is well matched with the elastic recovery rate $\eta_{ITB}$ of the corresponding matrix component (B). That is, the elastic recovery rate $\eta_{ITB}$ of the matrix component (B) in the present embodiment is preferably 0.60 or more, more preferably 0.65 or more. The $\eta_{ITB}$ is preferably 0.95 or less from the viewpoint of neing able to conform to deformation of the substrate and/or the component (A) in formation of the coating film.

Examples of the method for adjusting the elastic recovery rate $\eta_{ITB'}$ and the elastic recovery rate $\eta_{ITB}$ in the respective ranges include, but not limited to the following, adjustment of the structure and the compositional ratio of the structural component of the matrix raw material component (B').

The "hydrolyzable silicon compound (a) included in the polymer nanoparticle (A)" in the coating material composition (I) may be the same as or different from the "hydrolyzable silicon compound (b) included in the matrix raw material component (B')". Even if both compounds are the same, such compounds are distinguished from each other by defining the compound included in the polymer nanoparticle (A) as the hydrolyzable silicon compound (a) and defining the compound included in the matrix raw material component (B') as the hydrolyzable silicon compound (b).

[Inorganic oxide (D)]

The matrix raw material component (B') in the coating material composition (I) includes an inorganic oxide (D). The inorganic oxide (D) is included to result in not only a tendency to enhance hardness of the matrix raw material component (B') and enhance abrasion resistance, but also a tendency to enhance contamination resistance of the coating film due to hydrophilicity of a hydroxyl group on a particle surface.

The inorganic oxide (D) in the coating material composition (I) is not limited in terms of the shape thereof, and may be in the form of a single substance or a mixture. Any silica particle is preferably further included from the viewpoint of interaction with the above hydrolyzable silicon compound (b), and such a silica particle in the form of colloidal silica is preferably further included from the viewpoint of dispersibility. When the inorganic oxide (D) includes colloidal silica, such silica is preferably in the form of an aqueous dispersion liquid, and can be used even if is either acidic or basic.

The average particle size of the inorganic oxide (D) in the coating material composition (I) is preferably 2 nm or more from the viewpoint of an improvement in storage stability of the coating material composition (I). The average particle size is preferably 150 nm or less, more preferably 100 nm or less, further preferably 50 nm or less from the viewpoint of an improvement in transparency of the entire laminate. Thus, the average particle size is preferably 2 nm or more and 100 nm or less, more preferably 2 nm or more and 50 nm or less. The method for measuring the average particle size of the inorganic oxide (D) in the coating material composition (I) is as described above with respect to the inorganic oxide (D) included in the layer (C).

Other characteristics of the inorganic oxide (D) in the coating material composition (I) are as described above with respect to the inorganic oxide (D) included in the layer (C).

[Volume fraction of polymer nanoparticle (A) based on total of polymer nanoparticle (A) and matrix raw material component (B')]

The volume fraction of the polymer nanoparticle (A) based on the total of the polymer nanoparticle (A) and the matrix raw material component (B') in the coating material composition (I) is preferably 2% or more, more preferably 3% or more, further preferably 5% or more from the viewpoint of film formability, and is preferably 80% or less, more preferably 70% or less, further preferably 45% or less from the viewpoint of transparency. The volume fraction of the polymer nanoparticle (A) in the coating material composition (I) can be calculated from, for example, the proportion of the polymer nanoparticle (A) in the entire coating film in a cross-sectional SEM image after formation of the layer (C), and/or the component ratio of the polymer nanoparticle (A) to the components constituting the coating material composition (I).

[Core/shell structure of polymer nanoparticle (A)]

The polymer nanoparticle (A) in the coating material composition (I) preferably has a core/shell structure including a core layer and one or more shell layers covering the core layer. The polymer nanoparticle (A) preferably has the above functional group (e) also from the viewpoint of interaction with the matrix raw material component (B') on the outermost layer of the core/shell structure. Whether or not the polymer nanoparticle (A) has the core/shell structure can be confirmed in, for example, a transmission electron microscope image of a cross section of the coating film.

[Other component optionally included in coating material composition (I)]

The coating material composition (I) may include not only the above components, but also, if necessary, a thickening agent, a leveling agent, a thixotropic agent, a defoamer, a freezing stabilizer, a dispersant, a wetting agent, a rheology controlling agent, a film formation aid, a rust inhibitor, a plasticizer, a lubricant, a preservative agent, an antifungal agent, an antielectrostatic agent, and/or an antistatic agent, each compounded in the form of the matrix raw material component (B'), from the viewpoint of a more enhancement in coatability of the coating material composition (I). A wetting agent and/or a film formation aid are/is preferably used from the viewpoint of an enhancement in film formability, and specific examples thereof include, but not particularly limited, diethylene glycol monobutyl ether, ethylene glycol monobutyl ether, diethylene glycol diethyl ether, diethylene glycol dibutyl ether, ethylene glycol mono-2-ethylhexyl ether, 2,2,4-trimethyl-1,3-butanediol isobutyrate, diisopropyl glutarate, propylene glycol-n-butyl ether, dipropylene glycol-n-butyl ether, tripropylene glycol-n-butyl ether, dipropylene glycol methyl ether, tripropylene glycol methyl ether, Megafac F-443, F-444, F-445, F-470, F-471, F-472SF, F-474, F-475, F-477, F-479, F-480SF, F-482, F-483, F-489, F-172D and F-178K (trade names, manufactured by DIC Corporation), and SN Wet 366, SN Wet 980, SN Wet L, SN Wet S, SN Wet 125, SN Wet 126 and SN Wet 970 (trade names, manufactured by San Nopco Limited). Such compounds may be used singly or in combinations of two or more thereof.

[Light-shielding agent (S2)]

The coating material composition (I) optionally includes a light-shielding agent (S2). The coating material composition (I) preferably includes a light-shielding agent (S2). The light-shielding agent (S2) is not particularly limited, and one described above as the light-shielding agent (S1) in the coating material composition (J) can be appropriately adopted.

[Catalyst]

The coating material composition (I) may include a catalyst as the matrix raw material component (B'). When the coating material composition (I) includes a catalyst which promotes a reaction of reactive groups is preferable in that any un-reactive group is unlikely to remain in the coating film to result in not only an increase in hardness and an enhancement in abrasion resistance, but also an enhancement in weather resistance. The catalyst is not particularly limited, and is preferably one which is dissolved or dispersed when the hard coating film is obtained. Such a catalyst is not particularly limited, and examples thereof include an organic acid, an inorganic acid, an organic base, an inorganic base, a metal alkoxide, and a metal chelate, and such catalysts may be used singly or in combinations of two or more thereof.

[Properties of coating material composition (I)]

The solid content concentration of the coating material composition (I) is preferably 0.01 to 60% by mass, more preferably 1 to 40% by mass from the viewpoint of coatability. The viscosity at 20°C of the coating material composition (I) is preferably 0.1 to 100000 mPa•s, preferably 1 to 10000 mPa•s from the viewpoint of coatability.

<Method for producing hard coating layer>

The method for producing the hard coating layer in the present embodiment is not particularly limited, and the hard coating layer can be obtained by, for example, coating the substrate with the coating material composition (I) in which the polymer nanoparticle (A), the matrix raw material component (B'), the inorganic oxide (D), and any other appropriate component are dispersed and dissolved in a solvent, and subjecting the resultant to, for example, a heat treatment, ultraviolet irradiation, and/or infrared irradiation to thereby form a coating film. Examples of the coating method include, but not limited to the following, a spraying method, a flow coating method, a brush coating method, a dip coating method, a spin coating method, a screen printing method, a casting method, a gravure printing method, and a flexographic printing method. The coating material composition (I) subjected to coating can be preferably formed into a coating film by, for example, a heat treatment at room temperature to 250°C, more preferably 40°C to 150°C, and/or ultraviolet or infrared irradiation. This coating can be applied for not only coating a substrate already formed, but also coating a flat plate in advance before forming and processing, like a precoating metal including a rust-resistant steel plate.

[Surface treatment of hard coating layer]

The hard coating layer in the present embodiment may be subjected to surface treatment with silica and thus provided with a silica layer formed thereon from the viewpoint of weather resistance. The method for forming the silica layer is not particularly limited, and specific examples thereof include a silica treatment with PECVD for depositing/curing silicone or silazane and a silica treatment technique for modifying a surface by silica due to irradiation with ultraviolet light at 155 nm. In particular, such a silica treatment with PECVD is preferable because a layer through which oxygen and steam are unlikely to penetrate can be produced without degradation of any surface. Specific examples of such silicone or silazane which can be used in PECVD include, but not limited to the following, octamethylcyclotetrasiloxane, tetramethylcyclotetrasiloxane, decamethylcyclopentasiloxane, hexamethyldisiloxane, vinylmethoxysilane, vinyl methoxysilane, dimethyldimethoxysilane, TEOS, tetramethyldisiloxane, tetramethyltetravinyl cyclotetrasiloxane and hexamethyldisiloxane, and these may be used singly or in combinations of two or more thereof.

The hard coating layer in the present embodiment may be further provided with a functional layer on at least one surface thereof. Examples of the functional layer include, but not limited to the following, an antireflective layer, an antifouling layer, a polarizing layer, and an impact-absorbing layer.

[Haze value H1 of adhesion layer-applied substrate and haze value H2 of laminate]

The haze value H1 of the adhesion layer-applied substrate is larger than the haze value H2 of the laminate in the laminate of the present embodiment. Such a relationship is satisfied and thus a scattering layer is formed on an interface between the adhesion layer-applied substrate and the hard coating layer in the laminate of the present embodiment, to result in suppression of the occurrence of any interference pattern and an enhancement in optical properties.

The haze value H1 of the adhesion layer-applied substrate in the present embodiment is preferably 60% or less, more preferably 50% or less, further preferably 30% or less from the viewpoint of transparency. The haze value H2 of the laminate is preferably 5% or less, more preferably 2% or less, further preferably 1% or less from the same viewpoint. Examples of the method for adjusting each of the haze values in the range include, but not limited to the following, control of the size of the adhesive emulsion particle (F), the particle size and the shape of the inorganic oxide (G), the weight ratio of the adhesive emulsion particle (F) and the inorganic oxide (G), the content of the light-shielding agent, and the contents of a curing agent and any other additive, with respect to H1, and control of the size of the polymer nanoparticle (A), the component ratio of the polymer nanoparticle (A) and the matrix component (B), and the content rate of the inorganic oxide (D) in the matrix component (B), with respect to H2. In particular, an increase in amount of the inorganic oxide (G) or the inorganic oxide (D) tends to result in an increase in such each haze value, and a decrease in the amount tends to result in a decrease in such each haze value.

Each of the haze values can be measured by a method described in Examples below. The haze value H1 can be measured with, as a target, the adhesion layer-applied substrate, and the haze value H2 can be measured with, as a target, the laminate (adhesion layer-applied substrate and hard coating layer). The haze values H1 and H2 may be respectively measured after formation of the adhesion layer-applied substrate and the laminate.

[Surface roughness Ra1 of adhesion layer-applied substrate and surface roughness Ra2 of laminate]

The surface roughness Ra1 of the adhesion layer-applied substrate is higher than the surface roughness Ra2 of the laminate in the laminate of the present embodiment. Such a relationship is satisfied and thus a scattering layer is formed on an interface between the adhesion layer-applied substrate and the hard coating layer in the laminate of the present embodiment, to result in suppression of the occurrence of any interference pattern and an enhancement in optical properties.

The surface roughness Ra1 of the adhesion layer-applied substrate in the present embodiment is preferably 500 nm or less, more preferably 300 nm or less, further preferably 200 nm or less, most preferably 150 nm or less from the viewpoint of transparency. The surface roughness Ra1 of the adhesion layer-applied substrate in the present embodiment is preferably 10 nm or more, more preferably 20 nm or more, further preferably 40 nm or more from the viewpoint of adhesiveness.

The surface roughness Ra2 of the laminate is preferably less than 100 nm, more preferably 50 nm or less, further preferably 30 nm or less, still further preferably 20 nm or less from the viewpoint of transparency.

Examples of the methods for adjusting the surface roughnesses Ra1 and Ra2 in the ranges include, but not limited to the following, control of the size of the adhesive emulsion particle (F), the weight ratio of the adhesive emulsion particle (F) and the inorganic oxide (G), and the content of the light-shielding agent, with respect to Ra1, and control of the size of the polymer nanoparticle (A), the component ratio of the polymer nanoparticle (A) and the matrix component (B), and the content rate of the inorganic oxide (D) in the matrix component (B), with respect to Ra2. In particular, an increase in amount of the inorganic oxide (G) or the inorganic oxide (D) tends to result in an increase in such each surface roughness Ra, and a decrease in the amount tends to result in a decrease in such each surface roughness.

The surface roughnesses Ra1 and Ra2 can be each measured by a method described in Examples below. The surface roughness Ra1 can be measured with, as a target, the adhesion layer-applied substrate, and the surface roughness Ra2 can be measured with, as a target, the laminate (adhesion layer-applied substrate and hard coating layer). The surface roughnesses Ra1 and Ra2 may be respectively measured after formation of the adhesion layer-applied substrate and the laminate. The surface roughness Ra may also be calculated by determining the shape of an interface between the adhesion layer and the hard coating layer from a cross-sectional SEM image of the laminate.

<Application of laminate>

The laminate of the present embodiment has excellent abrasion resistance and durability. Accordingly, examples of the applications of the hard coating film and the hard coating film-applied substrate include, but not particularly limited, a building material, a vehicle member, electronic equipment and an electronic product.

Examples of such a building material application include, but not limited to the following, window glass for a constructing machine, window glass for a building, a house, a greenhouse, and the like, roofs for a garage, an arcade, and the like, a light for lighting, a traffic light, and the like, a skin material for wallpaper, a signboard, sanitary products such as a bath and a washstand, an external wall building material for kitchen, and interior floor materials such as a flooring material, a cork material, tiling, a vinyl flooring, and linoleum.

Examples of such a vehicle member include, but not limited to the following, components for use in each application of an automobile, an airplane, and a train. Specific examples include each glass of front, rear, front door, rear door, rear quarter, sunroof, and the like, exterior members such as a front bumper and a rear bumper, a spoiler, a door mirror, a front grille, an emblem cover, and a body, interior members such as a center panel, a door panel, an instrumental panel, and a center console, members for lamp such as head lamp and rear lamp, a vehicle-mounted camera lens member, a lighting cover, a decorative film, and various alternative members to glass.

Examples of such electronic equipment and electronic product preferably include, but not limited to the following, a cellular phone, a portable information terminal, a personal computer, a portable gaming device, OA equipment, a solar cell, a flat panel display, a touch panel, optical discs such as DVD and Blu-ray Disc, optical components such as a polarizing plate, an optical filter, a lens, a prism, and an optical fiber, and optical films such as antireflective film, an oriented film, a polarizing film, and a phase difference film.

The laminate of the present embodiment can be applied to, in addition to the above, various fields of a mechanical component, an agricultural material, a fishing material, a transport container, a packaging container, playground equipment and sundry goods, and the like.

<<Second embodiment>>

Herein, a second aspect (hereinafter, also referred to as "second embodiment".) according to the present embodiment is described in detail.

<Hard coating film>

A hard coating film (hereinafter, also referred to as "coating film (C)".) of the present embodiment (hereinafter, "the present embodiment" means the second embodiment in the section <<Second embodiment>>, unless particularly noted.) is a hard coating film including a polymer nanoparticle (A) and a matrix component (B), in which the Martens hardness $HM_A$ of the polymer nanoparticle (A) and the Martens hardness $HM_B$ of the matrix component (B) satisfy a relationship of $HM_B/HM_A > 1$, the Martens hardness HM of the hard coating film is 100 N/mm$^2$ or more, the matrix component (B) includes an inorganic oxide (D), and the inorganic oxide (D) contains at least one inorganic component selected from the group consisting of Ce, Nb, Al, Zn, Ti, Zr, Sb, Mg, Sn, Bi, Co and Cu.

Even if it is difficult to confirm the magnitude relationship between the Martens hardness $HM_A$ and the Martens hardness $HM_B$, the magnitude relationship with respect to such Martens hardness can be estimated by comparison between the respective cohesion forces of the polymer nanoparticle (A) and the matrix component (B) described below.

A lower cohesion force means a higher elasticity, and thus a lower cohesion force means that a coating film is more unlikely to be deformed and is higher in hardness. Specifically, a hard coating film of the present embodiment can also be specified as follows. That is, the hard coating film of the present embodiment is a hard coating film including a polymer nanoparticle (A) and a matrix component (B), in which the cohesion force $F_A$ of the polymer nanoparticle (A) and the cohesion force $F_B$ of the matrix component (B), as measured in a cohesion force mode of a scanning probe microscope (SPM), satisfy a relationship of $F_A/F_B > 1$, the Martens hardness HM of the hard coating film is 100 N/mm$^2$ or more, the matrix component (B) contains an inorganic oxide (D), and the inorganic oxide (D) contains at least one inorganic component selected from the group consisting of Ce, Nb, Al, Zn, Ti, Zr, Sb, Mg, Sn, Bi, Co and Cu.

The hard coating film of the present embodiment is configured as described above, and thus has high abrasion resistance, durability and weather resistance. The hard coating film of the present embodiment exhibits abrasion resistance, durability and weather resistance at high levels, thus is useful as, but not limited to the following, a hard coat for, for example, a building material, an automobile member, electronic equipment, and an electronic product, and is particularly preferably used in an automobile member.

The polymer nanoparticle (A) is preferably dispersed in the matrix component (B) in the hard coating film of the present embodiment. The "dispersing" in the present embodiment means that the polymer nanoparticle (A) is distributed in the matrix component (B) uniformly or with any structure being formed, under the assumption that the polymer nanoparticle (A) corresponds to a dispersing phase and the matrix component (B) corresponds to a continuous phase. The dispersing can be confirmed by cross-sectional SEM observation of the hard coating film. The hard coating film of the present embodiment tends to have high abrasion resistance due to dispersing of the polymer nanoparticle (A) in the matrix component (B).

Any coating film having a Martens hardness HM of 100 N/mm$^2$ or more is herein particularly referred to as "hard coating film".

[Martens hardness]

The Martens hardness in the present embodiment is the hardness according to ISO14577-1, and is a value calculated from an indentation depth of 2 mN under measurement conditions (Vickers quadrangular pyramid diamond indenter, loading condition: 2 mN/20 sec, unloading condition: 2 mN/20 sec). The Martens hardness in the present embodiment can be measured by using, for example, a micro-hardness meter Fischer scope (HM2000S manufactured by Fischer Instruments K.K.), a nano indentation tester (ENT-NEXUS manufactured by Elionix Inc.), a nano indenter (iNano, G200 manufactured by Toyo Corporation), or a nano indentation system (TI980 manufactured by Bruker AXS GmbH), and a lower indentation depth means higher Martens hardness and a higher indentation depth means lower Martens hardness.

[Cohesion force]

The cohesion force in the present embodiment can be measured with a scanning probe microscope (SPM), and a lower cohesion force means a higher elasticity and thus a lower cohesion force means that a coating film is more unlikely to be deformed and is higher in hardness. The method for measuring the cohesion force can be made by using, but not limited to the following, for example, SPM-970 or SPM-9700HT manufactured by Shimadzu Corporation, Dimension ICON manufactured by Bruker AXS GmbH, or AFM5000II manufactured by Hitachi High-Tech Science Corporation.

[Other hardness]

The Martens hardness and the magnitude relationship between the cohesion forces in the present embodiment can also be estimated by confirming a magnitude relationship between measurement values with other hardness as an index. Such other hardness is not particularly limited as long as it is an index exhibiting the difficulty of deformation of a material in application of any force to the material, and examples thereof can also include Vickers hardness and indentation hardness each measured with an indentation hardness meter typified by a micro-hardness meter or a nano indentation instrument, and an index expressed as a logarithmic decay rate measured with pendulum-type viscoelasticity tester typified by a rigid pendulum-type physical property tester. Other examples can also include indices expressed as a phase, a frictional force, viscoelasticity, an adsorptive force, hardness, and elastic modulus, as measured with a scanning probe microscope (SPM). If it is confirmed by such indices that the hardness of the matrix component (B) is higher than the hardness of the polymer nanoparticle (A), it is presumed that the matrix component (B) is harder than the polymer nanoparticle (A) also in terms of the Martens hardness and the cohesion force.

[Martens hardness $HM_A$ of polymer nanoparticle (A) and Martens hardness $HM_B$ of matrix component (B)]

The Martens hardness $HM_A$ of the polymer nanoparticle (A) and the Martens hardness $HM_B$ of the matrix component (B) in the present embodiment satisfy a relationship of the following expression (1).

$$HM_B/HM_A > 1 \qquad expression~(1)$$

The expression (1) indicates that the soft polymer nanoparticle (A) is present in the hard matrix component (B), and such hardness can be expressed with a three-dimensional slope and thus the coating film (C) can exhibit abrasion resistance which has not been exhibited by any conventional coating film. The reason for this is estimated, but not intended to be limited to the following, as follows: the soft nanoparticle absorbs any impact and the hard matrix component suppresses any deformation. The range of $HM_A$ is preferably 50 N/mm$^2$ or more, more preferably 100 N/mm$^2$ or more from the viewpoint of impact absorption, and is preferably 2000 N/mm$^2$ or less, more preferably 800 N/mm$^2$ or less, further preferably 350 N/mm$^2$ or less from the viewpoint of film formability. The range of $HM_B$ is preferably 100 N/mm$^2$ or more, more preferably 150 N/mm$^2$ or more from the viewpoint of impact absorption, and is preferably 4000 N/mm$^2$ or less, more preferably 2000 N/mm$^2$ or less from the viewpoint of film formability.

The coating film (C) can be obtained as a cured product formed by curing a coating material composition (I) described below, with hydrolytic condensation or the like. The polymer nanoparticle (A) is usually not changed in composition in the course of such curing. Accordingly, the value of the Martens hardness $HM_A$ in the coating film (C) can be determined under the assumption that the value of the Martens hardness $HM_A$ of the polymer nanoparticle (A) in the coating material composition (I), as measured by a method described in Examples below, is well matched with the value of the Martens hardness $HM_A$ of the polymer nanoparticle (A) in the coating film (C).

The matrix component (B) corresponds to a cured product formed by curing a matrix raw material component (B') described below, with hydrolytic condensation or the like. Accordingly, the value of the Martens hardness $HM_B$ can be determined under the assumption that the value of the Martens hardness $HM_{B'}$ of the matrix raw material component (B'), as measured by a method described in Examples below, is well matched with the Martens hardness $HM_B$ of the corresponding matrix component (B).

The respective values of the $HM_A$ and the $HM_B$ can be adjusted by, for example, the structures of and the compositional ratio between the respective structural components of the polymer nanoparticle (A) and a matrix raw material component (B') described below so as to satisfy the above magnitude relationship, but the adjustment is not limited thereto.

[Cohesion force $F_A$ of polymer nanoparticle (A) and cohesion force $F_B$ of matrix component (B)]

The cohesion force $F_A$ of the polymer nanoparticle (A) and the cohesion force $F_B$ of the matrix component (B) in the present embodiment satisfy a relationship of the following expression (2).

$$F_A/F_B > 1 \qquad Expression~(2)$$

The expression (2), as in the expression (1), also indicates that the soft polymer nanoparticle (A) is present in the hard matrix component (B), and such hardness can be expressed with a three-dimensional slope and thus the coating film (C) can exhibit abrasion resistance which has not been exhibited by any conventional coating film. The reason for this is estimated, but not intended to be limited to the following, as follows: the soft nanoparticle absorbs any impact and the hard matrix component suppresses any deformation.

The cohesion force $F_A$ of the polymer nanoparticle (A) and the cohesion force $F_B$ of the matrix component (B) correlate to the hardness of each of the components and can be adjusted by, for example, the structures of and the compositional ratio between the respective structural components of the polymer nanoparticle (A) and a matrix raw material component (B') described below so as to satisfy the above magnitude relationship, but the adjustment is not limited thereto.

[Martens hardness HM of coating film (C)]

The Martens hardness HM of the coating film (C) is 100 N/mm$^2$ or more from the viewpoint of abrasion resistance, and higher Martens hardness has the advantage of less causing deformation against impact and less causing scratching associated with breakage. The Martens hardness HM of the coating film (C) is preferably 150 N/mm$^2$ or more, more preferably 200 N/mm$^2$ or more from the viewpoint of abrasion resistance, and is preferably 4000 N/mm$^2$ or less, more

preferably 2000 N/mm$^2$ or less, still more preferably 1500 N/mm$^2$ or less from the viewpoint of flex resistance. Examples of the method for adjusting the Martens hardness HM of the coating film (C) in the range include, but not limited to the following, a method involving coating a substrate with a coating material composition which satisfies a predetermined relationship represented by expression (3) described below and in which a composition including the polymer nanoparticle (A) and a matrix raw material component (B') described below, mixed, are dispersed and dissolved in a solvent, and subjecting the resultant to heat treatment, ultraviolet irradiation, infrared irradiation, and/or the like to thereby form a coating film. In particular, an increase in content of the matrix component (B) based on the total amount of the polymer nanoparticle (A) and the matrix component (B) tends to result in an increase in Martens hardness HM of the coating film (C), and a decrease in content of the matrix component (B) tends to result in a decrease in Martens hardness HM of the coating film (C).

[Amount of change in haze in Taber abrasion test]

The Taber abrasion test in the present embodiment is a measurement method according to the method described in ASTM D1044, and such measurement is performed under conditions of an abrasive wheel CS-10F and a load of 500 g. Any material smaller in amount of change in haze is higher in abrasion resistance, and any material where the amount of change in haze after 1000, relative to the haze before the test, namely, the difference between a haze at a rotation number of 1000 and a haze before the Taber abrasion test is 10 or less is adapted to the standards of automobile windows and can be suitably used in a hard coating film for automobile windows and any material where such a difference is 2 or less is adapted to the standards of ANSI/SAE Z.26.1, ECE R43 and JIS R3211/R3212 and can be suitably used in all automobile window materials. The difference between a haze at a rotation number of 1000 and a haze before the Taber abrasion test is preferably 10 or less, more preferably 6 or less, still more preferably 2 or less. Examples of the method for adjusting the amount of change in haze in the range include, but not limited to the following, a method involving coating a substrate with a coating material composition which satisfies a predetermined relationship represented by expression (3) described below and in which a composition including the polymer nanoparticle (A) and a matrix raw material component (B') described below, mixed, are dispersed and dissolved in a solvent, and subjecting the resultant to heat treatment, ultraviolet irradiation, infrared irradiation, and/or the like to thereby form a coating film.

[Difference between haze at rotation number of 500 and haze at rotation number of 10 in Taber abrasion test (hereinafter, also referred to as "ΔA".)]

The ΔA of the coating film (C) represents the difference between a haze at a rotation number of 500 and a haze at a rotation number of 10 in the Taber abrasion test, and a lower ΔA is more preferable because long-term contamination resistance is higher. In other words, the ΔA is preferably 10 or less, more preferably 7 or less, further preferably 5 or less from the viewpoint that higher contamination resistance is exhibited. Although the detailed reason is not clear, it is, for example, presumed that a lower ΔA less causes contaminants to be incorporated into a film and is better in washability of contaminants. Examples of the method for adjusting the ΔA of the coating film (C) in the range include, but not limited to the following, a method involving coating a substrate with a coating material composition which satisfies a predetermined relationship represented by expression (3) described below and in which a composition including the polymer nanoparticle (A) and a matrix raw material component (B') described below, mixed, are dispersed and dissolved in a solvent, and subjecting the resultant to heat treatment, ultraviolet irradiation, infrared irradiation, and/or the like to thereby form a coating film. In particular, the adjustment is made with, for example, the composition of the polymer nanoparticle (A), the composition of a matrix raw material component (B') described below, and the compounding ratio, as well as, compounding conditions including the composition of a solvent, the compounding order, the stirring time and the solid content concentration, and film formation conditions including the drying temperature, the humidity and the drying time in the case of heat treatment, the irradiation intensity, the irradiation time and the humidity in the case of ultraviolet irradiation, and the irradiation intensity, the irradiation time and the humidity in the case of infrared irradiation.

[Elastic recovery rate $\eta_{IT}$ of coating film (C)]

The elastic recovery rate $\eta_{IT}$ of the coating film (C) is the ratio of the elastic return deformation workload $W_{elast}$ of a depression to the total mechanical workload $W_{total}$ of a depression, and is the parameter described as the "ratio $\eta_{IT}$ of $W_{elast}/W_{total}$" in ISO14577-1. As the elastic recovery rate $\eta_{IT}$ is higher, the coating film can be more returned to the original state when deformed, and is higher in ability to repair itself against deformation. The elastic recovery rate $\eta_{IT}$ is preferably 0.50 or more under measurement conditions (Vickers quadrangular pyramid diamond indenter, loading condition: 2 mN/20 sec, unloading condition: 2 mN/20 sec) and is more preferably higher as long as it is in the range, from the viewpoint that the ability to repair itself is effectively expressed. More specifically, the elastic recovery rate $\eta_{IT}$ is more preferably 0.55 or more, further preferably 0.60 or more, still further preferably 0.65 or more. The elastic recovery rate of the coating film in the present embodiment can be measured by, but not particularly limited to the following, for example, subjecting the surface of the hard coating film to an indentation test with a micro-hardness meter Fischer scope (HM2000S manufactured by Fischer Instruments K.K.), a nano indentation tester (ENT-NEXUS manufactured by Elionix Inc.), a nano indenter (iNano, G200 manufactured by Toyo Corporation), or a nano indentation system (TI980 manufactured by Bruker AXS GmbH). Examples of the method for adjusting the elastic recovery rate $\eta_{IT}$ in the range include, but not limited to the following, a method involving coating a substrate with a coating material composition which satisfies a predetermined relationship represented by expression (3) described below and in which a composition including the polymer nanoparticle (A) and a matrix raw material component (B') described below, mixed, are dispersed and dissolved in a solvent, and subjecting the resultant to heat treatment, ultraviolet irradiation, infrared irradiation, and/or the like to thereby form a coating film.

[Film thickness of coating film (C)]

The film thickness is preferably appropriately adjusted in the present embodiment from the viewpoint that abrasion resistance of the hard coating film is further exhibited and from the viewpoint that conformability to deformation of a substrate is sufficiently ensured. Specifically, the film thickness of the coating film (C) is preferably 1.0 $\mu$m or more, more preferably 3.0 $\mu$m or more from the viewpoint of abrasion resistance. Furthermore, the film thickness of the coating film (C) is preferably 100.0 $\mu$m or less, more preferably 50.0 $\mu$m or less, further preferably 20.0 $\mu$m or less from the viewpoint of weather resistance and substrate conformability.

[Polymer nanoparticle (A)]

The polymer nanoparticle (A) in the present embodiment can be used to thereby impart impact absorption to the hard coating film and decrease the amount of change in haze in the Taber abrasion test of the hard coating film. The polymer nanoparticle (A) is not particularly limited in terms of the shape thereof as long as the particle size thereof is in nanometer scale (less than 1 $\mu$m). The Martens hardness $HM_A$ of the polymer nanoparticle (A) can be controlled in the above range by the structure and the compositional ratio of the structural component of the polymer nanoparticle (A), but the control is not limited thereto.

[Average particle size of the polymer nanoparticle (A)]

The average particle size of the polymer nanoparticle (A) in the present embodiment is not particularly limited as long as it is in nanometer scale (less than 1 $\mu$m), and is determined from the particle size determined by observation according to cross-sectional SEM or a dynamic light scattering method. The average particle size of the polymer nanoparticle (A) is preferably 10 nm or more, more preferably 15 nm or more, more preferably 20 nm or more from the viewpoint of optical properties, and is preferably 400 nm or less, more preferably 200 nm or less, further preferably 100 nm or less from the viewpoint of transparency. The method for measuring the average particle size of the polymer nanoparticle (A) can be made by, but not limited to the following, for example, using an aqueous polymer nanoparticle (A) dispersion and measuring the cumulant particle size with a dynamic light scattering type particle size distribution measuring apparatus manufactured by Otsuka Electronics Co., Ltd. (item number: ELSZ-1000).

[Volume fraction of polymer nanoparticle (A) in coating film (C)]

The volume fraction of the polymer nanoparticle (A) in the coating film (C) in the present embodiment is preferably 2% or more from the viewpoint of film formability, and is preferably 80% or less from the viewpoint of transparency. That is, the volume fraction of the polymer nanoparticle (A) in the coating film (C) is preferably 2% or more and 80% or less, more preferably 3% or more and 70% or less, further preferably 5% or more and 45% or less. The volume fraction of the polymer nanoparticle (A) in the coating film (C) can be calculated from, for example, the proportion of the polymer nanoparticle (A) in the entire coating film (C) in a cross-sectional SEM image of the coating film, and/or the component ratio of the polymer nanoparticle (A) to the components constituting the coating film (C).

[Structural component of polymer nanoparticle (A)]

[Hydrolyzable silicon compound (a)]

The polymer nanoparticle (A) in the present embodiment preferably includes a hydrolyzable silicon compound (a). The hydrolyzable silicon compound (a) is not particularly limited as long as it is a silicon compound having hydrolyzability, or a hydrolyzed product or a condensate thereof.

The hydrolyzable silicon compound (a) is preferably any of a compound having an atomic group represented by the following formula (a-1) and a hydrolyzed product and a condensate thereof from the viewpoint of enhancements in abrasion resistance and weather resistance.

$$-R^1_{n1}SiX^1_{3-n1} \qquad (a-1)$$

In the formula (a-1), $R^1$ represents a hydrogen atom, an alkyl group, an alkenyl group or an alkynyl group having 1 to 10 carbon atoms, or an aryl group, $R^1$ optionally has a substituent having halogen, a hydroxy group, a mercapto group, an amino group, a (meth)acryloyl group or an epoxy group, $X^1$ represents a hydrolyzable group, and n1 represents an integer of 0 to 2. The hydrolyzable group is not particularly limited as long as it is a group which generates a hydroxyl group by hydrolysis, and examples of such a group include halogen, an alkoxy group, an acyloxy group, an amino group, a phenoxy group, and an oxime group.

Specific examples of the compound having an atomic group represented by formula (a-1) include, but not limited to the following, trimethoxysilane, triethoxysilane, methyltrimethoxysilane, methyltriethoxysilane, ethyltrimethoxysilane, ethyltriethoxysilane, propyltrimethoxysilane, propyltriethoxysilane, isobutyltriethoxysilane, hexyltrimethoxysilane, hexyltriethoxysilane, octyltrimethoxysilane, octyltriethoxysilane, decyltrimethoxysilane, decyltriethoxysilane, cyclohexyltrimethoxysilane, cyclohexyltriethoxysilane, phenyltrimethoxysilane, phenyltriethoxysilane, dimethoxysilane, diethoxysilane, methyldimethoxysilane, methyldiethoxysilane, dimethyldimethoxysilane, dimethyldiethoxysilane, dimethoxydiphenylsilane, diethoxydiphenylsilane, bis(trimethoxysilyl)methane, bis(triethoxysilyl)methane, bis(triphenoxysilyl)ethane, 1,1-bis(triethoxysilyl)ethane, 1,2-bis(triethoxysilyl)ethane, 1,1-bis(triethoxysilyl)propane, 1,2-bis(triethoxysilyl)propane, 1,3-bis(triethoxysilyl)propane, 1,4-bis(triethoxysilyl)butane, 1,5-bis(triethoxysilyl)pentane, 1,1-bis(trimethoxysilyl)ethane, 1,2-bis(trimethoxysilyl)ethane, 1,1-bis(trimethoxysilyl)propane, 1,2-bis(trimethoxysilyl)propane, 1,3-bis(trimethoxysilyl)propane, 1,4-bis(trimethoxysilyl)butane, 1,5-bis(trimethoxysilyl)pentane, 1,3-bis(triphenoxysilyl)propane, 1,4-bis(trimethoxysilyl)benzene, 1,4-bis(triethoxysilyl)benzene, 1,6-bis(trimethoxysilyl)hexane, 1,6-bis(triethoxysilyl)hexane, 1,7-bis(trimethoxysilyl)heptane, 1,7-bis(triethoxysilyl)heptane, 1,8-bis(trimethoxysilyl)octane, 1,8-bis(triethoxysilyl)octane, 3-chloropropyltrimethoxysilane, 3-chloropropyltriethoxysilane, trifluoropropyltrimethoxysilane, trifluoropropyltriethoxysilane, 3-hydroxypropyltrimethoxysilane, 3-hydroxypropyltriethoxysilane, 3-mercaptopropyltrimethoxysilane, 3-mercaptopropyltriethoxysilane, 3-mercaptopropylmethyldimethoxysilane, 3-mercaptopropylmethyldiethoxysilane, 3-glycidoxypropyltrimethoxysilane, 3-glycidoxypropyltriethoxysilane, 3-glycidoxypropylmethyldimethoxysilane, 3-glycidoxypropylmethyldiethoxysilane, 2-(3,4-epoxycyclohexyl)ethyltrimethoxysilane, 2-(3,4-epoxycyclohexyl)ethyltriethoxysilane, 3-acryloxypropyltrimethoxysilane, 3-acryloxypropyltriethoxysilane, 3-methacryloxypropyltrimethoxysilane, 3-methacryloxypropyltriethoxysilane, 3-methacryloxypropylmethyldimethoxysilane, 3-methacryloxypropylmethyldimethoxysilane, vinyltrimethoxysilane, vinyltriethoxysilane, p-styryltrimethoxysilane, p-styryltriethoxysilane, N-2-(aminoethyl)-3-aminopropylmethyldimethoxysilane, N-2-(aminoethyl)-3-aminopropylmethyldiethoxysilane, N-2-(aminoethyl)-3-aminopropyltrimethoxysilane, N-2-(aminoethyl)-3-aminopropyltriethoxysilane, 3-aminopropyltrimethoxysilane, 3-aminopropyltriethoxysilane, N-phenyl-3-aminopropyltrimethoxysilane, N-phenyl-3-aminopropyltriethoxysilane, 3-trimethoxysilyl-N-(1,3-dimethyl-butylidene)propylamine, 3-triethoxysilyl-N-(1,3-dimethyl-butylidene)propylamine, triacetoxysilane, tris(trichloroacetoxy)silane, tris(trifluoroacetoxy)silane, tris-(trimethoxysilylpropyl)isocyanurate, tris-(triethoxysilylpropyl)isocyanurate, methyltriacetoxysilane, methyltris(trichloroacetoxy)silane, trichlorosilane, tribromosilane, methyltrifluorosilane, tris(methylethylketoxime)silane, phenyltris(methylethylketoxime)silane, bis(methylethylketoxime)silane, methylbis(methylethylketoxime)silane, hexamethyldisilane, hexamethylcyclotrisilazane, bis(dimethylamino)dimethylsilane, bis(diethylamino)dimethylsilane, bis(dimethylamino)methylsilane, bis(diethylamino)methylsilane, 2-[(triethoxysilyl)propyl]dibenzylresorcinol, 2-[(trimethoxysilyl)propyl]dibenzylresorcinol, 2,2,6,6-tetramethyl-4-[3-(triethoxysilyl)propoxy]piperidine, 2,2,6,6-tetramethyl-4-[3-(trimethoxysilyl)propoxy]piperidine, 2-hydroxy-4-[3-(triethoxysilyl)propoxy]benzophenone and 2-hydroxy-4-[3-(trimethoxysilyl)propoxy]benzophenone.

The hydrolyzable silicon compound (a) preferably includes a compound represented by the following formula (a-2), a hydrolyzed product and a condensate thereof, from the viewpoints of being capable of imparting high hardness to the hard coating film and of more enhancing abrasion resistance.

$$SiX^2_4 \qquad (a-2)$$

In the formula (a-2), $X^2$ represents a hydrolyzable group. The hydrolyzable group is not particularly limited as long as it is a group which generates a hydroxyl group by hydrolysis, and examples thereof include halogen, an alkoxy group, an acyloxy group, an amino group, a phenoxy group and an oxime group.

Specific examples of the compound represented by the formula (a-2) include, but not limited to the following, partially hydrolyzed condensates (for example, trade names "M Silicate 51", "Silicate 35", "Silicate 45", "Silicate 40" and "FR-3" manufactured by Tama Chemicals Co., Ltd.; trade names "MS51", "MS56", "MS57" and "MS56S" manufactured by Mitsubishi Chemical Corporation; and trade names "Methyl Silicate 51", "Methyl Silicate 53A", "Ethyl Silicate 40", "Ethyl Silicate 48", "EMS-485", "N-103X", "PX", "PS-169", "PS-162R", "PC-291", "PC-301", "PC-302R", "PC-309" and "EMSi48" manufactured by Colcoat Co., Ltd.) of tetramethoxysilane, tetraethoxysilane, tetra(n-propoxy)silane, tetra(i-propoxy)silane, tetra(n-butoxy)silane, tetra(i-butoxy)silane, tetra-sec-butoxysilane, tetra-tert-butoxysilane, tetraacetoxysilane, tetra(trichloroacetoxy)silane, tetra(trifluoroacetoxy)silane, tetrachlorosilane, tetrabromosilane, tetrafluorosilane, tetra(methylethylketoxime)silane, tetramethoxysilane or tetraethoxysilane.

As described above, the hydrolyzable silicon compound (a) in the present embodiment preferably includes at least one or more selected from the compound having an atomic group represented by the formula (a-1) and the hydrolyzed product and the condensate thereof, and the compound represented by the formula (a-2) and the hydrolyzed product and the condensate thereof.

[Content of hydrolyzable silicon compound (a) in polymer nanoparticle (A)]

The content of the hydrolyzable silicon compound (a) in the present embodiment represents the weight proportion of the solid content of the hydrolyzable silicon compound (a) included in the polymer nanoparticle (A), and the content is more preferably higher and the content is preferably 50% by mass or more, more preferably 60% by mass or more, because a higher content allows for more enhancements in abrasion resistance, weather resistance and heat resistance. The content of the hydrolyzable silicon compound (a) in the polymer nanoparticle (A) can be measured according to, but not limited to the following, for example, IR analysis, NMR analysis, and/or elemental analysis of the polymer nanoparticle (A).

[Matrix component (B)]

The matrix component (B) in the present embodiment can be used to thereby impart impact absorption to the hard coating film and decrease the amount of change in haze of the hard coating film in the Taber abrasion test. The hardness $HM_B$ of the matrix component (B) can be controlled in the above range by the structure and the compositional ratio of the structural component of a matrix raw material component (B') described below, but the control is not limited thereto.

[Structural component of matrix component (B)]

[Hydrolyzable silicon compound (b)]

The matrix component (B) in the present embodiment is not particularly limited as long as it is any component in which the polymer nanoparticle (A) can be dispersed. The matrix component (B) in the present embodiment preferably includes a hydrolyzable silicon compound (b) from the viewpoint of high toughness. The "matrix component (B) including a hydrolyzable silicon compound (b)" herein means that the matrix component (B) includes a polymer having a structural unit derived from the hydrolyzable silicon compound (b). The hydrolyzable silicon compound (b) is not particularly limited as long as it is any of a silicon compound having hydrolyzability, and a hydrolyzed product and a condensate thereof.

The matrix component (B) may include various components except for the polymer nanoparticle (A), other than the above polymer. Examples of such a component which can be included other than the above polymer include water-soluble resins such as polyvinyl alcohol, polyethylene glycol, polyvinylpyrrolidone and polyacrylic acid; acrylic resins such as PMMA, PAN and polyacrylamide; polymers such as polystyrene, polyurethane, polyamide, polyimide, polyvinylidene chloride, polyester, polycarbonate, polyether, polyethylene, polysulfone, polypropylene, polybutadiene, PTFE, PVDF and EVA; and copolymers thereof.

The hydrolyzable silicon compound (b) preferably includes one or more selected from the group consisting of a compound having an atomic group represented by the following formula (b-1) and a hydrolyzed product and a condensate thereof, and a compound represented by the following formula (b-2) and a hydrolyzed product and a condensate thereof, from the viewpoints of further enhancements in abrasion resistance and weather resistance.

$$-R^2{}_{n2}SiX^3{}_{3-n2} \qquad \text{(b-1)}$$

In the formula (b-1), $R^2$ represents a hydrogen atom, an alkyl group, an alkenyl group or an alkynyl group having 1 to 10 carbon atoms, or an aryl group, $R^2$ optionally has a substituent having halogen, a hydroxy group, a mercapto group, an amino group, a (meth)acryloyl group or an epoxy group, $X^3$ represents a hydrolyzable group, and n2 represents an integer of 0 to 2. The hydrolyzable group is not particularly limited as long as it is a group which generates a hydroxyl group by hydrolysis, and examples of such a group include a halogen atom, an alkoxy group, an acyloxy group, an amino group, a phenoxy group and an oxime group.

$$SiX^4_4 \qquad (b\text{-}2)$$

In the formula (b-2), $X^4$ represents a hydrolyzable group. The hydrolyzable group is not particularly limited as long as it is a group which generates a hydroxyl group by hydrolysis, and examples of such a group include halogen, an alkoxy group, an acyloxy group, an amino group, a phenoxy group and an oxime group.

Specific examples of the compound having an atomic group represented by such general formula (b-1) include, but not limited to the following, trimethoxysilane, triethoxysilane, methyltrimethoxysilane, methyltriethoxysilane, ethyltrimethoxysilane, ethyltriethoxysilane, propyltrimethoxysilane, propyltriethoxysilane, isobutyltriethoxysilane, hexyltrimethoxysilane, hexyltriethoxysilane, octyltrimethoxysilane, octyltriethoxysilane, decyltrimethoxysilane, decyltriethoxysilane, cyclohexyltrimethoxysilane, cyclohexyltriethoxysilane, phenyltrimethoxysilane, phenyltriethoxysilane, dimethoxysilane, diethoxysilane, methyldimethoxysilane, methyldiethoxysilane, dimethyldimethoxysilane, dimethyldiethoxysilane, dimethoxydiphenylsilane, diethoxydiphenylsilane, bis(trimethoxysilyl)methane, bis(triethoxysilyl)methane, bis(triphenoxysilyl)ethane, 1,1-bis(triethoxysilyl)ethane, 1,2-bis(triethoxysilyl)ethane, 1,1-bis(triethoxysilyl)propane, 1,2-bis(triethoxysilyl)propane, 1,3-bis(triethoxysilyl)propane, 1,4-bis(triethoxysilyl)butane, 1,5-bis(triethoxysilyl)pentane, 1,1-bis(trimethoxysilyl)ethane, 1,2-bis(trimethoxysilyl)ethane, 1,1-bis(trimethoxysilyl)propane, 1,2-bis(trimethoxysilyl)propane, 1,3-bis(trimethoxysilyl)propane, 1,4-bis(trimethoxysilyl)butane, 1,5-bis(trimethoxysilyl)pentane, 1,3-bis(triphenoxysilyl)propane, 1,4-bis(trimethoxysilyl)benzene, 1,4-bis(triethoxysilyl)benzene, 1,6-bis(trimethoxysilyl)hexane, 1,6-bis(triethoxysilyl)hexane, 1,7-bis(trimethoxysilyl)heptane, 1,7-bis(triethoxysilyl)heptane, 1,8-bis(trimethoxysilyl)octane, 1,8-bis(triethoxysilyl)octane, 3-chloropropyltrimethoxysilane, 3-chloropropyltriethoxysilane, trifluoropropyltrimethoxysilane, trifluoropropyltriethoxysilane, 3-hydroxypropyltrimethoxysilane, 3-hydroxypropyltriethoxysilane, 3-mercaptopropyltrimethoxysilane, 3-mercaptopropyltriethoxysilane, 3-mercaptopropylmethyldimethoxysilane, 3-mercaptopropylmethyldiethoxysilane, 3-glycidoxypropyltrimethoxysilane, 3-glycidoxypropyltriethoxysilane, 3-glycidoxypropylmethyldimethoxysilane, 3-glycidoxypropylmethyldiethoxysilane, 2-(3,4-epoxycyclohexyl)ethyltrimethoxysilane, 2-(3,4-epoxycyclohexyl)ethyltriethoxysilane, 3-acryloxypropyltrimethoxysilane, 3-acryloxypropyltriethoxysilane, 3-methacryloxypropyltrimethoxysilane, 3-methacryloxypropyltriethoxysilane, 3-methacryloxypropylmethyldimethoxysilane, 3-methacryloxypropylmethyldimethoxysilane, vinyltrimethoxysilane, vinyltriethoxysilane, p-styryltrimethoxysilane, p-styryltriethoxysilane, N-2-(aminoethyl)-3-aminopropylmethyldimethoxysilane, N-2-(aminoethyl)-3-aminopropylmethyldiethoxysilane, N-2-(aminoethyl)-3-aminopropyltrimethoxysilane, N-2-(aminoethyl)-3-aminopropyltriethoxysilane, 3-aminopropyltrimethoxysilane, 3-aminopropyltriethoxysilane, N-phenyl-3-aminopropyltrimethoxysilane, N-phenyl-3-aminopropyltriethoxysilane, 3-trimethoxysilyl-N-(1,3-dimethyl-butylidene)propylamine, 3-triethoxysilyl-N-(1,3-dimethyl-butylidene)propylamine, triacetoxysilane, tris(trichloroacetoxy)silane, tris(trifluoroacetoxy)silane, tris-(trimethoxysilylpropyl)isocyanurate, tris-(triethoxysilylpropyl)isocyanurate, methyltriacetoxysilane, methyltris(trichloroacetoxy)silane, trichlorosilane, tribromosilane, methyltrifluorosilane, tris(methylethylketoxime)silane, phenyltris(methylethylketoxime)silane, bis(methylethylketoxime)silane, methylbis(methylethylketoxime)silane, hexamethyldisilane, hexamethylcyclotrisilazane, bis(dimethylamino)dimethylsilane, bis(diethylamino)dimethylsilane, bis(dimethylamino)methylsilane, bis(diethylamino)methylsilane, 2-[(triethoxysilyl)propyl]dibenzylresorcinol, 2-[(trimethoxysilyl)propyl]dibenzylresorcinol, 2,2,6,6-tetramethyl-4-[3-(triethoxysilyl)propoxy]piperidine, 2,2,6,6-tetramethyl-4-[3-(trimethoxysilyl)propoxy]piperidine, 2-hydroxy-4-[3-(triethoxysilyl)propoxy]benzophenone and 2-hydroxy-4-[3-(trimethoxysilyl)propoxy]benzophenone.

Specific examples of the compound represented by the formula (b-2) include, but not limited to the following, partially hydrolyzed condensates (for example, trade names "M Silicate 51", "Silicate 35", "Silicate 45", "Silicate 40" and "FR-3" manufactured by Tama Chemicals Co., Ltd.; trade names "MS51", "MS56", "MS57" and "MS56S" manufactured by Mitsubishi Chemical Corporation; and trade names "Methyl Silicate 51", "Methyl Silicate 53A", "Ethyl Silicate 40", "Ethyl Silicate 48", "EMS-485", "N-103X", "PX", "PS-169", "PS-162R", "PC-291", "PC-301", "PC-302R", "PC-309" and "EMSi48" manufactured by Colcoat Co., Ltd.) of tetramethoxysilane, tetraethoxysilane, tetra(n-propoxy)silane, tetra(i-propoxy)silane, tetra(n-butoxy)silane, tetra(i-butoxy)silane, tetra-sec-butoxysilane, tetra-tert-butoxysilane, tetraacetoxysilane, tetra(trichloroacetoxy)silane, tetra(trifluoroacetoxy)silane, tetrachlorosilane, tetrabromosilane, tetrafluorosilane, tetra(methylethylketoxime)silane, tetramethoxysilane or tetraethoxysilane.

As described above, the hydrolyzable silicon compound (b) in the present embodiment preferably includes at least one or more selected from the compound having an atomic group represented by the formula (b-1) and the hydrolyzed product and the condensate thereof, and the compound represented by the formula (b-2) and the hydrolyzed product and the condensate thereof.

The "hydrolyzable silicon compound (a) included in the polymer nanoparticle (A)" in the present embodiment may be the same as or different from the "hydrolyzable silicon compound (b) included in the matrix component (B)". Even if both compounds are the same, such compounds are distinguished from each other by defining the compound included in the polymer nanoparticle (A) as the hydrolyzable silicon compound (a) and defining the compound included in the matrix component (B) as the hydrolyzable silicon compound (b).

[Inorganic oxide (D)]

The matrix component (B) in the present embodiment includes an inorganic oxide (D). The inorganic oxide (D) is included to result in not only a tendency to enhance hardness of the matrix component (B) and enhance abrasion resistance, but also a tendency to enhance contamination resistance of the coating film due to hydrophilicity of a hydroxyl group on a particle surface. The inorganic oxide (D) contains at least one inorganic component (hereinafter, also simply referred to as "inorganic component".) selected from the group consisting of Ce, Nb, Al, Zn, Ti, Zr, Sb, Mg, Sn, Bi, Co and Cu. The inorganic oxide (D) contains the inorganic component, and thus weather resistance can be enhanced without any loss of abrasion resistance and durability. When a commercially available product is utilized, examples thereof include, but not limited to the following, ultrafine particle material products of cerium oxide, zinc oxide, aluminum oxide, bismuth oxide, cobalt oxide, copper oxide, tin oxide, and titanium oxide, manufactured by CIK-Nano Tek.; and titanium oxide "Tainoc" (trade name), cerium oxide "Needral" (trade name), tin oxide "Ceramace" (trade name), niobium oxide sol and zirconium oxide sol, manufactured by Taki Chemical Co., Ltd. The inorganic oxide (D) preferably contains at least one inorganic component selected from the group consisting of Ce, Nb, Zn, Ti and Zr, more preferably contains Ce, from the viewpoint of enhancement performance of weather resistance.

The inorganic component in the inorganic oxide (D) in the present embodiment preferably contains an inorganic oxide (D') of at least one selected from the group consisting of Ce, Nb, Zn, Ti and Zr from the viewpoint of the balance among abrasion resistance, durability and weather resistance, and the content of the inorganic oxide (D') in the hard coating film is not particularly limited, and is preferably 1% by mass or more, more preferably 2% by mass or more from the viewpoint of the balance among abrasion resistance, durability and weather resistance. The content is preferably 50% by mass or less, more preferably 30% by mass or less from the viewpoint of transparency. The content can be here specified as the total amount of Ce, Nb, Zn, Ti and Zr under the assumption that the amount of the hard coating film is 100% by mass.

Specific examples of the inorganic oxide (D) in the present embodiment include, but not limited to the following, not only respective oxides of aluminum, titanium, zirconium, zinc, cerium, tin, antimony, niobium, magnesium, bismuth, cobalt, and copper, described above as inorganic components, but also respective oxides of silicon, indium, gallium, germanium, and molybdenum. Such an oxide is not limited in terms of the shape thereof, and may be used singly or as a mixture. The inorganic oxide (D) is not particularly limited as long as it contains an inorganic component, and preferably further includes a particle of silica typified by dry silica or colloidal silica from the viewpoint of interaction with the above hydrolyzable silicon compound (b), and preferably further includes colloidal silica in the form of a silica particle from the viewpoint of dispersibility. When the inorganic oxide (D) includes colloidal silica, such silica is preferably in the form of an aqueous dispersion liquid, and can be used even if is either acidic or basic.

[Average particle size of inorganic oxide (D)]

The average particle size of the inorganic oxide (D) in the present embodiment is preferably 2 nm or more from the viewpoint of an improvement in storage stability of a composition for the hard coating film, and is preferably 150 nm or less from the viewpoint of an improvement in transparency. That is, the average particle size of the inorganic oxide (D) is preferably 2 nm or more and 150 nm or less, more preferably 2 nm or more and 100 nm or less, further preferably 2 nm or more and 50 nm or less. The method for measuring the average particle size of the inorganic oxide (D) can be made by, but not limited to the following, for example, observing colloidal silica dispersed in water at a magnification of 50,000 to 100,000x with a transmission micrograph, taking an image so that 100 to 200 inorganic oxides as particles are taken, and measuring a longer diameter and a shorter diameter of each of such inorganic oxide particles to thereby determine the average value.

When the inorganic oxide (D) includes a plurality of inorganic oxides, the average value of the respective average particle sizes of such inorganic oxides is adopted as the average particle size of the inorganic oxide (D) in the hard coating film or the coating material composition.

[Colloidal silica which can be included in inorganic oxide (D)]

The acidic colloidal silica suitably used in the present embodiment, for which water is used as a dispersing solvent, is not particularly limited, and any one prepared according to a sol-gel method can also be used and a commercially available product can also be utilized. Such preparation according to a sol-gel method can be made with reference to Werner Stober et al; J. Colloid and Interface Sci., 26, 62-69 (1968), Rickey D. Badley et al; Lang muir 6, 792-801 (1990), Journal of the Japan Society of Colour Material, 61 [9] 488-493 (1988), and the like. Examples of such a commercially available product utilized include Snowtex-O, Snowtex-OS, Snowtex-OXS, Snowtex-O-40, Snowtex-OL, Snowtex-OYL, Snowtex-OUP, Snowtex-PS-SO, Snowtex-PS-MO, Snowtex-AK-XS, Snowtex-AK, Snowtex-AK-L, Snowtex-AK-YL and Snowtex-AK-PS-S (trade names, manufactured by Nissan Chemical Corporation), Adelite AT-20Q (trade name, manufactured by Adeka Corporation), and Klebosol 20H12 and Klebosol 30CAL25 (trade names, manufactured by Clariant Japan K.K.).

The basic colloidal silica is silica stabilized by addition of an alkali metal ion, an ammonium ion or an amine and is not particularly limited, and examples thereof include Snowtex-20, Snowtex-30, Snowtex-XS, Snowtex-50, Snowtex-30L, Snowtex-XL, Snowtex-YL, Snowtex ZL, Snowtex-UP, Snowtex-ST-PS-S, Snowtex ST-PS-M, Snowtex-C, Snowtex-CXS, Snowtex-CM, Snowtex-N, Snowtex-NXS, Snowtex-NS and Snowtex-N-40 (trade names, manufactured by Nissan Chemical Corporation), Adelite AT-20, Adelite AT-30, Adelite AT-20N, Adelite AT-30N, Adelite AT-20A, Adelite AT-30A, Adelite AT-40 and Adelite AT-50 (trade names, manufactured by Adeka Corporation), Klebosol 30R9, Klebosol 30R50 and Klebosol 50R50 (trade names, manufactured by Clariant Japan K.K.), and Ludox HS-40, Ludox HS-30, Ludox LS, Ludox AS-30, Ludox SM-AS, Ludox AM, Ludox HAS and Ludox SM (trade names, manufactured by DuPont).

The colloidal silica for which a water-soluble solvent is used as a dispersing medium is not particularly limited, and examples thereof include MA-ST-M (methanol dispersion type having a particle size of 20 to 25 nm), IPA-ST (isopropyl alcohol dispersion type having a particle size of 10 to 15 nm), EG-ST (ethylene glycol dispersion type having a particle size of 10 to 15 nm), EGST-ZL (ethylene glycol dispersion type having a particle size of 70 to 100 nm), NPC-ST (ethylene glycol monopropyl ether dispersion type having a particle size of 10 to 15 nm) and TOL-ST (toluene dispersion type having a particle size of 10 to 15 nm), manufactured by Nissan Chemical Corporation.

The dry silica particle is not particularly limited, and examples thereof include AEROSIL manufactured by Nippon Aerosil Co., Ltd., and Reolosil manufactured by Tokuyama Corporation.

Such a silica particle may include an inorganic base (for example, sodium hydroxide, potassium hydroxide, lithium hydroxide, and/or ammonia) and/or an organic base (for example, tetramethylammonium and/or triethylamine) as stabilizer(s).

[Shape of inorganic oxide (D)]

Examples of the shape of the inorganic oxide (D) in the present embodiment include, but not limited to the following, spherical, horned, polyhedron, elliptical, flattened, linear, beaded and pearl-like shapes, and a spherical shape is particularly preferable from the viewpoints of hardness and transparency of the hard coating film.

[Functional group (e)]

The polymer nanoparticle (A) in the present embodiment preferably has a functional group (e) which interacts with the matrix component (B), from the viewpoint that dispersibility of the polymer nanoparticle (A) in the matrix component (B) can be enhanced to result in an enhancement in abrasion resistance. Whether or not the polymer nanoparticle (A) has such a functional group (e) can be confirmed by, for example, compositional analysis with IR, GC-MS, pyrolysis GC-MS, LC-MS, GPC, MALDI-MS, TOF-SIMS, TG-DTA and/or NMR, or analysis with a combination thereof.

Specific examples of the functional group (e) in the present embodiment include, but not limited to the following, functional groups such as a hydroxyl group, a carboxyl group, an amino group, an amide group and a functional group having an ether bond, a functional group having a hydrogen bond is preferable from the viewpoint of interaction, and an amide group is more preferable and a secondary amide group and/or a tertiary amide group are/is further preferable from the viewpoint of high hydrogen bondability.

Examples of the compound having the functional group (e) and a reaction product thereof include 2-hydroxyethyl (meth)acrylate, 2-hydroxypropyl (meth)acrylate, 4-hydroxybutyl (meth)acrylate, 2-hydroxyethyl vinyl ether or 4-hydroxybutyl vinyl ether, 2-hydroxyethyl allyl ether, (meth)acrylic acid, 2-carboxyethyl (meth)acrylate, 2-dimethylaminoethyl (meth)acrylate, 2-diethylaminoethyl (meth)acrylate, 2-di-n-propylaminoethyl (meth)acrylate, 3-dimethylaminopropyl (meth)acrylate, 4-dimethylaminobutyl (meth)acrylate, N-[2-(meth)acryloyloxy]ethylmorpholine, vinylpyridine, N-vinylcarbazole, N-vinylquinoline, N-methylacrylamide, N-methylmethacrylamide, N-ethylacrylamide, N,N-dimethylacrylamide, N,N-dimethylmethacrylamide, N,N-diethylacrylamide, N-ethylmethacrylamide, N-methyl-N-ethylacrylamide, N-methyl-N-ethylmethacrylamide, N-isopropylacrylamide, N-n-propylacrylamide, N-isopropylmethacrylamide, N-n-propylmethacrylamide, N-methyl-N-n-propylacrylamide, N-methyl-N-isopropylacrylamide, N-acryloylpyrrolidine, N-methacryloylpyrrolidine, N-acryloylpiperidine, N-methacryloylpiperidine, N-acryloylhexahydroazepine, N-acryloylmorpholine, N-methacryloylmorpholine, N-vinylpyrrolidone, N-vinylcaprolactam, N,N'-methylenebisacrylamide, N,N'-methylenebismethacrylamide, N-vinylacetamide, diacetone acrylamide, diacetone methacrylamide, N-methylolacrylamide, N-methylolmethacrylamide, Blemmers PE-90, PE-200, PE-350, PME-100, PME-200, PME-400 and AE-350 (trade names, manufactured by NOF Corporation), and MA-30, MA-50, MA-100, MA-150, RA-1120, RA-2614, RMA-564, RMA-568, RMA-1114 and MPG130-MA (trade names, manufactured by Nippon Nyukazai Co., Ltd.). Herein, the "(meth)acrylate" simply represents acrylate or methacrylate, and the "(meth)acrylic acid" simply represents acrylic acid or methacrylic acid.

[Core/shell structure of polymer nanoparticle (A)]

The polymer nanoparticle (A) in the present embodiment preferably has a core/shell structure including a core layer and one or more shell layers covering the core layer. The polymer nanoparticle (A) preferably has the functional group (e) from the viewpoint of interaction with the matrix component (B) on the outermost layer of the core/shell structure.

[Other compound optionally included in polymer nanoparticle (A)]

The polymer nanoparticle (A) in the present embodiment optionally includes any polymer shown below from the viewpoint of an enhancement in stability of the particle due to electrostatic repulsion force of the particles. Examples include a polyurethane-based, polyester-based, poly(meth)acrylate-based, poly(meth)acrylic acid, polyvinyl acetate-based, polybutadiene-based, polyvinyl chloride-based, chlorinated polypropylene-based, polyethylene-based or polystyrene-based polymer, or a poly(meth)acrylate-silicone-based, polystyrene-(meth)acrylate-based or styrene-maleic anhydride-based copolymer.

Examples of a compound particularly excellent in electrostatic repulsion, among the above polymers each optionally included in the polymer nanoparticle (A), include a (meth)acrylic acid or (meth)acrylate polymer or copolymer. Specific examples include, but not limited to the following, methyl acrylate, (meth)acrylic acid, methyl methacrylate, butyl methacrylate, cyclohexyl methacrylate, 2-ethylhexyl acrylate, n-butyl acrylate, 2-hydroxyethyl (meth)acrylate, 2-hydroxypropyl (meth)acrylate, 3-hydroxybutyl (meth)acrylate, 4-hydroxybutyl (meth)acrylate, 3-hydroxybutyl (meth)acrylate or 4-hydroxybutyl (meth)acrylate polymer or copolymer. Such (meth)acrylic acids may be each partially or fully neutralized with ammonia, an amine such as triethylamine or dimethylethanolamine, or a base such as NaOH or KOH, for a further enhancement in electrostatic repulsion force.

The polymer nanoparticle (A) optionally includes an emulsifier. The emulsifier is not particularly limited, and examples thereof include acidic emulsifiers such as alkylbenzene sulfonic acid, alkylsulfonic acid, alkylsulfosuccinic acid, polyoxyethylene alkyl sulfuric acid, polyoxyethylene alkyl aryl sulfuric acid and polyoxyethylene distyryl phenyl ether sulfonic acid; anionic surfactants such as alkali metal (Li, Na, K, and the like) salts of such acidic emulsifiers, ammonium salts of such acidic emulsifier, and fatty acid soap of such anionic surfactant; quaternary ammonium salt, pyridinium salt, and imidazolinium salt type cationic surfactants such as alkyltrimethylammonium bromide, alkylpyridinium bromide and imidazolinium laurate; and nonionic surfactants and reactive emulsifiers having a radical polymerizable double bond, such as polyoxyethylene alkyl aryl ether, polyoxyethylene sorbitan fatty acid ester, a polyoxyethylene oxypropylene block copolymer and polyoxyethylene distyryl phenyl ether.

Examples of the reactive emulsifier having a radical polymerizable double bond include, but not limited to the following, Eleminol JS-2 (trade name, manufactured by Sanyo Chemical Industries, Ltd.), Latemul S-120, S-180A or S-180 (trade name, manufactured by Kao Corporation), Aqualon HS-10, KH-1025, RN-10, RN-20, RN30 or RN50 (trade name, manufactured by DKS Co., Ltd.), Adekariasoap SE1025, SR-1025, NE-20, NE-30 or NE-40 (trade name, manufactured by Adeka Corporation), an ammonium salt of p-styrene sulfonic acid, a sodium salt of p-styrene sulfonic acid, a potassium salt of p-styrene sulfonic acid, alkyl sulfonic acid (meth)acrylate such as 2-sulfoethyl acrylate, methylpropane sulfonic acid (meth)acrylamide, an ammonium salt of allyl sulfonic acid, a sodium salt of allyl sulfonic acid, or a potassium salt of allyl sulfonic acid.

[Other component optionally included in coating film (C)]

The coating film (C) of the present embodiment optionally includes a solvent, an emulsifier, a plasticizer, a pigment, a dye, a filler, an anti-aging agent, a conductive material, an organic ultraviolet absorber, a light stabilizer, a peel strength adjusting agent, a softener, a surfactant, a flame retardant, an antioxidant, and/or catalyst, as the matrix component (B), depending on the application. The coating film preferably includes organic ultraviolet absorber and light stabilizer because high weather resistance is required particularly in an outdoor application.

Specific examples of the organic ultraviolet absorber and the light stabilizer include, but not limited to the following, benzophenone-based ultraviolet absorbers such as 2,4-dihydroxybenzophenone, 2-hydroxy-4-methoxybenzophenone, 2-hydroxy-4-methoxybenzophenone-5-sulfonic acid, 2-hydroxy-4-n-octoxybenzophenone, 2-hydroxy-4-n-dodecyloxybenzophenone, 2-hydroxy-4-benzyloxybenzophenone, bis(5-benzoyl-4-hydroxy-2-methoxyphenyl)methane, 2,2'-dihydroxy-4-methoxybenzophenone, 2,2'-dihydroxy-4,4'dimethoxybenzophenone (trade name "UVINUL3049" manufactured by BASF SE), 2,2',4,4'-tetrahydroxybenzophenone (trade name "UVINUL3050" manufactured by BASF SE), 4-dodecyloxy-2-hydroxybenzophenone, 5-benzoyl-2,4-dihydroxybenzophenone, 2-hydroxy-4-methoxy-2'-carboxybenzophenone, 2-hydroxy-4-stearyloxybenzophenone and 4,6-dibenzoylresorcinol; benzotriazole-based ultraviolet absorbers such as 2-(2'-hydroxy-5'-methylphenyl)benzotriazole, 2-(2'-hydroxy-5'-tert-butylphenyl)benzotriazole, 2-(2'-hydroxy-3',5'-di-tert-butylphenyl)benzotriazole, 2-(2-hydroxy-5-tert-octylphenyl)benzotriazole, 2-(2-hydroxy-3,5-di-tert-octylphenyl)benzotriazole, 2-[2'-hydroxy-3',5'-bis($\alpha,\alpha$'-dimethylbenzyl)phenyl]benzotriazole), a condensate (trade name "TINUVIN1130" manufactured by BASF SE) of methyl-3-[3-tert-butyl-5-(2H-benzotriazole-2-yl)-4-hydroxyphenyl]propionate and polyethylene glycol (molecular weight: 300), isooctyl-3-[3-(2H-benzotriazole-2-yl)-5-tert-butyl-4-hydroxyphenyl]propionate (trade name "TINUVIN384" manufactured by BASF SE), 2-(3-dodecyl-5-methyl-2-hydroxyphenyl)benzotriazole (trade name "TINUVIN571" manufactured by BASF SE), 2-(2'-hydroxy-3'-tert-butyl-5'-methylphenyl)-5-chlorobenzotriazole, 2-(2'-hydroxy-3',5'-di-tert-amylphenyl)benzotriazole, 2-(2'-hydroxy-4'-octoxyphenyl)benzotriazole, 2-[2'-hydroxy-3'-(3'',4'',5'',6''-tetrahydrophthalimidemethyl)-5'-methylphenyl]benzotriazole, 2,2-methylenebis[4-(1,1,3,3-tetramethylbutyl)-6-(2H-benzotriazole-2-yl)phenol], 2-(2H-benzotriazole-2-yl)-4,6-bis(1-methyl-1-phenylethyl)phenol (trade name "TINUVIN900" manufactured by BASF SE), and TINUVIN384-2, TINUVIN326, TINUVIN327, TINUVIN109, TINUVIN970, TINUVIN328, TINUVIN171, TINUVIN970, TINUVIN PS, TINUVIN P, TINUVIN99-2 and TINVIN928 (trade names, manufactured by BASF SE); triazine-based ultraviolet absorbers such as 2-[4-[(2-hydroxy-3-dodecyloxypropyl)oxy]-2-hydroxyphenyl]-4,6-bis(2,4-dimethylphenyl)-1,3,5-triazine, 2-[4-[(2-hydroxy-3-tridecyloxypropyl)oxy]-2-hydroxyphenyl]-4,6-bis(2,4-dimethylphenyl)-1,3,5-triazine, 2,4-bis(2-hydroxy-4-butyloxyphenyl)-6-(2,4-bisbutyloxyphenyl)-1,3,5-triazine (trade name "TINUVIN460" manufactured by BASF SE), 2-(2-hydroxy-4-[1-octyloxycarbonylethoxy]phenyl)-4,6-bis(4-phenylphenyl)-1,3,5-triazine (trade name "TINUVIN479" manufactured by BASF SE), and TINUVIN400, TINUVIN405, TINUVIN477 and TINUVIN1600 (trade name, manufactured by BASF SE); malonic acid ester-based ultraviolet absorbers such as HOSTAVIN PR25, HOSTAVIN B-CAP and HOSTAVIN VSU (trade names, manufactured by Clariant Japan K.K.); anilide-based ultraviolet absorbers such as HOSTAVIN 3206 LIQ, HOSTAVIN VSU P and HOSTAVIN 3212 LIQ (trade names, manufactured by Clariant Japan K.K.); salicylate-based ultraviolet absorbers such as amyl salicylate, menthyl salicylate, homomenthyl salicylate, octyl salicylate, phenyl salicylate, benzyl salicylate and p-isopropanolphenyl salicylate; cyanoacrylate-based ultraviolet absorbers such as ethyl-2-cyano-3,3-diphenyl acrylate (trade name "UVINUL3035" manufactured by BASF SE), (2-ethylhexyl)-2-cyano-3,3-diphenyl acrylate (trade name "UVINUL3039" manufactured by BASF SE) and 1,3-bis((2'-cyano-3',3'-diphenylacryloyl)oxy)-2,2-bis-(((2'-cyano-3',3'-diphenylacryloyl)oxy)methyl)propane (trade name "UVINUL3030" manufactured by BASF SE); radical polymerizable ultraviolet absorbers each having a radical polymerizable double bond in its molecule, such as 2-hydroxy-4-acryloxybenzophenone, 2-hydroxy-4-methacryloxybenzophenone, 2-hydroxy-5-acryloxybenzophenone, 2-hydroxy-5-methacryloxybenzophenone, 2-hydroxy-4-(acryloxyethoxy)benzophenone, 2-hydroxy-4-(methacryloxyethoxy)benzophenone, 2-hydroxy-4-(methacryloxydiethoxy)benzophenone, 2-hydroxy-4-(acryloxytriethoxy)benzophenone, 2-(2'-hydroxy-5'-methacryloxyethylphenyl)-2H-benzotriazole (trade name "RUVA-93" manufactured by Otsuka Chemical Co., Ltd.), 2-(2'-hydroxy-5'-methacryloxyethyl-3-tert-butylphenyl)-2H-benzotriazole, 2-(2'-hydroxy-5'-methacryloxypropyl-3-tert-butylphenyl)-5-chloro-2H-benzotriazole and 3-methacryloyl-2-hydroxypropyl-3-[3'-(2''-benzotriazolyl)-4-hydroxy-5-tert-butyl]phenyl propionate (trade name "CGL-104" manufactured by Ciba-Geigy Japan Ltd.); polymers each having ultraviolet absorptivity, such as UV-G101, UV-G301, UV-G137, UV-G12 and UV-G13(trade names, manufactured by Nippon Shokubai Co., Ltd.); hindered amine-based light stabilizers such as bis(2,2,6,6-tetramethyl-4-piperidyl)succinate, bis(2,2,6,6-tetramethylpiperidyl)sebacate, bis(1,2,2,6,6-pentamethyl-4-piperidyl)2-(3,5-di-tert-butyl-4-hydroxybenzyl)-2-butylmalonate, 1-[2-[3-(3,5-di-tert-butyl-4-hydroxyphenyl)propynyloxy]ethyl]-4-[3-(3,5-di-tert-butyl-4-hydroxyphenyl)propynyloxy]-2,2,6,6-tetramethylpiperidine, a mixture (trade name "TINUVIN292" manufactured by BASF SE) of bis(1,2,2,6,6-pentamethyl-4-piperidyl)sebacate and methyl-1,2,2,6,6-pentamethyl-4-piperidyl-sebacate, bis(1-octoxy-2,2,6,6-tetramethyl-4-piperidyl)sebacate, and TINUVIN123, TINUVIN144, TINUVIN152, TINUVIN249, TINUVIN292 and TINUVIN5100 (trade names, manufactured by BASF SE); radical polymerizable hindered amine-based light stabilizers such as 1,2,2,6,6-pentamethyl-4-piperidyl methacrylate, 1,2,2,6,6-pentamethyl-4-piperidyl acrylate, 2,2,6,6-tetramethyl-4-piperidyl methacrylate, 2,2,6,6-tetramethyl-4-piperidyl acrylate, 1,2,2,6,6-pentamethyl-4-iminopiperidyl methacrylate, 2,2,6,6,-tetramethyl-4-iminopiperidyl methacrylate, 4-cyano-2,2,6,6-tetramethyl-4-piperidyl methacrylate and 4-cyano-1,2,2,6,6-pentamethyl-4-piperidyl methacrylate; polymers each having photostability, such as U-Double E-133, U-Double E-135, U-Double S-2000, U-Double S-2834, U-Double S-2840, U-Double S-2818 and U-Double S-2860 (trade names, manufactured by Nippon Shokubai Co., Ltd.); and ultraviolet absorbers each having reactivity with a silanol group, an isocyanate group, an epoxy group, a semicarbazide group or a hydrazide group, and these may be used singly or in combinations of two or more thereof.

[Transparency of hard coating film]

The hard coating film of the present embodiment, when applied as a transparent material, preferably has a transparency so as not to have any adverse effect on the outer appearance of the material and the visibility through the material. The transparency of the hard coating film can be evaluated in terms of the total light transmittance retention rate obtained by the following expression, from the viewpoint of the change in outer appearance. In the present embodiment, the total light transmittance retention rate of the hard coating film is preferably 90% or more, more preferably 95% or more from the viewpoint of securement of lighting, extremely preferably 98% or more from the viewpoint of securement of the visibility through the material. The total light transmittance retention rate of the hard coating film can be adjusted in the above range by, for example, adopting any preferable respective aspects described above with respect to the polymer nanoparticle (A) and the matrix component (B).

$$\text{Total light transmittance retention rate (\%) of hard coating film} = (\text{Total light transmittance (\%) of hard coating film-applied substrate/Total light transmittance (\%) of substrate}) \times 100$$

[Contamination resistance of hard coating film]

The hard coating film of the present embodiment, when applied as a transparent material, is required not to have any adverse effect on the visibility in use for a long period. That is, the hard coating film preferably has favorable contamination resistance in the above application. The contamination resistance here represents the degree of attachment of soot and dust in use for a long period, and can be evaluated by, for example, attaching a JIS test powder 1 (12 kinds, carbon black) to a coating film subjected to an abrasion test and determining the total light transmittance retention rate after the test, obtained by the following expression.

$$\text{Total light transmittance retention rate (\%) after black carbon test} = (\text{Total light transmittance after test/Total light transmittance before test}) \times 100$$

As the total light transmittance retention rate after such a black carbon test is higher, black carbon tends to be less attached in use for a long period, resulting in excellent contamination resistance.

[Moisture resistance of hard coating film]

The hard coating film of the present embodiment is required to keep performance under a usage environment in an application where the hard coating film is used for a long period. For example, the hard coating film is expected to be used at a high temperature and a high humidity in an application of a window material for automobiles, and thus is preferably not changed in outer appearance and adhesiveness after exposure at 50°C and 95% RH according to JIS-R3211 and R3222 for 2 weeks.

<Hard coating film-applied substrate>

A hard coating film-applied substrate according to the present embodiment includes a substrate, and the hard coating film of the present embodiment, formed on one surface and/or both surfaces of the substrate. The hard coating film-applied substrate includes such a film on at least one surface and/or both surfaces of the substrate.

The hard coating film-applied substrate of the present embodiment is configured as described above, and thus has high abrasion resistance, durability and weather resistance. The hard coating film-applied substrate of the present embodiment exhibits abrasion resistance, durability and weather resistance at high levels, and thus is useful as, but not limited to the following, for example, a hard coating for, for example, a building material, an automobile member, electronic equipment, and an electronic product, and extremely preferably used for an automobile member.

[Substrate]

The substrate to be coated with the hard coating film of the present embodiment is not particularly limited, and examples thereof include a resin, a metal, and glass. Examples of the shape of the substrate include, but not limited to the following, a plate-like shape, a shape including irregularities, a shape having a curved surface, a hollow shape, a porous shape, and any combination thereof. The type of the substrate is not limited, and examples thereof include a sheet, a film, and a fiber. In particular, a resin is preferable from the viewpoints of impartment of hard coatability, and moldability. That is, a structure having a substrate including a resin, and the hard coating film of the present embodiment has excellent abrasion resistance, moldability and contamination resistance. Examples of the resin for use in the substrate include, but not limited to the following, a thermoplastic resin and a thermosetting resin. Examples of the thermoplastic resin for use in the substrate include, but not limited to the following, polyethylene, polypropylene, polystyrene, an ABS resin, a vinyl chloride resin, a methyl methacrylate resin, nylon, a fluororesin, polycarbonate, and a polyester resin. Examples of the thermosetting resin for use in the substrate include, but not limited to the following, a phenol resin, a urea resin, a melamine resin, an unsaturated polyester resin, an epoxy resin, a silicon resin, silicone rubber, SB rubber, natural rubber, and a thermosetting elastomer.

[Adhesion layer]

The hard coating film-applied substrate according to the present embodiment may further have an adhesion layer between the substrate and the hard coating film. The adhesion layer here used can be any adhesion layer commonly used and is not particularly limited, and examples thereof include a thermoplastic resin, a thermosetting resin, and a rubber-elastomer, and in particular, an acrylic resin, an acrylic urethane-based resin, a urethane-based resin, and a silicone-based resin are preferable. The adhesion layer optionally includes, if necessary, any appropriate additive. Examples of the additive include, but not limited to the following, a crosslinking agent, a tackifier, a plasticizer, a pigment, a dye, a filler, an anti-aging agent, a conductive material, an ultraviolet absorber, an inorganic oxide, a light stabilizer, a peel strength adjusting agent, a softener, a surfactant, a flame retardant, and an antioxidant. Examples of the crosslinking agent include, but not limited to the following, an isocyanate-based crosslinking agent, an epoxy-based crosslinking agent, a carbodiimide-based crosslinking agent, an oxazoline-based crosslinking agent, an aziridine-based crosslinking agent, an amine-based crosslinking agent, a peroxide-based crosslinking agent, a melamine-based crosslinking agent, a urea-based crosslinking agent, a metal alkoxide-based crosslinking agent, a metal chelate-based crosslinking agent, and a metal salt-based crosslinking agent.

[Adhesive emulsion particle (F)]

The adhesion layer in the present embodiment preferably includes an adhesive emulsion particle (F). The adhesive emulsion particle (F) serves to impart flexibility and enhance adhesiveness to the substrate. The adhesive emulsion particle (F) is not particularly limited, and is a particle formed from one or more of polyurethane-based, polyester-based, poly(meth)acrylate-based, polyvinyl acetate-based, polybutadiene-based, polyvinyl chloride-based, chlorinated polypropylene-based, polyethylene-based, polystyrene-based, and polystyrene-(meth)acrylate-based copolymers, a rosin-based derivative, an alcohol adduct of a styrene-maleic anhydride copolymer, a polycarbonyl compound such as a cellulose-based resin, and a silicone compound. In the present embodiment, the adhesive emulsion particle (F) is preferably a poly(meth)acrylate-based particle.

The method for preparing the adhesive emulsion particle (F) in the present embodiment is not particularly limited, and such a particle preferably has a structure obtained by polymerization of a vinyl monomer in the presence of water and an emulsifier. The adhesive emulsion particle (F) thus obtained, when included in the adhesion layer, tends to better maintain adhesiveness to the substrate.

The vinyl monomer is not particularly limited, and examples thereof can include not only a (meth)acrylic acid ester, an aromatic vinyl compound, and a vinyl cyanide compound, but also functional group-containing monomers such as a carboxyl group-containing vinyl monomer, a hydroxyl group-containing vinyl monomer, an epoxy group-containing vinyl monomer, a carbonyl group-containing vinyl monomer, and a vinyl monomer having secondary and/or tertiary amide group(s).

The (meth)acrylic acid ester is not particularly limited, and examples thereof include a (meth)acrylic acid alkyl ester having an alkyl moiety having 1 to 50 carbon atoms, and a (poly)oxyethylene di(meth)acrylate having 1 to 100 ethylene oxide groups.

The (meth)acrylic acid alkyl ester is not particularly limited, and examples thereof include methyl (meth)acrylate, ethyl (meth)acrylate, n-butyl (meth)acrylate, 2-ethylhexyl (meth)acrylate, methylcyclohexyl (meth)acrylate, cyclohexyl (meth)acrylate, lauryl (meth)acrylate, and dodecyl (meth)acrylate.

The (poly)oxyethylene di(meth)acrylate is not particularly limited, and examples thereof include ethylene glycol di(meth)acrylate, diethylene glycol di(meth)acrylate, diethylene glycol methoxy(meth)acrylate, and tetraethylene glycol di(meth)acrylate.

The aromatic vinyl compound is not particularly limited, and examples thereof include styrene and 4-vinyltoluene.

The vinyl cyanide compound is not particularly limited, and examples thereof include acrylonitrile and methacrylonitrile.

The carboxyl group-containing vinyl monomer is not particularly limited, and examples thereof include (meth)acrylic acid, crotonic acid, itaconic acid, maleic acid, fumaric acid, maleic anhydride, or a half ester of a dibasic acid such as itaconic acid, maleic acid, or fumaric acid. In the case of use of a carboxyl acid group-containing vinyl monomer, a carboxyl group can be introduced into the adhesive emulsion particle (F) in the present embodiment, and electrostatic repulsion force between such particles tends to enhance stability of an emulsion, for example, enhance a resistive force to dispersion destruction action from the outside, for example, aggregation in stirring. The carboxyl group introduced can also be partially or fully neutralized with ammonia, an amine compound such as triethylamine or dimethylethanolamine, or a base such as NaOH or KOH from the viewpoint of a further enhancement in electrostatic repulsion force.

The hydroxyl group-containing vinyl monomer is not particularly limited, and examples thereof include (meth)acrylic acid hydroxyalkyl esters such as 2-hydroxyethyl (meth)acrylate, 2-hydroxypropyl (meth)acrylate, 3-hydroxypropyl (meth)acrylate, 2-hydroxybutyl (meth)acrylate, 3-hydroxybutyl (meth)acrylate and 4-hydroxybutyl (meth)acrylate; hydroxyalkyl esters of fumaric acid, such as di-2-hydroxyethyl fumarate and mono-2-hydroxyethyl monobutyl fumarate; allyl alcohol and (poly)oxyethylene mono(meth)acrylate having 1 to 100 ethylene oxide groups; (poly)oxypropylene mono(meth)acrylate having 1 to 100 propylene oxide groups; and "Placcel FM, FA monomer" (trade name of a caprolactone-added monomer manufactured by Daicel Corporation) and other $\alpha,\beta$-ethylenically unsaturated carboxylic acid hydroxyalkyl esters.

The (poly)oxyethylene (meth)acrylate is not particularly limited, and examples thereof include ethylene glycol (meth)acrylate, ethylene glycol methoxy(meth)acrylate, diethylene glycol (meth)acrylate, diethylene glycol methoxy(meth)acrylate, tetraethylene glycol (meth)acrylate, and tetraethylene glycol methoxy(meth)acrylate.

The (poly)oxypropylene (meth)acrylate is not particularly limited, and examples thereof include propylene glycol (meth)acrylate, propylene glycol methoxy(meth)acrylate, dipropylene glycol (meth)acrylate, dipropylene glycol methoxy(meth)acrylate, tetrapropylene glycol (meth)acrylate, and tetrapropylene glycol methoxy(meth)acrylate.

The epoxy group-containing vinyl monomer is not particularly limited, and examples thereof include a glycidyl group-containing vinyl monomer. The glycidyl group-containing vinyl monomer is not particularly limited, and examples thereof include glycidyl (meth)acrylate, allyl glycidyl ether, and allyl dimethyl glycidyl ether.

The carbonyl group-containing vinyl monomer is not particularly limited, and examples thereof include diacetone acrylamide.

Specific examples of any vinyl monomer other than the above are not particularly limited, and examples include not only olefins such as ethylene, propylene and isobutylene, dienes such as butadiene, haloolefins such as vinyl chloride, vinylidene chloride, vinyl fluoride, tetrafluoroethylene and chlorotrifluoroethylene, carboxylic acid vinyl esters such as vinyl acetate, vinyl propionate, vinyl n-butyrate, vinyl benzoate, vinyl p-t-butylbenzoate, vinyl pivalate, vinyl 2-ethylhexanoate, vinyl versatate and vinyl laurate, carboxylic acid isopropenyl esters such as isopropenyl acetate and isopropenyl propionate, vinyl ethers such as ethyl vinyl ether, isobutyl vinyl ether and cyclohexyl vinyl ether, allyl esters such as allyl acetate and allyl benzoate, and allyl ethers such as allyl ethyl ether and allyl phenyl ether, but also 4-(meth)acryloyloxy-2,2,6,6,-tetramethylpiperidine, 4-(meth)acryloyloxy-1,2,2,6,6,-pentamethylpiperidine, perfluoromethyl (meth)acrylate, perfluoropropyl (meth)acrylate, perfluoropropyl methyl (meth)acrylate, vinylpyrrolidone, trimethylolpropane tri(meth)acrylate and allyl (meth)acrylate, and any combination thereof.

The vinyl monomer having secondary and/or tertiary amide group(s) is not particularly limited, and examples thereof can include N-alkyl or N-alkylene-substituted (meth)acrylamide. Specific examples can include N-methylacrylamide, N-methylmethacrylamide, N-ethylacrylamide, N,N-dimethylacrylamide, N,N-dimethylmethacrylamide, N,N-diethylacrylamide, N-ethylmethacrylamide, N-methyl-N-ethylacrylamide, N-methyl-N-ethylmethacrylamide, N-isopropylacrylamide, N-n-propylacrylamide, N-isopropylmethacrylamide, N-n-propylmethacrylamide, N-methyl-N-n-propylacrylamide, N-methyl-N-isopropylacrylamide, N-acryloylpyrrolidine, N-methacryloylpyrrolidine, N-acryloylpiperidine, N-methacryloylpiperidine, N-acryloylhexahydroazepine, N-acryloylmorpholine, N-methacryloylmorpholine, N-vinylpyrrolidone, N-vinylcaprolactam, N,N'-methylenebisacrylamide, N,N'-methylenebismethacrylamide, N-vinylacetamide, diacetone acrylamide, diacetone methacrylamide, N-methylolacrylamide and N-methylolmethacrylamide.

The silicone compound is not particularly limited, and examples thereof include respective hydrolyzed condensates of trimethoxysilane, triethoxysilane, methyltrimethoxysilane, methyltriethoxysilane, cyclohexyltrimethoxysilane, cyclohexyltriethoxysilane, phenyltrimethoxysilane, phenyltriethoxysilane, dimethoxysilane, diethoxysilane, methyldimethoxysilane, methyldiethoxysilane, dimethyldimethoxysilane, dimethyldiethoxysilane, dimethoxydiphenylsilane, diethoxydiphenylsilane, 3-acryloxypropyltrimethoxysilane, 3-acryloxypropyltriethoxysilane, 3-methacryloxypropyltrimethoxysilane, 3-methacryloxypropyltriethoxysilane, 3-methacryloxypropylmethyldimethoxysilane, 3-methacryloxypropylmethyldimethoxysilane, vinyltrimethoxysilane, vinyltriethoxysilane, p-styryltrimethoxysilane, p-styryltriethoxysilane, tetramethoxysilane, and tetraethoxysilane.

The adhesive emulsion particle (F) optionally includes an emulsifier. The emulsifier is not particularly limited, and examples thereof include acidic emulsifiers such as alkylbenzene sulfonic acid, alkylsulfonic acid, alkylsulfosuccinic acid, polyoxyethylene alkyl sulfuric acid, polyoxyethylene alkyl aryl sulfuric acid and polyoxyethylene distyryl phenyl ether sulfonic acid; anionic surfactants such as alkali metal (Li, Na, K, and the like) salts of such acidic emulsifiers, ammonium salts of such acidic emulsifier, and fatty acid soap; quaternary ammonium salt, pyridinium salt, and imidazolinium salt type cationic surfactants such as alkyltrimethylammonium bromide, alkylpyridinium bromide and imidazolinium laurate; and nonionic surfactants and reactive emulsifiers having a radical polymerizable double bond, such as polyoxyethylene alkyl aryl ether, polyoxyethylene sorbitan fatty acid ester, a polyoxyethylene oxypropylene block copolymer and polyoxyethylene distyryl phenyl ether.

Examples of the reactive emulsifier having a radical polymerizable double bond include, but not limited to the following, Eleminol JS-2 (trade name, manufactured by Sanyo Chemical Industries, Ltd.), Latemul S-120, S-180A or S-180 (trade name, manufactured by Kao Corporation), Aqualon HS-10, KH-1025, RN-10, RN-20, RN30 or RN50 (trade name, manufactured by DKS Co., Ltd.), Adekariasoap SE1025, SR-1025, NE-20, NE-30 or NE-40 (trade name, manufactured by Adeka Corporation), an ammonium salt of p-styrene sulfonic acid, a sodium salt of p-styrene sulfonic acid, a potassium salt of p-styrene sulfonic acid, alkyl sulfonic acid (meth)acrylate such as 2-sulfoethyl acrylate, methylpropane sulfonic acid (meth)acrylamide, an ammonium salt of allyl sulfonic acid, a sodium salt of allyl sulfonic acid, or a potassium salt of allyl sulfonic acid.

[Average particle size of adhesive emulsion particle (F)]

The average particle size of the adhesive emulsion particle (F) in the present embodiment is determined from the size of such any particle observed according to a cross-sectional SEM or dynamic light scattering method. The average particle size of the adhesive emulsion particle (F) is preferably 300 nm or less. The average particle size of the adhesive emulsion particle (F) is adjusted in the range, and thus a coating film still higher in adhesiveness can be likely formed due to an enhancement in contact area with the substrate. The average particle size is more preferably 200 nm or less from the viewpoint of an enhancement in transparency of the resulting coating film. The method for measuring the average particle size of the adhesive emulsion particle (F) can be made by, but not limited to the following, for example, using an aqueous adhesive emulsion particle (F) dispersion and measuring the cumulant particle size with a dynamic light scattering type particle size distribution measuring apparatus manufactured by Otsuka Electronics Co., Ltd. (item number: ELSZ-1000).

[Inorganic oxide (G)]

The adhesion layer preferably further includes an inorganic oxide (G) from the viewpoint of an enhancement in adhesiveness due to interaction with the hard coating film.

Specific examples of the inorganic oxide (G) in the present embodiment include, but not limited to the following, respective oxides of silicon, aluminum, titanium, zirconium, zinc, cerium, tin, indium, gallium, germanium, antimony, and molybdenum. Such an inorganic oxide may be in the form of a single substance or a mixture. In particular, the inorganic oxide (G) is preferably a silica particle.

The average particle size of the inorganic oxide (G) in the present embodiment is preferably 2 nm or more from the viewpoint of an improvement in storage stability of a raw material composition of the adhesion layer, and is preferably 150 nm or less from the viewpoint of an improvement in transparency of the entire hard coating film-applied substrate. Thus, the average particle size is preferably 2 nm or more and 100 nm or less, more preferably 2 nm or more and 50 nm or less.

A silica particle typified by dry silica or colloidal silica is preferable, but not particularly limited thereto, from the viewpoints of strong interaction with the hydrolyzable silicon compound (b) and adhesiveness to the hard coating film. Colloidal silica is preferable because it can also be used even in the form of an aqueous dispersion liquid.

[Colloidal silica suitably used as inorganic oxide (G)]

The acidic colloidal silica suitably used in the present embodiment, for which water is used as a dispersing solvent, is not particularly limited, and any one prepared according to a sol-gel method can also be used and a commercially available product can also be utilized. Such preparation according to a sol-gel method can be made with reference to Werner Stober et al; J. Colloid and Interface Sci., 26, 62-69 (1968), Rickey D. Badley et al; Lang muir 6, 792-801 (1990), Journal of the Japan Society of Colour Material, 61 [9] 488-493 (1988), and the like.

Examples of such a commercially available product utilized include Snowtex-O, Snowtex-OS, Snowtex-OXS, Snowtex-O-40, Snowtex-OL, Snowtex-OYL, Snowtex-OUP, Snowtex-PS-SO, Snowtex-PS-MO, Snowtex-AK-XS, Snowtex-AK, Snowtex-AK-L, Snowtex-AK-YL and Snowtex-AK-PS-S (trade names, manufactured by Nissan Chemical Corporation), Adelite AT-20Q (trade name, manufactured by Adeka Corporation), and Klebosol 20H12 and Klebosol 30CAL25 (trade names, manufactured by Clariant Japan K.K.).

The basic colloidal silica is silica stabilized by addition of an alkali metal ion, an ammonium ion or an amine and is not particularly limited, and examples thereof include Snowtex-20, Snowtex-30, Snowtex-XS, Snowtex-50, Snowtex-30L, Snowtex-XL, Snowtex-YL, Snowtex ZL, Snowtex-UP, Snowtex-ST-PS-S, Snowtex ST-PS-M, Snowtex-C, Snowtex-CXS, Snowtex-CM, Snowtex-N, Snowtex-NXS, Snowtex-NS and Snowtex-N-40 (trade names, manufactured by Nissan Chemical Corporation), Adelite AT-20, Adelite AT-30, Adelite AT-20N, Adelite AT-30N, Adelite AT-20A, Adelite AT-30A, Adelite AT-40 and Adelite AT-50 (trade names, manufactured by Adeka Corporation), Klebosol 30R9, Klebosol 30R50 and Klebosol 50R50 (trade names, manufactured by Clariant Japan K.K.), and Ludox HS-40, Ludox HS-30, Ludox LS, Ludox AS-30, Ludox SM-AS, Ludox AM, Ludox HAS and Ludox SM (trade names, manufactured by DuPont).

The colloidal silica for which a water-soluble solvent is used as a dispersing medium is not particularly limited, and examples thereof include MA-ST-M (methanol dispersion type having a particle size of 20 to 25 nm), IPA-ST (isopropyl alcohol dispersion type having a particle size of 10 to 15 nm), EG-ST (ethylene glycol dispersion type having a particle size of 10 to 15 nm), EGST-ZL (ethylene glycol dispersion type having a particle size of 70 to 100 nm), NPC-ST (ethylene glycol monopropyl ether dispersion type having a particle size of 10 to 15 nm) and TOL-ST (toluene dispersion type having a particle size of 10 to 15 nm), manufactured by Nissan Chemical Corporation.

The dry silica particle is not particularly limited, and examples thereof include AEROSIL manufactured by Nippon Aerosil Co., Ltd., and Reolosil manufactured by Tokuyama Corporation.

Such a silica particle may include an inorganic base (for example, sodium hydroxide, potassium hydroxide, lithium hydroxide, and/or ammonia) and/or an organic base (for example, tetramethylammonium and/or triethylamine) as stabilizer(s).

[Shape of inorganic oxide (G)]

Examples of the shape of the inorganic oxide (G) in the present embodiment include, but not limited to the following, spherical, horned, polyhedron, elliptical, flattened, linear, beaded, and pearl-like shapes, and a spherical, pearl-like, or beaded shape is particularly preferable from the viewpoints of hardness, transparency and adhesiveness of the hard coating film.

The thickness of the adhesion layer is preferably 0.1 $\mu$m or more and 100.0 $\mu$m or less, more preferably 0.3 $\mu$m or more and 50.0 $\mu$m or less from the viewpoint of adhesiveness.

The coating film (C) may be further provided with a functional layer on at least one surface thereof. Examples of the functional layer include, but not limited to the following, an antireflective layer, an antifouling layer, a polarizing layer, and an impact-absorbing layer.

The hard coating film-applied substrate may be subjected to surface treatment with silica and thus provided with a silica layer formed thereon from the viewpoint of weather resistance. The method for forming such a silica layer will be described below.

[Component optionally included in adhesion layer]

The adhesion layer in the present embodiment optionally includes a solvent, an emulsifier, a plasticizer, a pigment, a dye, a filler, an anti-aging agent, a conductive material, an ultraviolet absorber, a light stabilizer, a peel strength adjusting agent, a softener, a surfactant, a flame retardant, an antioxidant, and/or a catalyst, depending on the application. The adhesion layer preferably includes an ultraviolet absorber and/or a light stabilizer because high weather resistance is demanded particularly in an outdoor application. Specific examples include, but not limited to the following, benzophenone-based ultraviolet absorbers such as 2,4-dihydroxybenzophenone, 2-hydroxy-4-methoxybenzophenone, 2-hydroxy-4-methoxybenzophenone-5-sulfonic acid, 2-hydroxy-4-n-octoxybenzophenone, 2-hydroxy-4-n-dodecyloxybenzophenone, 2-hydroxy-4-benzyloxybenzophenone, bis(5-benzoyl-4-hydroxy-2-methoxyphenyl)methane, 2,2'-dihydroxy-4-methoxybenzophenone, 2,2'-dihydroxy-4,4'dimethoxybenzophenone (trade name "UVINUL3049" manufactured by BASF SE), 2,2',4,4'-tetrahydroxybenzophenone (trade name "UVINUL3050" manufactured by BASF SE), 4-dodecyloxy-2-hydroxybenzophenone, 5-benzoyl-2,4-dihydroxybenzophenone, 2-hydroxy-4-methoxy-2'-carboxybenzophenone, 2-hydroxy-4-stearyloxybenzophenone and 4,6-dibenzoylresorcinol; benzotriazole-based ultraviolet absorbers such as 2-(2'-hydroxy-5'-methylphenyl)benzotriazole, 2-(2'-hydroxy-5'-tert-butylphenyl)benzotriazole, 2-(2'-hydroxy-3',5'-ditert-butylphenyl)benzotriazole, 2-(2-hydroxy-5-tert-octylphenyl)benzotriazole, 2-(2-hydroxy-3,5-di-tert-octylphenyl)benzotriazole, 2-[2'-hydroxy-3',5'-bis($\alpha,\alpha'$-dimethylbenzyl)phenyl]benzotriazole), a condensate (trade name "TINUVIN1130" manufactured by BASF SE) of methyl-3-[3-tert-butyl-5-(2H-benzotriazole-2-yl)-4-hydroxyphenyl]propionate and polyethylene glycol (molecular weight: 300), isooctyl-3-[3-(2H-benzotriazole-2-yl)-5-tert-butyl-4-hydroxyphenyl]propionate (trade name "TINUVIN384" manufactured by BASF SE), 2-(3-dodecyl-5-methyl-2-hydroxyphenyl)benzotriazole (trade name "TINUVIN571" manufactured by BASF SE), 2-(2'-hydroxy-3'-tert-butyl-5'-methylphenyl)-5-chlorobenzotriazole, 2-(2'-hydroxy-3',5'-di-tert-amylphenyl)benzotriazole, 2-(2'-hydroxy-4'-octoxyphenyl)benzotriazole, 2-[2'-hydroxy-3'-(3",4",5",6"-tetrahydrophthalimidemethyl)-5'-methylphenyl]benzotriazole, 2,2-methylenebis[4-(1,1,3,3-tetramethylbutyl)-6-(2H-benzotriazole-2-yl)phenol], 2-(2H-benzotriazole-2-yl)-4,6-bis(1-methyl-1-phenylethyl)phenol (trade name "TINUVIN900" manufactured by BASF SE), and TINUVIN384-2, TINUVIN326, TINUVIN327, TINUVIN109, TINUVIN970, TINUVIN328, TINUVIN171, TINUVIN970, TINUVIN PS, TINUVIN P, TINUVIN99-2 and TINVIN928 (trade names, manufactured by BASF SE); triazine-based ultraviolet absorbers such as 2-[4-[(2-hydroxy-3-dodecyloxypropyl)oxy]-2-hydroxyphenyl]-4,6-bis(2,4-dimethylphenyl)-1,3,5-triazine, 2-[4-[(2-hydroxy-3-tridecyloxypropyl)oxy]-2-hydroxyphenyl]-4,6-bis(2,4-dimethylphenyl)-1,3,5-triazine, 2,4-bis(2-hydroxy-4-butyloxyphenyl)-6-(2,4-bisbutyloxyphenyl)-1,3,5-triazine (trade name "TINUVIN460" manufactured by BASF SE), 2-(2-hydroxy-4-[1-octyloxycarbonylethoxy]phenyl)-4,6-bis(4-phenylphenyl)-1,3,5-triazine (trade name "TINUVIN479" manufactured by BASF SE), and TINUVIN400, TINUVIN405, TINUVIN477 and TINUVIN1600 (trade name, manufactured by BASF SE); malonic acid ester-based ultraviolet absorbers such as HOSTAVIN PR25, HOSTAVIN B-CAP and HOSTAVIN VSU (trade names, manufactured by Clariant Japan K.K.); anilide-based ultraviolet absorbers such as HOSTAVIN 3206 LIQ, HOSTAVIN VSU P and HOSTAVIN 3212 LIQ (trade names, manufactured by Clariant Japan K.K.); salicylate-based ultraviolet absorbers such as amyl salicylate, menthyl salicylate, homomenthyl salicylate, octyl salicylate, phenyl salicylate, benzyl salicylate and p-isopropanolphenyl salicylate; cyanoacrylate-based ultraviolet absorbers such as ethyl-2-cyano-3,3-diphenyl acrylate (trade name "UVINUL3035" manufactured by BASF SE), (2-ethylhexyl)-2-cyano-3,3-diphenyl acrylate (trade name "UVINUL3039" manufactured by BASF SE) and 1,3-bis((2'-cyano-3',3'-diphenylacryloyl)oxy)-2,2-bis-(((2'-cyano-3',3'-diphenylacryloyl)oxy)methyl)propane (trade name "UVINUL3030" manufactured by BASF SE); radical polymerizable ultraviolet absorbers each having a radical polymerizable double bond in its molecule, such as 2-hydroxy-4-acryloxybenzophenone, 2-hydroxy-4-methacryloxybenzophenone, 2-hydroxy-5-acryloxybenzophenone, 2-hydroxy-5-methacryloxybenzophenone, 2-hydroxy-4-(acryloxyethoxy)benzophenone, 2-hydroxy-4-(methacryloxyethoxy)benzophenone, 2-hydroxy-4-(methacryloxydiethoxy)benzophenone, 2-hydroxy-4-(acryloxytriethoxy)benzophenone, 2-(2'-hydroxy-5'-methacryloxyethylphenyl)-2H-benzotriazole (trade name "RUVA-93" manufactured by Otsuka Chemical Co., Ltd.), 2-(2'-hydroxy-5'-methacryloxyethyl-3-tert-butylphenyl)-2H-benzotriazole, 2-(2'-hydroxy-5'-methacryloxypropyl-3-tert-butylphenyl)-5-chloro-2H-benzotriazole and 3-methacryloyl-2-hydroxypropyl-3-[3'-(2"-benzotriazolyl)-4-hydroxy-5-tert-butyl]phenyl propionate (trade name "CGL-104" manufactured by Ciba-Geigy Japan Ltd.); polymers each having ultraviolet absorptivity, such as UV-G101, UV-G301, UV-G137, UV-G12 and UV-G13(trade names, manufactured by Nippon Shokubai Co., Ltd.); hindered amine-based light stabilizers such as bis(2,2,6,6-tetramethyl-4-piperidyl)succinate, bis(2,2,6,6-tetramethylpiperidyl)sebacate, bis(1,2,2,6,6-pentamethyl-4-piperidyl)2-(3,5-di-tert-butyl-4-hydroxybenzyl)-2-butylmalonate, 1-[2-[3-(3,5-di-tert-butyl-4-hydroxyphenyl)propynyloxy]ethyl]-4-[3-(3,5-di-tert-butyl-4-hydroxyphenyl)propynyloxy]-2,2,6,6-tetramethylpiperidine, a mixture (trade name "TINUVIN292" manufactured by BASF SE) of bis(1,2,2,6,6-pentamethyl-4-piperidyl)sebacate and methyl-1,2,2,6,6-pentamethyl-4-piperidyl-sebacate, bis(1-octoxy-2,2,6,6-tetramethyl-4-piperidyl)sebacate, and TINUVIN123, TINUVIN144, TINUVIN152, TINUVIN249, TINUVIN292 and TINUVIN5100 (trade names, manufactured by BASF SE); radical polymerizable hindered amine-based light stabilizers such as 1,2,2,6,6-pentamethyl-4-piperidyl methacrylate, 1,2,2,6,6-pentamethyl-4-piperidyl acrylate, 2,2,6,6-tetramethyl-4-piperidyl methacrylate, 2,2,6,6-tetramethyl-4-piperidyl acrylate, 1,2,2,6,6-pentamethyl-4-iminopiperidyl methacrylate, 2,2,6,6,-tetramethyl-4-iminopiperidyl methacrylate, 4-cyano-2,2,6,6-tetramethyl-4-piperidyl methacrylate and 4-cyano-1,2,2,6,6-pentamethyl-4-piperidyl methacrylate; polymers each having photostability, such as U-Double E-133, U-Double E-135, U-Double S-2000, U-Double S-2834, U-Double S-2840, U-Double S-2818 and U-Double S-2860 (trade names, manufactured by Nippon Shokubai Co., Ltd.); ultraviolet absorbers each having reactivity with a silanol group, an isocyanate group, an epoxy group, a semicarbazide group or a hydrazide group; and inorganic ultraviolet absorbers such as cerium oxide, niobium oxide, aluminum oxide, zinc oxide, titanium oxide, zirconium oxide, antimony oxide, magnesium oxide, tin oxide, bismuth oxide, cobalt oxide and copper oxide, and these may be used singly or in combinations of two or more thereof.

<Coating material composition>

The coating film (C) of the present embodiment is obtained by using, for example, the following coating material composition (I). The coating material composition (I) is a coating material composition including a polymer nanoparticle (A) and a matrix raw material component (B'), in which the elastic recovery rate $\eta_{ITA}$ of the polymer nanoparticle (A), as measured by an indentation test according to ISO14577-1, is 0.30 or more and 0.90 or less, the Martens hardness $HM_A$ of the polymer nanoparticle (A) and the Martens hardness $HM_{B'}$ of the matrix raw material component (B') satisfy a relationship of $HM_{B'}/HM_A > 1$, the matrix raw material component (B') includes an inorganic oxide (D), and the inorganic oxide (D) contains at least one inorganic component selected from the group consisting of Ce, Nb, Al, Zn, Ti, Zr, Sb, Mg, Sn, Bi, Co and Cu. The coating material composition (I) thus configured exhibits high abrasion resistance, durability and weather resistance.

[Hardness $HM_A$ of polymer nanoparticle (A) and hardness $HM_B$ of matrix raw material component (B')]

The Martens hardness $HM_A$ of the polymer nanoparticle (A) and the Martens hardness $HM_{B'}$ of the matrix raw material component (B') in the coating material composition (I) satisfy a relationship of the following expression (3).

$$HM_{B'}/HM_A > 1 \qquad \text{expression (3)}$$

The relationship is satisfied in the coating material composition (I) as described above, and therefore the relationship of the expression (3) is satisfied also by the Martens hardness $HM_A$ of the polymer nanoparticle (A) and the Martens hardness $HM_{B'}$ of the matrix raw material component (B') in the coating film (C) obtained with the coating material composition (I). Such each Martens hardness with respect to the coating material composition (I) can be measured by, for example, separating the polymer nanoparticle (A) and the matrix raw material component (B') by an operation such as centrifugation and/or ultrafiltration, and subjecting each component separated, to measurement based on a method described in Examples described below.

The respective values of the $HM_A$ and the $HM_B$ can be adjusted by, for example, the structures of and the compositional ratio between the respective structural components of the polymer nanoparticle (A) and the matrix raw material component (B') so as to satisfy the above magnitude relationship, but the adjustment is not limited thereto.

[Elastic recovery rate $\eta_{ITA}$ of polymer nanoparticle (A)]

The elastic recovery rate $\eta_{ITA}$ of the polymer nanoparticle (A) in the present embodiment is obtained by measuring the parameter described as the ratio $\eta_{IT}$ of $W_{elast}/W_{total}$ in ISO14577-1 with respect to a coating film formed of the polymer nanoparticle (A), and is represented as the ratio of the elastic return deformation workload $W_{elast}$ of a depression to the total mechanical workload $W_{total}$ of a depression. As the elastic recovery rate $\eta_{ITA}$ is higher, the coating film can be more returned to the original state when is subject to impact, and is higher in ability to repair itself against impact. The elastic recovery rate $\eta_{ITA}$ of the polymer nanoparticle (A) is preferably 0.30 or more under measurement conditions (Vickers quadrangular pyramid diamond indenter, loading condition: 2 mN/20 sec, unloading condition: 2 mN/20 sec) from the viewpoint that the ability to repair itself is effectively expressed, and the $\eta_{ITA}$ is preferably 0.90 or less from the viewpoint of being able to conform to deformation of the substrate and/or the matrix raw material component (B') in formation of the coating film. The elastic recovery rate $\eta_{ITA}$ of the polymer nanoparticle (A) is more preferably 0.50 or more, further preferably 0.60 or more. The elastic recovery rate of the polymer nanoparticle (A) can be measured by, but not limited to the following, for example, separating the polymer nanoparticle (A) and the matrix raw material component (B') by an operation such as centrifugation and/or ultrafiltration, dispersing the polymer nanoparticle (A) separated, in a solvent, to provide a composition, performing coating with the composition and drying to form a coating film, and subjecting the coating film to measurement with, for example, a micro-hardness meter Fischer scope (HM2000S manufactured by Fischer Instruments K.K.), a nano indentation tester (ENT-NEXUS manufactured by Elionix Inc.), a nano indenter (iNano, G200 manufactured by Toyo Corporation), and/or a nano indentation system (TI980 manufactured by Bruker AXS GmbH). Examples of the method for adjusting the elastic recovery rate $\eta_{ITA}$ in the range include, but not limited to the following, adjustment of the structure and the compositional ratio of the structural component of the polymer nanoparticle (A).

The coating film (C) can be obtained as a cured product formed by curing the coating material composition (I) with hydrolytic condensation or the like. The polymer nanoparticle (A) is usually not changed in composition in the course of such curing. Accordingly, the value of the elastic recovery rate $\eta_{ITA}$ in the coating film (C) can be determined under the assumption that the value of the elastic recovery rate $\eta_{ITA}$ of the polymer nanoparticle (A) in the coating material composition (I), as measured by a method described in Examples below, is well matched to the elastic recovery rate $\eta_{ITA}$ of the polymer nanoparticle (A) in the coating film (C).

[Solvent (H)]

The coating material composition (I) in the present embodiment preferably contains a solvent (H). A usable solvent (H) is not particularly limited, and a common solvent can be used. Examples of the solvent include, but not limited to the following, water; alcohols such as ethylene glycol, butyl cellosolve, isopropanol, n-butanol, 2-butanol, ethanol, methanol, modified ethanol, 2-methoxy-1-propanol, 1-methoxy-2-propanol, diacetone alcohol glycerin, monoalkyl monoglyceryl ether, propylene glycol monomethyl ether, diethylene glycol monobutyl ether, propylene glycol monoethyl ether, propylene glycol monobutyl ether, dipropylene glycol monoethyl ether, dipropylene glycol monobutyl ether, diethylene glycol monophenyl ether and tetraethylene glycol monophenyl ether; aromatic hydrocarbons such as toluene and xylene; aliphatic hydrocarbons such as hexane, cyclohexane and heptane; esters such as ethyl acetate and n-butyl acetate; ketones such as acetone, methyl ethyl ketone, methyl isobutyl ketone and cyclohexanone; ethers such as tetrahydrofuran and dioxane; amides such as dimethylacetamide and dimethylformamide; halogen compounds such as chloroform, methylene chloride and carbon tetrachloride; dimethylsulfoxide, and nitrobenzene; and these may be used singly or in combinations of two or more thereof. In particular, such a solvent particularly preferably includes water and/or any alcohol from the viewpoint of a decrease in environmental load in removal of the solvent.

Hereinafter, the structural component, the size, the compositional ratio, and the like of the polymer nanoparticle (A) included in the coating material composition (I) will be described, and the detail about any matter not mentioned below is as described above with respect to the polymer nanoparticle (A) included in the coating film (C).

The matrix raw material component (B') included in the coating material composition (I) is cured with hydrolytic condensation or the like in the course of obtaining the coating film (C). That is, the matrix raw material component (B') included in the coating material composition (I) is in a relationship so as to correspond to the matrix component (B) in the resulting coating film (C). Hereinafter, the structural component, the size, the compositional ratio, and the like of the matrix raw material component (B') will be described, and the detail about any matter not mentioned below is as described above with respect to the matrix component (B) included in the coating film (C).

The polymer nanoparticle (A) and the matrix raw material component (B') in the coating material composition (I) preferably include the above hydrolyzable silicon compound (a) and the above hydrolyzable silicon compound (b), respectively. The hydrolyzable silicon compound (a) in the coating material composition (I) also preferably includes at least one or more selected from the compound having an atomic group represented by the formula (a-1) and the hydrolyzed product and the condensate thereof, and the compound represented by the formula (a-2) and the hydrolyzed product and the condensate thereof. The hydrolyzable silicon compound (b) in the coating material composition (I) also preferably includes at least one or more selected from the compound having an atomic group represented by the formula (b-1), and the hydrolyzed product and the condensate thereof, and the compound represented by the formula (b-2), and the hydrolyzed product and the condensate thereof.

The details of the hydrolyzable silicon compounds (a) and (b) in the coating material composition (I) are as described above with respect to the polymer nanoparticle (A) and the matrix component (B) included in the coating film (C), respectively.

[Content of hydrolyzable silicon compound (a) in polymer nanoparticle (A)]

The content of the hydrolyzable silicon compound (a) in the coating material composition (I) represents the weight proportion of the solid content of the hydrolyzable silicon compound (a) included in the polymer nanoparticle (A), and the content is preferably higher because, as the content is higher, abrasion resistance, weather resistance and heat resistance are enhanced. The content is preferably 50% by mass or more, more preferably 60% by mass or more. The content of the hydrolyzable silicon compound (a) in the polymer nanoparticle (A) can be measured by, but not limited to the following, for example, IR analysis, NMR analysis, and/or elemental analysis of the polymer nanoparticle (A).

[Functional group (e)]

The polymer nanoparticle (A) in the coating material composition (I) preferably has a functional group (e) which interacts with the matrix raw material component (B'). When the polymer nanoparticle (A) has such a functional group (e), the matrix raw material component (B') easily adsorbs to the surface of the polymer nanoparticle (A) and tends to be in the form of protective colloid and thus stabilized, resulting in a tendency to enhance storage stability of the coating material composition (I). Furthermore, when the polymer nanoparticle (A) has such a functional group (e), an increase in interaction between the polymer nanoparticle (A) and the matrix raw material component (B') tends to lead to an increase in thickening of the solid content concentration of the coating material composition (I) and suppression of sagging in coating of a complicated shape, resulting in a tendency to uniform the film thickness of the coating film (C). Whether or not the polymer nanoparticle (A) has such a functional group (e) can be confirmed by, for example, compositional analysis with IR, GC-MS, pyrolysis GC-MS, LC-MS, GPC, MALDI-MS, TOF-SIMS, TG-DTA, and/or NMR, or analysis with any combination thereof.

Specific examples of the functional group (e) in the present embodiment include, but not limited to the following, functional groups such as a hydroxyl group, a carboxyl group, an amino group, an amide group and a functional group having an ether bond, a functional group having a hydrogen bond is preferable from the viewpoint of interaction, and an amide group is more preferable and a secondary amide group and/or a tertiary amide group are/is further preferable from the viewpoint of high hydrogen bondability.

Examples of the compound having the functional group (e) and a reaction product thereof include 2-hydroxyethyl (meth)acrylate, 2-hydroxypropyl (meth)acrylate, 4-hydroxybutyl (meth)acrylate, 2-hydroxyethyl vinyl ether or 4-hydroxybutyl vinyl ether, 2-hydroxyethyl allyl ether, (meth)acrylic acid, 2-carboxyethyl (meth)acrylate, 2-dimethylaminoethyl (meth)acrylate, 2-diethylaminoethyl (meth)acrylate, 2-di-n-propylaminoethyl (meth)acrylate, 3-dimethylaminopropyl (meth)acrylate, 4-dimethylaminobutyl (meth)acrylate, N-[2-(meth)acryloyloxy]ethylmorpholine, vinylpyridine, N-vinylcarbazole, N-vinylquinoline, N-methylacrylamide, N-methylmethacrylamide, N-ethylacrylamide, N,N-dimethylacrylamide, N,N-dimethylmethacrylamide, N,N-diethylacrylamide, N-ethylmethacrylamide, N-methyl-N-ethylacrylamide, N-methyl-N-ethylmethacrylamide, N-isopropylacrylamide, N-n-propylacrylamide, N-isopropylmethacrylamide, N-n-propylmethacrylamide, N-methyl-N-n-propylacrylamide, N-methyl-N-isopropylacrylamide, N-acryloylpyrrolidine, N-methacryloylpyrrolidine, N-acryloylpiperidine, N-methacryloylpiperidine, N-acryloylhexahydroazepine, N-acryloylmorpholine, N-methacryloylmorpholine, N-vinylpyrrolidone, N-vinylcaprolactam, N,N'-methylenebisacrylamide, N,N'-methylenebismethacrylamide, N-vinylacetamide, diacetone acrylamide, diacetone methacrylamide, N-methylolacrylamide, N-methylolmethacrylamide, Blemmers PE-90, PE-200, PE-350, PME-100, PME-200, PME-400 and AE-350 (trade names, manufactured by NOF Corporation), and MA-30, MA-50, MA-100, MA-150, RA-1120, RA-2614, RMA-564, RMA-568, RMA-1114 and MPG130-MA (trade names, manufactured by Nippon Nyukazai Co., Ltd.). Herein, the "(meth)acrylate" simply represents acrylate or methacrylate, and the "(meth)acrylic acid" simply represents acrylic acid or methacrylic acid.

[Elastic recovery rate $\eta_{ITB'}$ of matrix raw material component (B') and elastic recovery rate $\eta_{ITB}$ of matrix component (B)]

The elastic recovery rate $\eta_{ITB'}$ of the matrix raw material component (B') in the coating material composition (I) is the parameter described as the "ratio $\eta_{IT}$ of $W_{elast}/W_{total}$" in ISO14577-1, is measured with respect to a coating film formed of the matrix raw material component (B'), and is represented as the ratio of the elastic return deformation workload $W_{elast}$ of a depression to the total mechanical workload $W_{total}$ of a depression. As the elastic recovery rate $\eta_{ITB'}$ is higher, the coating film can be more returned to the original state when is subject to impact, and is higher in ability to repair itself against impact. The elastic recovery rate $\eta_{ITB'}$ of the matrix raw material component (B') is preferably 0.60 or more, more preferably 0.65 or more under measurement conditions (Vickers quadrangular pyramid diamond indenter, loading condition: 2 mN/20 sec, unloading condition: 2 mN/20 sec) from the viewpoint that the ability to repair itself is effectively expressed. The $\eta_{ITB'}$ is preferably 0.95 or less from the viewpoint of being able to conform to deformation of the substrate and/or the component (A) in formation of the coating film. The elastic recovery rate of the matrix raw material component (B') can be measured by, but not limited to the following, for example, separating the polymer nanoparticle (A) and the matrix raw material component (B') by an operation such as centrifugation, dissolving the matrix raw material component (B') separated, in a solvent, to provide a composition, performing coating with the composition and drying to form a coating film, and subjecting the coating film to measurement with, for example, a micro-hardness meter Fischer scope (HM2000S manufactured by Fischer Instruments K.K.), a nano indentation tester (ENT-NEXUS manufactured by Elionix Inc.), a nano indenter (iNano, G200 manufactured by Toyo Corporation), and/or a nano indentation system (TI980 manufactured by Bruker AXS GmbH).

As described above, a cured product obtained by curing the matrix raw material component (B') with hydrolytic condensation or the like corresponds to the matrix component (B). Accordingly, the value of the elastic recovery rate $\eta_{ITB'}$ of the matrix raw material component (B') can be determined under the assumption that the value of the elastic recovery rate $\eta_{ITB'}$ of the matrix raw material component (B'), as measured by a method described in Examples below, is well matched with the elastic recovery rate $\eta_{ITB}$ of the corresponding matrix component (B). That is, the elastic recovery rate $\eta_{ITB}$ of the matrix component (B) in the present embodiment is preferably 0.60 or more, more preferably 0.65 or more. The $\eta_{ITB}$ is preferably 0.95 or less from the viewpoint of neing able to conform to deformation of the substrate and/or the component (A) in formation of the coating film.

Examples of the method for adjusting the elastic recovery rate $\eta_{ITB'}$ and the elastic recovery rate $\eta_{ITB}$ in the respective ranges include, but not limited to the following, adjustment of the structure and the compositional ratio of the structural component of the matrix raw material component (B').

The "hydrolyzable silicon compound (a) included in the polymer nanoparticle (A)" in the coating material composition (I) may be the same as or different from the "hydrolyzable silicon compound (b) included in the matrix raw material component (B')". Even if both compounds are the same, such compounds are distinguished from each other by defining the compound included in the polymer nanoparticle (A) as the hydrolyzable silicon compound (a) and defining the compound included in the matrix raw material component (B') as the hydrolyzable silicon compound (b).

[Inorganic oxide (D)]

The matrix raw material component (B') in the coating material composition (I) includes an inorganic oxide (D). The inorganic oxide (D) is included to result in not only a tendency to enhance hardness of the matrix raw material component (B') and enhance abrasion resistance, but also a tendency to enhance contamination resistance of the coating film due to hydrophilicity of a hydroxyl group on a particle surface. The inorganic oxide (D) contains at least one inorganic component selected from the group consisting of Ce, Nb, Al, Zn, Ti, Zr, Sb, Mg, Sn, Bi, Co and Cu. The inorganic oxide (D) contains the inorganic component, and thus weather resistance can be enhanced without any loss of abrasion resistance and durability. The inorganic oxide (D) preferably contains at least one inorganic component selected from the group consisting of Ce, Nb, Zn, Ti and Zr, more preferably contains Ce, from the viewpoint of enhancement performance of weather resistance.

The inorganic component in the inorganic oxide (D) in the coating material composition (I) preferably contains an inorganic oxide (D') of at least one selected from the group consisting of Ce, Nb, Zn, Ti and Zr from the viewpoint of the balance among abrasion resistance, durability and weather resistance, and the content of the inorganic oxide (D') in the coating material composition is not particularly limited, and is preferably 1% by mass or more, more preferably 2% by mass or more from the viewpoint of the balance among abrasion resistance, durability and weather resistance, and is preferably 50% by mass or less, more preferably 30% by mass or less from the viewpoint of transparency. The content can be here specified as the total amount of Ce, Nb, Zn, Ti and Zr under the assumption that the solid content of the coating material composition is 100% by mass.

The inorganic oxide (D) in the coating material composition (I) is not particularly limited as long as it contains an inorganic component. In other words, the inorganic oxide (D) in the coating material composition (I) is not limited in terms of the shape thereof, and may be in the form of a single substance or a mixture. Any silica particle is preferably further included from the viewpoint of interaction with the above hydrolyzable silicon compound (b), and such a silica particle in the form of colloidal silica is preferably further included from the viewpoint of dispersibility. When the inorganic oxide (D) includes colloidal silica, such silica is preferably in the form of an aqueous dispersion liquid, and can be used even if is either acidic or basic.

The average particle size of the inorganic oxide (D) in the coating material composition (I) is preferably 2 nm or more from the viewpoint of an improvement in storage stability of the coating material composition (I), and is preferably 150 nm or less from the viewpoint of an improvement in transparency. That is, the average particle size is preferably 2 nm or more and 150 nm or less, more preferably 2 nm or more and 100 nm or less, further preferably 2 nm or more and 50 nm or less. The method for measuring the average particle size of the inorganic oxide (D) in the coating material composition (I) is as described above with respect to the inorganic oxide (D) included in the coating film (C).

Other characteristics of the inorganic oxide (D) in the coating material composition (I) are as described above with respect to the inorganic oxide (D) included in the coating film (C).

[Volume fraction of polymer nanoparticle (A) based on total of polymer nanoparticle (A) and matrix raw material component (B')]

The volume fraction of the polymer nanoparticle (A) based on the total of the polymer nanoparticle (A) and the matrix raw material component (B') in the coating material composition (I) is preferably 2% or more from the viewpoint of film formability, and is preferably 80% or less from the viewpoint of transparency of the coating film formed. That is, the volume fraction of the polymer nanoparticle (A) in the coating material composition (I) is preferably 2% or more and 80% or less, more preferably 3% or more and 70% or less, further preferably 5% or more and 45% or less. The volume fraction of the polymer nanoparticle (A) in the coating material composition (I) can be calculated from, for example, the proportion of the polymer nanoparticle (A) in the entire coating film (C) in a cross-sectional SEM image after formation of the coating film, and/or the component ratio of the polymer nanoparticle (A) to the components constituting the coating material composition (I).

[Core/shell structure of polymer nanoparticle (A)]

The polymer nanoparticle (A) in the coating material composition (I) preferably has a core/shell structure including a core layer and one or more shell layers covering the core layer. The polymer nanoparticle (A) preferably has the functional group (e) also from the viewpoint of interaction with the matrix raw material component (B') on the outermost layer of the core/shell structure. Whether or not the polymer nanoparticle (A) has the core/shell structure can be confirmed in, for example, a transmission electron microscope image of a cross section of the coating film.

[Other component optionally included in coating material composition (I)]

The coating material composition (I) may include not only the above components, but also, if necessary, a thickening agent, a leveling agent, a thixotropic agent, a defoamer, a freezing stabilizer, a dispersant, a wetting agent, a rheology controlling agent, a film formation aid, a rust inhibitor, a plasticizer, a lubricant, a preservative agent, an antifungal agent, an antielectrostatic agent, and/or an antistatic agent, each compounded in the form of the matrix raw material component (B'), from the viewpoint of a more enhancement in coatability of the coating material composition (I). A wetting agent and/or a film formation aid are/is preferably used from the viewpoint of an enhancement in film formability, and specific examples thereof include, but not particularly limited, diethylene glycol monobutyl ether, ethylene glycol monobutyl ether, diethylene glycol diethyl ether, diethylene glycol dibutyl ether, ethylene glycol mono-2-ethylhexyl ether, 2,2,4-trimethyl-1,3-butanediol isobutyrate, diisopropyl glutarate, propylene glycol-n-butyl ether, dipropylene glycol-n-butyl ether, tripropylene glycol-n-butyl ether, dipropylene glycol methyl ether, tripropylene glycol methyl ether, Megafac F-443, F-444, F-445, F-470, F-471, F-472SF, F-474, F-475, F-477, F-479, F-480SF, F-482, F-483, F-489, F-172D and F-178K (trade names, manufactured by DIC Corporation), and SN Wet 366, SN Wet 980, SN Wet L, SN Wet S, SN Wet 125, SN Wet 126 and SN Wet 970 (trade names, manufactured by San Nopco Limited). Such compounds may be used singly or in combinations of two or more thereof.

[Catalyst]

The coating material composition (I) may include a catalyst as the matrix raw material component (B'). When the coating material composition (I) includes a catalyst which promotes a reaction of reactive groups is preferable in that any un-reactive group is unlikely to remain in the coating film to result in not only an increase in hardness and an enhancement in abrasion resistance, but also an enhancement in weather resistance. The catalyst is not particularly limited, and is preferably one which is dissolved or dispersed when the hard coating film is obtained. Such a catalyst is not particularly limited, and examples thereof include an organic acid, an inorganic acid, an organic base, an inorganic base, a metal alkoxide, and a metal chelate, and such catalysts may be used singly or in combinations of two or more thereof.

[Properties of coating material composition (I)]

The solid content concentration of the coating material composition (I) is preferably 0.01 to 60% by mass, more preferably 1 to 40% by mass from the viewpoint of coatability. The viscosity at 20°C of the coating material composition (I) is preferably 0.1 to 100000 mPa•s, preferably 1 to 10000 mPa•s from the viewpoint of coatability.

<Method for producing hard coating film>

The method for producing the hard coating film and the hard coating film-applied substrate, of the present embodiment, is not particularly limited, and a coating film can be obtained by, for example, coating the substrate with the coating material composition (I) in which the polymer nanoparticle (A), the matrix raw material component (B'), an inorganic oxide (D), and any other appropriate component are dispersed and dissolved in a solvent, and subjecting the resultant to, for example, a heat treatment, ultraviolet irradiation, and/or infrared irradiation to thereby form a coating film. Examples of the coating method include, but not limited to the following, a spraying method, a flow coating method, a brush coating method, a dip coating method, a spin coating method, a screen printing method, a casting method, a gravure printing method, and a flexographic printing method. The coating material composition (I) subjected to coating can be preferably formed into a coating film by, for example, a heat treatment at room temperature to 250°C, more preferably 40°C to 150°C, and/or ultraviolet or infrared irradiation.

[Surface treatment]

The hard coating film or the hard coating film-applied substrate, of the present embodiment, may be subjected to surface treatment with silica and thus provided with a silica layer formed thereon from the viewpoint of weather resistance. The method for forming the silica layer is not particularly limited, and specific examples thereof include a silica treatment with PECVD for depositing/curing silicone or silazane and a silica treatment technique for modifying a surface by silica due to irradiation with ultraviolet light at 155 nm. In particular, such a silica treatment with PECVD is preferable because a layer through which oxygen and steam are unlikely to penetrate can be produced without degradation of any surface. Specific examples of such silicone or silazane which can be used in PECVD include, but not limited to the following, octamethylcyclotetrasiloxane, tetramethylcyclotetrasiloxane, decamethylcyclopentasiloxane, hexamethyldisiloxane, vinylmethoxysilane, vinylmethoxysilane, dimethyldimethoxysilane, TEOS, tetramethyldisiloxane, tetramethyltetravinylcyclotetrasiloxane and hexamethyldisilazane, and these may be used singly or in combinations of two or more thereof.

<Applications of hard coating film and hard coating film-applied substrate>

The hard coating film and the hard coating film-applied substrate, of the present embodiment, each have excellent abrasion resistance and durability. Accordingly, examples of the applications of the hard coating film and the hard coating film-applied substrate include, but not particularly limited, include a building material, a vehicle member, electronic equipment, and an electronic product.

Examples of such a building material application include, but not limited to the following, window glass for a constructing machine, window glass for a building, a house, a greenhouse, and the like, roofs for a garage, an arcade, and the like, a light for lighting, a traffic light, and the like, a skin material for wallpaper, a signboard, sanitary products such as a bath and a washstand, an external wall building material for kitchen, and interior floor materials such as a flooring material, a cork material, tiling, a vinyl flooring, and linoleum.

Examples of such a vehicle member include, but not limited to the following, components for use in each application of an automobile, an airplane, and a train. Specific examples include each glass of front, rear, front door, rear door, rear quarter, sunroof, and the like, exterior members such as a front bumper and a rear bumper, a spoiler, a door mirror, a front grille, an emblem cover, and a body, interior members such as a center panel, a door panel, an instrumental panel, and a center console, members for lamp such as head lamp and rear lamp, a vehicle-mounted camera lens member, a lighting cover, a decorative film, and various alternative members to glass.

Examples of such electronic equipment and electronic product preferably include, but not limited to the following, a cellular phone, a portable information terminal, a personal computer, a portable gaming device, OA equipment, a solar cell, a flat panel display, a touch panel, optical discs such as DVD and Blu-ray Disc, optical components such as a polarizing plate, an optical filter, a lens, a prism, and an optical fiber, and optical films such as antireflective film, an oriented film, a polarizing film, and a phase difference film.

The clear coating agent, the clear coating film-applied substrate and the laminate of the present embodiment can be applied to, in addition to the above, various fields of a mechanical component, an agricultural material, a fishing material, a transport container, a packaging container, playground equipment and sundry goods, and the like.

<Window material>

A window material (hereinafter, also referred to as "window material (J)".) of the present embodiment is a window material including a polycarbonate resin and a coating film disposed on the polycarbonate resin, in which the coating film includes a polymer nanoparticle (A) and a matrix component (B), the polymer nanoparticle (A) includes a hydrolyzable silicon compound (a), the matrix component (B) includes a hydrolyzable silicon compound (b), the Martens hardness $HM_J$ of the window material is 100 $N/mm^2$ or more and 4000 $N/mm^2$ or less, and the elastic recovery rate $\eta_{ITJ}$ of the window material, as measured by an indentation test according to ISO14577-1, is 0.50 or more, the matrix component (B) includes an inorganic oxide (D), and the inorganic oxide (D) contains at least one inorganic component selected from the group consisting of Ce, Nb, Al, Zn, Ti, Zr, Sb, Mg, Sn, Bi, Co and Cu. The window material (J) thus configured has high abrasion resistance, durability and weather resistance. The window material (J) exhibits high abrasion resistance, durability and weather resistance at high levels, and thus is preferably applied to, but not limited to the following, for example, as a window material for automobiles.

The window material (J) may be described below with reference to the structural components and the like of the polymer nanoparticle (A) and the matrix component (B) included in the window material (J), and the details of the structural components and the like are as described above with respect to the polymer nanoparticle (A) and the matrix component (B) included in the coating film (C).

The polymer nanoparticle (A) is preferably dispersed in the matrix component (B) in the window material (J). Such a dispersing state can be confirmed by cross-sectional SEM observation of a coating film.

The polymer nanoparticle (A) and the matrix component (B) in the window material (J) include the above hydrolyzable silicon compound (a) and the above hydrolyzable silicon compound (b), respectively. The hydrolyzable silicon compound (a) in the window material (J) also preferably includes at least one or more selected from the compound having an atomic group represented by the formula (a-1) and the hydrolyzed product and the condensate thereof, and the compound represented by the formula (a-2) and the hydrolyzed product and the condensate thereof. The hydrolyzable silicon compound (b) in the window material (J) also preferably includes at least one or more selected from the compound having an atomic group represented by the formula (b-1), and the hydrolyzed product and the condensate thereof, and the compound represented by the formula (b-2), and the hydrolyzed product and the condensate thereof.

The details of the hydrolyzable silicon compounds (a) and (b) in the window material (J) are as described above with respect to the polymer nanoparticle (A) and the matrix component (B) included in the coating film (C), respectively.

[Martens hardness $HM_J$ of window material (J)]

The Martens hardness $HM_J$ of the window material (J) is preferably 150 $N/mm^2$ or more, more preferably 200 $N/mm^2$ or more from the viewpoint of abrasion resistance, and is preferably 4000 $N/mm^2$ or less, more preferably 2000 $N/mm^2$ or less, still more preferably 1500 $N/mm^2$ or less from the viewpoint of flex resistance. Examples of the method for adjusting the Martens hardness $HM_J$ of the window material (J) in the range include, but not limited to the following, a method involving coating a substrate with a coating material composition which satisfies a predetermined relationship represented by the expression (3) and in which a composition including the polymer nanoparticle (A) and the matrix raw material component (B') mixed are dispersed and dissolved in a solvent, and subjecting the resultant to heat treatment, ultraviolet irradiation, infrared irradiation, and/or the like to thereby form a coating film. In particular, an increase in content of the matrix component (B) based on the total amount of the polymer nanoparticle (A) and the matrix component (B) tends to result in an increase in Martens hardness $HM_J$ of the window material (J), and a decrease in content of the matrix component (B) tends to result in a decrease in Martens hardness $HM_J$ of the window material (J).

The elastic recovery rate $\eta_{ITJ}$ of the window material (J) is the ratio of the elastic return deformation workload $W_{elast}$ of a depression to the total mechanical workload $W_{total}$ of a depression, and is the parameter described as the "ratio $\eta_{IT}$ of $W_{elast}/W_{total}$" in ISO14577-1. As the elastic recovery rate $\eta_{ITJ}$ is higher, the window material can be more returned to the original state when deformed, and is higher in ability to repair itself against deformation. The elastic recovery rate $\eta_{ITJ}$ is 0.50 or more under measurement conditions (Vickers quadrangular pyramid diamond indenter, loading condition: 2 mN/20 sec, unloading condition: 2 mN/20 sec) and is more preferably higher as long as it is in the range, from the viewpoint that the ability to repair itself is effectively expressed. The elastic recovery rate $\eta_{ITJ}$ is preferably 0.55 or more, more preferably 0.60 or more, further preferably 0.65 or more. The elastic recovery rate of the window material in the present embodiment can be measured by, but not limited to the following, for example, subjecting the surface of the window material to an indentation test with, for example, a micro-hardness meter Fischer scope (HM2000S manufactured by Fischer Instruments K.K.), a nano indentation tester (ENT-NEXUS manufactured by Elionix Inc.), a nano indenter (iNano, G200 manufactured by Toyo Corporation), or a nano indentation system (TI980 manufactured by Bruker AXS GmbH). Examples of the method for adjusting the elastic recovery rate $\eta_{ITJ}$ in the range include, but not limited to the following, a method involving coating a substrate with a coating material composition which satisfies a predetermined relationship represented by the expression (3) and in which a composition including the polymer nanoparticle (A) and a matrix raw material component (B') described below, mixed, are dispersed and dissolved in a solvent, and subjecting the resultant to heat treatment, ultraviolet irradiation, infrared irradiation, and/or the like to thereby form a coating film.

The content of the hydrolyzable silicon compound (a) in the window material (J) is preferably adjusted. The content of the hydrolyzable silicon compound (a) here represents the weight proportion of the solid content of the hydrolyzable silicon compound (a) included in the polymer nanoparticle (A) relative to the polymer nanoparticle (A), and the content is preferably higher because, as the content is higher, abrasion resistance and weather resistance are enhanced, and the content is preferably 50% by mass or more, more preferably 60% by mass or more. The content of the hydrolyzable silicon compound (a) in the polymer nanoparticle (A) can be measured by, but not limited to the following, for example, IR analysis, NMR analysis, and/or elemental analysis of the polymer nanoparticle (A).

Examples

Hereinafter, the present embodiment will be described with reference to specific Examples and Comparative Examples, but the present embodiment is not limited thereto.

<<Examples corresponding to first embodiment>>

Various physical properties in Examples and Comparative Examples described below (hereinafter, "Examples" and "Comparative Examples" in the section <<Examples corresponding to first embodiment>> respectively meaning "Examples corresponding to the first embodiment" and "Comparative Examples corresponding to the first embodiment", unless particularly noted.) were measured according to the following methods.

(1) Measurement of thickness

The thickness of each layer was measured with a reflection spectroscopic film thickness meter (item number: FE-3000) manufactured by Otsuka Electronics Co., Ltd.

(2) Measurement of minimum film-forming temperature of fine particle

In order to form a 0.1-mm coating film by use of an applicator, an aluminum plate placed on a heat gradient tester was coated with an aqueous E2050S dispersion liquid or an aqueous X-2 dispersion described below, each used for the adhesive emulsion particle (F), and dried, and thus a coating film of the adhesive emulsion particle (F) was obtained.

In order to separately form a 0.1-mm coating film by use of an applicator, an aluminum plate placed on a heat gradient tester was coated with Snowtex C or Snowtex OS described below, each used for the inorganic oxide (G), and dried, and thus a coating film of the inorganic oxide (G) was obtained.

The minimum film-forming temperature of each of the coating films obtained was measured with the heat gradient tester, according to JIS K6828-2. The measurement temperature range was 0 to 150°C, and the minimum film-forming temperature in the case of no film forming was defined as more than 150°C.

(3) Average particle size of polymer nanoparticle (A)

The average particle sizes of the polymer nanoparticle (A) was obtained by using an aqueous polymer nanoparticle (A) dispersion obtained by a method described below and measuring the cumulant particle sizes with a dynamic light scattering type particle size distribution measuring apparatus manufactured by Otsuka Electronics Co., Ltd. (item number: ELSZ-1000).

(4) Respective primary average particle sizes of inorganic oxides (D) and (G), and aspect ratio of inorganic oxide (G)

The respective primary average particle sizes of the inorganic oxides (D) and (G) were obtained by observation at a magnification of 50,000 to 100,000x with a transmission micrograph, taking an image so that 100 to 200 inorganic oxides in the form of particles were photographed, and measuring a longer diameter and a shorter diameter of each of such inorganic oxide particles to thereby determine the average values. The Average longer diameter value/Average shorter diameter value was calculated from the respective average values of the longer diameter and the shorter diameter measured as described above, and the resulting value was defined as the aspect ratio.

(5) Measurement of haze

The haze was measured with a turbidimeter (item number: NDH5000SP) manufactured by Nippon Denshoku Industries Co., Ltd., according to the method prescribed in JIS K7136. The haze value H1 was measured by the method with, as a target, the adhesion layer-applied substrate. The haze value H2 was measured by the method with, as a target, the laminate (adhesion layer-applied substrate and hard coating layer).

(6) Measurement of surface roughness Ra

The surface roughness Ra was measured as the arithmetic average roughness Ra prescribed in JIS B0601, with a color 3D laser microscope "VK-9700" (trade name, manufactured by Keyence Corporation). The surface roughness Ra1 was measured by the method with, as a target, a surface of the adhesion layer-applied substrate, on which the hard coating layer was to be formed. The surface roughness Ra2 was measured by the method with, as a target, a surface on the hard coating layer of the laminate (adhesion layer-applied substrate and hard coating layer).

(7) Measurement of Martens hardness HM of hard coating layer

The microhardness was measured by an indentation test (test conditions; indenter: Vickers quadrangular pyramid diamond indenter, loading condition: 2 mN/20 sec, unloading condition: 2 mN/20 sec) with a Fischer scope manufactured by Fischer Instruments K.K. (item number: HM2000S), and the Martens hardness HM of the hard coating layer was measured based on an indentation test according to ISO14577-1.

(8) Measurement of elastic recovery rate $\eta_{IT}$ of hard coating layer

The microhardness of the hard coating layer was measured by an indentation test (test conditions; indenter: Vickers quadrangular pyramid diamond indenter, loading condition: 2 mN/20 sec, unloading condition: 2 mN/20 sec) with a Fischer scope manufactured by Fischer Instruments K.K. (item number: HM2000S), and the ratio of the elastic return deformation workload $W_{elast}$ of a depression to the total mechanical workload $W_{total}$ of a depression, namely, the value of $W_{elast}/W_{total}$ was determined as the elastic recovery rate $\eta_{IT}$ of the hard coating layer, based on an indentation test method according to ISO14577-1.

(9) Measurements of Martens hardness $HM_A$ and elastic recovery rate $\eta_{ITA}$ of polymer nanoparticle (A)

The Martens hardness $HM_A$ of the polymer nanoparticle (A) was measured by coating a glass substrate (material: white plate glass, thickness: 2 mm) with an aqueous polymer nanoparticle (A) dispersion by use of a bar coater so that the film thickness was 3 $\mu$m, and drying the resultant at 130°C over 2 hours to thereby provide a coating film, and subjecting the coating film to the same measurement as in (6) described above. The microhardness was measured by an indentation test (test conditions; indenter: Vickers quadrangular pyramid diamond indenter, loading condition: 2 mN/20 sec, unloading condition: 2 mN/20 sec) with a Fischer scope manufactured by Fischer Instruments K.K. (item number: HM2000S), and the Martens hardness $HM_A$ of the polymer nanoparticle (A) was measured based on an indentation test according to ISO14577-1. The elastic recovery rate $\eta_{ITA}$ (= $W_{elast}/W_{total}$) was measured in the same manner as in (7) described above.

(10) Measurements of Martens hardness $HM_{B'}$ and elastic recovery rate $\eta_{ITB'}$ of component (B')

The Martens hardness $HM_{B'}$ of the component (B') was determined by dissolving or dispersing the component (B') in water/ethanol/acetic acid (compositional ratio: 77% by mass/20% by mass/3% by mass) so that the solid content concentration was 8% by mass, coating a glass substrate (material: white plate glass, thickness: 2 mm) with the resulting solution by use of a bar coater so that the film thickness was 3 $\mu$m, drying the resultant at 130°C over 2 hours to thereby provide a coating film, and subjecting the coating film to measurement. The microhardness was measured by an indentation test (test conditions; indenter: Vickers quadrangular pyramid diamond indenter, loading condition: 2 mN/20 sec, unloading condition: 2 mN/20 sec) with a Fischer scope manufactured by Fischer Instruments K.K. (item number: HM2000S), and the $HM_{B'}$ and $\eta_{ITB'}$ (= $W_{elast}/W_{total}$) were measured based on an indentation test method according to ISO14577-1. The component (B) corresponded to the hydrolyzed condensate of the corresponding component (B'), as described below, and thus the respective values of the Martens hardness $HM_B$ and the elastic recovery rate $\eta_{ITB}$ were determined under the assumption that the respective values of the Martens hardness $HM_{B'}$ and the elastic recovery rate $\eta_{ITB'}$ of the component (B'), measured as described above, were well matched with the values of the Martens hardness $HM_B$ and the elastic recovery rate $\eta_{ITB}$ of the matrix component (B).

(11) Evaluation of abrasion resistance of hard coating layer

Evaluation of the abrasion resistance of the hard coating layer was performed with a Taber type abrasion tester (No.101) manufactured by Yasuda Seiki Company, according to the standard of ASTM D1044. In other words, the Taber abrasion test was performed under conditions of an abrasive wheel CS-10F and a load of 500 g, the haze before the test and the hazes at rotation numbers of 500 and 1000 were each measured with a turbidimeter (item number: NDH5000SP) manufactured by Nippon Denshoku Industries Co., Ltd., according to the method prescribed in JIS R3212, and the difference from the haze before the test was determined to thereby evaluate the abrasion resistance as follows.

Rotation number: 500

A: a difference in haze of 4 or less
B: a difference in haze of more than 4 and 10 or less
C: a difference in haze of more than 10

Rotation number: 1000

A: a difference in haze of 2 or less
B: a difference in haze of more than 2 and 10 or less
C: a difference in haze of more than 10 and 30 or less
D: a difference in haze of more than 30

(12) Evaluation of transparency

The transparency of the laminate was determined as the total light transmittance measured with a turbidimeter (item number: NDH5000SP) manufactured by Nippon Denshoku Industries Co., Ltd., and evaluated as follows.

A: 90% or more
B: 80% or more and less than 90%
C: less than 80%

(13) Measurement of initial adhesiveness of hard coating layer

<Tape adhesiveness>

The initial adhesiveness of the hard coating layer was evaluated by applying and peeling a tape (tape according to the cross-cut test/cross-scoring test, manufactured by Nichiban Co., Ltd.) to and from the hard coating layer of the laminate, and confirming whether or not the hard coating layer was retained on the adhesion layer-applied substrate.

<Cross-cut test>

The hard coating layer of the laminate was cut into 25 cells at 1-mm intervals by a cutter blade according to a cross-cut method prescribed in JIS K5600-5-6, a tape (tape according to the cross-cut test/cross-scoring test, manufactured by Nichiban Co., Ltd.) was applied to and peeled from the cells, and the degree of peeling of the coating film was rated on a 6-point scale of Classes 0 to 5. Class 0 means the highest adhesiveness, and, as the Class number is larger, the adhesiveness is lower.

(14) Volume fraction of polymer nanoparticle (A) based on total of polymer nanoparticle (A) and matrix component (B)

The volume fraction of the polymer nanoparticle (A) based on the total of the polymer nanoparticle (A) and the matrix component (B) was determined by observing a cross section of the coating film (C) at a magnification of 50,000x with a scanning electron microscope and calculating the area ratio from the total area occupied by the nanoparticle (A) in one field of view having a size of 1 $\mu$m $\times$ 1 $\mu$m.

(15) Content of hydrolyzable silicon compound (a) in polymer nanoparticle (A)

The content of the hydrolyzable silicon compound (a) in the polymer nanoparticle (A) was calculated from the proportion of the weight in terms of a complete hydrolytic condensation product based on the weight where the amounts of water, dodecylbenzene sulfonic acid, and ammonium persulfate were removed from the total amount of loading in preparation of an aqueous polymer nanoparticle (A) dispersion described below. The weight in terms of a complete hydrolytic condensation product was defined as the weight when 100% of a hydrolyzable group of the hydrolyzable silicon compound used in the loading was hydrolyzed and converted into a SiOH group, and further completely condensed into siloxane.

(16) Evaluation of interference plaque

The surface on the substrate of the laminate was daubed with black ink, the surface on the hard coating layer of the laminate was disposed so as to be under a three-wavelength fluorescent light, and the presence of an interference plaque was visually confirmed. In other words, the interference plaque was evaluated according to the following criteria.

S: no interference pattern observed at all
A: not corresponding to B and C below and not causing any problems in practical use
B: any interference plaque slightly observed
C: any interference plaque clearly observed

(17) Evaluation of weather resistance

<Primary evaluation>

The weather resistance was determined by performing a cycle operation in which one cycle of 120 minutes in total included rainfall and irradiation performed at the same time for 18 minutes and then irradiation for 112 minutes, at an irradiation illuminance of 60 W/m$^2$ and a panel temperature of 63°C by use of a xenon weather meter (manufactured by Suga Test Instruments Co., Ltd.) according to JIS K5600, and observing the hard coating layer after irradiation at 500 MJ/m$^2$, and was evaluated as follows.

A: no change in outer appearance
B: discolored

<Secondary evaluation>

The weather resistance of the laminate was determined by performing ultraviolet irradiation from a xenon arc (product name SX-75 manufactured by Suga Test Instruments Co., Ltd.) according to the conditions of the standards of ANSI/SAE Z26.1, to provide the $\Delta$b before and after irradiation at 2000 MJ/m$^2$, and was evaluated as follows.

S: $\Delta$b < 1
A: $\Delta$b = 1 to 4
B: $\Delta$b> 4

(18) Average particle size of adhesive emulsion particle (F), and average particle size of composite of adhesive emulsion particle (F) and inorganic oxide (G)

An aqueous adhesive emulsion particle (F) dispersion or an aqueous composite particle dispersion described below was subjected to dynamic light scattering type particle size distribution measurement. In other words, the cumulant particle size of the adhesive emulsion particle (F) or the composite particle was each measured with a dynamic light scattering type particle size distribution measuring apparatus manufactured by Otsuka Electronics Co., Ltd. (item number:

ELSZ-1000), and defined as the average particle size.

[Preparation of aqueous adhesive emulsion particle (F) dispersion]

<Aqueous adhesive emulsion particle (F-2) dispersion>

Polymerization according to a common emulsion polymerization method was performed with 410 g of ion-exchange water, 22 g of an aqueous 10% dodecylbenzene sulfonic acid solution, 65 g of dimethyldimethoxysilane and 37 g of phenyltrimethoxysilane in a reactor having a reflux condenser, a driptank, a thermometer and a stirring apparatus in an environment at 80°C. After the polymerization, polymerization according to a common emulsion polymerization method was further performed with 33 g of an aqueous 2% ammonium persulfate solution, 50 g of butyl acrylate, 90 g of diethylacrylamide, 120 g of tetraethoxysilane, 50 g of phenyltrimethoxysilane, 3 g of acrylic acid, 1.3 g of 3-methacryloxypropyltrimethoxysilane, 8 g of a reactive emulsifier (trade name "Adekariasoap SR-1025" manufactured by Adeka Corporation, aqueous 25% solid content solution) and 1000 g of ion-exchange water, the resultant was filtered with a 100-mesh wire gauze, and the concentration was adjusted by purified water, thereby providing an aqueous adhesive emulsion particle (F-2) dispersion. The resulting adhesive emulsion particle (F-2) had a core/shell structure, and the solid content thereof was 14.2% by mass.

<Aqueous adhesive emulsion particle (F-3) dispersion>

Polymerization according to a common emulsion polymerization method was performed with 960 g of ion-exchange water, 22 g of an aqueous 10% dodecylbenzene sulfonic acid solution, 25 g of an aqueous 2% ammonium persulfate solution, 45 g of butyl acrylate, 45 g of 2-hydroxyethyl methacrylate, 23 g of diethylacrylamide, 1 g of acrylic acid and 3 g of a reactive emulsifier (trade name "Adekariasoap SR-1025" manufactured by Adeka Corporation, aqueous 25% solid content solution) in a reactor having a reflux condenser, a driptank, a thermometer and a stirring apparatus in an environment at 80°C, the resultant was filtered with a 100-mesh wire gauze, and the concentration was adjusted by purified water, thereby providing an aqueous adhesive emulsion particle (F-3) dispersion. The solid content of the resulting adhesive emulsion particle (F-3) was 10% by mass.

[Preparation of composite of adhesive emulsion particle (F) and inorganic oxide (G)]

<Aqueous composite particle (FG-1) dispersion>

Polymerization according to a common emulsion polymerization method was performed with 960 g of ion-exchange water, 778 g of colloidal silica "Snowtex PSSO" (trade name, manufactured by Nissan Chemical Corporation, solid content: 15% by mass) dispersed in water, serving as the inorganic oxide (G), 22 g of an aqueous 10% dodecylbenzene sulfonic acid solution, 25 g of an aqueous 2% ammonium persulfate solution, 45 g of butyl acrylate, 45 g of 2-hydroxyethyl methacrylate, 23 g of diethylacrylamide, 1 g of acrylic acid and 3 g of a reactive emulsifier (trade name "Adekariasoap SR-1025" manufactured by Adeka Corporation, aqueous 25% solid content solution) in a reactor having a reflux condenser, a driptank, a thermometer and a stirring apparatus in an environment at 80°C. After the polymerization, the pH was adjusted to 9 by an aqueous 25% ammonia solution, and the resultant was filtered with a 100-mesh wire gauze, thereby providing an aqueous composite particle (FG-1) dispersion. In the resulting composite particle (FG-1), the mass ratio of the adhesive emulsion particle (F) and the inorganic oxide (G) (adhesive emulsion particle (F)/inorganic oxide (G)) was 1/1, the average particle size was 80 nm, and the solid content was 12% by mass.

<Aqueous composite particle (FG-2) dispersion>

Polymerization according to a common emulsion polymerization method was performed with 570 g of ion-exchange water, 1150 g of colloidal silica "Snowtex O" (trade name, manufactured by Nissan Chemical Corporation, solid content: 20% by mass) dispersed in water, serving as the inorganic oxide (G), 22 g of an aqueous 10% dodecylbenzene sulfonic acid solution, 25 g of an aqueous 2% ammonium persulfate solution, 45 g of butyl acrylate, 45 g of 2-hydroxyethyl methacrylate, 23 g of diethylacrylamide, 1 g of acrylic acid and 3 g of a reactive emulsifier (trade name "Adekariasoap SR-1025" manufactured by Adeka Corporation, aqueous 25% solid content solution) in a reactor having a reflux condenser, a driptank, a thermometer and a stirring apparatus in an environment at 80°C. After the polymerization, the pH was adjusted to 9 by an aqueous 25% ammonia solution, and the resultant was filtered with a 100-mesh wire gauze, thereby providing an aqueous composite particle (FG-2) dispersion. In the resulting composite particle (FG-2), the mass ratio of the adhesive emulsion particle (F) and the inorganic oxide (G) (adhesive emulsion particle (F)/inorganic oxide (G)) was 1/1, the average particle size was 40 nm, and the solid content was 12% by mass.

<Aqueous composite particle (FG-3) dispersion>

Polymerization according to a common emulsion polymerization method was performed with 840 g of ion-exchange water, 320 g of colloidal silica "Snowtex PSSO" (trade name, manufactured by Nissan Chemical Corporation, solid content: 15% by mass) dispersed in water, serving as the inorganic oxide (G), 22 g of an aqueous 10% dodecylbenzene sulfonic acid solution, 25 g of an aqueous 2% ammonium persulfate solution, 45 g of butyl acrylate, 45 g of 2-hydroxyethyl methacrylate, 23 g of diethylacrylamide, 1 g of acrylic acid and 3 g of a reactive emulsifier (trade name "Adekariasoap SR-1025" manufactured by Adeka Corporation, aqueous 25% solid content solution) in a reactor having a reflux condenser, a driptank, a thermometer and a stirring apparatus in an environment at 80°C. After the polymerization, the pH was adjusted to 9 by an aqueous 25% ammonia solution, and the resultant was filtered with a 100-mesh wire gauze, thereby providing an aqueous composite particle (FG-3) dispersion. In the resulting composite particle (FG-3), the mass ratio of the adhesive emulsion particle (F) and the inorganic oxide (G) (adhesive emulsion particle (F)/inorganic oxide (G)) was 7/3, the average particle size was 120 nm, and the solid content was 12% by mass.

<Aqueous composite particle (FG-4) dispersion>

Polymerization according to a common emulsion polymerization method was performed with 1200 g of ion-exchange water, 1750 g of colloidal silica "Snowtex PSSO" (trade name, manufactured by Nissan Chemical Corporation, solid content: 15% by mass) dispersed in water, serving as the inorganic oxide (G), 22 g of an aqueous 10% dodecylbenzene sulfonic acid solution, 25 g of an aqueous 2% ammonium persulfate solution, 45 g of butyl acrylate, 45 g of 2-hydroxyethyl methacrylate, 23 g of diethylacrylamide, 1 g of acrylic acid and 3 g of a reactive emulsifier (trade name "Adekariasoap SR-1025" manufactured by Adeka Corporation, aqueous 25% solid content solution) in a reactor having a reflux condenser, a driptank, a thermometer and a stirring apparatus in an environment at 80°C. After the polymerization, the pH was adjusted to 9 by an aqueous 25% ammonia solution, and the resultant was filtered with a 100-mesh wire gauze, thereby providing an aqueous composite particle (FG-4) dispersion. In the resulting composite particle (FG-4), the mass ratio of the adhesive emulsion particle (F) and the inorganic oxide (G) (adhesive emulsion particle (F)/inorganic oxide (G)) was 3/7, the average particle size was 60 nm, and the solid content was 12% by mass.

<Aqueous composite particle (FG-5) dispersion>

Polymerization according to a common emulsion polymerization method was performed with 960 g of ion-exchange water, 778 g of colloidal silica "Snowtex PSSO" (trade name, manufactured by Nissan Chemical Corporation, solid content: 15% by mass) dispersed in water, serving as the inorganic oxide (G), 22 g of an aqueous 10% dodecylbenzene sulfonic acid solution, 25 g of an aqueous 2% ammonium persulfate solution, 15 g of butyl acrylate, 45 g of 2-hydroxyethyl methacrylate, 53 g of diethylacrylamide, 1 g of acrylic acid and 3 g of a reactive emulsifier (trade name "Adekariasoap SR-1025" manufactured by Adeka Corporation, aqueous 25% solid content solution) in a reactor having a reflux condenser, a driptank, a thermometer and a stirring apparatus in an environment at 80°C. After the polymerization, the pH was adjusted to 9 by an aqueous 25% ammonia solution, and the resultant was filtered with a 100-mesh wire gauze, thereby providing an aqueous composite particle (FG-5) dispersion. In the resulting composite particle (FG-5), the mass ratio of the adhesive emulsion particle (F) and the inorganic oxide (G) (adhesive emulsion particle (F)/inorganic oxide (G)) was 1/1, the average particle size was 100 nm, and the solid content was 12% by mass.

<Aqueous composite particle (FG-6) dispersion>

Polymerization according to a common emulsion polymerization method was performed with 960 g of ion-exchange water, 778 g of colloidal silica "Snowtex PSSO" (trade name, manufactured by Nissan Chemical Corporation, solid content: 15% by mass) dispersed in water, serving as the inorganic oxide (G), 22 g of an aqueous 10% dodecylbenzene sulfonic acid solution, 25 g of an aqueous 2% ammonium persulfate solution, 63 g of butyl acrylate, 45 g of 2-hydroxyethyl methacrylate, 5 g of diethylacrylamide, 1 g of acrylic acid and 3 g of a reactive emulsifier (trade name "Adekariasoap SR-1025" manufactured by Adeka Corporation, aqueous 25% solid content solution) in a reactor having a reflux condenser, a driptank, a thermometer and a stirring apparatus in an environment at 80°C. After the polymerization, the pH was adjusted to 9 by an aqueous 25% ammonia solution, and the resultant was filtered with a 100-mesh wire gauze, thereby providing an aqueous composite particle (FG-6) dispersion. In the resulting composite particle (FG-6), the mass ratio of the adhesive emulsion particle (F) and the inorganic oxide (G) (adhesive emulsion particle (F)/inorganic oxide (G)) was 1/1, the average particle size was 80 nm, and the solid content was 12% by mass.

<Aqueous composite particle (FG-7) dispersion>

Polymerization according to a common emulsion polymerization method was performed with 960 g of ion-exchange water, 778 g of colloidal silica "Snowtex PSSO" (trade name, manufactured by Nissan Chemical Corporation, solid content: 15% by mass) dispersed in water, serving as the inorganic oxide (G), 22 g of an aqueous 10% dodecylbenzene sulfonic acid solution, 25 g of an aqueous 2% ammonium persulfate solution, 25 g of butyl acrylate, 65 g of 2-hydroxyethyl methacrylate, 23 g of diethylacrylamide, 1 g of acrylic acid and 3 g of a reactive emulsifier (trade name "Adekariasoap SR-1025" manufactured by Adeka Corporation, aqueous 25% solid content solution) in a reactor having a reflux condenser, a driptank, a thermometer and a stirring apparatus in an environment at 80°C. After the polymerization, the pH was adjusted to 9 by an aqueous 25% ammonia solution, and the resultant was filtered with a 100-mesh wire gauze, thereby providing an aqueous composite particle (FG-7) dispersion. In the resulting composite particle (FG-7), the mass ratio of the adhesive emulsion particle (F) and the inorganic oxide (G) (adhesive emulsion particle (F)/inorganic oxide (G)) was 1/1, the average particle size was 80 nm, and the solid content was 12% by mass.

<Aqueous composite particle (FG-8) dispersion>

Polymerization according to a common emulsion polymerization method was performed with 960 g of ion-exchange water, 778 g of colloidal silica "Snowtex PSSO" (trade name, manufactured by Nissan Chemical Corporation, solid content: 15% by mass) dispersed in water, serving as the inorganic oxide (G), 22 g of an aqueous 10% dodecylbenzene sulfonic acid solution, 25 g of an aqueous 2% ammonium persulfate solution, 75 g of butyl acrylate, 15 g of 2-hydroxyethyl methacrylate, 23 g of diethylacrylamide, 1 g of acrylic acid and 3 g of a reactive emulsifier (trade name "Adekariasoap SR-1025" manufactured by Adeka Corporation, aqueous 25% solid content solution) in a reactor having a reflux condenser, a driptank, a thermometer and a stirring apparatus in an environment at 80°C. After the polymerization, the pH was adjusted to 9 by an aqueous 25% ammonia solution, and the resultant was filtered with a 100-mesh wire gauze, thereby providing an aqueous composite particle (FG-8) dispersion. In the resulting composite particle (FG-8), the mass ratio of the adhesive emulsion particle (F) and the inorganic oxide (G) (adhesive emulsion particle (F)/inorganic oxide (G)) was 1/1, the average particle size was 80 nm, and the solid content was 12% by mass.

<Aqueous composite particle (FG-9) dispersion>

Polymerization according to a common emulsion polymerization method was performed with 130 g of ion-exchange water, 200 g of cerium oxide sol "Needral B-10" (trade name, manufactured by Taki Chemical Co., Ltd., primary average particle size: 8 nm, solid content: 10% by mass) dispersed in water, serving as the inorganic oxide (G), 4 g of an aqueous 10% dodecylbenzene sulfonic acid solution, 5 g of an aqueous 2% ammonium persulfate solution, 5 g of butyl acrylate, 5 g of 2-hydroxyethyl methacrylate, 10 g of diethylacrylamide, 0.1 g of acrylic acid and 0.5 g of a reactive emulsifier (trade name "Adekariasoap SR-1025" manufactured by Adeka Corporation, aqueous 25% solid content solution) in a reactor having a reflux condenser, a driptank, a thermometer and a stirring apparatus in an environment at 80°C. After the polymerization, the resultant was filtered with a 100-mesh wire gauze, thereby providing an aqueous composite particle (FG-9) dispersion. In the resulting composite particle (FG-9), the mass ratio of the adhesive emulsion particle (F) and the inorganic oxide (G) (adhesive emulsion particle (F)/inorganic oxide (G)) was 1/1, the average particle size was 30 nm, and the solid content was 11% by mass.

[Preparation of aqueous polymer nanoparticle (A) dispersion]

An aqueous polymer nanoparticle (A) dispersion for use in Examples described below was synthesized as follows.

<Aqueous polymer nanoparticle (A-1) dispersion>

Polymerization according to a common emulsion polymerization method was performed with 1500 g of ion-exchange water, 45 g of an aqueous 10% dodecylbenzene sulfonic acid solution, 105 g of methyltrimethoxysilane, 23 g of phenyltrimethoxysilane and 27 g of tetraethoxysilane in a reactor having a reflux condenser, a driptank, a thermometer and a stirring apparatus in an environment at 50°C. After the polymerization, the temperature was set to 80°C, thereafter polymerization according to a common emulsion polymerization method was further performed with 43 g of an aqueous 2% ammonium persulfate solution, 11 g of butyl acrylate, 12 g of diethylacrylamide, 1 g of acrylic acid and 1 g of 3-methacryloxypropyltrimethoxysilane, and the resultant was filtered with a 100-mesh wire gauze, thereby providing an aqueous polymer nanoparticle (A-1) dispersion. The resulting polymer nanoparticle (A-1) had a core/shell structure, and the average particle size and the solid content thereof were respectively 60 nm and 5.9% by mass.

<Aqueous polymer nanoparticle (A-2) dispersion>

Polymerization according to a common emulsion polymerization method was performed with 1600 g of ion-exchange water, 12 g of dodecylbenzenesulfonic acid, 185 g of dimethyldimethoxysilane and 151 g of phenyltrimethoxysilane in a reactor having a reflux condenser, a driptank, a thermometer and a stirring apparatus in an environment at 80°C. After the polymerization, polymerization according to a common emulsion polymerization method was further performed with 40 g of an aqueous 2% ammonium persulfate solution, 150 g of butyl acrylate, 165 g of diethylacrylamide, 30 g of tetraethoxysilane, 145 g of phenyltrimethoxysilane, 3 g of acrylic acid, 1.3 g of 3-methacryloxypropyltrimethoxysilane, 13 g of a reactive emulsifier (trade name "Adekariasoap SR-1025" manufactured by Adeka Corporation, aqueous 25% solid content solution) and 1900 g of ion-exchange water, the resultant was filtered with a 100-mesh wire gauze, and the concentration was adjusted by purified water, thereby providing an aqueous polymer nanoparticle (A-2) dispersion. The resulting polymer nanoparticle (A-2) had a core/shell structure, and the average particle size and the solid content thereof were respectively 40 nm and 10.1% by mass.

<Aqueous polymer nanoparticle (A-3) dispersion>

Polymerization according to a common emulsion polymerization method was performed with 1500 g of ion-exchange water, 90 g of an aqueous 10% dodecylbenzene sulfonic acid solution, 105 g of methyltrimethoxysilane, 23 g of phenyltrimethoxysilane and 27 g of tetraethoxysilane in a reactor having a reflux condenser, a driptank, a thermometer and a stirring apparatus in an environment at 50°C. After the polymerization, the temperature was set to 80°C, thereafter polymerization according to a common emulsion polymerization method was further performed with 43 g of an aqueous 2% ammonium persulfate solution, 11 g of butyl acrylate, 12 g of diethylacrylamide, 1 g of acrylic acid and 1 g of 3-methacryloxypropyltrimethoxysilane, and the resultant was filtered with a 100-mesh wire gauze, thereby providing an aqueous polymer nanoparticle (A-3) dispersion. The resulting polymer nanoparticle (A-3) had a core/shell structure, and the average particle size and the solid content thereof were respectively 30 nm and 5.9% by mass.

<Aqueous polymer nanoparticle (A-4) dispersion>

Polymerization according to a common emulsion polymerization method was performed with 1500 g of ion-exchange water, 20 g of an aqueous 10% dodecylbenzene sulfonic acid solution, 105 g of methyltrimethoxysilane, 23 g of phenyltrimethoxysilane and 27 g of tetraethoxysilane in a reactor having a reflux condenser, a driptank, a thermometer and a stirring apparatus in an environment at 50°C. After the polymerization, the temperature was set to 80°C, thereafter polymerization according to a common emulsion polymerization method was further performed with 43 g of an aqueous 2% ammonium persulfate solution, 11 g of butyl acrylate, 12 g of diethylacrylamide, 1 g of acrylic acid and 1 g of 3-methacryloxypropyltrimethoxysilane, and the resultant was filtered with a 100-mesh wire gauze, thereby providing an aqueous polymer nanoparticle (A-4) dispersion. The resulting polymer nanoparticle (A-4) had a core/shell structure, and the average particle size and the solid content thereof were respectively 120 nm and 5.9% by mass.

[Preparation of coating composition liquid of matrix raw material component (B')]

A coating composition liquid of the matrix raw material component (B'), for use in Examples described below, was prepared as follows.

<Coating composition liquid of matrix raw material component (B'-1)>

A coating composition liquid of matrix raw material component (B'-1) was obtained by mixing 66 g of trimethoxysilane and 63 g of tetraethoxysilane each serving as the hydrolyzable silicon compound (b), and 333 g of colloidal silica "Snowtex OXS" (trade name, manufactured by Nissan Chemical Corporation, solid content: 10% by mass, average particle size: 5 nm) dispersed in water, serving as the inorganic oxide (D), under a room temperature condition.

<Coating composition liquid of matrix raw material component (B'-2)>

A coating composition liquid of matrix raw material component (B'-2) was obtained by mixing 48 g of tetraethoxysilane and 81 g of tris-(trimethoxysilylpropyl)isocyanurate, each serving as the hydrolyzable silicon compound (b), and 333 g of colloidal silica "Snowtex OXS" dispersed in water, serving as the inorganic oxide (D), under a room temperature condition.

<Coating composition liquid of matrix raw material component (B'-3)>

A coating composition liquid of matrix raw material component (B'-3) was obtained by mixing 35 g of 1,2-bis(triethoxysilyl)ethane and 81 g of tris-(trimethoxysilylpropyl)isocyanurate, each serving as the hydrolyzable silicon compound (b), and 333 g of colloidal silica "Snowtex OXS" dispersed in water, serving as the inorganic oxide (D), under a room temperature condition.

<Coating composition liquid of matrix raw material component (B'-4)>

A coating composition liquid of matrix raw material component (B'-4) was obtained by mixing 66 g of trimethoxysilane and 63 g of tetraethoxysilane, each serving as the hydrolyzable silicon compound (b), and 333 g of cerium oxide sol "Needral B-10" (trade name, manufactured by Taki Chemical Co., Ltd., average particle size: 8 nm, solid content: 10% by mass) dispersed in water, serving as the inorganic oxide (D), under a room temperature condition.

<Coating composition liquid of matrix raw material component (B'-5)>

A coating composition liquid of matrix raw material component (B'-5) was obtained by mixing 66 g of trimethoxysilane and 63 g of tetraethoxysilane, each serving as the hydrolyzable silicon compound (b), and 317 g of colloidal silica "Snowtex OXS" dispersed in water and 16 g of cerium oxide sol "Needral B-10" dispersed in water, each serving as the inorganic oxide (D), under a room temperature condition.

<Coating composition liquid of matrix raw material component (B'-6)>

A coating composition liquid of matrix raw material component (B'-6) was obtained by mixing 97 g of tetraethoxysilane serving as the hydrolyzable silicon compound (b) and 300 g of colloidal silica "Snowtex OS" (trade name, manufactured by Nissan Chemical Corporation, solid content: 20% by mass, average particle size: 8 nm) dispersed in water, serving as the inorganic oxide (D), under a room temperature condition.

<Coating composition liquid of matrix raw material component (B'-7)>

A coating composition liquid of matrix raw material component (B'-7) was obtained by mixing 40 g of tetraethoxysilane "KBE04" (trade name, manufactured by Shin-Etsu Chemical Co., Ltd.) and 68 g of tris-(trimethoxysilylpropyl)isocyanurate "KBM9659" (trade name, manufactured by Shin-Etsu Chemical Co., Ltd.), each serving as the hydrolyzable silicon compound (b), and 282 g of colloidal silica "Snowtex OXS" (trade name, manufactured by Nissan Chemical Corporation, solid content: 10% by mass, average particle size: 5 nm) dispersed in water and 7 g of zirconium oxide sol "Biral Zr-C20" (trade name, manufactured by Taki Chemical Co., Ltd., solid content: 20% by mass, average particle size: 10 nm) dispersed in water, each serving as the inorganic oxide (D), under a room temperature condition.

<Coating composition liquid of matrix raw material component (B'-8)>

A coating composition liquid of matrix raw material component (B'-8) was obtained by mixing 40 g of tetraethoxysilane "KBE04" (trade name, manufactured by Shin-Etsu Chemical Co., Ltd.) and 68 g of tris-(trimethoxysilylpropyl)isocyanurate "KBM9659" (trade name, manufactured by Shin-Etsu Chemical Co., Ltd.), each serving as the hydrolyzable silicon compound (b), and 282 g of colloidal silica "Snowtex OXS" (trade name, manufactured by Nissan Chemical Corporation, solid content: 10% by mass, average particle size: 5 nm) dispersed in water and 23 g of titanium oxide sol "Tainoc NRA-6" (trade name, manufactured by Taki Chemical Co., Ltd., solid content: 6% by mass, average particle size: 30 nm) dispersed in water, each serving as the inorganic oxide (D), under a room temperature condition.

<Coating composition liquid of matrix raw material component (B'-9)>

A coating composition liquid of matrix raw material component (B'-9) was obtained by mixing 40 g of tetraethoxysilane "KBE04" (trade name, manufactured by Shin-Etsu Chemical Co., Ltd.) and 68 g of tris-(trimethoxysilylpropyl)isocyanurate "KBM9659" (trade name, manufactured by Shin-Etsu Chemical Co., Ltd.), each serving as the hydrolyzable silicon compound (b), and 282 g of colloidal silica "Snowtex OXS" (trade name, manufactured by Nissan Chemical Corporation, solid content: 10% by mass, average particle size: 5 nm) dispersed in water and 23 g of niobium oxide sol "Biral Nb-G6000" (trade name, manufactured by Taki Chemical Co., Ltd., solid content: 6% by mass, average particle size: 5 nm) dispersed in water, each serving as the inorganic oxide (D), under a room temperature condition.

[Preparation of composition liquid of adhesion layer]

<Composition liquid of adhesion layer (Z-1)>

A composition liquid of adhesion layer (Z-1) was obtained by mixing 15 g of an aqueous E2050S dispersion liquid (manufactured by Asahi Kasei Corporation, solid content concentration: 46%, minimum film-forming temperature: 55°C), serving as adhesive emulsion particle (F-1), 14 g of spherical colloidal silica "Snowtex C" (trade name, manufactured by Nissan Chemical Corporation, solid content: 20% by mass, primary average particle size: 15 nm, minimum film-forming temperature: more than 150°C) dispersed in water, serving as the inorganic oxide (G), 2.1 g of Tinuvin400 (trade name, manufactured by BASF Japan Ltd.) serving as the light-shielding agent, 0.1 g of Tinuvin123 (trade name, manufactured by BASF Japan Ltd.) serving as the light stabilizer, 33 g of water and 35 g of ethanol, under a room temperature condition. In the composition liquid of adhesion layer (Z-1), the solid content concentration was 12% by mass and the solid content ratio of the respective components was E2050S/Snowtex C/Tinuvin400/Tinuvin123 = 100/40/30/2.

<Composition liquid of adhesion layer (Z-2)>

A composition liquid of adhesion layer (Z-2) was obtained by mixing 15 g of an aqueous E2050S dispersion liquid serving as adhesive emulsion particle (F-1), 14 g of spherical colloidal silica "Snowtex C" dispersed in water, serving as the inorganic oxide (G), 2.1 g of Tinuvin400 serving as the light-shielding agent, 33 g of water and 35 g of ethanol, under a room temperature condition. In the composition liquid of adhesion layer (Z-2), the solid content concentration was 12% by mass and the solid content ratio of the respective components was E2050S/Snowtex C/Tinuvin400 = 100/40/30.

<Composition liquid of adhesion layer (Z-3)>

A composition liquid of adhesion layer (Z-3) was obtained by mixing 28 g of adhesive emulsion particle (F-2) (minimum film-forming temperature 120°C), obtained as described above, 20 g of spherical colloidal silica "Snowtex OS" (trade name, manufactured by Nissan Chemical Corporation, solid content: 20% by mass, primary average particle size: 8 nm, minimum film-forming temperature: more than 150°C) dispersed in water, serving as the inorganic oxide (G), 6.0 g of tris-(trimethoxysilylpropyl)isocyanurate, 13 g of water and 33 g of ethanol, under a room temperature condition. In the composition liquid of adhesion layer (Z-3), the solid content concentration was 12% by mass and the solid content ratio of the respective components was E2050S/Snowtex OS/tris-(trimethoxysilylpropyl)isocyanurate = 100/100/100.

<Composition liquid of adhesion layer (Z-4)>

A composition liquid of adhesion layer (Z-4) was obtained in the same manner as in preparation of the composition liquid of adhesion layer (Z-1) except that colloidal silica "Snowtex PSSO" (trade name, manufactured by Nissan Chemical Corporation, solid content: 15% by mass, average shorter diameter: 15 nm, average longer diameter: 100 nm, aspect ratio: 7) having a linked structure, dispersed in water, was used as the inorganic oxide (G). In the composition liquid of adhesion layer (Z-4), the solid content concentration was 12% by mass and the solid content ratio of the respective components was E2050S/Snowtex PSSO/Tinuvin400/Tinuvin123 = 100/40/30/2.

<Composition liquid of adhesion layer (Z-5)>

A composition liquid of adhesion layer (Z-5) was obtained in the same manner as in preparation of the composition liquid of adhesion layer (Z-1) except that F-3 was used as the adhesive emulsion particle. In the composition liquid of adhesion layer (Z-5), the solid content concentration was 10% by mass and the solid content ratio of the respective components was F-3/Snowtex C/Tinuvin400/Tinuvin123 = 100/100/16/3.

<Composition liquid of adhesion layer (Z-6)>

A composition liquid of adhesion layer (Z-6) was obtained in the same manner as in preparation of the composition liquid of adhesion layer (Z-5) except that polyisocyanate A (WT30-100 manufactured by Asahi Kasei Corporation) was further used as the curing agent. In the composition liquid of adhesion layer (Z-6), the solid content concentration was 10% by mass and the solid content ratio of the respective components was F-3/Snowtex C/Tinuvin400/Tinuvin123/polyisocyanate A = 100/100/16/3/40.

<Composition liquid of adhesion layer (Z-7)>

A composition liquid of adhesion layer (Z-7) was obtained in the same manner as in preparation of the composition liquid of adhesion layer (Z-6) except that composite particle (FG-1) was used as the adhesive emulsion particle and as the inorganic oxide. In the composition liquid of adhesion layer (Z-7), the solid content concentration was 10% by mass and the solid content ratio of the respective components was FG-1/Tinuvin400/Tinuvin123/polyisocyanate A = 200/16/3/40.

<Composition liquid of adhesion layer (Z-8)>

A composition liquid of adhesion layer (Z-8) was obtained in the same manner as in preparation of the composition liquid of adhesion layer (Z-7) except that composite particle (FG-2) was used. In the composition liquid of adhesion layer (Z-8), the solid content concentration was 10% by mass and the solid content ratio of the respective components was FG-2/Tinuvin400/Tinuvin123/polyisocyanate A = 200/16/3/40.

<Composition liquid of adhesion layer (Z-9)>

A composition liquid of adhesion layer (Z-9) was obtained in the same manner as in preparation of the composition liquid of adhesion layer (Z-7) except that composite particle (FG-3) was used. In the composition liquid of adhesion layer (Z-9), the solid content concentration was 10% by mass and the solid content ratio of the respective components was FG-3/Tinuvin400/Tinuvin123/polyisocyanate A = 200/16/3/40.

<Composition liquid of adhesion layer (Z-10)>

A composition liquid of adhesion layer (Z-10) was obtained in the same manner as in preparation of the composition liquid of adhesion layer (Z-7) except that composite particle (FG-4) was used. In the composition liquid of adhesion layer (Z-10), the solid content concentration was 10% by mass and the solid content ratio of the respective components was FG-4/Tinuvin400/Tinuvin123/polyisocyanate A = 200/16/3/40.

<Composition liquid of adhesion layer (Z-11)>

A composition liquid of adhesion layer (Z-11) was obtained in the same manner as in preparation of the composition liquid of adhesion layer (Z-7) except that composite particle (FG-5) was used. In the composition liquid of adhesion layer (Z-11), the solid content concentration was 10% by mass and the solid content ratio of the respective components was FG-5/Tinuvin400/Tinuvin123/polyisocyanate A = 200/16/3/40.

<Composition liquid of adhesion layer (Z-12)>

A composition liquid of adhesion layer (Z-12) was obtained in the same manner as in preparation of the composition liquid of adhesion layer (Z-7) except that composite particle (FG-6) was used. In the composition liquid of adhesion layer (Z-12), the solid content concentration was 10% by mass and the solid content ratio of the respective components was FG-6/Tinuvin400/Tinuvin123/polyisocyanate A = 200/16/3/40.

<Composition liquid of adhesion layer (Z-13)>

A composition liquid of adhesion layer (Z-13) was obtained in the same manner as in preparation of the composition liquid of adhesion layer (Z-7) except that composite particle (FG-7) was used. In the composition liquid of adhesion layer (Z-13), the solid content concentration was 10% by mass and the solid content ratio of the respective components was FG-7/Tinuvin400/Tinuvin123/polyisocyanate A = 200/16/3/40.

<Composition liquid of adhesion layer (Z-14)>

A composition liquid of adhesion layer (Z-14) was obtained in the same manner as in preparation of the composition liquid of adhesion layer (Z-7) except that composite particle (FG-8) was used. In the composition liquid of adhesion layer (Z-14), the solid content concentration was 10% by mass and the solid content ratio of the respective components was FG-8/Tinuvin400/Tinuvin123/polyisocyanate A = 200/16/3/40.

<Composition liquid of adhesion layer (Z-15)>

A composition liquid of adhesion layer (Z-15) was obtained in the same manner as in preparation of the composition liquid of adhesion layer (Z-7) except that the amount of polyisocyanate A was changed. In the composition liquid of adhesion layer (Z-15), the solid content concentration was 10% by mass and the solid content ratio of the respective components was FG-1/Tinuvin400/Tinuvin123/polyisocyanate A = 200/16/3/10.

<Composition liquid of adhesion layer (Z-16)>

A composition liquid of adhesion layer (Z-16) was obtained in the same manner as in preparation of the composition liquid of adhesion layer (Z-7) except that the amount of polyisocyanate A was changed. In the composition liquid of adhesion layer (Z-16), the solid content concentration was 10% by mass and the solid content ratio of the respective components was FG-1/Tinuvin400/Tinuvin123/polyisocyanate A = 200/16/3/70.

<Composition liquid of adhesion layer (Z-17)>

A composition liquid of adhesion layer (Z-17) was obtained in the same manner as in preparation of the composition liquid of adhesion layer (Z-7) except that polyisocyanate A was changed to polyisocyanate B (WM44-L70G manufactured by Asahi Kasei Corporation). In the composition liquid of adhesion layer (Z-17), the solid content concentration was 10% by mass and the solid content ratio of the respective components was FG-1/Tinuvin400/Tinuvin123/polyisocyanate B = 200/16/3/40.

<Composition liquid of adhesion layer (Z-18)>

A composition liquid of adhesion layer (Z-18) was obtained in the same manner as in preparation of the composition liquid of adhesion layer (Z-7) except that cerium oxide sol "Needral B-10" (trade name, manufactured by Taki Chemical Co., Ltd., primary average particle size: 8 nm, solid content: 10% by mass) dispersed in water was further used as the inorganic oxide (G). In the composition liquid of adhesion layer (Z-18), the solid content concentration was 10% by mass and the solid content ratio of the respective components was FG-1/Tinuvin400/Tinuvin123/polyisocyanate A /Needral B-10 = 200/16/3/44/5.

<Composition liquid of adhesion layer (Z-19)>

A composition liquid of adhesion layer (Z-18) was obtained in the same manner as in preparation of the composition liquid of adhesion layer (Z-7) except that composite particle (FG-9) was further used. In the composition liquid of adhesion layer (Z-18), the solid content concentration was 10% by mass and the solid content ratio of the respective components was FG-1/Tinuvin400/Tinuvin123/polyisocyanate A /FG-9 = 200/16/3/44/10.

<Composition liquid of adhesion layer (Z-20)>

A composition liquid of adhesion layer (Z-20) was obtained in the same manner as in preparation of the composition liquid of adhesion layer (Z-1) except that neither any light-shielding agent, nor any light stabilizer was used. In the composition liquid of adhesion layer (Z-20), the solid content concentration was 10% by mass and the solid content ratio of the respective components was E2050S/Snowtex C = 100/40.

<Composition liquid of adhesion layer (Z-21)>

A composition liquid of adhesion layer (Z-21) was obtained in the same manner as in preparation of the composition liquid of adhesion layer (Z-1) except that no inorganic oxide (G) was used. In the composition liquid of adhesion layer (Z-21), the solid content concentration was 10% by mass and the solid content ratio of the respective components was E2050S/Tinuvin400/Tinuvin123 = 100/30/2.

<Composition liquid of adhesion layer (Z-22)>

A composition liquid of adhesion layer (Z-22) was obtained in the same manner as in preparation of the composition liquid of adhesion layer (Z-1) except that no adhesive emulsion particle (F) was used. In the composition liquid of adhesion layer (Z-22), the solid content concentration was 10% by mass and the solid content ratio of the respective components was Snowtex C/Tinuvin400/Tinuvin123 = 40/30/2.

[Production of adhesion layer-applied substrate]

<Adhesion layer-applied substrate 1>

An adhesion layer was formed on one surface of a polycarbonate substrate (manufactured by C.I. TAKIRON Corporation, item number: 1600, thickness: 2 mm), as follows. In other words, the polycarbonate substrate was coated with the composition liquid of adhesion layer (Z-1) by use of a bar coater. Next, such a coating liquid was dried at 130°C for 2 hours, thereby forming adhesion layer 1 having a film thickness of 3.0 $\mu$m, on the polycarbonate substrate. Thus, adhesion layer-applied substrate 1 was obtained.

<Adhesion layer-applied substrate 2>

Adhesion layer-applied substrate 2 was obtained in the same manner as in production of adhesion layer-applied substrate 1 except that the film thickness of the adhesion layer was 1.0 $\mu$m.

<Adhesion layer-applied substrate 3>

Adhesion layer-applied substrate 3 was obtained in the same manner as in production of adhesion layer-applied substrate 1 except that the composition liquid of adhesion layer (Z-2) was used instead of the composition liquid of adhesion layer (Z-1).

<Adhesion layer-applied substrate 4>

Adhesion layer-applied substrate 4 was obtained in the same manner as in production of adhesion layer-applied substrate 1 except that the composition liquid of adhesion layer (Z-3) was used instead of the composition liquid of adhesion layer (Z-1) and the film thickness was 5.0 $\mu$m.

<Adhesion layer-applied substrate 5>

Adhesion layer-applied substrate 5 was obtained in the same manner as in production of adhesion layer-applied substrate 1 except that the composition liquid of adhesion layer (Z-4) was used instead of the composition liquid of adhesion layer (Z-1) and the film thickness was 5.0 $\mu$m.

<Adhesion layer-applied substrate 6>

Adhesion layer-applied substrate 6 was obtained in the same manner as in production of adhesion layer-applied substrate 1 except that the composition liquid of adhesion layer (Z-5) was used instead of the composition liquid of adhesion layer (Z-1) and the film thickness was 5.0 $\mu$m.

<Adhesion layer-applied substrate 7>

Adhesion layer-applied substrate 7 was obtained in the same manner as in production of adhesion layer-applied substrate 1 except that the composition liquid of adhesion layer (Z-6) was used instead of the composition liquid of adhesion layer (Z-1) and the film thickness was 5.0 $\mu$m.

<Adhesion layer-applied substrate 8>

Adhesion layer-applied substrate 8 was obtained in the same manner as in production of adhesion layer-applied substrate 1 except that the composition liquid of adhesion layer (Z-7) was used instead of the composition liquid of adhesion layer (Z-1) and the film thickness was 5.0 $\mu$m.

<Adhesion layer-applied substrate 9>

Adhesion layer-applied substrate 9 was obtained in the same manner as in production of adhesion layer-applied substrate 1 except that the composition liquid of adhesion layer (Z-8) was used instead of the composition liquid of adhesion layer (Z-1) and the film thickness was 5.0 $\mu$m.

EP 4 116 085 A1

<Adhesion layer-applied substrate 10>

Adhesion layer-applied substrate 10 was obtained in the same manner as in production of adhesion layer-applied substrate 1 except that the composition liquid of adhesion layer (Z-9) was used instead of the composition liquid of adhesion layer (Z-1) and the film thickness was 5.0 $\mu$m.

<Adhesion layer-applied substrate 11>

Adhesion layer-applied substrate 11 was obtained in the same manner as in production of adhesion layer-applied substrate 1 except that the composition liquid of adhesion layer (Z-10) was used instead of the composition liquid of adhesion layer (Z-1) and the film thickness was 5.0 $\mu$m.

<Adhesion layer-applied substrate 12>

Adhesion layer-applied substrate 12 was obtained in the same manner as in production of adhesion layer-applied substrate 1 except that the composition liquid of adhesion layer (Z-11) was used instead of the composition liquid of adhesion layer (Z-1) and the film thickness was 5.0 $\mu$m.

<Adhesion layer-applied substrate 13>

Adhesion layer-applied substrate 13 was obtained in the same manner as in production of adhesion layer-applied substrate 1 except that the composition liquid of adhesion layer (Z-12) was used instead of the composition liquid of adhesion layer (Z-1) and the film thickness was 5.0 $\mu$m.

<Adhesion layer-applied substrate 14>

Adhesion layer-applied substrate 14 was obtained in the same manner as in production of adhesion layer-applied substrate 1 except that the composition liquid of adhesion layer (Z-13) was used instead of the composition liquid of adhesion layer (Z-1) and the film thickness was 5.0 $\mu$m.

<Adhesion layer-applied substrate 15>

Adhesion layer-applied substrate 15 was obtained in the same manner as in production of adhesion layer-applied substrate 1 except that the composition liquid of adhesion layer (Z-14) was used instead of the composition liquid of adhesion layer (Z-1) and the film thickness was 5.0 $\mu$m.

<Adhesion layer-applied substrate 16>

Adhesion layer-applied substrate 16 was obtained in the same manner as in production of adhesion layer-applied substrate 1 except that the composition liquid of adhesion layer (Z-15) was used instead of the composition liquid of adhesion layer (Z-1) and the film thickness was 5.0 $\mu$m.

<Adhesion layer-applied substrate 17>

Adhesion layer-applied substrate 17 was obtained in the same manner as in production of adhesion layer-applied substrate 1 except that the composition liquid of adhesion layer (Z-16) was used instead of the composition liquid of adhesion layer (Z-1) and the film thickness was 5.0 $\mu$m.

<Adhesion layer-applied substrate 18>

Adhesion layer-applied substrate 18 was obtained in the same manner as in production of adhesion layer-applied substrate 1 except that the composition liquid of adhesion layer (Z-17) was used instead of the composition liquid of adhesion layer (Z-1) and the film thickness was 5.0 $\mu$m.

<Adhesion layer-applied substrate 19>

Adhesion layer-applied substrate 19 was obtained in the same manner as in production of adhesion layer-applied substrate 1 except that the composition liquid of adhesion layer (Z-7) was used instead of the composition liquid

71

of adhesion layer (Z-1) and the film thickness was 5.0 μm.

<Adhesion layer-applied substrate 20>

Adhesion layer-applied substrate 20 was obtained in the same manner as in production of adhesion layer-applied substrate 1 except that the composition liquid of adhesion layer (Z-7) was used instead of the composition liquid of adhesion layer (Z-1) and the film thickness was 5.0 μm.

<Adhesion layer-applied substrate 21>

Adhesion layer-applied substrate 21 was obtained in the same manner as in production of adhesion layer-applied substrate 1 except that the composition liquid of adhesion layer (Z-18) was used instead of the composition liquid of adhesion layer (Z-1) and the film thickness was 5.0 μm.

<Adhesion layer-applied substrate 22>

Adhesion layer-applied substrate 22 was obtained in the same manner as in production of adhesion layer-applied substrate 1 except that the composition liquid of adhesion layer (Z-19) was used instead of the composition liquid of adhesion layer (Z-1) and the film thickness was 5.0 μm.

<Adhesion layer-applied substrate 23>

Adhesion layer-applied substrate 23 was obtained in the same manner as in production of adhesion layer-applied substrate 1 except that the composition liquid of adhesion layer (Z-20) was used instead of the composition liquid of adhesion layer (Z-1) and the film thickness was 5.0 μm.

<Adhesion layer-applied substrate 24>

Adhesion layer-applied substrate 24 was obtained in the same manner as in production of adhesion layer-applied substrate 1 except that the composition liquid of adhesion layer (Z-21) was used instead of the composition liquid of adhesion layer (Z-1) and the film thickness was 5.0 μm.

[Example 1]

The aqueous polymer nanoparticle (A-1) dispersion prepared above and matrix raw material component (B'-1) prepared above were mixed so that the mass ratio of the respective solid contents of the polymer nanoparticle (A) and the matrix component (B) satisfied (A-1):(B-1) = 100:200, thereby providing a mixture. An aqueous solution having an ethanol concentration of 20% by mass was used as a solvent, and the mixture was added thereto so that the solid content concentration was 10% by mass, thereby providing a coating material composition of Example 1. Next, adhesion layer-applied substrate 1 was coated with the coating material composition (I) by use of a bar coater, and thereafter the resultant was dried at 130°C for 2 hours, thereby providing a laminate having a hard coating layer having a film thickness of 5.0 μm.
The results of various evaluations of the laminate and the hard coating layer are shown in Table 1.
The matrix component in the coating film derived from matrix raw material component (B'-1) in the coating material composition is here referred to as component (B-1), and the matrix component in the coating film derived from matrix raw material component (B'-2) in the coating material composition is hereinafter similarly referred to as component (B-2). That is, matrix components (B-1) to (B-6) can be regarded as hydrolyzed condensates of matrix raw material components (B'-1) to (B'-6), respectively.
The Martens hardness $HM_A$ and the elastic recovery rate $\eta_{ITA}$ of polymer nanoparticle (A-1), the Martens hardness $HM_{B'}$ and the elastic recovery rate $\eta_{ITB'}$ of matrix raw material component (A'-1), and the Martens hardness $HM_B$ and the elastic recovery rate $\eta_{ITB}$ of matrix component (A-1), used in Examples described above, were measured according to the above measurement methods. The evaluation results are shown in Table 6.

[Example 2]

A laminate was obtained in the same manner as in Example 1 except that (B'-2) was used as the matrix raw material component (B') and the mass ratio of the respective solid contents of the polymer nanoparticle (A) and the matrix component (B) satisfied (A-1):(B-2) = 100:300. The evaluation results of respective physical properties were obtained according to the same evaluation methods as in Example 1.

[Example 3]

A laminate was obtained in the same manner as in Example 1 except that (B'-3) was used as the matrix raw material component (B') and the mass ratio of the respective solid contents of the polymer nanoparticle (A) and the matrix component (B) satisfied (A-1):(B-3) = 50:300. The evaluation results of respective physical properties were obtained according to the same evaluation methods as in Example 1.

[Example 4]

A laminate was obtained in the same manner as in Example 1 except that adhesion layer-applied substrate 3 was coated with the coating material composition. The evaluation results of respective physical properties were obtained according to the same evaluation methods as in Example 1.

[Example 5]

A laminate was obtained in the same manner as in Example 4 except that (B'-4) was used as the matrix raw material component (B') and the mass ratio of the respective solid contents of the polymer nanoparticle (A) and the matrix component (B) satisfied (A-1):(B-4) = 100:200. The evaluation results of respective physical properties were obtained according to the same evaluation methods as in Example 1.

[Example 6]

A laminate was obtained in the same manner as in Example 4 except that (B'-5) was used as the matrix raw material component (B') and the mass ratio of the respective solid contents of the polymer nanoparticle (A) and the matrix component (B) satisfied (A-1):(B-5) = 100:200. The evaluation results of respective physical properties were obtained according to the same evaluation methods as in Example 1.

[Example 7]

A sample tube having a volume of 50 g was loaded with 1.4 g of ULS-1385MG (trade name, polymeric ultraviolet absorber for coating, average particle size: 65 nm, solid content: 30% by mass), 8.5 g of 1-methoxy-2-propanol and 1.0 g of ion-exchange water, and 1.0 g of acetic acid, 4.0 g of methyltrimethoxysilane, 1.9 g of dimethoxy-3-glycidoxypropylmethylsilane and 0.1 g of a 20% p-toluenesulfonic acid methanol liquid were each dripped over 1 minute in the listed order with stirring at 700 rpm. Subsequently, the resultant was stirred at room temperature for 60 minutes and left to still stand for one day, and adopted as liquid 1.

A sample tube having a volume of 20 g was loaded with 2.2 g of 3-isocyanatepropyltriethoxysilane and 0.7 g of 2-butanone oxime (blocking agent of isocyanate group), and the resultant was stirred at 500 rpm for 10 minutes and then left to still stand for one day, and adopted as liquid 2.

Liquid 1 and a stirrer were placed in a 200-mL three-necked flask equipped with a cooling tube, and heated at 60 rpm and 80°C under a nitrogen stream for 3 hours. Subsequently, liquid 2 was added, and heated in the same conditions at 80°C for 4 hours.

After 0.8 g of 3-aminopropyltrimethoxysilane was dripped over 2 minutes, the resultant was heated at 80°C for 6 hours.

Subsequently, the resultant was left to still stand in a dark place at 25°C for one day, and thereafter 6.9 g of colloidal silica "Snowtex O" (trade name, manufactured by Nissan Chemical Corporation, solid content: 20% by mass, average particle size: 15 nm) dispersed in water and 2.0 g of cerium oxide sol "Needral U-15" (trade name, manufactured by Taki Chemical Co., Ltd., average particle size: 8 nm, solid content: 15% by mass) dispersed in water were dripped over 2 minutes with stirring at 650 rpm. After stirring at room temperature for 30 minutes, the resultant was further heated at 80°C for 30 minutes.

Subsequently, the resultant was left to still stand for one week, thereby providing a coating material composition of Example 7. Next, adhesion layer-applied substrate 2 was coated with the coating material composition by use of a bar coater, and thereafter the resultant was dried at 130°C for 2 hours, thereby providing a laminate having a hard coating layer having a film thickness of 7.0 μm. The evaluation results of respective physical properties were obtained according to the same evaluation methods as in Example 1.

[Example 8]

<Synthesis of silylated ultraviolet absorber (UVEsilane)>

One hundred g (0.406 mol) of 2,2',4,4'-tetrahydroxybenzophenone was charged into 500 g of methyl isobutyl ketone (abbreviated as MIBK) in a flask equipped with a thermometer and a heating reflux apparatus, and stirred and thus dissolved. One hundred g (0.82 mol) of allyl bromide and 138 g (1 mol) of anhydrous potassium carbonate were added thereto, and heated at 110°C by an oil bath from the outside with vigorous stirring for 5 hours.

A salt of potassium bromide generated was removed by filtration. The solvent MIBK was removed from the reaction solution by stripping under reduced pressure, thereby providing about 100 g of 2,2'-dihydroxy-4,4'-diallyloxybenzophenone as a high-viscosity red oil. After methanol was added thereto for crystallization, 88.6 g (0.272 mol) of 2,2'-dihydroxy-4,4'-diallyloxybenzophenone, as a yellow solid, was obtained by filtration.

2,2'-Dihydroxy-4,4'-diallyloxybenzophenone (32.6 g, 0.1 mol) was suspended in 70 mL of toluene. Two droplets of a platinum catalyst PL50-T (manufactured by Shin-Etsu Chemical Co., Ltd.) were added thereto, the temperature was raised to 65°C, and trimethoxysilane (29.3 g, 0.24 mol) was added.

The temperature was kept at about 65 to 85°C for about 1 to 2 hours, a reaction mixture was cooled after a while, 5 g of Wakogel C-100 was added to allow the platinum catalyst to adsorb thereto and then subjected to filtration, and the solvent was removed by stripping under reduced pressure, thereby providing 51.9 g (0.091 mol) of a red oily product.

<Production of raw material polysiloxane>

A 2-L three-necked flask equipped with a thermometer, a stirring machine and a condenser was loaded with 408 parts of methyltrimethoxysilane and 400 parts of toluene, 11 parts of 98% methanesulfonic acid was added as a catalyst, 146 parts of water was dripped with the internal temperature being kept at 30°C or less, and methyltrimethoxysilane was hydrolyzed. After completion of dripping, stirring was made at room temperature for 2 hours to complete the reaction.

Thereafter, an acidic component was neutralized, and methanol generated was distilled off under reduced pressure. After a neutralized salt was completely removed by washing with water twice, a solvent component such as toluene was removed again under reduced pressure until the decrease of mass after drying at 105°C for 3 hours reached 1.1% by mass, thereby providing 210 parts of a siloxane resin as a colorless and transparent solid. A siloxane resin solution having a solid content concentration of 28% by mass was obtained by adding 717 parts of isopropanol to 283 parts of the siloxane resin in advance for dissolution.

<Production of raw material methanol solution>

A 0.5-L flask equipped with a stirring machine, a condenser and a thermometer was loaded with 170.6 g (0.6 mol) of titanium tetraisopropoxide, and 140 g (1.4 mol) of acetylacetone was dripped through a dripping funnel over 45 minutes with stirring under ice cooling. The internal temperature was thus raised to 25°C. The resultant was stirred and aged at room temperature for 2 hours as it was, thereby providing a hydrolyzable metal compound in the form of a yellow transparent solution.

Next, 46.0 g (water 2.38 mol) of an aqueous 6.9% ammonia solution was dripped at room temperature over 20 minutes. The temperature was raised to 35°C by exotherm and thereafter returned to room temperature. A reaction was made at room temperature for 20 hours, and thus a yellowish-white precipitate was produced. The precipitate was subjected to filtration and washing with acetone, and thereafter dried under reduced pressure at 60°C for 3 hours, thereby providing 121 g of a yellowish-white powdery substance.

Finally, a solution diluted with methanol so that the solid content concentration was 20% was produced, and adopted as a raw material methanol solution.

<Synthesis of coating material composition>

A 2-L flask equipped with a stirring machine, a condenser and a thermometer was loaded with 371 g of methyltrimethoxysilane and 8.6 g of UVEsilane, and kept at 20°C with stirring, and a mixed solution of 108 g of colloidal silica "Snowtex O" dispersed in water and 252 g of an aqueous 0.25 N acetic acid solution was added thereto and stirred at a high speed.

After further stirring at 60°C for 3 hours, 330 g of cyclohexanone was added and then 335 g in total of methanol and some of water, as by-products, were distilled off at ordinary pressure.

Next, 205 g of isopropanol, 400 g of a siloxane resin solution, 4 g of the raw material methanol solution (20% methanol solution), and 0.6 g of polyether-modified silicone KP-341 (manufactured by Shin-Etsu Chemical Co., Ltd.) serving as a leveling agent were added, and 3.7 g of an aqueous 10% tetrabutylammonium hydroxide solution was added as a curing catalyst. An organopolysiloxane solution thus obtained was adopted as a coating material composition of Example 8.

Adhesion layer-applied substrate 2 was coated with the coating material composition by use of a bar coater, and thereafter the resultant was air dried at room temperature for 45 minutes and then dried at 135°C for 1 hour, thereby providing a laminate having a film thickness of 5.0 $\mu$m and having a hard coating layer. The evaluation results of respective physical properties were obtained according to the same evaluation methods as in Example 1.

[Example 9]

A coating material composition of Example 9 was obtained by adding 32 g of hexamethyldisiloxane to 3200 g of AS4010 (partial condensate of methyltrimethoxysilane available from Momentive Performance Materials, mixture of colloidal silica and silylated dibenzoresorcinol, having isopropanol and n-butanol as co-solvents) cooled to 20°C or less.

Adhesion layer-applied substrate 2 was coated with the coating material composition by use of a bar coater, and thereafter the resultant was air dried at 20°C and at a relative humidity of 40% for 20 minutes and then dried at 90°C for 2 hours, thereby providing a laminate having a film thickness of 5.0 $\mu$m and having a hard coating layer. The evaluation results of respective physical properties were obtained according to the same evaluation methods as in Example 1.

[Example 10]

A laminate was obtained in the same manner as in Example 3 except that (A-3) was used as the polymer nanoparticle (A). The evaluation results of respective physical properties were obtained according to the same evaluation methods as in Example 3.

[Example 11]

A laminate was obtained in the same manner as in Example 3 except that (A-4) was used as the polymer nanoparticle (A). The evaluation results of respective physical properties were obtained according to the same evaluation methods as in Example 3.

[Example 12]

A laminate was obtained in the same manner as in Example 3 except that (B'-7) was used as the matrix raw material component (B'). The evaluation results of respective physical properties were obtained according to the same evaluation methods as in Example 3.

[Example 13]

A laminate was obtained in the same manner as in Example 3 except that (B'-8) was used as the matrix raw material component (B'). The evaluation results of respective physical properties were obtained according to the same evaluation methods as in Example 3.

[Example 14]

A laminate was obtained in the same manner as in Example 3 except that (B'-9) was used as the matrix raw material component (B'). The evaluation results of respective physical properties were obtained according to the same evaluation methods as in Example 3.

[Example 15]

A laminate was obtained in the same manner as in Example 3 except that adhesion layer-applied substrate 5 was coated with the coating material composition and the film thickness of the laminate was 10 $\mu$m. The evaluation results of respective physical properties were obtained according to the same evaluation methods as in Example 3.

[Example 16]

A laminate was obtained in the same manner as in Example 15 except that adhesion layer-applied substrate 6 was coated with the coating material composition. The evaluation results of respective physical properties were obtained according to the same evaluation methods as in Example 15.

[Example 17]

A laminate was obtained in the same manner as in Example 15 except that adhesion layer-applied substrate 7 was coated with the coating material composition. The evaluation results of respective physical properties were obtained according to the same evaluation methods as in Example 15.

[Example 18]

A laminate was obtained in the same manner as in Example 15 except that adhesion layer-applied substrate 8 was coated with the coating material composition. The evaluation results of respective physical properties were obtained according to the same evaluation methods as in Example 15.

[Example 19]

A laminate was obtained in the same manner as in Example 15 except that adhesion layer-applied substrate 9 was coated with the coating material composition. The evaluation results of respective physical properties were obtained according to the same evaluation methods as in Example 15.

[Example 20]

A laminate was obtained in the same manner as in Example 15 except that adhesion layer-applied substrate 10 was coated with the coating material composition. The evaluation results of respective physical properties were obtained according to the same evaluation methods as in Example 15.

[Example 21]

A laminate was obtained in the same manner as in Example 15 except that adhesion layer-applied substrate 11 was coated with the coating material composition. The evaluation results of respective physical properties were obtained according to the same evaluation methods as in Example 15.

[Example 22]

A laminate was obtained in the same manner as in Example 15 except that adhesion layer-applied substrate 12 was coated with the coating material composition. The evaluation results of respective physical properties were obtained according to the same evaluation methods as in Example 15.

[Example 23]

A laminate was obtained in the same manner as in Example 15 except that adhesion layer-applied substrate 13 was coated with the coating material composition. The evaluation results of respective physical properties were obtained according to the same evaluation methods as in Example 15.

[Example 24]

A laminate was obtained in the same manner as in Example 15 except that adhesion layer-applied substrate 14 was coated with the coating material composition. The evaluation results of respective physical properties were obtained according to the same evaluation methods as in Example 15.

[Example 25]

A laminate was obtained in the same manner as in Example 15 except that adhesion layer-applied substrate 15 was coated with the coating material composition. The evaluation results of respective physical properties were obtained according to the same evaluation methods as in Example 15.

[Example 26]

A laminate was obtained in the same manner as in Example 15 except that adhesion layer-applied substrate 16 was coated with the coating material composition. The evaluation results of respective physical properties were obtained according to the same evaluation methods as in Example 15.

[Example 27]

A laminate was obtained in the same manner as in Example 15 except that adhesion layer-applied substrate 17 was coated with the coating material composition. The evaluation results of respective physical properties were obtained according to the same evaluation methods as in Example 15.

[Example 28]

A laminate was obtained in the same manner as in Example 15 except that adhesion layer-applied substrate 18 was coated with the coating material composition. The evaluation results of respective physical properties were obtained according to the same evaluation methods as in Example 15.

[Example 29]

A laminate was obtained in the same manner as in Example 3 except that adhesion layer-applied substrate 19 was coated with the coating material composition and the film thickness of the laminate was 6 $\mu$m. The evaluation results of respective physical properties were obtained according to the same evaluation methods as in Example 3.

[Example 30]

A laminate was obtained in the same manner as in Example 3 except that adhesion layer-applied substrate 20 was coated with the coating material composition and the film thickness of the laminate was 15 $\mu$m. The evaluation results of respective physical properties were obtained according to the same evaluation methods as in Example 3.

[Example 31]

A laminate was obtained in the same manner as in Example 3 except that adhesion layer-applied substrate 8 was coated with the coating material composition and the film thickness of the laminate was 6 $\mu$m. The evaluation results of respective physical properties were obtained according to the same evaluation methods as in Example 3.

[Example 32]

A laminate was obtained in the same manner as in Example 3 except that adhesion layer-applied substrate 8 was coated with the coating material composition and the film thickness of the laminate was 15 $\mu$m. The evaluation results of respective physical properties were obtained according to the same evaluation methods as in Example 3.

[Example 33]

A laminate was obtained in the same manner as in Example 15 except that adhesion layer-applied substrate 21 was coated with the coating material composition. The evaluation results of respective physical properties were obtained according to the same evaluation methods as in Example 15.

[Example 34]

A laminate was obtained in the same manner as in Example 15 except that adhesion layer-applied substrate 22 was coated with the coating material composition. The evaluation results of respective physical properties were obtained according to the same evaluation methods as in Example 15.

[Example 35]

A laminate was obtained in the same manner as in Example 18 except that (A-1) was used as the polymer nanoparticle (A), (B'-3) was used as the matrix raw material component (B'), Tinuvin400 was used as the light-shielding agent, and the mass ratio of the respective solid contents satisfied (A-1):(B-3):Tinuvin400 = 50:300:10. The evaluation results of respective physical properties were obtained according to the same evaluation methods as in Example 18.

[Comparative Example 1]

A laminate was obtained in the same manner as in Example 1 except that (A-2) was used as the polymer nanoparticle, (B'-6) was used as the matrix raw material component (B'), the mass ratio of the respective solid contents satisfied (A-2):(B-6) = 100:145, and adhesion layer-applied substrate 4 was coated so that the film thickness was 500 nm. The evaluation results of respective physical properties were obtained according to the same evaluation methods as in Example 1.

[Comparative Example 2]

A laminate was obtained in the same manner as in Example 15 except that adhesion layer-applied substrate 23 was coated with the coating material composition. The evaluation results of respective physical properties were obtained according to the same evaluation methods as in Example 15.

[Comparative Example 3]

A laminate was obtained in the same manner as in Example 15 except that adhesion layer-applied substrate 24 was coated with the coating material composition. The evaluation results of respective physical properties were obtained according to the same evaluation methods as in Example 15.

[Comparative Example 4]

The same manner as in production of adhesion layer-applied substrate 1 was made except that the composition liquid of adhesion layer (Z-22) was used instead of the composition liquid of adhesion layer (Z-1), but no adhesion layer-applied substrate was obtained due to film formation defect.

The results of various evaluations in Examples 1 to 35 and Comparative Examples 1 to 4 are shown in Tables 1 to 9.

[Table 1]

| | | Example 1 | Example 2 | Example 3 | Example 4 | Example 5 |
|---|---|---|---|---|---|---|
| Adhesion layer-applied substrate | Adhesive emulsion particle (F) | E2050S | E2050S | E2050S | E2050S | E2050S |
| | Minimum film-forming temperature T1 | 55°C | 55°C | 55°C | 55°C | 55°C |
| | Inorganic oxide (G) | Snowtex C | Snowtex C | Snowtex C | Snowtex C | Snowtex C |
| | Minimum film-forming temperature T2 | more than 150°C | more than 150°C | more than 150°C | more than 150°C | more than 150°C |
| | Composite of F and G | - | - | - | - | - |
| | Mass ratio (G/F) of F and G | 0.4 | 0.4 | 0.4 | 0.4 | 0.4 |
| | Average particle size (nm) of F | 130 | 130 | 130 | 130 | 130 |
| | Average particle size (nm) of G | 15 | 15 | 15 | 15 | 15 |
| | Light-shielding agent (S1) | Tinuvin400 | Tinuvin400 | Tinuvin400 | Tinuvin400 | Tinuvin400 |
| | Light stabilizer | Tinuvin123 | Tinuvin123 | Tinuvin123 | - | - |
| | Curing agent | - | - | - | - | - |
| | Type | Adhesion layer-applied substrate 1 | Adhesion layer-applied substrate 1 | Adhesion layer-applied substrate 1 | Adhesion layer-applied substrate 3 | Adhesion layer-applied substrate 3 |
| | Film thickness | 3 | 3 | 3 | 3 | 3 |
| | Haze value H1 | 1.3 | 1.3 | 1.3 | 1.2 | 1.2 |
| | Surface roughness Ra1 (nm) | 15 | 15 | 15 | 13 | 13 |
| Matrix component (B) | Type | B'-1 | B'-2 | B'-3 | B'-1 | B'-4 |
| | Inorganic oxide (D) | Snowtex OXS | Snowtex OXS | Snowtex OXS | Snowtex OXS | B10 |
| | Hydrolyzable silicon compound (b) | Methyltrimethoxysilane, Tetraethoxysilane | Tetraethoxysilane, Tris-(trimethoxysilylpropyl)is ocyanurate | 1,2-Bis(triethoxysilyl)ethane , Tris-(trimethoxysilylpropyl)is ocyanurate | Methyltrimethoxysilane, Tetraethoxysilane | Methyltrimethoxysilane, Tetraethoxysilane |

79

(continued)

| | | | Example 1 | Example 2 | Example 3 | Example 4 | Example 5 |
|---|---|---|---|---|---|---|---|
| Hard coating layer | Polymer nanoparticle (A) | Type | A-1 | A-1 | A-1 | A-1 | A-1 |
| | | Content rate of hydrolyzable silicon compound (a) | 76% | 76% | 76% | 76% | 76% |
| | | Volume fraction in hard coating layer | 40% | 29% | 17% | 40% | 44% |
| | Martens hardness | HM (N/mm$^2$) | 350 | 300 | 380 | 350 | 350 |
| | Elastic recovery rate | $\eta_{IT}$ | 0.69 | 0.71 | 0.70 | 0.69 | 0.69 |
| | Light-shielding agent (S2) | | - | - | - | - | - |
| Laminate | Haze value H2 | | 0.4 | 0.5 | 0.5 | 0.4 | 0.5 |
| | H1/H2 | | 3.3 | 2.6 | 2.6 | 3.0 | 2.4 |
| | Surface roughness Ra2 | | 8 | 10 | 10 | 8 | 10 |
| | Ra1/Ra2 | | 1.9 | 1.5 | 1.5 | 1.6 | 1.3 |
| | Film thickness of laminate ($\mu$m) | | 5 | 5 | 5 | 5 | 5 |
| Initial adhesiveness | Tape adhesiveness | | Good | Good | Good | Good | Good |
| | Cross-cut test | | Class 2 | Class 2 | Class 2 | Class 2 | Class 2 |

(continued)

|  |  |  | Example 1 | Example 2 | Example 3 | Example 4 | Example 5 |
|---|---|---|---|---|---|---|---|
| Evaluation of abrasion resistance | Rotation number: 500 | ΔHaze | 0.5 | 0.7 | 0.4 | 0.5 | 0.5 |
|  |  | A: 4 or less B: more than 4 and 10 or less C: more than 10 | A | A | A | A | A |
|  | Rotation number: 1000 | ΔHaze | 0.9 | 1.0 | 0.8 | 1.0 | 1.2 |
|  |  | A: 2 or less B: more than 2 and 10 or less C: more than 10 and 30 or less D: more than 30 | A | A | A | A | A |
| Evaluation of interference plaque | S: Visually non-evaluable A: No problems in practical use B: Interference plaque slightly observed C: Interference plaque clear-ly observed | | A | A | A | A | A |
| Evaluation of transparency | Total light transmittance (%) | | 90.6 | 91.1 | 90.7 | 90.4 | 91.7 |
|  | A: 90% or more B: 80% or more and less than 90% C: less than 80% | | A | A | A | A | A |

EP 4 116 085 A1

(continued)

| | | Example 1 | Example 2 | Example 3 | Example 4 | Example 5 |
|---|---|---|---|---|---|---|
| Evaluation of weather resistance | Primary evaluation A: No change in outer appearance B: Outer appearance defect | A | A | A | A | A |
| | Secondary evaluation S: $\Delta b<1$ A: $\Delta b=1$ to 4 B: $\Delta b>4$ | A | A | A | A | S |

[Table 2]

| | | | Example 6 | Example 7 | Example 8 | Example 9 | Example 10 |
|---|---|---|---|---|---|---|---|
| Adhesion layer-applied substrate | Adhesive emulsion particle (F) | | E2050S | E2050S | E2050S | E2050S | E2050S |
| | Minimum film-forming temperature T1 | | 55°C | 55°C | 55°C | 55°C | 55°C |
| | Inorganic oxide (G) | | Snowtex C | Snowtex C | Snowtex C | Snowtex C | Snowtex C |
| | Minimum film-forming temperature T2 | | more than 150°C | more than 150°C | more than 150°C | more than 150°C | more than 150°C |
| | Composite of F and G | | - | - | - | - | - |
| | Mass ratio (G/F) of F and G | | 0.4 | 0.4 | 0.4 | 0.4 | 0.4 |
| | Average particle size (nm) of F | | 130 | 130 | 130 | 130 | 130 |
| | Average particle size (nm) of G | | 15 | 15 | 15 | 15 | 15 |
| | Light-shielding agent (S1) | | Tinuvin400 | Tinuvin400 | Tinuvin400 | Tinuvin400 | Tinuvin400 |
| | Light stabilizer | | - | Tinuvin123 | Tinuvin123 | Tinuvin123 | Tinuvin123 |
| | Curing agent | | - | - | - | - | - |
| | Type | | Adhesion layer-applied substrate 3 | Adhesion layer-applied substrate 2 | Adhesion layer-applied substrate 2 | Adhesion layer-applied substrate 2 | Adhesion layer-applied substrate 1 |
| | Film thickness | | 3 | 1 | 1 | 1 | 3 |
| | Haze value H1 | | 1.2 | 1.3 | 1.3 | 1.3 | 1.3 |
| | Surface roughness Ra1 (nm) | | 13 | 15 | 15 | 15 | 15 |
| | Matrix component (B) | Type | B'-5 | - | - | - | B'-3 |
| | | Inorganic oxide (D) | Snowtex OXS B10 | Snowtex O U-15 | Snowtex O | Colloidal silica | Snowtex OXS |
| | | Hydrolyzable silicon compound (b) | Methyltrimethoxysilane, Tetraethoxysilane | Methyltrimethoxysilane, Dimethoxy-3-glycidoxypropylmethylsilane, 3-Isocyanatepropyltriethoxysilane, 3-Aminopropyltrimethoxysilane | UVEsilane, Methyltrimethoxysilane | Trimethoxysilane, Silylated dibenzoresorcinol | 1,2-Bis(triethoxysilyl)ethane, Tris-(trimethoxysilylpropyl)isocyanurate |

| | | | Example 6 | Example 7 | Example 8 | Example 9 | Example 10 |
|---|---|---|---|---|---|---|---|
| Hard coating layer | Polymer nanoparticle (A) | Type | A-1 | ULS-1385MG | - | - | A-3 |
| | | Content rate of hydrolyzable silicon compound (a) | 76% | 0% | - | - | 76% |
| | | Volume fraction in hard coating layer | 40% | 5% | - | - | 17% |
| | Martens hardness | HM (N/mm$^2$) | 350 | 110 | - | - | 380 |
| | Elastic recovery rate | $\eta_{IT}$ | 0.69 | 0.41 | - | - | 0.70 |
| | Light-shielding agent (S2) | | - | - | - | - | - |
| Laminate | Haze value H2 | | 0.6 | 1.2 | 1.0 | 0.8 | 0.4 |
| | H1/H2 | | 2.0 | 1.1 | 1.3 | 1.6 | 3.3 |
| | Surface roughness Ra2 | | 10 | 14 | 13 | 14 | 12 |
| | Ra1/Ra2 | | 1.3 | 1.1 | 1.2 | 1.1 | 1.3 |
| | Film thickness of laminate ($\mu$m) | | 5 | 7 | 5 | 5 | 5 |
| Initial adhesiveness | Tape adhesiveness | | Good | Good | Good | Good | Good |
| | Cross-cut test | | Class 2 | Class 3 | Class 3 | Class 3 | Class 2 |

EP 4 116 085 A1

(continued)

| | | | Example 6 | Example 7 | Example 8 | Example 9 | Example 10 |
|---|---|---|---|---|---|---|---|
| Evaluation of abrasion re-sistance | Rotation number: 500 | ∆Haze | 0.5 | 9.0 | 6.0 | 2.2 | 0.8 |
| | | A: 4 or less B: more than 4 and 10 or less C: more than 10 | A | B | B | A | A |
| | Rotation number: 1000 | ∆Haze | 1.1 | 30.0 | 14.0 | 2.9 | 1.9 |
| | | A: 2 or less B: more than 2 and 10 or less C: more than 10 and 30 or less D: more than 30 | A | C | C | B | A |
| Evaluation of interference plaque | S: Visually non-evaluable A: No problems in practical use B: Interference plaque slightly observed C: Interference plaque clearly observed | | A | B | B | A | A |
| Evaluation of transparency | Total light transmittance (%) | | 91.3 | 90.2 | 88.7 | 87.9 | 91.8 |
| | A: 90% or more B: 80% or more and less than 90% C: less than 80% | | A | A | B | B | A |

(continued)

|  |  | Example 6 | Example 7 | Example 8 | Example 9 | Example 10 |
|---|---|---|---|---|---|---|
| Evaluation of weather resistance | Primary evaluation<br>A: No change in outer appearance<br>B: Outer appearance defect | A | A | A | A | A |
|  | Secondary evaluation<br>S: $\Delta b < 1$<br>A: $\Delta b = 1$ to 4<br>B: $\Delta b > 4$ | S | A | A | A | A |

[Table 3]

| | | Example 11 | Example 12 | Example 13 | Example 14 | Example 15 |
|---|---|---|---|---|---|---|
| Adhesion layer-applied substrate | Adhesive emulsion particle (F) | E2050S | E2050S | E2050S | E2050S | E2050S |
| | Minimum film-forming temperature T1 | 55°C | 55°C | 55°C | 55°C | 55°C |
| | Inorganic oxide (G) | Snowtex C | Snowtex C | Snowtex C | Snowtex C | Snowtex PSSO |
| | Minimum film-forming temperature T2 | more than 150°C | more than 150°C | more than 150°C | more than 150°C | more than 150°C |
| | Composite of F and G | - | - | - | - | - |
| | Mass ratio (G/F) of F and G | 0.4 | 0.4 | 0.4 | 0.4 | 0.4 |
| | Average particle size (nm) of F | 130 | 130 | 130 | 130 | 130 |
| | Average particle size (nm) of G | 15 | 15 | 15 | 15 | 56 (Shorter diameter 15; Longer diameter 100) |
| | Light-shielding agent (S1) | Tinuvin400 | Tinuvin400 | Tinuvin400 | Tinuvin400 | Tinuvin400 |
| | Light stabilizer | Tinuvin123 | Tinuvin123 | Tinuvin123 | Tinuvin123 | Tinuvin123 |
| | Curing agent | - | - | - | - | - |
| | Type | Adhesion layer-applied substrate 1 | Adhesion layer-applied substrate 1 | Adhesion layer-applied substrate 1 | Adhesion layer-applied substrate 1 | Adhesion layer-applied substrate 5 |
| | Film thickness | 3 | 3 | 3 | 3 | 5 |
| | Haze value H1 | 1.3 | 1.3 | 1.3 | 1.3 | 5.0 |
| | Surface roughness Ra1 (nm) | 15 | 15 | 15 | 15 | 25 |
| Matrix component (B) | Type | B'-3 | B'-7 | B'-8 | B'-9 | B'-3 |
| | Inorganic oxide (D) | Snowtex OXS | Snowtex OXS Z-C20 | Snowtex OXS NRA-6 | Snowtex OXS Nb-G6000 | Snowtex OXS |
| | Hydrolyzable silicon compound (b) | 1,2-Bis(triethoxysilyl) ethane, Tris-(trimethoxysilylpropyl)isocyanurate | Tetraethoxysilane, Tris-(trimethoxysilylpropyl)isocyanurate | Tetraethoxysilane, Tris-(trimethoxysilylpropyl)isocyanurate | Tetraethoxysilane, Tris-(trimethoxysilylpropyl)isocyanurate | 1,2-Bis(triethoxysilyl) ethane, Tris-(trimethoxysilylpropyl)isocyanurate |

| | | | Example 11 | Example 12 | Example 13 | Example 14 | Example 15 |
|---|---|---|---|---|---|---|---|
| Hard coating layer | Polymer nanoparticle (A) | Type | A-4 | A-1 | A-1 | A-1 | A-1 |
| | | Content rate of hydrolyzable silicon compound (a) | 76% | 76% | 76% | 76% | 76% |
| | | Volume fraction in hard coating layer | 17% | 44% | 44% | 44% | 17% |
| | Martens hardness | HM (N/mm$^2$) | 380 | 350 | 350 | 350 | 380 |
| | Elastic recovery rate | $\eta_{IT}$ | 0.70 | 0.69 | 0.69 | 0.69 | 0.70 |
| | Light-shielding agent (S2) | | - | - | - | - | - |
| Laminate | Haze value H2 | | 1.0 | 0.5 | 0.5 | 0.5 | 0.6 |
| | H1/H2 | | 1.3 | 2.6 | 2.6 | 2.6 | 8.3 |
| | Surface roughness Ra2 | | 14 | 10 | 10 | 10 | 10 |
| | Ra1/Ra2 | | 1.1 | 1.5 | 1.5 | 1.5 | 2.5 |
| | Film thickness of laminate ($\mu$m) | | 5 | 5 | 5 | 5 | 10 |
| Initial adhesiveness | Tape adhesiveness | | Good | Good | Good | Good | Good |
| | Cross-cut test | | Class 3 | Class 2 | Class 2 | Class 2 | Class 1 |
| | Rotation number: 500 | ΔHaze | 1.5 | 0.7 | 0.7 | 0.7 | 0.8 |
| | | A: 4 or less B: more than 4 and 10 or less C: more than 10 | A | A | A | A | A |

EP 4 116 085 A1

| | | | Example 11 | Example 12 | Example 13 | Example 14 | Example 15 |
|---|---|---|---|---|---|---|---|
| Evaluation of abrasion re-sistance | Rotation number: 1000 | ΔHaze | 2.9 | 1.0 | 1.1 | 1 | 1.1 |
| | | A: 2 or less<br>B: more than 2 and 10 or less<br>C: more than 10 and 30 or less<br>D: more than 30 | B | A | A | A | A |
| Evaluation of interference plaque | S: Visually non-evaluable<br>A: No problems in practical use<br>B: Interference plaque slightly observed<br>C: Interference plaque clearly observed | | A | A | A | A | A |
| Evaluation of transparency | Total light transmittance (%) | | 90.6 | 91.5 | 91.2 | 91.1 | 90.9 |
| | A: 90% or more<br>B: 80% or more and less than 90%<br>C: less than 80% | | A | A | A | A | A |
| Evaluation of weather re-sistance | Primary evaluation<br>A: No change in outer ap-pearance<br>B: Outer appearance defect | | A | A | A | A | A |
| | Secondary evaluation<br>S: Δb<1<br>A: Δb=1 to 4<br>B: Δb>4 | | A | S | S | S | A |

[Table 4]

| | | Example 16 | Example 17 | Example 18 | Example 19 | Example 20 |
|---|---|---|---|---|---|---|
| Adhesion layer-applied substrate | Adhesive emulsion particle (F) | F-3 | F-3 | - | - | - |
| | Minimum film-forming temperature T1 | 40°C | 40°C | - | - | - |
| | Inorganic oxide (G) | Snowtex C | Snowtex C | - | - | - |
| | Minimum film-forming temperature T2 | more than 150°C | more than 150°C | - | - | - |
| | Composite of F and G | - | - | FG-1 | FG-2 | FG-3 |
| | Mass ratio (G/F) of F and G | 1 | 1 | 1 | 1 | 0.4 |
| | Average particle size (nm) of F | 50 | 50 | 80 (Composite) | 40 (Composite) | 120 (Composite) |
| | Average particle size (nm) of G | 15 | 15 | | | |
| | Light-shielding agent (S1) | Tinuvin400 | Tinuvin400 | Tinuvin400 | Tinuvin400 | Tinuvin400 |
| | Light stabilizer | Tinuvin123 | Tinuvin123 | Tinuvin123 | Tinuvin123 | Tinuvin123 |
| | Curing agent | - | Polyisocyanate A | Polyisocyanate A | Polyisocyanate A | Polyisocyanate A |
| | Type | Adhesion layer-applied substrate 6 | Adhesion layer-applied substrate 7 | Adhesion layer-applied substrate 8 | Adhesion layer-applied substrate 9 | Adhesion layer-applied substrate 10 |
| | Film thickness | 5 | 5 | 5 | 5 | 5 |
| | Haze value H1 | 1.5 | 5.1 | 19 | 4.2 | 50 |
| | Surface roughness Ra1 (nm) | 15 | 26 | 80 | 23 | 148 |
| Matrix component (B) | Type | B'-3 | B'-3 | B'-3 | B'-3 | B'-3 |
| | Inorganic oxide (D) | Snowtex OXS | Snowtex OXS | Snowtex OXS | Snowtex OXS | Snowtex OXS |
| | Hydrolyzable silicon compound (b) | 1,2-Bis(triethoxysilyl)ethane, Tris-(trimethoxysilylpropyl)iso cyanurate | 1,2-Bis(triethoxysilyl)ethane, Tris-(trimethoxysilylpropyl)iso cyanurate | 1,2-Bis(triethoxysilyl)ethane, Tris-(trimethoxysilylpropyl)iso cyanurate | 1,2-Bis(triethoxysilyl)ethane, Tris-(trimethoxysilylpropyl)iso cyanurate | 1,2-Bis(triethoxysilyl)ethane, Tris-(trimethoxysilylpropyl)isoc yanurate |

| | | | Example 16 | Example 17 | Example 18 | Example 19 | Example 20 |
|---|---|---|---|---|---|---|---|
| Hard coating layer | Polymer nanoparticle (A) | Type | A-1 | A-1 | A-1 | A-1 | A-1 |
| | | Content rate of hydrolyzable silicon compound (a) | 76% | 76% | 76% | 76% | 76% |
| | | Volume fraction in hard coating layer | 17% | 17% | 17% | 17% | 17% |
| | Martens hardness | HM (N/mm$^2$) | 380 | 380 | 380 | 380 | 380 |
| | Elastic recovery rate | $\eta_{IT}$ | 0.70 | 0.70 | 0.70 | 0.70 | 0.70 |
| | Light-shielding agent (S2) | | - | - | - | - | - |
| Laminate | Haze value H2 | | 0.6 | 0.6 | 0.6 | 0.5 | 1.9 |
| | H1/H2 | | 2.5 | 8.5 | 31.7 | 8.4 | 26.3 |
| | Surface roughness Ra2 | | 10 | 10 | 11 | 10 | 12 |
| | Ra1/Ra2 | | 1.5 | 2.6 | 7.3 | 2.3 | 12.3 |
| | Film thickness of laminate ($\mu$m) | | 10 | 10 | 10 | 10 | 10 |
| Initial adhesiveness | Tape adhesiveness | | Good | Good | Good | Good | Good |
| | Cross-cut test | | Class 2 | Class 1 | Class 0 | Class 1 | Class 0 |

EP 4 116 085 A1

| | | | Example 16 | Example 17 | Example 18 | Example 19 | Example 20 |
|---|---|---|---|---|---|---|---|
| Evaluation of abrasion resist-ance | Rotation number: 500 | ΔHaze | 0.5 | 0.5 | 0.5 | 0.5 | 1.1 |
| | | A: 4 or less B: more than 4 and 10 or less C: more than 10 | A | A | A | A | A |
| | Rotation number: 1000 | ΔHaze | 1.0 | 1.0 | 1.0 | 1.0 | 1.8 |
| | | A: 2 or less B: more than 2 and 10 or less C: more than 10 and 30 or less D: more than 30 | A | A | A | A | A |
| Evaluation of interference plaque | S: Visually non-evaluable A: No problems in practical use B: Interference plaque slightly observed C: Interference plaque clearly observed | | A | A | S | A | S |
| Evaluation of transparency | Total light transmittance (%) | | 91.1 | 90.9 | 91.2 | 91.1 | 90.9 |
| | A: 90% or more B: 80% or more and less than 90% C: less than 80% | | A | A | A | A | A |

EP 4 116 085 A1

92

(continued)

| | | Example 16 | Example 17 | Example 18 | Example 19 | Example 20 |
|---|---|---|---|---|---|---|
| Evaluation of weather resistance | Primary evaluation<br>A: No change in outer appearance<br>B: Outer appearance defect | A | A | A | A | A |
| | Secondary evaluation<br>S: Δb<1<br>A: Δb=1 to 4<br>B: Δb>4 | A | A | A | A | A |

[Table 5]

| | | Example 21 | Example 22 | Example 23 | Example 24 | Example 25 |
|---|---|---|---|---|---|---|
| Adhesion layer-applied substrate | Adhesive emulsion particle (F) | - | - | - | - | - |
| | Minimum film-forming temperature T1 | - | - | - | - | - |
| | Inorganic oxide (G) | - | - | - | - | - |
| | Minimum film-forming temperature T2 | - | - | - | - | - |
| | Composite of F and G | FG-4 | FG-5 | FG-6 | FG-7 | FG-8 |
| | Mass ratio (G/F) of F and G | 2.3 | 1 | 1 | 1 | 1 |
| | Average particle size (nm) of F | 60 (Composite) | 100 (Composite) | 80 (Composite) | 80 (Composite) | 80 (Composite) |
| | Average particle size (nm) of G | | | | | |
| | Light-shielding agent (S1) | Tinuvin400 | Tinuvin400 | Tinuvin400 | Tinuvin400 | Tinuvin400 |
| | Light stabilizer | Tinuvin123 | Tinuvin 123 | Tinuvin123 | Tinuvin123 | Tinuvin 123 |
| | Curing agent | Polyisocyanate A | Polyisocyanate A | Polyisocyanate A | Polyisocyanate A | Polyisocyanate A |
| | Type | Adhesion layer-applied substrate 11 | Adhesion layer-applied substrate 12 | Adhesion layer-applied substrate 13 | Adhesion layer-applied substrate 14 | Adhesion layer-applied substrate 15 |
| | Film thickness | 5 | 5 | 5 | 5 | 5 |
| | Haze value H1 | 9.3 | 55 | 8.4 | 33 | 9.5 |
| | Surface roughness Ra1 (nm) | 39 | 160 | 30 | 92 | 38 |
| Matrix component (B) | Type | B'-3 | B'-3 | B'-3 | B'-3 | B'-3 |
| | Inorganic oxide (D) | Snowtex OXS | Snowtex OXS | Snowtex OXS | Snowtex OXS | Snowtex OXS |
| | Hydrolyzable silicon compound (b) | 1,2-Bis(triethoxysilyl)ethane, Tris-(trimethoxysilylpropyl)iso cyanurate | 1,2-Bis(triethoxysilyl)ethane, Tris-(trimethoxysilylpropyl)iso cyanurate | 1,2-Bis(triethoxysilyl)ethane, Tris-(trimethoxysilylpropyl)iso cyanurate | 1,2-Bis(triethoxysilyl)ethane, Tris-(trimethoxysilylpropyl)iso cyanurate | 1,2-Bis(triethoxysilyl)ethane, Tris-(trimethoxysilylpropyl)iso cyanurate |

(continued)

| | | | Example 21 | Example 22 | Example 23 | Example 24 | Example 25 |
|---|---|---|---|---|---|---|---|
| Hard coating layer | Polymer nanoparticle (A) | Type | A-1 | A-1 | A-1 | A-1 | A-1 |
| | | Content rate of hydrolyzable silicon compound (a) | 76% | 76% | 76% | 76% | 76% |
| | | Volume fraction in hard coating layer | 17% | 17% | 17% | 17% | 17% |
| | Martens hardness | HM (N/mm$^2$) | 380 | 380 | 380 | 380 | 380 |
| | Elastic recovery rate | $\eta_{IT}$ | 0.70 | 0.70 | 0.70 | 0.70 | 0.70 |
| | Light-shielding agent (S2) | | - | - | - | - | - |
| | Haze value H2 | | 0.5 | 2.3 | 0.5 | 0.7 | 0.5 |
| | H1/H2 | | 18.6 | 23.9 | 16.8 | 47.1 | 19.0 |
| Laminate | Surface roughness Ra2 | | 10 | 20 | 11 | 11 | 10 |
| | Ra1/Ra2 | | 3.9 | 8.0 | 2.7 | 8.4 | 3.8 |
| | Film thickness of laminate (μm) | | 10 | 10 | 10 | 10 | 10 |
| Initial adhesiveness | Tape adhesiveness | | Good | Good | Good | Good | Good |
| | Cross-cut test | | Class 1 | Class 0 | Class 1 | Class 0 | Class 1 |

(continued)

| | | | Example 21 | Example 22 | Example 23 | Example 24 | Example 25 |
|---|---|---|---|---|---|---|---|
| Evaluation of abrasion re-sistance | Rotation number: 500 | △Haze | 0.5 | 1.4 | 0.5 | 0.6 | 0.5 |
| | | A: 4 or less B: more than 4 and 10 or less C: more than 10 | A | A | A | A | A |
| | Rotation number: 1000 | △Haze | 0.9 | 1.9 | 0.9 | 1.1 | 0.9 |
| | | A: 2 or less B: more than 2 and 10 or less C: more than 10 and 30 or less D: more than 30 | A | A | A | A | A |
| Evaluation of interference plaque | S: Visually non-evaluable A: No problems in practical use B: Interference plaque slightly observed C: Interference plaque clear-ly observed | | S | S | S | S | S |
| Evaluation of transparency | Total light transmittance (%) | | 91.1 | 89.1 | 91.0 | 91.1 | 91.3 |
| | A: 90% or more B: 80% or more and less than 90% C: less than 80% | | A | B | A | A | A |

(continued)

| | | Example 21 | Example 22 | Example 23 | Example 24 | Example 25 |
|---|---|---|---|---|---|---|
| Evaluation of weather resistance | Primary evaluation<br>A: No change in outer appearance<br>B: Outer appearance defect | A | A | A | A | A |
| | Secondary evaluation<br>S: Δb<1<br>A: Δb=1 to 4<br>B: Δb>4 | A | A | A | A | A |

97

[Table 6]

| | | Example 26 | Example 27 | Example 28 | Example 29 | Example 30 |
|---|---|---|---|---|---|---|
| Adhesion layer-applied substrate | Adhesive emulsion particle (F) | - | - | - | - | - |
| | Minimum film-forming temperature T1 | - | - | - | - | - |
| | Inorganic oxide (G) | - | - | - | - | - |
| | Minimum film-forming temperature T2 | - | - | - | - | - |
| | Composite of F and G | FG-1 | FG-1 | FG-1 | FG-1 | FG-1 |
| | Mass ratio (G/F) of F and G | 1 | 1 | 1 | 1 | 1 |
| | Average particle size (nm) of F | 80 (Composite) | 80 (Composite) | 80 (Composite) | 80 (Composite) | 80 (Composite) |
| | Average particle size (nm) of G | | | | | |
| | Light-shielding agent (S1) | Tinuvin400 | Tinuvin400 | Tinuvin400 | Tinuvin400 | Tinuvin400 |
| | Light stabilizer | Tinuvin123 | Tinuvin 123 | Tinuvin123 | Tinuvin123 | Tinuvin 123 |
| | Curing agent | Polyisocyanate A | Polyisocyanate A | Polyisocyanate B | Polyisocyanate A | Polyisocyanate A |
| | Type | Adhesion layer-applied substrate 16 | Adhesion layer-applied substrate 17 | Adhesion layer-applied substrate 18 | Adhesion layer-applied substrate 19 | Adhesion layer-applied substrate 20 |
| | Film thickness | 5 | 5 | 5 | 1 | 10 |
| | Haze value H1 | 9.7 | 51 | 21 | 20 | 29 |
| | Surface roughness Ra1 (nm) | 39 | 152 | 72 | 75 | 79 |
| Matrix component (B) | Type | B'-3 | B'-3 | B'-3 | B'-3 | B'-3 |
| | Inorganic oxide (D) | Snowtex OXS | Snowtex OXS | Snowtex OXS | Snowtex OXS | Snowtex OXS |
| | Hydrolyzable silicon compound (b) | 1,2-Bis(triethoxysilyl)ethane, Tris-(trimethoxysilylpropyl)iso cyanurate | 1,2-Bis(triethoxysilyl)ethane, Tris-(trimethoxysilylpropyl)iso cyanurate | 1,2-Bis(triethoxysilyl)ethane, Tris-(trimethoxysilylpropyl)iso cyanurate | 1,2-Bis(triethoxysilyl)ethane, Tris-(trimethoxysilylpropyl)iso cyanurate | 1,2-Bis(triethoxysilyl)ethane, Tris-(trimethoxysilylpropyl)iso cyanurate |

(continued)

| | | | Example 26 | Example 27 | Example 28 | Example 29 | Example 30 |
|---|---|---|---|---|---|---|---|
| Hard coating layer | Polymer nanoparticle (A) | Type | A-1 | A-1 | A-1 | A-1 | A-1 |
| | | Content rate of hydrolyzable silicon compound (a) | 76% | 76% | 76% | 76% | 76% |
| | | Volume fraction in hard coating layer | 17% | 17% | 17% | 17% | 17% |
| | Martens hardness | HM (N/mm$^2$) | 380 | 380 | 380 | 380 | 380 |
| | Elastic recovery rate | $\eta_{IT}$ | 0.70 | 0.70 | 0.70 | 0.70 | 0.70 |
| | Light-shielding agent (S2) | | - | - | - | - | - |
| | Haze value H2 | | 0.5 | 2.1 | 0.6 | 0.5 | 1.1 |
| | H1/H2 | | 19.4 | 24.3 | 35.0 | 40.0 | 26.4 |
| Laminate | Surface roughness Ra2 | | 10 | 19 | 10 | 10 | 12 |
| | Ra1/Ra2 | | 3.9 | 8.0 | 7.2 | 7.5 | 6.6 |
| | Film thickness of laminate (μm) | | 10 | 10 | 10 | 6 | 15 |
| Initial adhesiveness | Tape adhesiveness | | Good | Good | Good | Good | Good |
| | Cross-cut test | | Class 1 | Class 0 | Class 0 | Class 0 | Class 0 |

| | | | Example 26 | Example 27 | Example 28 | Example 29 | Example 30 |
|---|---|---|---|---|---|---|---|
| Evaluation of abrasion re-sistance | Rotation number: 500 | △Haze | 0.5 | 1.3 | 0.5 | 0.5 | 0.8 |
| | | A: 4 or less B: more than 4 and 10 or less C: more than 10 | A | A | A | A | A |
| | Rotation number: 1000 | △Haze | 0.9 | 1.9 | 0.9 | 0.9 | 1.5 |
| | | A: 2 or less B: more than 2 and 10 or less C: more than 10 and 30 or less D: more than 30 | A | A | A | A | A |
| Evaluation of interference plaque | S: Visually non-evaluable A: No problems in practical use B: Interference plaque slightly observed C: Interference plaque clear-ly observed | | S | S | S | S | S |
| Evaluation of transparency | Total light transmittance (%) | | 91.1 | 89.5 | 91.1 | 91.0 | 90.1 |
| | A: 90% or more B: 80% or more and less than 90% C: less than 80% | | A | B | A | A | A |

EP 4 116 085 A1

100

(continued)

| | | Example 26 | Example 27 | Example 28 | Example 29 | Example 30 |
|---|---|---|---|---|---|---|
| Evaluation of weather resistance | Primary evaluation<br>A: No change in outer appearance<br>B: Outer appearance defect | A | A | A | A | A |
| | Secondary evaluation<br>S: Δb<1<br>A: Δb=1 to 4<br>B: Δb>4 | A | A | A | A | S |

[Table 7]

| | | Example 31 | Example 32 | Example 33 | Example 34 | Example 35 |
|---|---|---|---|---|---|---|
| Adhesion layer-applied substrate | Adhesive emulsion particle (F) | - | - | - | - | - |
| | Minimum film-forming temperature T1 | - | - | - | - | - |
| | Inorganic oxide (G) | - | - | B10 | - | - |
| | Minimum film-forming temperature T2 | - | - | - | - | - |
| | Composite of F and G | FG-1 | FG-1 | FG-1 | FG-1, FG-9 | FG-1 |
| | Mass ratio (G/F) of F and G | 1 | 1 | 1.1 | 1 | 1 |
| | Average particle size (nm) of F | 80 (Composite) | 80 (Composite) | 80 (Composite) 8 (Inorganic oxide (G)) | 80 (Composite FG-1) 30 (Composite FG-9) | 80 (Composite) |
| | Average particle size (nm) of G | | | | | |
| | Light-shielding agent (S1) | Tinuvin400 | Tinuvin400 | Tinuvin400 | Tinuvin400 | Tinuvin400 |
| | Light stabilizer | Tinuvin 123 | Tinuvin 123 | Tinuvin123 | Tinuvin123 | Tinuvin123 |
| | Curing agent | Polyisocyanate A | Polyisocyanate A | Polyisocyanate A | Polyisocyanate A | Polyisocyanate A |
| | Type | Adhesion layer-applied substrate 8 | Adhesion layer-applied substrate 8 | Adhesion layer-applied substrate 21 | Adhesion layer-applied substrate 22 | Adhesion layer-applied substrate 8 |
| | Film thickness | 5 | 5 | 5 | 5 | 5 |
| | Haze value H1 | 19 | 19 | 22 | 28 | 19 |
| | Surface roughness Ra1 (nm) | 80 | 80 | 85 | 90 | 72 |
| Matrix component (B) | Type | B'-3 | B'-3 | B'-3 | B'-3 | B'-3 |
| | Inorganic oxide (D) | Snowtex OXS | Snowtex OXS | Snowtex OXS | Snowtex OXS | Snowtex OXS |
| | Hydrolyzable silicon compound (b) | 1,2-Bis(triethoxysilyl) ethane, Tris-(trimethoxysilylpropyl)iso cyanurate | 1,2-Bis(triethoxysilyl) ethane, Tris-(trimethoxysilylpropyl)iso cyanurate | 1,2-Bis(triethoxysilyl) ethane, Tris-(trimethoxysilylpropyl)isoc yanurate | 1,2-Bis(triethoxysilyl) ethane, Tris-(trimethoxysilylpropyl)isoc yanurate | 1,2-Bis(triethoxysilyl) ethane, Tris-(trimethoxysilylpropyl)iso cyanurate |

(continued)

| | | | Example 31 | Example 32 | Example 33 | Example 34 | Example 35 |
|---|---|---|---|---|---|---|---|
| Hard coating layer | Polymer nanoparticle (A) | Type | A-1 | A-1 | A-1 | A-1 | A-1 |
| | | Content rate of hydrolyzable silicon compound (a) | 76% | 76% | 76% | 76% | 76% |
| | | Volume fraction in hard coating layer | 17% | 17% | 17% | 17% | 17% |
| | Martens hardness | HM (N/mm$^2$) | 380 | 380 | 380 | 380 | 380 |
| | Elastic re-covery rate | $\eta_{IT}$ | 0.70 | 0.70 | 0.70 | 0.70 | 0.70 |
| | Light-shielding agent (S2) | | - | - | - | - | Tinuvin400 |
| Laminate | Haze value H2 | | 0.6 | 0.8 | 0.7 | 0.7 | 0.8 |
| | H1/H2 | | 31.7 | 23.8 | 31.4 | 40.0 | 23.8 |
| | Surface roughness Ra2 | | 13 | 12 | 11 | 11 | 11 |
| | Ra1/Ra2 | | 6.2 | 6.7 | 7.7 | 8.2 | 6.5 |
| | Film thickness of laminate ($\mu$m) | | 6 | 15 | 10 | 10 | 10 |
| Initial adhesiveness | Tape adhesiveness | | Good | Good | Good | Good | Good |
| | Cross-cut test | | Class 0 | Class 0 | Class 0 | Class 0 | Class 0 |

| | | | Example 31 | Example 32 | Example 33 | Example 34 | Example 35 |
|---|---|---|---|---|---|---|---|
| Evaluation of abrasion re-sistance | Rotation number: 500 | ΔHaze | 0.8 | 0.9 | 0.5 | 0.5 | 0.8 |
| | | A: 4 or less B: more than 4 and 10 or less C: more than 10 | A | A | A | A | A |
| | Rotation number: 1000 | ΔHaze | 1.8 | 1.8 | 0.9 | 1.1 | 1.5 |
| | | A: 2 or less B: more than 2 and 10 or less C: more than 10 and 30 or less D: more than 30 | A | A | A | A | A |
| Evaluation of interference plaque | S: Visually non-evaluable A: No problems in practical use B: Interference plaque slightly observed C: Interference plaque clearly observed | | S | S | S | S | S |
| Evaluation of transparency | Total light transmittance (%) | | 90.2 | 90.1 | 90.4 | 90.5 | 90.7 |
| | A: 90% or more B: 80% or more and less than 90% C: less than 80% | | A | A | A | A | A |

EP 4 116 085 A1

(continued)

| | | Example 31 | Example 32 | Example 33 | Example 34 | Example 35 |
|---|---|---|---|---|---|---|
| Evaluation of weather re-sistance | Primary evaluation<br>A: No change in outer ap-pearance<br>B: Outer appearance defect | A | A | A | A | A |
| | Secondary evaluation<br>S: Δb<1<br>A: Δb=1 to 4<br>B: Δb>4 | A | A | S | S | S |

[Table 8]

| | Comparative Example 1 | Comparative Example 2 | Comparative Example 3 | Comparative Example 4 |
|---|---|---|---|---|
| Adhesive emulsion particle (F) | F-2 | E2050S | E2050S | - |
| Minimum film-forming temperature T1 | 120°C | 55°C | 55°C | - |
| Inorganic oxide (G) | Snowtex OS | Snowtex C | - | Snowtex C |
| Minimum film-forming temperature T2 | more than 150°C | more than 150°C | - | more than 150°C |
| Composite of F and G | - | - | - | - |
| Mass ratio (G/F) of F and G | 1 | 0.4 | - | - |
| Average particle size (nm) of F | 70 | 130 | 130 | - |
| Average particle size (nm) of G | 8 | 15 | - | 15 |
| Light-shielding agent (S1) | - | - | Tinuvin400 | Tinuvin400 |
| Light stabilizer | - | - | Tinuvin123 | Tinuvin123 |
| Curing agent | - | - | - | - |
| Adhesion layer-applied substrate — Type | Adhesion layer-applied substrate 4 | Adhesion layer-applied substrate 23 | Adhesion layer-applied substrate 24 | - |
| Film thickness | 3 | 5 | 5 | Film formation defect |
| Haze value H1 | 0.4 | 0.4 | 0.2 | - |
| Surface roughness Ra1 (nm) | 9 | 9 | 8 | - |
| Matrix component (B) — Inorganic oxide (D) | Snowtex O | Snowtex OXS | Snowtex OXS | - |
| Matrix component (B) — Hydrolyzable silicon compound (b) | Tetraethoxysilane | 1,2-Bis(triethoxysilyl)ethane, Tris-(trimethoxysilylpropyl)isocyanurate | 1,2-Bis(triethoxysilyl)ethane, Tris-(trimethoxysilylpropyl)isocyanurate | - |

(continued)

| | | | Comparative Example 1 | Comparative Example 2 | Comparative Example 3 | Comparative Example 4 |
|---|---|---|---|---|---|---|
| Hard coating layer | Polymer nanoparticle (A) | Type | A-2 | A-1 | A-1 | - |
| | | Content rate of hydrolyzable silicon compound (a) | 49% | 76% | 76% | - |
| | | Volume fraction in hard coating layer | 54% | 17% | 17% | - |
| | Martens hardness | HM (N/mm²) | 450 | 380 | 380 | - |
| | Elastic recovery rate | $\eta_{IT}$ | 0.63 | 0.70 | 0.70 | - |
| | | Haze value H2 | 0.6 | 0.5 | 0.5 | - |
| | | H1/H2 | 0.7 | 0.8 | 0.4 | - |
| Laminate | | Surface roughness Ra2 | 10 | 10 | 10 | - |
| | | Ra1/Ra2 | 0.9 | 0.9 | 0.8 | - |
| Initial adhesiveness | | Tape adhesiveness | Good | Good | Peeled | - |
| | | Cross-cut test | Class 4 | Class 4 | Class 5 | - |
| Evaluation of abrasion resistance | Rotation number: 500 | ΔHaze<br>A: 4 or less<br>B: more than 4 and 10 or less<br>C: more than 10 | | | | |
| | | ΔHaze | 10.0 | 0.5 | 0.6 | - |
| | | | B | A | A | - |
| | Rotation number: 1000 | ΔHaze<br>A: 2 or less<br>B: more than 2 and 10 or less<br>C: more than 10 and 30 or less<br>D: more than 30 | | | | |
| | | ΔHaze | 40.0 | 1.3 | 1.5 | - |
| | | | D | A | A | - |

(continued)

| | | Comparative Example 1 | Comparative Example 2 | Comparative Example 3 | Comparative Example 4 |
|---|---|---|---|---|---|
| Evaluation of interference plaque | S: Visually non-evaluable<br>A: No problems in practical use<br>B: Interference plaque slightly observed<br>C: Interference plaque clearly observed | C | C | C | - |
| Evaluation of transparency | Total light transmittance (%) | 91.1 | 91.4 | 90.1 | - |
| | A: 90% or more<br>B: 80% or more and less than 90%<br>C: less than 80% | A | A | A | - |
| Evaluation of weather resistance | Primary evaluation<br>A: No change in outer appearance<br>B: Outer appearance defect | B | B | A | - |
| | Secondary evaluation<br>S: $\Delta b<1$<br>A: $\Delta b=1$ to 4<br>B: $\Delta b>4$ | B | B | A | |

[Table 9]

| | | Example 1 | Example 2 | Example 3 Example 15 to Example 35 | Example 4 | Example 5 | Example 6 | Example 7 | Example 10 | Example 11 | Example 12 | Example 13 | Example 14 | Comparative Example 1 |
|---|---|---|---|---|---|---|---|---|---|---|---|---|---|---|
| Polymer nanoparticle (A) | Type | A-1 | A-1 | A-1 | A-1 | A-1 | A-1 | ULS-1385MG | A-3 | A-4 | A-1 | A-1 | A-1 | A-2 |
| | $\eta_{ITA}$ | 0.70 | 0.70 | 0.70 | 0.70 | 0.70 | 0.70 | 0.12 | 0.69 | 0.68 | 0.70 | 0.70 | 0.70 | 0.62 |
| | $HM_A$ (N/mm$^2$) | 150 | 150 | 150 | 150 | 150 | 150 | 100 | 148 | 145 | 150 | 150 | 150 | 140 |
| Matrix raw material component (B') | Type | B'-1 | B'-2 | B'-3 | B'-1 | B'-4 | B'-5 | - | B'-3 | B'-3 | B'-7 | B'-8 | B'-9 | B'-6 |
| | $\eta_{ITB'}$ | 0.69 | 0.72 | 0.71 | 0.69 | 0.69 | 0.69 | 0.65 | 0.71 | 0.71 | 0.73 | 0.73 | 0.73 | 0.65 |
| | $HM_{B'}$ (N/mm$^2$) | 900 | 450 | 420 | 900 | 900 | 900 | 130 | 420 | 420 | 475 | 475 | 475 | 1000 |
| Matrix component (B) | Type | B-1 | B-2 | B-3 | B-1 | B-4 | B-5 | - | B-3 | B-3 | B-7 | B-8 | B-9 | B-6 |
| | $\eta_{ITB}$ | 0.69 | 0.72 | 0.71 | 0.69 | 0.69 | 0.69 | 0.65 | 0.71 | 0.71 | 0.73 | 0.73 | 0.73 | 0.65 |
| | $HM_B$ (N/mm$^2$) | 900 | 450 | 420 | 900 | 900 | 900 | 130 | 420 | 420 | 475 | 475 | 475 | 1000 |

<<Examples corresponding to second embodiment>>

Various physical properties in Examples and Comparative Examples described below (hereinafter, "Examples" and "Comparative Examples" in the section <<Examples corresponding to second embodiment>> respectively meaning "Examples corresponding to the second embodiment" and "Comparative Examples corresponding to the second embodiment", unless particularly noted.) were measured according to the following methods.

(1) Measurement of film thickness of hard coating film

The film thickness of the hard coating film was measured with a reflection spectroscopic film thickness meter (item number: FE-3000) manufactured by Otsuka Electronics Co., Ltd.

(2) Respective average particle sizes of polymer nanoparticle (A) and adhesive emulsion particle (F)

The respective average particle sizes of the polymer nanoparticle (A) and the adhesive emulsion particle (F) were obtained by using an aqueous polymer nanoparticle (A) dispersion and an aqueous adhesive emulsion particle (F) dispersion each obtained by a method described below and measuring the cumulant particle sizes with a dynamic light scattering type particle size distribution measuring apparatus manufactured by Otsuka Electronics Co., Ltd. (item number: ELSZ-1000).

(3) Respective average particle sizes of inorganic oxides (D) and (G)

The respective average particle sizes of the inorganic oxides were obtained by observing colloidal silica dispersed in water, described below, at a magnification of 50,000 to 100,000x with a transmission micrograph, taking an image so that 100 to 200 inorganic oxides in the form of particles were photographed, and measuring a longer diameter and a shorter diameter of each of such inorganic oxide particles to thereby determine the average values.

(4) Measurement of haze

The haze of the hard coating film was measured with a turbidimeter (item number: NDH5000SP) manufactured by Nippon Denshoku Industries Co., Ltd., according to the method prescribed in JIS K7136.

(5) Measurement of Martens hardness HM of hard coating film

The microhardness was measured by an indentation test (test conditions; indenter: Vickers quadrangular pyramid diamond indenter, loading condition: 2 mN/20 sec, unloading condition: 2 mN/20 sec) with a Fischer scope manufactured by Fischer Instruments K.K. (item number: HM2000S), and the Martens hardness HM of the coating film was measured based on an indentation test according to ISO14577-1.

(6) Measurement of elastic recovery rate $\eta_{IT}$ of hard coating film

The microhardness was measured by an indentation test (test conditions; indenter: Vickers quadrangular pyramid diamond indenter, loading condition: 2 mN/20 sec, unloading condition: 2 mN/20 sec) with a Fischer scope manufactured by Fischer Instruments K.K. (item number: HM2000S), and the ratio of the elastic return deformation workload $W_{elast}$ of a depression to the total mechanical workload $W_{total}$ of a depression, namely, the value of $W_{elast}/W_{total}$ was determined as the elastic recovery rate $\eta_{IT}$ of the coating film based on an indentation test method according to ISO14577-1.

(7) Measurements of Martens hardness $HM_A$ and elastic recovery rate $\eta_{ITA}$ of polymer nanoparticle (A)

The Martens hardness $HM_A$ of the polymer nanoparticle (A) was measured by coating a glass substrate (material: white plate glass, thickness: 2 mm) with an aqueous polymer nanoparticle (A) dispersion by use of a bar coater so that the film thickness was 3 $\mu$m, and drying the resultant at 130°C over 2 hours to thereby provide a hard coating film, and subjecting the hard coating film to the same measurement as in (6) described above. The microhardness was measured by an indentation test (test conditions; indenter: Vickers quadrangular pyramid diamond indenter, loading condition: 2 mN/20 sec, unloading condition: 2 mN/20 sec) with a Fischer scope manufactured by Fischer Instruments K.K. (item number: HM2000S), and the Martens hardness $HM_A$ of the polymer nanoparticle (A) was measured based on an indentation test method according to ISO14577-1. The elastic recovery rate $\eta_{ITA}$ (= $W_{elast}/W_{total}$) was measured in the same manner as in (6) described above.

(8) Measurements of Martens hardness $HM_{B'}$ and elastic recovery rate $\eta_{ITB'}$ of component (B')

The Martens hardness $HM_{B'}$ of the component (B') was determined by dissolving or dispersing the component (B') in water/ethanol/acetic acid (compositional ratio: 77% by mass/20% by mass/3% by mass) so that the solid content concentration was 8% by mass, coating a glass substrate (material: white plate glass, thickness: 2 mm) with the resulting solution by use of a bar coater so that the film thickness was 3 $\mu$m, drying the resultant at 130°C over 2 hours to thereby provide a hard coating film, and subjecting the hard coating film to measurement. The microhardness was measured by an indentation test (test conditions; indenter: Vickers quadrangular pyramid diamond indenter, loading condition: 2 mN/20 sec, unloading condition: 2 mN/20 sec) with a Fischer scope manufactured by Fischer Instruments K.K. (item number: HM2000S), and the $HM_{B'}$ and $\eta_{ITB'}$, "$W_{elast}/W_{total}$" were measured based on an indentation test method according to ISO14577-1. The component (B) corresponded to the hydrolyzed condensate of the corresponding component (B'), as described below, and thus the respective values of the Martens hardness $HM_{B'}$ and the elastic recovery rate $\eta_{ITB'}$ of the component (B') were determined under the assumption that the respective values of the Martens hardness $HM_{B'}$ and the elastic recovery rate $\eta_{ITB'}$, measured as described above, were well matched with the Martens hardness $HM_B$ and the elastic recovery rate $\eta_{ITB}$ of the matrix component (B).

(9) Evaluation of abrasion resistance

Evaluation of the abrasion resistance of the coating film was performed with a Taber type abrasion tester (No.101) manufactured by Yasuda Seiki Company, according to the standard of ASTM D1044. In other words, the Taber abrasion test was performed under conditions of an abrasive wheel CS-10F and a load of 500 g, the haze before the test and the haze at a rotation number of 1000 were each measured based on (4) described above, and the difference therebetween was determined to thereby evaluate the abrasion resistance.

(10) Measurement of total light transmittance

The total light transmittance of the hard coating film was measured with a turbidimeter (item number: NDH5000SP) manufactured by Nippon Denshoku Industries Co., Ltd. The total light transmittance retention rate of the hard coating film was calculated from the measurement value, based on the following calculation expression.

```
Total light transmittance retention rate of hard

coating film (%) = (Total light transmittance (%) of hard coating film-applied substrate/Total light transmittance

(%) of substrate) × 100
```

(11) Measurement of initial adhesiveness

The initial adhesiveness was evaluated by applying and peeling a tape (tape according to the cross-cut test/cross-scoring test, manufactured by Nichiban Co., Ltd.) to and from the coating film on the hard coating film-applied substrate, and confirming whether or not the hard coating film was retained on the substrate.

(12) Measurement of moisture resistance

The moisture resistance of the hard coating film was evaluated with, as the change in adhesiveness, the change of the hard coating film after 2 weeks, during which the hard coating film-applied substrate was left to still stand in a benchtop environmental test chamber (model number: SH-642 manufactured by Espec Corp.) under an environment at 50°C and 95% RH for 2 weeks. The adhesiveness was evaluated by applying and peeling a tape (tape according to the cross-cut test/cross-scoring test, manufactured by Nichiban Co., Ltd.) to and from the hard coating film-applied substrate, and confirming whether or not the hard coating film was retained on the substrate. The adhesiveness after such a moisture resistance test was evaluated, and a case of no change in adhesiveness was rated as A, a case of no problem in practical use was rated as B and a case of overall peeling was rated as C, in each Tables.

(13) Measurement of difference (∆A) in haze between rotation numbers of 500 and 10 in Taber abrasion test

The difference (∆A) in haze between rotation numbers of 500 and 10 was measured according to the standard of ASTM D1044 (an abrasive wheel CS-10F and a load of 500 g). Evaluation was made by performing the Taber abrasion test 10 times, thereafter measuring the haze according to (4) described above, thereafter performing the Taber abrasion test 490 times at a location where the haze was measured, and again measuring the haze according to (4) described above.

(14) Measurement of contamination resistance

The contamination resistance of the hard coating film was evaluated using the hard coating film-applied substrate obtained by coating the hard coating film-applied substrate, subjected to the Taber abrasion test at a rotation number of 500 according to the standard of ASTM D1044, with a liquid where 10 g of a JIS test powder 1 (12 kinds, carbon black) was dispersed in 5 g of acetone, and thereafter removing the powder by use of a soft cloth, a detergent, and water. Such evaluation was performed at the total light transmittance retention rate of the hard coating film before and after the contamination resistance test, the total light transmittance retention rate was calculated by the following calculation expression, and the total light transmittance was measured with a turbidimeter (item number: NDH5000SP) manufactured by Nippon Denshoku Industries Co., Ltd.

$$\text{Total light transmittance retention rate (\%) after}$$
$$\text{contamination resistance test} = (\text{Total light}$$
$$\text{transmittance after such test/Total light transmittance}$$
$$\text{before such test}) \times 100$$

(15) Volume fraction of polymer nanoparticle (A) in coating film (C)

The volume fraction of the polymer nanoparticle (A) in the coating film (C) was calculated from the compounding ratio of the coating material composition for use in production of the coating film (C).

(16) Volume fraction of polymer nanoparticle (A) based on total of polymer nanoparticle (A) and matrix component (B)

The volume fraction of the polymer nanoparticle (A) based on the total of the polymer nanoparticle (A) and the matrix component (B) was calculated from the compounding ratio of the polymer nanoparticle (A) and the matrix raw material component (B') for use in production of the coating material composition (I).

(17) Content of hydrolyzable silicon compound (a) in polymer nanoparticle (A)

The content of the hydrolyzable silicon compound (a) in the polymer nanoparticle (A) was calculated from the proportion of the weight in terms of a complete hydrolytic condensation product based on the weight where the amounts of water, dodecylbenzene sulfonic acid, and ammonium persulfate were removed from the total amount of loading in preparation of an aqueous polymer nanoparticle (A) dispersion described below. The weight in terms of a complete hydrolytic condensation product was defined as the weight when 100% of a hydrolyzable group of the hydrolyzable silicon compound used in the loading was hydrolyzed and converted into a SiOH group, and further completely condensed into siloxane.

(18) Measurement of cohesion force

The cohesion force was measured by creating a sample cross section with cryo-CP, and subjecting the sample cross section to measurement in a PeakForce QNM mode of AFM (Dimension ICON + NanoscopeV manufactured by Bruker AXS GmbH) under an Ar atmosphere. The level of the cohesion force was determined from the resulting image.

(19) Evaluation of light transmittance at 291 nm

The light transmittance at 291 nm was determined by measuring the transmittance at 291 nm of quartz as the substrate with UV-Vis (manufactured by PerkinElmer Co., Ltd.).

(20) Evaluation of light absorption rate at 291 nm

The light absorption rate at 291 nm was determined by subjecting a quartz substrate and a hard coating film-applied quartz substrate to measurement of the light transmittance at 291 nm according to the same method as in (19) and calculating the light absorption rate at 291 nm by the following expression. A higher light absorption rate at 291 nm allowed less ultraviolet light to reach the substrate, and thus was rated to mean higher weather resistance.

$$\text{Light absorption rate (\%) at 291 nm} = 100 - (\text{Light transmittance (\%) at 291 nm of hard coating film-applied quartz substrate / Light transmittance (\%) at 291 nm of quartz substrate} \times 100) \text{ (\%)}$$

[Preparation of aqueous polymer nanoparticle (A) dispersion]

An aqueous polymer nanoparticle (A) dispersion for use in Examples described below was synthesized as follows.

<Aqueous polymer nanoparticle (A-1) dispersion>

Polymerization according to a common emulsion polymerization method was performed with 1500 g of ionexchange water, 45 g of an aqueous 10% dodecylbenzene sulfonic acid solution, 105 g of trimethoxysilane, 23 g of phenyltrimethoxysilane and 27 g of tetraethoxysilane in a reactor having a reflux condenser, a driptank, a thermometer and a stirring apparatus in an environment at 50°C. After the polymerization, the temperature was set to 80°C, thereafter polymerization according to a common emulsion polymerization method was further performed with 43 g of an aqueous 2% ammonium persulfate solution, 11 g of butyl acrylate, 12 g of diethylacrylamide, 1 g of acrylic acid and 1 g of 3-methacryloxypropyltrimethoxysilane, and the resultant was filtered with a 100-mesh wire gauze, thereby providing an aqueous polymer nanoparticle (A-1) dispersion. The resulting polymer nanoparticle (A-1) had a core/shell structure and the solid content thereof was 5.9% by mass.

[Preparation of coating composition liquid of matrix raw material component (B')]

Hereinafter, each component (B') used in Examples and Comparative Examples described below was formulated.

<Coating composition liquid of matrix raw material component (B'-1)>

A coating composition liquid of matrix raw material component (B'-1) was obtained by mixing 40 g of tetraethoxysilane "KBE04" (trade name, manufactured by Shin-Etsu Chemical Co., Ltd.) and 68 g of tris-(trimethoxysilylpropyl)isocyanurate "KBM9659" (trade name, manufactured by Shin-Etsu Chemical Co., Ltd.) each serving as the hydrolyzable silicon compound (b), and 282 g of colloidal silica "Snowtex OXS" (trade name, manufactured by Nissan Chemical Corporation, solid content: 10% by mass, average particle size: 5 nm) dispersed in water and 14 g of cerium oxide sol "Needral B-10" (trade name, manufactured by Taki Chemical Co., Ltd., solid content: 10% by mass, average particle size: 8 nm) dispersed in water, each serving as the inorganic oxide (D), under a room temperature condition.

<Coating composition liquid of matrix raw material component (B'-2)>

A coating composition liquid of matrix raw material component (B'-2) was obtained by mixing 40 g of tetraethoxysilane "KBE04" (trade name, manufactured by Shin-Etsu Chemical Co., Ltd.) and 68 g of tris-(trimethoxysilylpropyl)isocyanurate "KBM9659" (trade name, manufactured by Shin-Etsu Chemical Co., Ltd.), each serving as the hydrolyzable silicon compound (b), and 282 g of colloidal silica "Snowtex OXS" (trade name, manufactured by Nissan Chemical Corporation, solid content: 10% by mass, average particle size: 5 nm) dispersed in water and 7 g of zirconium oxide sol "Biral Zr-C20" (trade name, manufactured by Taki Chemical Co., Ltd., solid content: 20% by mass, average particle size:

10 nm) dispersed in water, each serving as the inorganic oxide (D), under a room temperature condition.

<Coating composition liquid of matrix raw material component (B'-3)>

A coating composition liquid of matrix raw material component (B'-3) was obtained by mixing 40 g of tetraethoxysilane "KBE04" (trade name, manufactured by Shin-Etsu Chemical Co., Ltd.) and 68 g of tris-(trimethoxysilylpropyl)isocyanurate "KBM9659" (trade name, manufactured by Shin-Etsu Chemical Co., Ltd.), each serving as the hydrolyzable silicon compound (b), and 282 g of colloidal silica "Snowtex OXS" (trade name, manufactured by Nissan Chemical Corporation, solid content: 10% by mass, average particle size: 5 nm) dispersed in water and 23 g of titanium oxide sol "Tainoc NRA-6" (trade name, manufactured by Taki Chemical Co., Ltd., solid content: 6% by mass, average particle size: 30 nm) dispersed in water, each serving as the inorganic oxide (D), under a room temperature condition.

<Coating composition liquid of matrix raw material component (B'-4)>

A coating composition liquid of matrix raw material component (B'-4) was obtained by mixing 40 g of tetraethoxysilane "KBE04" (trade name, manufactured by Shin-Etsu Chemical Co., Ltd.) and 68 g of tris-(trimethoxysilylpropyl)isocyanurate "KBM9659" (trade name, manufactured by Shin-Etsu Chemical Co., Ltd.), each serving as the hydrolyzable silicon compound (b), and 282 g of colloidal silica "Snowtex OXS" (trade name, manufactured by Nissan Chemical Corporation, solid content: 10% by mass, average particle size: 5 nm) dispersed in water and 23 g of niobium oxide sol "Biral Nb-G6000" (trade name, manufactured by Taki Chemical Co., Ltd., solid content: 6% by mass, average particle size: 5 nm) dispersed in water, each serving as the inorganic oxide (D), under a room temperature condition.

<Coating composition liquid of matrix raw material component (B'-5)>

A coating composition liquid of matrix raw material component (B'-5) was obtained by mixing 30 g of 1,2-bis(triethoxysilyl)ethane (manufactured by Sigma-Aldrich) and 68 g of tris-(trimethoxysilylpropyl)isocyanurate "KBM9659" (trade name, manufactured by Shin-Etsu Chemical Co., Ltd.), each serving as the hydrolyzable silicon compound (b), and 282 g of colloidal silica "Snowtex OXS" (trade name, manufactured by Nissan Chemical Corporation, solid content: 10% by mass, average particle size: 5 nm) dispersed in water and 14 g of cerium oxide sol "Needral B-10" (trade name, manufactured by Taki Chemical Co., Ltd., solid content: 10% by mass, average particle size: 8 nm) dispersed in water, each serving as the inorganic oxide (D), under a room temperature condition.

<Coating composition liquid of matrix raw material component (B'-6)>

A coating composition liquid of matrix raw material component (B'-6) was obtained by mixing 41 g of 1,2-bis(triethoxysilyl)ethane (manufactured by Sigma-Aldrich) and 93 g of tris-(trimethoxysilylpropyl)isocyanurate "KBM9659" (trade name, manufactured by Shin-Etsu Chemical Co., Ltd.), each serving as the hydrolyzable silicon compound (b), and 38 g of cerium oxide sol "Needral B-10" (trade name, manufactured by Taki Chemical Co., Ltd., solid content: 10% by mass, average particle size: 8 nm) dispersed in water, serving as the inorganic oxide (D), under a room temperature condition.

<Coating composition liquid of matrix raw material component (B'-7)>

A coating composition liquid of matrix raw material component (B'-7) was obtained by mixing 31 g of 1,2-bis(triethoxysilyl)ethane (manufactured by Sigma-Aldrich) and 69 g of tris-(trimethoxysilylpropyl)isocyanurate "KBM9659" (trade name, manufactured by Shin-Etsu Chemical Co., Ltd.), each serving as the hydrolyzable silicon compound (b), and 286 g of cerium oxide sol "Needral B-10" (trade name, manufactured by Taki Chemical Co., Ltd., solid content: 10% by mass, average particle size: 8 nm) dispersed in water, serving as the inorganic oxide (D), under a room temperature condition.

<Coating composition liquid of matrix raw material component (B'-8)>

A coating composition liquid of matrix raw material component (B'-8) was obtained by mixing 41 g of tetraethoxysilane "KBE04" (trade name, manufactured by Shin-Etsu Chemical Co., Ltd.) and 69 g of tris-(trimethoxysilylpropyl)isocyanurate "KBM9659" (trade name, manufactured by Shin-Etsu Chemical Co., Ltd.), each serving as the hydrolyzable silicon compound (b), and 286 g of colloidal silica "Snowtex OXS" (trade name, manufactured by Nissan Chemical Corporation, solid content: 10% by mass, average particle size: 5 nm) dispersed in water, serving as the inorganic oxide (D), under a room temperature condition.

[Production of adhesion layer-applied polycarbonate substrate]

<Adhesion layer-applied polycarbonate substrate 1>

Adhesion layer 1 was formed on one surface of a polycarbonate substrate (manufactured by C.I. TAKIRON Corporation, item number: 1600, thickness: 2 mm), as follows. In other words, the polycarbonate substrate was coated with a mixed liquid of 19 g of an aqueous E2050S dispersion liquid (manufactured by Asahi Kasei Corporation, solid content concentration: 46%) serving as the adhesive emulsion particle (F), 17 g of colloidal silica "Snowtex C" (trade name, manufactured by Nissan Chemical Corporation, solid content: 20% by mass, average particle size: 15 nm) dispersed in water, serving as the inorganic oxide (G), 29 g of water and 35 g of ethanol, by use of a bar coater. Next, such a coating liquid was dried at 130°C for 2 hours, thereby forming adhesion layer 1 having a film thickness of 1.0 $\mu$m, on the polycarbonate substrate. Thus, adhesion layer-applied polycarbonate substrate 1 was obtained.

[Example 2-1]

The aqueous polymer nanoparticle (A-1) dispersion prepared above and the matrix raw material component (B'-1) prepared above were mixed so that the mass ratio of the respective solid contents of the polymer nanoparticle (A) and the matrix component (B) satisfied (A-1):(B-1) = 50:305, thereby providing a mixture. An aqueous solution having an ethanol concentration of 20% by mass was used as a solvent, and the mixture was added thereto so that the solid content concentration was 10% by mass, thereby providing a coating material composition (I) of Example 2-1. Next, adhesion layer-applied polycarbonate substrate 1 was coated with the coating material composition (I) by use of a bar coater, and the resultant was dried at 130°C for 2 hours, thereby providing a hard coating film-applied substrate having a hard coating film having a film thickness of 5.0 $\mu$m.

The Martens hardness HM, elastic recovery rate $\eta_{IT}$, abrasion resistance, total light transmittance, initial adhesiveness, moisture resistance and contamination resistance of the hard coating film were evaluated. The evaluation results are shown in Table 10.

The matrix component in the coating film derived from matrix raw material component (B'-1) in the coating material composition is here referred to as component (B-1), and the matrix component in the coating film derived from matrix raw material component (B'-2) in the coating material composition is hereinafter similarly referred to as component (B-2). That is, matrix components (B-1) to (B-6) can be regarded as hydrolyzed condensates of matrix raw material components (B'-1) to (B'-6), respectively.

The Martens hardness $HM_A$ and elastic recovery rate $\eta_{ITA}$ of polymer nanoparticle (A-1), the Martens hardness $HM_{B'}$ and elastic recovery rate $\eta_{ITB'}$ of matrix raw material component (B'-1), and the Martens hardness $HM_B$ and elastic recovery rate $\eta_{ITB}$ of matrix component (B-1), used in Examples described above, were measured according to the above measurement methods. The evaluation results are shown in Table 11.

Separately, a quartz substrate was coated with the coating material composition (I) prepared as described above, thereby providing a hard coating film-applied quartz substrate having a hard coating film having a film thickness of 5.0 $\mu$m. The light transmittance at 291 nm and the light absorption rate at 291 nm of the hard coating film-applied quartz substrate were measured according to the above measurement methods, and weather resistance was evaluated from the absorption rate. The evaluation results are shown in Table 12.

[Example 2-2]

A hard coating film-applied substrate was obtained in the same manner as in Example 2-1 except that the film thickness of the hard coating film was 3.0 $\mu$m. The evaluation results of respective physical properties were obtained according to the same evaluation methods as in Example 2-1.

[Example 2-3]

A hard coating film-applied substrate was obtained in the same manner as in Example 2-1 except that (B'-2) was used as the matrix raw material component (B'). The evaluation results of respective physical properties were obtained according to the same evaluation methods as in Example 2-1.

[Example 2-4]

A hard coating film-applied substrate was obtained in the same manner as in Example 2-1 except that (B'-3) was used as the matrix raw material component (B'). The evaluation results of respective physical properties were obtained according to the same evaluation methods as in Example 2-1.

[Example 2-5]

A hard coating film-applied substrate was obtained in the same manner as in Example 2-1 except that (B'-4) was used as the matrix raw material component (B'). The evaluation results of respective physical properties were obtained according to the same evaluation methods as in Example 2-1.

[Example 2-6]

A hard coating film-applied substrate was obtained in the same manner as in Example 2-1 except that (B'-5) was used as the matrix raw material component (B'). The evaluation results of respective physical properties were obtained according to the same evaluation methods as in Example 2-1.

[Example 2-7]

The aqueous polymer nanoparticle (A-1) dispersion prepared above and the matrix raw material component (B'-6) prepared above were mixed so that the mass ratio of the respective solid contents of the polymer nanoparticle (A) and the matrix component (B) satisfied (A-1):(B-6) = 50:210, thereby providing a mixture. An aqueous solution having an ethanol concentration of 20% by mass was used as a solvent, and the mixture was added thereto so that the solid content concentration was 10% by mass, thereby providing a coating material composition (I) of Example 2-1. Next, adhesion layer-applied polycarbonate substrate 1 was coated with the coating material composition (I) by use of a bar coater, and thereafter the resultant was dried at 130°C for 2 hours, thereby providing a hard coating film-applied substrate having a hard coating film having a film thickness of 5.0 $\mu$m.

[Example 2-8]

The aqueous polymer nanoparticle (A-1) dispersion prepared above and the matrix raw material component (B'-7) prepared above were mixed so that the mass ratio of the respective solid contents of the polymer nanoparticle (A) and the matrix component (B) satisfied (A-1):(B-7) = 50:300, thereby providing a mixture. An aqueous solution having an ethanol concentration of 20% by mass was used as a solvent, and the mixture was added thereto so that the solid content concentration was 10% by mass, thereby providing a coating material composition (I) of Example 2-1. Next, adhesion layer-applied polycarbonate substrate 1 was coated with the coating material composition (I) by use of a bar coater, and thereafter the resultant was dried at 130°C for 2 hours, thereby providing a hard coating film-applied substrate having a hard coating film having a film thickness of 5.0 $\mu$m.

[Comparative Example 2-1]

The aqueous polymer nanoparticle (A-1) dispersion prepared above and the matrix raw material component (B'-8) prepared above were mixed so that the mass ratio of the respective solid contents of the polymer nanoparticle (A) and the matrix component (B) satisfied (A-1):(B-8) = 50:300, thereby providing a mixture. An aqueous solution having an ethanol concentration of 20% by mass was used as a solvent, and the mixture was added thereto so that the solid content concentration was 10% by mass, thereby providing a coating material composition (I) of Comparative Example 2-1. Next, adhesion layer-applied polycarbonate substrate 1 was coated with the coating material composition (I) by use of a bar coater, and thereafter the resultant was dried at 130°C for 2 hours, thereby providing a hard coating film-applied substrate having a hard coating film having a film thickness of 5.0 $\mu$m. The evaluation results of respective physical properties were obtained according to the same evaluation methods as in Example 2-1.

[Evaluation results of cohesion force]

Each of the hard coating films obtained in Examples 2-1 to 2-8 and Comparative Example 2-1 was subjected to measurement of the cohesion force according to the measurement method of (18), and as a result, was higher in the cohesion force $F_A$ of the polymer nanoparticle (A) than the cohesion force $F_B$ of the matrix component (B).
The results of various evaluations in Examples 2-1 to 2-8 and Comparative Example 2-1 are shown in Tables 10 to 12.

[Table 10]

| | | Example 2-1 | Example 2-2 | Example 2-3 | Example 2-4 | Example 2-5 | Example 2-6 | Example 2-7 | Example 2-8 | Comparative Example 2-1 |
|---|---|---|---|---|---|---|---|---|---|---|
| Polymer nanoparticle (A) | Type of (A) | A-1 | A-1 | A-1 | A-1 | A-1 | A-1 | A-1 | A-1 | A-1 |
| | Average particle size (nm) | 60 | 60 | 60 | 60 | 60 | 60 | 60 | 60 | 60 |
| | Content rate of (a) | 76% | 76% | 76% | 76% | 76% | 76% | 76% | 76% | 76% |
| Matrix component (B) | Type of (B) | B-1 | B-1 | B-2 | B-3 | B-4 | B-5 | B-6 | B-7 | B-8 |
| | Type of inorganic oxide (D) | OXS, B-10 | OXS, B-10 | OXS, Z-C20 | OXS, NRA-6 | OXS, Nb-G6000 | OXS, B-10 | B-10 | B-10 | OXS |
| Content of Ce, Nb, Ti or Zr in coating film | | 1.4% by mass | 1.4% by mass | 1.4% by mass | 1.4% by mass | 1.4% by mass | 1.4% by mass | 3.8% by mass | 28.5% by mass | 0% by mass |
| Adhesion layer of adhesion layer-applied polycarbonate substrate | | Adhesion layer 1 | Adhesion layer 1 | Adhesion layer 1 | Adhesion layer 1 | Adhesion layer 1 | Adhesion layer 1 | Adhesion layer 1 | Adhesion layer 1 | Adhesion layer 1 |
| Adhesion layer | Adhesive emulsion particle (F) | E2050S | E2050S | E2050S | E2050S | E2050S | E2050S | E2050S | E2050S | E2050S |
| | Average particle size (nm) of adhesive emulsion particle (F) | 120nm | 120nm | 120nm | 120nm | 120nm | 120nm | 120nm | 120nm | 120nm |
| | Type of inorganic oxide (G) | C | C | C | C | C | C | C | C | C |
| Film thickness of coating film (C) | Film thickness ($\mu$m) | 5.0 | 3.0 | 5.0 | 5.0 | 5.0 | 5.0 | 5.0 | 5.0 | 5.0 |
| Volume fraction of (A) in coating film (C) | Volume fraction of (A) | 17% | 17% | 17% | 17% | 17% | 17% | 20% | 19% | 17% |
| Martens hardness of coating film (C) | HM (N/mm$^2$) | 420 | 420 | 420 | 420 | 420 | 400 | 300 | 320 | 400 |
| Elastic recovery rate of coating film (C) | $\eta_{IT}$ | 0.72 | 0.72 | 0.72 | 0.72 | 0.72 | 0.72 | 0.69 | 0.70 | 0.71 |

|  |  | Example 2-1 | Example 2-2 | Example 2-3 | Example 2-4 | Example 2-5 | Example 2-6 | Example 2-7 | Example 2-8 | Comparative Example 2-1 |
|---|---|---|---|---|---|---|---|---|---|---|
| Abrasion resistance of coating film (C) | Haze before Taber abrasion test | 0.5 | 0.5 | 0.5 | 0.5 | 0.5 | 0.5 | 0.5 | 0.5 | 0.2 |
|  | ΔHaze after Taber abrasion test 1000 times | 1.0 | 1.0 | 1.0 | 1.0 | 1.0 | 1.0 | 1.2 | 1.0 | 1.0 |
| Evaluation of transparency | Total light transmittance (%) of hard coating film-applied substrate/polycarbonate substrate | 91.2 | 91.2 | 91.2 | 91.2 | 91.2 | 91.2 | 91.2 | 90.0 | 91.2 |
|  | Total light transmittance retention rate (%) of hard coati ng film | 101.2 | 101.2 | 101.2 | 101.2 | 101.2 | 101.2 | 101.2 | 100.0 | 101.2 |
| Initial adhesiveness | Tape adhesiveness | Good | Good | Good | Good | Good | Good | Good | Good | Good |
| Evaluation of moisture resistance | After constant temperature and humidity test at 50°C for 2 weeks A: Retention of adhesiveness B: Decrease in adhesiveness at level not causing any problems in practical use C: No adhesiveness | A | A | A | A | A | A | A | A | A |
| Evaluation of contamination resistance | ΔA | 0.4 | 0.4 | 0.4 | 0.4 | 0.4 | 0.4 | 0.4 | 0.4 | 0.4 |
|  | Total light transmittance retention rate (%) after black carbon test | 100% | 100% | 100% | 100% | 100% | 100% | 100% | 100% | 100% |

EP 4 116 085 A1

118

[Table 11]

| | | Example 2-1 | Example 2-2 | Example 2-3 | Example 2-4 | Example 2-5 | Example 2-6 | Example 2-7 | Example 2-8 | Comparative Example 2-1 |
|---|---|---|---|---|---|---|---|---|---|---|
| Polymer nanoparticle (A) | Type | A-1 | A-1 | A-1 | A-1 | A-1 | A-1 | A-1 | A-1 | A-1 |
| | $\eta_{ITA}$ | 0.70 | 0.70 | 0.70 | 0.70 | 0.70 | 0.70 | 0.70 | 0.70 | 0.70 |
| | $HM_A$ (N/mm$^2$) | 150 | 150 | 150 | 150 | 150 | 150 | 150 | 150 | 150 |
| Matrix raw material component (B') | Type | B'-1 | B'-1 | B'-2 | B'-3 | B'-4 | B'-5 | B'-6 | B'-7 | B'-8 |
| | $\eta_{ITB'}$ | 0.73 | 0.73 | 0.73 | 0.73 | 0.73 | 0.72 | 0.69 | 0.70 | 0.72 |
| | $HM_{B'}$ (N/mm$^2$) | 475 | 475 | 475 | 475 | 475 | 470 | 340 | 360 | 450 |
| Matrix component (B) | Type | B-1 | B-1 | B-2 | B-3 | B-4 | B-5 | B-6 | B-7 | B-8 |
| | $\eta_{ITB}$ | 0.73 | 0.73 | 0.73 | 0.73 | 0.73 | 0.72 | 0.69 | 0.70 | 0.72 |
| | $HM_B$ (N/mm$^2$) | 475 | 475 | 475 | 475 | 475 | 470 | 340 | 360 | 450 |

[Table 12]

| | | Example 2-1 | Example 2-2 | Example 2-3 | Example 2-4 | Example 2-5 | Example 2-6 | Example 2-7 | Example 2-8 | Comparative Example 2-1 |
|---|---|---|---|---|---|---|---|---|---|---|
| | Thickness of coating film (C) | 5 um | 3 um | 5 um | 5 um | 5 um | 5 um | 5 um | 5 um | 5 um |
| Evaluation of weather resistance | Light transmittance (%) at 291 nm of quartz substrate | 92.2 | 92.2 | 92.2 | 92.2 | 92.2 | 92.2 | 92.2 | 92.2 | 92.2 |
| | Light transmittance (%) at 291 nm of hard coating film-applied quartz substrate | 54.5 | 70.2 | 57.0 | 41.4 | 79.8 | 55.1 | 30.0 | 0.1 | 90.8 |
| | Light absorption rate (%) at 291 nm | 40.9 | 23.9 | 38.2 | 55.1 | 13.4 | 40.2 | 67.5 | 99.9 | 1.5 |

[Evaluation results]

It was found from Tables 10 to 12 that each of the hard coating films of Examples 2-1 to 8 not only maintained abrasion resistance, transparency, adhesiveness, and contamination resistance, but also was excellent in weather resistance, as compared with the coating film of Comparative Example 2-1, not containing Ce, Nb, Ti or Zr in the coating film.

Each of the hard coating films and each of the hard coating film-applied substrates of Examples 2-1 to 8 exhibited abrasion resistance and contamination resistance at high levels and furthermore weather resistance at a high level, as described above, and were each evaluated to be preferably applicable as a window material for automobiles.

The present application is based on Japanese Patent Application (Japanese Patent Application No. 2020-037112) filed on March 4, 2020 and Japanese Patent Application (Japanese Patent Application No. 2020-037226) filed on March 4, 2020, the contents of which are herein incorporated as reference.

Industrial Applicability

The laminate, the hard coating film, and the coating material composition, provided by the present invention, are useful in hard coatings for building materials, automobile members, electronic equipment, electronic products, and the like.

**Claims**

1. A laminate comprising:

   an adhesion layer-applied substrate comprising a substrate and an adhesion layer disposed on the substrate, the adhesion layer comprising an adhesive emulsion particle (F), an inorganic oxide (G) and a light-shielding agent (S1); and
   a hard coating layer (C) disposed on the adhesion layer-applied substrate and comprising a matrix component (B) comprising an inorganic oxide (D), wherein
   a haze value H1 of the adhesion layer-applied substrate is larger than a haze value H2 of the laminate.

2. The laminate according to claim 1, wherein the H2 is 5% or less.

3. A laminate comprising:

   an adhesion layer-applied substrate comprising a substrate and an adhesion layer disposed on the substrate, the adhesion layer comprising an adhesive emulsion particle (F), an inorganic oxide (G) and a light-shielding agent (S1); and
   a hard coating layer (C) disposed on the adhesion layer-applied substrate and comprising a matrix component (B) comprising an inorganic oxide (D), wherein
   a surface roughness Ra1 of the adhesion layer-applied substrate is higher than a surface roughness Ra2 of the laminate.

4. The laminate according to claim 3, wherein the Ra1 is 10 to 500 nm.

5. The laminate according to claim 3 or 4, wherein the Ra2 is less than 100 nm.

6. The laminate according to any one of claims 1 to 5, wherein the light-shielding agent (S1) comprises an ultraviolet absorber.

7. The laminate according to any one of claims 1 to 6, wherein the adhesion layer further comprises a hindered amine-based light stabilizer.

8. The laminate according to any one of claims 1 to 7, wherein

   the hard coating layer (C) further comprises a polymer nanoparticle (A) dispersed in the matrix component (B),
   a Martens hardness $HM_A$ of the polymer nanoparticle (A) and a Martens hardness $HM_B$ of the matrix component (B) satisfy a relationship of $HM_B/HM_A > 1$, and

a Martens hardness HM of the hard coating layer is 100 N/mm$^2$ or more.

9. The laminate according to claim 8, wherein an average particle size of the polymer nanoparticle (A) is 10 nm or more and 400 nm or less.

10. The laminate according to claim 8 or 9, wherein a volume fraction of the polymer nanoparticle (A) in the hard coating layer (C) is 2% or more and 80% or less.

11. The laminate according to any one of claims 8 to 10, wherein

the polymer nanoparticle (A) comprises a hydrolyzable silicon compound (a), and
a content of the hydrolyzable silicon compound (a) in the polymer nanoparticle (A) is 50% by mass or more.

12. The laminate according to claim 11, wherein the hydrolyzable silicon compound (a) comprises one or more selected from a compound having an atomic group represented by the following formula (a-1) and a hydrolyzed product and a condensate thereof, and a compound represented by the following formula (a-2) and a hydrolyzed product and a condensate thereof:

$$-R^1_{n1}SiX^1_{3-n1} \qquad (a\text{-}1)$$

wherein $R^1$ represents a hydrogen atom, an alkyl group, an alkenyl group or an alkynyl group having 1 to 10 carbon atoms, or an aryl group, $R^1$ optionally has a substituent having halogen, a hydroxy group, a mercapto group, an amino group, a (meth)acryloyl group or an epoxy group, $X^1$ represents a hydrolyzable group, and n1 represents an integer of 0 to 2;

$$SiX^2_4 \qquad (a\text{-}2)$$

wherein $X^2$ represents a hydrolyzable group.

13. The laminate according to any one of claims 1 to 12, wherein the inorganic oxide (D) comprises at least one inorganic component selected from the group consisting of Ce, Nb, Al, Zn, Ti, Zr, Sb, Mg, Sn, Bi, Co and Cu.

14. The laminate according to any one of claims 1 to 13, wherein the hard coating layer (C) further comprises a light-shielding agent (S2).

15. The laminate according to any one of claims 1 to 14, wherein the inorganic oxide (G) is a silica having a spherical shape and/or a linked structure.

16. The laminate according to any one of claims 1 to 15, wherein the adhesion layer comprises a composite of the inorganic oxide (G) and the adhesive emulsion particle (F).

17. The laminate according to any one of claims 1 to 16, wherein an average particle size of at least one selected from the group consisting of the inorganic oxide (G), the adhesive emulsion particle (F), and a composite of the inorganic oxide (G) and the adhesive emulsion particle (F) is 2 nm or more and 400 nm or less.

18. The laminate according to any one of claims 1 to 17, wherein a mass ratio of the inorganic oxide (G) and the adhesive emulsion particle (F) is 1:0.1 to 1:10.

19. The laminate according to any one of claims 1 to 18, wherein the adhesion layer further comprises an isocyanate compound and/or a urethane compound.

20. The laminate according to any one of claims 1 to 19, wherein when the hard coating layer is subjected to a Taber abrasion test under conditions of an abrasive wheel CS-10F and a load of 500 g according to ASTM D1044, a difference between a haze at a rotation number of 500 and a haze before the Taber abrasion test is 10 or less.

21. The laminate according to any one of claims 1 to 20, wherein when the hard coating layer is subjected to a Taber abrasion test under conditions of an abrasive wheel CS-10F and a load of 500 g according to ASTM D1044, a difference between a haze at a rotation number of 1000 and a haze before the Taber abrasion test is 10 or less.

22. The laminate according to any one of claims 1 to 21, wherein an elastic recovery rate $\eta_{IT}$ of the hard coating layer, as measured by an indentation test according to IS014577-1, is 0.50 or more.

23. The laminate according to any one of claims 1 to 22, wherein a thickness of the hard coating layer is 1 $\mu$m or more and 100 $\mu$m or less.

24. The laminate according to any one of claims 1 to 23, wherein the matrix component (B) comprises a hydrolyzable silicon compound (b).

25. The laminate according to claim 24, wherein the hydrolyzable silicon compound (b) comprises one or more selected from a compound having an atomic group represented by the following formula (b-1) and a hydrolyzed product and a condensate thereof, and a compound represented by the following formula (b-2) and a hydrolyzed product and a condensate thereof:

$$-R^2{}_{n2}SiX^3{}_{3-n2} \qquad \text{(b-1)}$$

wherein $R^2$ represents a hydrogen atom, an alkyl group, an alkenyl group or an alkynyl group having 1 to 10 carbon atoms, or an aryl group, $R^2$ optionally has a substituent having halogen, a hydroxy group, a mercapto group, an amino group, a (meth)acryloyl group or an epoxy group, $X^3$ represents a hydrolyzable group, and n2 represents an integer of 0 to 2;

$$SiX^4{}_4 \qquad \text{(b-2)}$$

wherein $X^4$ represents a hydrolyzable group.

26. The laminate according to any one of claims 1 to 25, wherein an average particle size of the inorganic oxide (D) is 2 nm or more and 150 nm or less.

27. The laminate according to any one of claims 1 to 26, wherein the inorganic oxide (D) is a silica particle.

28. The laminate according to any one of claims 1 to 27, for use in an automobile member.

29. A coating material composition comprising:

   a mixture of an adhesive emulsion particle (F) and an inorganic oxide (G), and/or a composite of the inorganic oxide (G) and the adhesive emulsion particle (F); and
   a light-shielding agent (S1), wherein
   an average particle size of the mixture and/or composite is 2 nm or more and 2000 nm or less, and
   a mass ratio of the inorganic oxide (G) and the adhesive emulsion particle (F) is 1:0.1 to 1:10.

30. The coating material composition according to claim 29, wherein the light-shielding agent (S1) comprises an ultraviolet absorber.

31. The coating material composition according to any one of claim 29 or 30, further comprising a hindered amine-based light stabilizer.

32. The coating material composition according to any one of claims 29 to 31, wherein the inorganic oxide (G) is a silica having a spherical shape and/or a linked structure.

33. The coating material composition according to any one of claims 29 to 32, wherein an aspect ratio (longer diameter/shorter diameter) of the inorganic oxide (G) is 3 to 25.

34. The coating material composition according to any one of claims 29 to 33, further comprising an isocyanate compound and/or a urethane compound.

35. The coating material composition according to claim 34, wherein the isocyanate compound is a water-dispersible isocyanate compound.

**36.** The coating material composition according to claim 35, wherein the water-dispersible isocyanate compound is a block isocyanate.

**37.** A coating material composition comprising a polymer nanoparticle (A) and a matrix raw material component (B'), wherein

an elastic recovery rate $\eta_{ITA}$ of the polymer nanoparticle (A), as measured by an indentation test according to ISO14577-1, is 0.30 or more and 0.90 or less,
a Martens hardness $HM_A$ of the polymer nanoparticle (A) and a Martens hardness $HM_{B'}$ of the matrix raw material component (B') satisfy a relationship of $HM_{B'}/HM_A > 1$,
the matrix raw material component (B') comprises an inorganic oxide (D), and
the inorganic oxide (D) comprises at least one inorganic component selected from the group consisting of Ce, Nb, Al, Zn, Ti, Zr, Sb, Mg, Sn, Bi, Co and Cu.

**38.** The coating material composition according to claim 37, further comprising a light-shielding agent (S2).

**39.** The coating material composition according to any one of claims 29 to 38, wherein the polymer nanoparticle (A) and/or the adhesive emulsion particle (F) have/has a functional group (e) having a secondary amide group and/or a tertiary amide group.

**40.** The coating material composition according to any one of claims 29 to 38, wherein the polymer nanoparticle (A) and/or the adhesive emulsion particle (F) have/has a functional group having a hydroxyl group.

**41.** A hard coating film comprising a polymer nanoparticle (A) and a matrix component (B), wherein

a Martens hardness $HM_A$ of the polymer nanoparticle (A) and a Martens hardness $HM_B$ of the matrix component (B) satisfy a relationship of $HM_B/HM_A > 1$,
a Martens hardness HM of the hard coating layer is 100 N/mm$^2$ or more,
the matrix component (B) comprises an inorganic oxide (D), and
the inorganic oxide (D) comprises at least one inorganic component selected from the group consisting of Ce, Nb, Al, Zn, Ti, Zr, Sb, Mg, Sn, Bi, Co and Cu.

## INTERNATIONAL SEARCH REPORT

| International application No. |
| --- |
| PCT/JP2021/008553 |

### A. CLASSIFICATION OF SUBJECT MATTER

B32B 9/00(2006.01)i; B60R 13/02(2006.01)i; B60R 13/04(2006.01)i; C09J 11/04(2006.01)i; C09D 201/00(2006.01)i; C09D 201/10(2006.01)i; C09J 201/00(2006.01)i; B60J 1/00(2006.01)i; C09D 7/61(2018.01)i; B32B 7/023(2019.01)i
FI: B32B9/00 A; C09D201/10; C09D7/61; C09J201/00; C09J11/04; B60R13/02 Z; B60R13/04 Z; B60J1/00 G; C09D201/00; B32B7/023

According to International Patent Classification (IPC) or to both national classification and IPC

### B. FIELDS SEARCHED

Minimum documentation searched (classification system followed by classification symbols)
B32B9/00; B60R13/02; B60R13/04; C09J11/04; C09D201/00; C09D201/10; C09J201/00; B60J1/00; C09D7/61; B32B7/023

Documentation searched other than minimum documentation to the extent that such documents are included in the fields searched
Published examined utility model applications of Japan 1922–1996
Published unexamined utility model applications of Japan 1971–2021
Registered utility model specifications of Japan 1996–2021
Published registered utility model applications of Japan 1994–2021

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| X<br>Y | JP 2018-104719 A (MITSUBISHI CHEMICAL CORPORATION) 05 July 2018 (2018-07-05) claims, examples, paragraphs [0031], [0067], [0096] | 1-7, 15-23, 26-36<br>8-14, 24, 25 |
| X<br>Y | JP 2007-320145 A (TOYOBO BOSEKI KABUSHIKI KAISHA) 13 December 2007 (2007-12-13) claims, examples, paragraphs [0110], [0198] | 1-7, 15-23, 26-36<br>8-14, 24, 25 |
| X<br>Y | JP 2009-288756 A (TOYOBO BOSEKI KABUSHIKI KAISHA) 10 December 2009 (2009-12-10) claim 9, examples, paragraphs [0050], [0056], [0092] | 1-7, 15-23, 26-36<br>8-14, 24, 25 |
| X<br>Y | JP 2017-206699 A (DONGWOO FINE-CHEM CO., LTD.) 24 November 2017 (2017-11-24) claims, paragraph [0089] | 37-41<br>8-14, 24, 25 |

☒ Further documents are listed in the continuation of Box C. ☒ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 18 May 2021 (18.05.2021) | 01 June 2021 (01.06.2021) |

| Name and mailing address of the ISA/ | Authorized officer |
| --- | --- |
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

| International application No. |
| --- |
| PCT/JP2021/008553 |

C (Continuation).   DOCUMENTS CONSIDERED TO BE RELEVANT

| Category* | Citation of document, with indication, where appropriate, of the relevant passages | Relevant to claim No. |
| --- | --- | --- |
| X | JP 2018-531999 A (DOW GLOBAL TECHNOLOGIES LLC) 01 November 2018 (2018-11-01) claims, paragraphs [0010], [0023] | 37-41 |
| Y | | 8-14, 24, 25 |
| Y | JP 2016-186010 A (FUJI XEROX CO., LTD.) 27 October 2016 (2016-10-27) paragraph [0030] | 8-14, 24, 25 |
| A | WO 2010/134416 A1 (TOYOBO BOSEKI KABUSHIKI KAISHA) 25 November 2010 (2010-11-25) abstract | 1-41 |
| A | JP 2011-006620 A (SANYO CHEMICAL INDUSTRIES, LTD.) 13 January 2011 (2011-01-13) abstract | 1-41 |
| A | JP 2002-338928 A (TEIJIN LTD.) 27 November 2002 (2002-11-27) abstract | 1-41 |
| A | JP 2010-070696 A (KANEKA CORP.) 02 April 2010 (2010-04-02) abstract | 1-41 |
| A | JP 2011-011363 A (TOYOBO BOSEKI KABUSHIKI KAISHA) 20 January 2011 (2011-01-20) abstract | 1-41 |

Form PCT/ISA/210 (continuation of second sheet) (January 2015)

**INTERNATIONAL SEARCH REPORT**
Information on patent family members

International application No.

PCT/JP2021/008553

| Patent Documents referred in the Report | Publication Date | Patent Family | Publication Date |
|---|---|---|---|
| JP 2018-104719 A | 05 Jul. 2018 | JP 2015-147407 A | |
| JP 2007-320145 A | 13 Dec. 2007 | (Family: none) | |
| JP 2009-288756 A | 10 Dec. 2009 | (Family: none) | |
| JP 2017-206699 A | 24 Nov. 2017 | US 2017/0335114 A1 claims, paragraph [0091] KR 10-2017-0131206 A CN 107400449 A TW 201809159 A | |
| JP 2018-531999 A | 01 Nov. 2018 | US 2017/0369654 A1 claims, paragraphs [0001], [0016] WO 2017/222816 A1 EP 3475368 A1 CN 107922759 A KR 10-2018-0030638 A TW 201811707 A | |
| JP 2016-186010 A | 27 Oct. 2016 | (Family: none) | |
| WO 2010/134416 A1 | 25 Nov. 2010 | CN 102438831 A abstract TW 201102416 A KR 10-2012-0024809 A | |
| JP 2011-006620 A | 13 Jan. 2011 | (Family: none) | |
| JP 2002-338928 A | 27 Nov. 2002 | (Family: none) | |
| JP 2010-070696 A | 02 Apr. 2010 | (Family: none) | |
| JP 2011-011363 A | 20 Jan. 2011 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 11012505 A
- JP 7173404 A
- JP 2006063244 A
- JP 8238683 A
- JP 2014109712 A
- JP 2017114949 A
- JP 5339400 A
- JP 2020037112 A
- JP 2020037226 A

**Non-patent literature cited in the description**

- **WERNER STOBER et al.** *J. Colloid and Interface Sci.,* 1968, vol. 26, 62-69
- **RICKEY D. BADLEY et al.** *Lang muir,* 1990, vol. 6, 792-801
- *Journal of the Japan Society of Colour Material,* 1988, vol. 61 (9), 488-493